(19) Europäisches Patentamt / European Patent Office / Office européen des brevets

(11) **EP 4 122 940 B1**

(12) **EUROPEAN PATENT SPECIFICATION**

(45) Date of publication and mention of the grant of the patent: **10.06.2026 Bulletin 2026/24**

(21) Application number: **22185441.7**

(22) Date of filing: **18.07.2022**

(51) International Patent Classification (IPC):
***C07F 9/6596*** *(2006.01)* ***C07B 31/00*** *(2006.01)*
***B01J 35/39*** *(2024.01)* ***C07B 37/04*** *(2006.01)*
***C07B 37/00*** *(2006.01)* ***C07F 9/50*** *(2006.01)*
***B01J 31/24*** *(2006.01)*

(52) Cooperative Patent Classification (CPC):
**C07F 9/5045; B01J 31/2409; B01J 35/39; C07B 31/00; C07B 37/00; C07B 37/04; C07F 9/6596;** B01J 2531/0205; B01J 2531/18; B01J 2540/10; B01J 2540/225; B01J 2540/30; B01J 2540/40

# (54) BINUCLEAR GOLD(I) COMPOUNDS FOR PHOTOCATALYSIS APPLICATIONS

ZWEIKERNIGE GOLD(I)-VERBINDUNGEN FÜR PHOTOKATALYSE-ANWENDUNGEN

COMPOSÉS D’OR(I) BINUCLÉAIRES POUR DES APPLICATIONS DE PHOTOCATALYSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.07.2021 US 202163223468 P**

(43) Date of publication of application:
**25.01.2023 Bulletin 2023/04**

(73) Proprietors:
- **Versitech Limited**
  **Hong Kong (CN)**
- **Laboratory for Synthetic Chemistry and Chemical Biology Limited**
  **Hong Kong Shatin (HK)**

(72) Inventors:
- **CHE, Chi Ming**
  **Hong Kong (CN)**
- **YUAN, Jia**
  **Hong Kong (CN)**

(74) Representative: **HGF**
**HGF Limited**
**4th Floor, 1 City Square**
**Leeds LS1 2ES (GB)**

(56) References cited:
**JP-A- 2008 074 905**

- **MCTIERNAN C. D. ET AL: ") complexes in photoredox catalysis: understanding their reactivity through characterization and kinetic analysis", CATALYSIS SCIENCE & TECHNOLOGY, vol. 6, no. 1, 1 January 2016 (2016-01-01), UK, pages 201 - 207, XP093006835, ISSN: 2044-4753, DOI: 10.1039/C5CY01259G**
- **MCTIERNAN C. D. ET AL: ") complexes in photoredox catalysis: understanding their reactivity through characterization and kinetic analysis", CATALYSIS SCIENCE & TECHNOLOGY, vol. 6, no. 1, 1 January 2016 (2016-01-01), UK, pages 201 - 207, XP093006828, ISSN: 2044-4753, Retrieved from the Internet <URL:https://www.rsc.org/suppdata/c5/cy/c5cy01259g/c5cy01259g1.pdf> DOI: 10.1039/C5CY01259G**
- **SCHMIDBAUR HUBERT ET AL: "Gold(I)-bis(diphenylphosphino)amide and Some Gold(I)-bis(diarylphosphino)methanides with Bulkyl Aryl Substituents", 1 January 1983 (1983-01-01), pages 62 - 66, XP093006839, Retrieved from the Internet <URL:http://zfn.mpdl.mpg.de/data/Reihe_B/38/ZNB-1983-38b-0062.pdf> [retrieved on 20221211]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 122 940 B1

- **TAOTAO ZOU ET AL: "A Binuclear Gold(I) Complex with Mixed Bridging Diphosphine and Bis(N-Heterocyclic Carbene) Ligands Shows Favorable Thiol Reactivity and Inhibits Tumor Growth and Angiogenesis In Vivo", ANGEWANDTE CHEMIE, WILEY - V C H VERLAG GMBH & CO. KGAA, DE, vol. 126, no. 23, 11 April 2014 (2014-04-11), pages 5920 - 5924, XP071356706, ISSN: 0044-8249, DOI: 10.1002/ ANGE.201400142**
- **WEN-FU FU ET AL: "Substrate-Binding Reactions of the 3[d[sigma]*p[sigma]] Excited State of Binuclear Gold(I) Complexes with Bridging Bis(dicyclohexylphosphino)methane Ligands: Emission and Time-Resolved Absorption Spectroscopic Studies", CHEMISTRY - A EUROPEAN JOURNAL, JOHN WILEY & SONS, INC, DE, vol. 7, no. 21, 30 October 2001 (2001-10-30), pages 4656 - 4664, XP071822064, ISSN: 0947-6539, DOI: 10.1002/ 1521-3765(20011105)7:21<4656::AID-CHEM4656>3.0.CO;2-D**
- **"unknown", 1 July 2004, UNKNOWN, article NN NN: "Regulations.gov, Separation Techniques", pages: 1 - 232, XP093250539**

## Description

### FIELD OF THE INVENTION

This invention is generally in the field of gold (I) complexes and their use as photocatalysts in organic reactions.

### BACKGROUND OF THE INVENTION

Photoredox catalysis has established as an effective means for organic synthesis under mild reaction conditions. Photoredox catalysis mostly employs $d^6$ transition metal compounds such as iridium(III) and ruthenium(II) compounds as photocatalysts. This is mainly due to their known excited state properties and commercial availability. By tuning their structure, their excited state properties can be tuned for activating different kinds of organic substrates for reaction. However, due to the octahedral coordination geometry of iridium(III) and ruthenium(II) photocatalysts, these photocatalysts can only catalyze light-induced reactions via outer-sphere electron transfer and/or energy transfer. They cannot take part in reactions requiring substrate binding or trapping of radical by the metal complex (i.e., limited to outersphere electron transfer only). This poses limitation on the types of reactions that can be catalyzed.

$d^8$ and $d^{10}$ transition metal compounds are less explored for use in photoredox catalysis for organic transformation. An example is $[Au_2(\mu\text{-dppm})_2]^{2+}$ (dppm = bis(diphenylphosphanyl)methane), which displays a high-energy $^3[5d\sigma^*6p\sigma]$ excited state that undergoes facile substrate binding in solution at room temperature. However, high-energy UVA light, such as UV (365 nm) light, is required to generate the triplet excited state and catalyze photochemical reactions, as absorptivity of this gold complex is $<1\times10^3\ M^{-1}cm^{-1}$ at wavelength beyond 330 nm, which poses difficulty in large scale synthesis and constraint on substrate scope.

C. D. McTiernan et al. (CATALYSIS SCIENCE & TECHNOLOGY, 1 January 2016, vol. 6, no. 1, pages 201-207) describes the complete photophysical and electrochemical charaterization of a series of gold(I) complexes. H. Schmidbaur et al. (Zeitschrift für Naturforschung, 1 January 1983, vol. 1, pages 62-66) describes gold(I)-bis(diarylphosphino) amides. Z. Taotao et al. (ANGEWANDTE CHEMIE, WILEY, 11 April 2014, vol. 126, no. 23, pages 5920-5924) describes a binuclear gold(I) complex with mixed bridging diphosphine and bis(N-heterocyclic carbene) ligands. JP 2008 074905 A describes an organic electroluminescent element supporting an organic thin film layer composed of one or a plurality of layers containing at least a light emitting layer between a minus terminal and a plus terminal, wherein at least one layer of the organic thin film layers contains a nonionic cyclic polynuclear gold complex. F. Wen-Fu et al. (CHEMISTRY - A EUROPEAN JOURNAL, 30 October 2001, vol. 7, no. 21, pages 4656-4464) describes binuclear gold(I) complexes with bridging bis(dicyclohexylphosphino)methane ligands.

There remains a need to develop gold (I) complexes that catalyze organic reactions under near-UV and/or visible light.

Therefore, it is the object of the present invention to provide gold (I) complexes that catalyze organic reactions under near-UV and/or visible light.

It is a further object of the present invention to provide methods of making the gold (I) complexes.

It is a further object of the present invention to provide methods of using the gold (I) complexes in photocatalytic reactions.

### SUMMARY OF THE INVENTION

Gold (I) complexes that can absorb light in the near-UV and/or visible regions and methods of making and using thereof are described. These gold (I) complexes have photochemical reactivities that allow them to catalyze photoredox reactions under near-UV and/or visible light.

The invention relates to a gold (I) complex having one of the following structures:

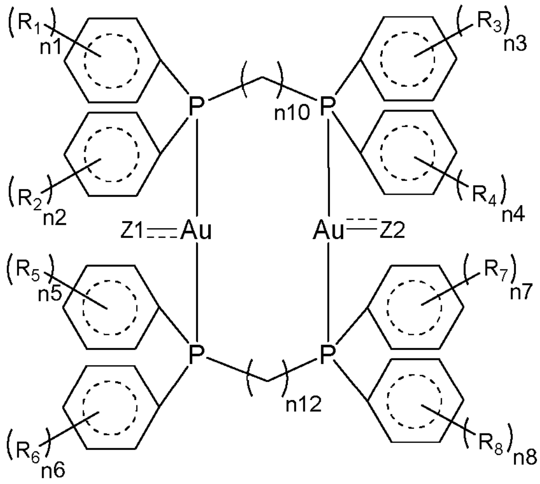

,

Formula IIa

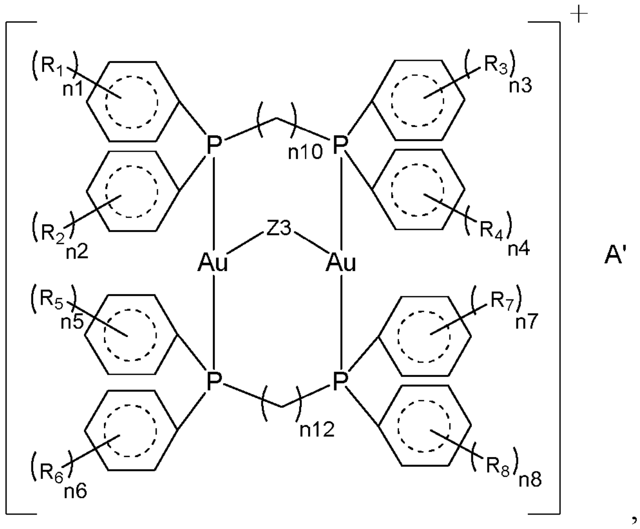

,

Formula IIb

or

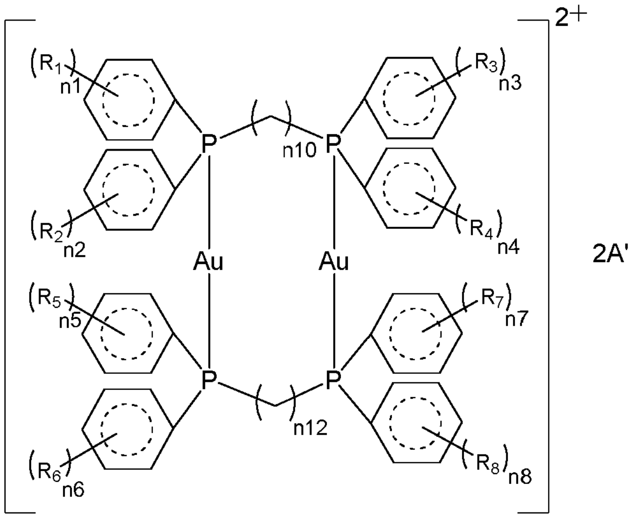

Formula IIc

wherein:

(a) n10 and n12 are 1;
(b) $R_1$-$R_8$ are independently substituted or unsubstituted aryl, substituted or unsubstituted polyaryl, substituted or unsubstituted heterocyclyl, or amino;
(c) n1-n8 are independently an integer between 1 and 5;
(d) each ------ is independently absent or a single bond;
(e) Z1 and Z2 are independently a halide (fluoride, chloride, bromide, or iodide), a triflate, a sulfonate, a dicyanoaurate, a cyano, a nitrate, a hydroxyl, or a carboxylate;
(f) Z3 is a halide (fluoride, chloride, bromide, or iodide), an oxygen, a sulfur, or a carboxylate;
(g) each occurrence of A' is an anion;
(h) the substituents are independently a substituted or unsubstituted alkyl, a substituted or unsubstituted heterocyclyl, a substituted or unsubstituted aryl, a substituted or unsubstituted polyaryl, a substituted or unsubstituted alkoxy, a phenoxy, an aroxy, an amino, or a combination thereof; and

wherein:

each alkyl is a straight chain alkyl group, a branched chain alkyl group or a cycloalkyl group;
each amino includes a group selected from

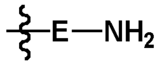

(primary amino),

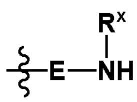

(secondary amino),

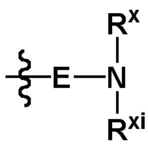

(tertiary amino), and

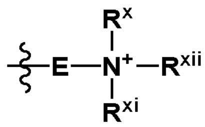

(quaternary amino), wherein:

E is absent,

$R^x$, $R^{xi}$, and $R^{xii}$ each independently represent a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted alkylaryl, a substituted or unsubstituted arylalkyl, a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, a phosphonyl, a sulfinyl, a silyl, a thiol, an amido, an amino, or $-(CH_2)_m-R'''$;

R‴ represents a hydroxyl group, a substituted or unsubstituted carbonyl group, a substituted or unsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino;

m is zero or an integer ranging from 1 to 8;

each alkenyl is a straight-chain alkenyl group, a branched-chain alkenyl group, or a cycloalkenyl group;

each alkynyl is a straight-chain alkynyl group, a branched-chain alkynyl group, or a cycloalkynyl group; and

each amido is represented by the general formula:

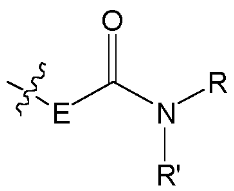

or

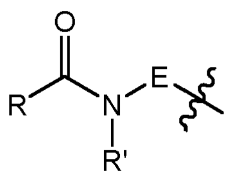

wherein:

E is absent, and

R and R' each independently represent a hydrogen, a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted alkylaryl, a substituted or unsubstituted arylalkyl, a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, a phosphonyl, a sulfinyl, a silyl, a thiol, an amido, an amino, or $-(CH_2)_m-R'''$, or R and R' taken together with the N atom to which they are attached complete a heterocycle having from 3 to 14 atoms in the ring structure;

R‴ represents a hydroxyl group, a substituted or unsubstituted carbonyl group, a substituted or unsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino; and

m is zero or an integer ranging from 1 to 8.

In some forms of Formulae IIa, IIb, and/or IIc, $R_1$-$R_8$ can be independently substituted or unsubstituted aryl, substituted or unsubstituted polyaryl, or substituted or unsubstituted heterocyclyl. In some forms of Formulae IIa, IIb, and/or IIc, $R_1$-$R_8$ can be independently substituted or unsubstituted heterocyclyl, or

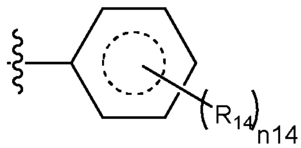

,

and $R_{13}$ and $R_{14}$ can be independently hydrogen or substituted or unsubstituted alkyl, n14 can be an integer from 0 to 5, from 0 to 4, from 0 to 3, from 0 to 2, or 0 or 1. In some forms, $R_{13}$ and $R_{14}$ can be independently unsubstituted $C_1$-$C_{10}$ alkyl, unsubstituted $C_1$-$C_8$ alkyl, unsubstituted $C_1$-$C_6$ alkyl, unsubstituted $C_1$-$C_5$ alkyl, unsubstituted $C_1$-$C_4$ alkyl, or unsubstituted $C_1$-$C_3$ alkyl.

In some forms of Formulae IIa, IIb, and/or IIc, Z1-Z3 can be independently a halide, such as fluoride, chloride, bromide, iodide, or astatide, for example, chloride or bromide.

In some forms of Formulae IIa, IIb, and/or IIc, each occurrence of A' can be hydride, oxide, fluoride, sulfide, chloride, bromide, iodide, hydrogen phosphate, dihydrogen phosphate, hexafluorophosphate, triflate, sulfate, nitrate, hydrogen sulfate, nitrite, thiosulfate, sulfite, chlorate, bromate, chlorite, hypochlorite, hypobromite, carbonate, chromate, hydrogen carbonate, dichromate, perchlorate, acetate, formate, cyanide, amide, cyanate, peroxide, thiocyanate, oxalate, hydroxide, or permanganate. In some forms of Formulae IIa, IIb, and/or IIc, each occurrence of A' can be a halide, such as fluoride, bromide, iodide, perchlorate, hydrogen phosphate, dihydrogen phosphate, sulfate, nitrate, hydrogen sulfate, nitrite, chlorate, bromate, chlorite, hypochlorite, or hypobromite, for example, a halide or perchlorate.

The gold (I) complexes described herein can be synthesized by reacting a corresponding ligand, optionally more than one corresponding ligand, with a gold precursor in a suitable solvent.

The gold (I) complexes described herein are suitable for use in photoredox catalysis, such as photo-induced organic reactions, for example, homocoupling of organic halides (e.g. alkyl halides and aryl halides), alkylation of 2-phenyl-1,2,3,4-tetrahydroisoquinoline, cyclization of indoles, reductive dehalogenation of aryl halides, and/or C-H bonds cleavage. In particular, these gold (I) complexes can absorb in the near UV and/or visible light wavelength range, such as from about 360 nm to about 450 nm or from about 380 nm to about 450 nm, and thus can catalyze photoredox reactions under near-UV and/or visible light.

The methods of catalyzing an organic reaction using one or more gold (I) complex(es) disclosed herein can include: (i) exposing a reaction mixture to a light at a temperature for a period of time sufficient to form a product. Typically, the light for inducing the organic reaction has a wavelength in a range from about 350 nm to about 450 nm, from about 360 nm to about 450 nm, from about 370 nm to about 450 nm, from about 380 nm to about 450 nm, from about 390 nm to about 450 nm, from about 400 nm to about 450 nm, or from about 405 nm to about 450 nm, such as about 405 nm or about 445 nm.

The reaction mixture can contain a reactant, optionally more than one reactant, a solvent, and the one or more gold (I) complex(es). Optionally, the reaction mixture can further contain a suitable base, such as $Et_3N$, $i Pr_2NMe$, $i Pr_2NEt$, 2, 4, 6-trimethylpyridine, imidazole, potassium carbonate, or sodium carbonate, or a combination thereof.

Generally, the total amount of the one or more gold (I) complex(es) in the reaction mixture can be up to 10 mol%, up to 5 mol%, up to 2 mol%, at least 0.05 mol%, at least 0.1 mol%, in a range from about 0.05 mol% to about 10 mol%, from about 0.05 mol% to about 5 mol%, from about 0.05 mol% to about 2 mol%, from about 0.05 mol% to about 1 mol%, from about 0.05 mol% to about 0.5 mol%, from about 0.1 mol% to about 10 mol%, from about 0.1 mol% to about 5 mol%, from about 0.1 mol% to about 2 mol%, from about 0.1 mol% to about 1 mol%, from about 0.1 mol% to about 0.5 mol%, from about 0.5 mol% to about 10 mol%, from about 0.5 mol% to about 5 mol%, from about 0.5 mol% to about 2 mol%, or from about 0.5 mol% to about 1 mol%.

Typically, the product formed from the organic reaction catalyzed by one or more gold (I) complex(es) disclosed herein can have a yield of at least 12%, at least 15%, at least 20%, at least 25%, at least 30%, at least 35%, at least 40%, at least 45%, at least 50%, at least 55%, at least 60%, at least 65%, at least 70%, at least 75%, at least 80%, at least 85%, at least 90%, up to 99%, up to 98%, up to 95%, in a range from about 15% to about 99%, from about 20% to about 99%, from about 40% to about 99%, from about 50% to about 99%, from about 15% to about 95%, from about 20% to about 99%, from about 40% to about 95%, from about 50% to about 95%, from about 15% to about 90%, from about 20% to about 90%, from about 40% to about 90%, from about 50% to about 90%, from about 15% to about 80%, from about 20% to about 80%, from about 40% to about 80%, or from about 50% to about 80%.

The photocatalytic activity of the gold (I) complexes disclosed herein can be higher compared to known catalysts, such as $[Au_2(\mu\text{-dppm})_2](Cl)_2$, $[Ru(bpy)_3](Cl)_2$, and/or [*fac*-$Ir(ppy)_3$]. For example, the product of a photo-induced organic reaction using the one or more gold (I) complexes described herein has a yield that is higher than the yield of the same product formed from the same reaction under the same reaction conditions, using the same loading or a higher loading of $[Au_2(\mu\text{-dppm})_2](Cl)_2$, $[Ru(bpy)_3](Cl)_2$, and/or [*fac*-$Ir(ppy)_3$] compared to the loading of the one or more gold (I) complex(es).

## BRIEF DESCRIPTION OF THE DRAWINGS

**Figures 1A-1D** are ORTEP drawing of complexes **2a (Figure 1A), 3a (Figure 1B), 4a (Figure 1C),** and **5a (Figure 1D)** with thermal ellipsoids at the 30% probability level. Hydrogen atoms, solvent molecules and perchlorate anion have been omitted for clarity.

**Figures 2A-2B** are graphs showing the absorption **(Figure 2A)** and emission **(Figure 2B)** spectra of complexes **1b**, **2b**, and/or **4a** in degassed $CH_3CN$ at room temperature. **Figures 2C-2G** are graphs showing the emission spectra of **1b (Figure 2C), 2b (Figure 2D), 3b (Figure 2E), 4a (Figure 2F),** and **5a (Figure 2G)** in the solid state and glassy media [DMF:EtOH:MeOH= 1:1:4(V/V/V)] at 77 K.

**Figure 3A** is a graph showing the nanosecond time-resolved absorption spectra of **4a** in $CH_3CN$ with $^{n}Bu_4NPF_6$ (0.1 M) after laser flash (the time zero for laser flash occurs at 0.012 $\mu$s; the time shown in the figure refers to the time after laser flash). **Figure 3B** is a graph showing the femtosecond time-resolved transient absorption difference spectra of **4a** in $CH_3CN$ at various delay times after excitation at 266 nm.

**Figure 4A** is a graph showing the calculated absorption sepctra of complexes **1b** and **4a. Figure 4B** is a diagram showing calculated MO of **1b** and **4a** at $S_0$ state. Isovalue = 0.03.

**Figures 5A-5C** are graphs showing the optimized $T_1$ structure of **1b (Figure 5A), 1b**-$[ClO_4]_2$ **(Figure 5B), 4a**-$[ClO_4]_2$ **(Figure 5C),** and **4a (Figure 5D). Figure 5E** is a graph showing the calculated MO diagram of the **1b** and **1b**-$ClO_4$ complex at $T_1$ state.

**Figure 6A** is a graph showing the kinetic studies of solutions containing complex **4a** [0.04 mM] and ISP / ISP+BEB [2 mM for each] in the microsecond (upper) and millisecond (lower) time scale. ISP = 2-phenyl-1,2,3,4-tetrahydroisoquinoline, BEB = (2-bromoethyl)benzene. **Figures 6B** and **6C** are graphs showing the ns-TA spectra of **4a** in the presence of chlorobenzene [2 mM] at 100 $\mu$s [The experiment was conducted in the acetonitrile solution containing $^{n}Bu_4NPF_6$ (0.1 M)] **(Figure 6B)** and kinetic analysis of selected absorption peaks in the acetonitrile solution of **4a** [0.04 mM] in the presence of chlorobenzene [2 mM] with $^{n}Bu_4NPF_6$ (0.1 M) **(Figure 6C).**

## DETAILED DESCRIPTION OF THE INVENTION

### I. Definitions

It is to be understood that the disclosed compounds, compositions, and methods are not limited to specific synthetic methods, specific analytical techniques, or to particular reagents unless otherwise specified, and, as such, may vary. It is also to be understood that the terminology used herein is for the purpose of describing particular forms and embodiments only and is not intended to be limiting.

"Substituted," as used herein, refers to all permissible substituents of the compounds or functional groups described herein. In the broadest sense, the permissible substituents include acyclic and cyclic, branched and unbranched, carbocyclic and heterocyclic, aromatic and nonaromatic substituents of organic compounds. Illustrative substituents include, but are not limited to, halogens, hydroxyl groups, or any other organic groupings containing any number of carbon atoms, preferably 1-14 carbon atoms, and optionally include one or more heteroatoms such as oxygen, sulfur, or nitrogen grouping in linear, branched, or cyclic structural formats. Representative substituents include a substituted or unsubstituted alkyl, a substituted or unsubstituted alkenyl, a substituted or unsubstituted alkynyl, a substituted or unsubstituted heterocyclyl, a substituted or unsubstituted phenyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a halogen, a hydroxyl, an alkoxy, a phenoxy, an aroxy, a silyl, a thiol, an alkylthio, a substituted alkylthio, a phenylthio, an arylthio, a cyano, an isocyano, a nitro, a substituted or unsubstituted carbonyl, a carboxyl, an amino, an amido, an oxo, a sulfinyl, a sulfonyl, a sulfonic acid, a phosphonium, a phosphanyl, a phosphoryl, a phosphonyl, an amino acid. Such a substituted or unsubstituted alkyl, a substituted or unsubstituted alkenyl, a substituted or unsubstituted alkynyl, a substituted or unsubstituted heterocyclyl, a substituted or unsubstituted phenyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a halogen, a hydroxyl, an alkoxy, a phenoxy, an aroxy, a silyl, a thiol, an alkylthio, a substituted alkylthio, a phenylthio, an arylthio, a cyano, an isocyano, a nitro, a substituted or unsubstituted carbonyl, a carboxyl, an amino, an amido, an oxo, a sulfinyl, a sulfonyl, a sulfonic acid, a phosphonium, a phosphanyl, a phosphoryl, a phosphonyl, and an amino acid can be further substituted.

Heteroatoms such as nitrogen may have hydrogen substituents and/or any permissible substituents of organic compounds described herein which satisfy the valences of the heteroatoms. It is understood that "substitution" or "substituted" includes the implicit proviso that such substitution is in accordance with permitted valence of the substituted atom and the substituent, and that the substitution results in a stable compound, i.e. a compound that does not

spontaneously undergo transformation such as by rearrangement, cyclization, elimination, etc.

"Alkyl," as used herein, refers to the radical of saturated aliphatic groups, including straight-chain alkyl groups, branched-chain alkyl, and cycloalkyl (alicyclic). In some forms, a straight chain or branched chain alkyl has 30 or fewer carbon atoms in its backbone (e.g., $C_1$-$C_{30}$ for straight chains, $C_3$-$C_{30}$ for branched chains), 20 or fewer, 15 or fewer, or 10 or fewer. Alkyl includes methyl, ethyl, *n*-propyl, isopropyl, *n*-butyl, isobutyl, *t*-butyl, pentyl, hexyl, heptyl, octyl, decyl, tetradecyl, hexadecyl, eicosyl, tetracosyl and the like. Likewise, a cycloalkyl is a non-aromatic carbon-based ring composed of at least three carbon atoms, such as a nonaromatic monocyclic or nonaromatic polycyclic ring containing 3-30 carbon atoms, 3-20 carbon atoms, or 3-10 carbon atoms in their ring structure, and have 5, 6 or 7 carbons in the ring structure. Cycloalkyls containing a polycyclic ring system can have two or more non-aromatic rings in which two or more carbons are common to two adjoining rings (i.e., "fused cycloalkyl rings"). Examples of cycloalkyl groups include, but are not limited to, cyclopropyl, cyclobutyl, cyclopentyl, cyclohexyl, cycloheptyl, cyclooctanyl, etc.

The term "alkyl" as used throughout the specification, examples, and claims is intended to include both "unsubstituted alkyls" and "substituted alkyls," the latter of which refers to alkyl moieties having one or more substituents replacing a hydrogen on one or more carbons of the hydrocarbon backbone. Such substituents can be any substituents described above, e.g., halogen (such as fluorine, chlorine, bromine, or iodine), hydroxyl, carbonyl (such as a carboxyl, alkoxycarbonyl, formyl, or an acyl), thiocarbonyl (such as a thioester, a thioacetate, or a thioformate), aryl, alkoxyl, aralkyl, phosphonium, phosphanyl, phosphonyl, phosphoryl, phosphate, phosphonate, a phosphinate, amino, amido, amidine, imine, cyano, nitro, azido, oxo, sulfhydryl, thiol, alkylthio, silyl, sulfinyl, sulfate, sulfonate, sulfamoyl, sulfonamido, sulfonyl, heterocyclyl, an aromatic or heteroaromatic moiety. -NRR', wherein R and R' are independently hydrogen, alkyl, or aryl, and wherein the nitrogen atom is optionally quaternized; -SR, wherein R is a phosphonyl, a sulfinyl, a silyl a hydrogen, an alkyl, or an aryl; -CN; $-NO_2$; -COOH; carboxylate; -COR, -COOR, or $-CON(R)_2$, wherein R is hydrogen, alkyl, or aryl; imino, silyl, ether, haloalkyl (such as -CF3, $-CH_2-CF_3$, $-CCl_3$); -CN; $-NCOCOCH_2CH_2$; -NCOCOCHCH; and -NCS; and combinations thereof. The term "alkyl" also includes "heteroalkyl".

It will be understood by those skilled in the art that the moieties substituted on the hydrocarbon chain can themselves be substituted, if appropriate. For instance, the substituents of a substituted alkyl may include halogen, hydroxy, nitro, thiols, amino, aralkyl, azido, imino, amido, phosphonium, phosphanyl, phosphoryl (including phosphonate and phosphinate), oxo, sulfonyl (including sulfate, sulfonamido, sulfamoyl and sulfonate), and silyl groups, as well as ethers, alkylthios, carbonyls (including ketones, aldehydes, carboxylates, and esters), haloalkyls, -CN and the like. Cycloalkyls can be substituted in the same manner.

Unless the number of carbons is otherwise specified, "lower alkyl" as used herein means an alkyl group, as defined above, but having from one to ten carbons, more preferably from one to six carbon atoms in its backbone structure. Likewise, "lower alkenyl" and "lower alkynyl" have similar chain lengths.

"Heteroalkyl," as used herein, refers to straight or branched chain, or cyclic carbon-containing alkyl radicals, or combinations thereof, containing at least one heteroatom. Suitable heteroatoms include, but are not limited to, O, N, Si, P and S, wherein the nitrogen, phosphorous and sulfur atoms are optionally oxidized, and the nitrogen heteroatom is optionally quaternized. For example, the term "heterocycloalkyl group" is a cycloalkyl group as defined above where at least one of the carbon atoms of the ring is substituted with a heteroatom such as, but not limited to, nitrogen, oxygen, sulphur, or phosphorus.

The term "alkenyl" as used herein is a hydrocarbon group of from 2 to 24 carbon atoms and structural formula containing at least one carbon-carbon double bond. Alkenyl groups include straight-chain alkenyl groups, branched-chain alkenyl, and cycloalkenyl. A cycloalkenyl is a non-aromatic carbon-based ring composed of at least three carbon atoms and at least one carbon-carbon double bond, such as a nonaromatic monocyclic or nonaromatic polycyclic ring containing 3-30 carbon atoms and at least one carbon-carbon double bond, 3-20 carbon atoms and at least one carbon-carbon double bond, or 3-10 carbon atoms and at least one carbon-carbon double bond in their ring structure, and have 5, 6 or 7 carbons and at least one carbon-carbon double bond in the ring structure. Cycloalkenyls containing a polycyclic ring system can have two or more non-aromatic rings in which two or more carbons are common to two adjoining rings (i.e., "fused cycloalkenyl rings") and contain at least one carbon-carbon double bond. Asymmetric structures such as (AB) C=C(C'D) are intended to include both the *E* and *Z* isomers. This may be presumed in structural formulae herein wherein an asymmetric alkene is present, or it may be explicitly indicated by the bond symbol C. The term "alkenyl" as used throughout the specification, examples, and claims is intended to include both "unsubstituted alkenyls" and "substituted alkenyls," the latter of which refers to alkenyl moieties having one or more substituents replacing a hydrogen on one or more carbons of the hydrocarbon backbone. The term "alkenyl" also includes "heteroalkenyl".

The term "substituted alkenyl" refers to alkenyl moieties having one or more substituents replacing one or more hydrogen atoms on one or more carbons of the hydrocarbon backbone. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphonium, phosphanyl, phosphoryl, phosphate, phosphonate, phosphinate, amino (e.g. quarternized amino), amido, amidine, imine, cyano, nitro, azido, oxo, sulfhydryl, alkylthio, sulfate, sulfonate, sulfamoyl, sulfonamido, sulfonyl,

heterocyclyl, alkylaryl, haloalkyl, -CN, aryl, heteroaryl, polyaryl, polyheteroaryl, and combinations thereof.

"Heteroalkenyl," as used herein, refers to straight or branched chain, or cyclic carbon-containing alkenyl radicals, or combinations thereof, containing at least one heteroatom. Suitable heteroatoms include, but are not limited to, O, N, Si, P and S, wherein the nitrogen, phosphorous and sulfur atoms are optionally oxidized, and the nitrogen heteroatom is optionally quaternized. For example, the term "heterocycloalkenyl group" is a cycloalkenyl group where at least one of the carbon atoms of the ring is substituted with a heteroatom such as, but not limited to, nitrogen, oxygen, sulphur, or phosphorus.

The term "alkynyl group" as used herein is a hydrocarbon group of 2 to 24 carbon atoms and a structural formula containing at least one carbon-carbon triple bond. Alkynyl groups include straight-chain alkynyl groups, branched-chain alkynyl, and cycloalkynyl. A cycloalkynyl is a non-aromatic carbon-based ring composed of at least three carbon atoms and at least one carbon-carbon triple bond, such as a nonaromatic monocyclic or nonaromatic polycyclic ring containing 3-30 carbon atoms and at least one carbon-carbon triple bond, 3-20 carbon atoms and at least one carbon-carbon triple bond, or 3-10 carbon atoms and at least one carbon-carbon triple bond in their ring structure, and have 5, 6 or 7 carbons and at least one carbon-carbon triple bond in the ring structure. Cycloalkynyls containing a polycyclic ring system can have two or more non-aromatic rings in which two or more carbons are common to two adjoining rings (i.e., "fused cycloalkynyl rings") and contain at least one carbon-carbon triple bond. Asymmetric structures such as (AB)C≡C(C"D) are intended to include both the *E* and *Z* isomers. This may be presumed in structural formulae herein wherein an asymmetric alkyne is present, or it may be explicitly indicated by the bond symbol C. The term "alkynyl" as used throughout the specification, examples, and claims is intended to include both "unsubstituted alkynyls" and "substituted alkynyls," the latter of which refers to alkynyl moieties having one or more substituents replacing a hydrogen on one or more carbons of the hydrocarbon backbone. The term "alkynyl" also includes "heteroalkynyl".

The term "substituted alkynyl" refers to alkynyl moieties having one or more substituents replacing one or more hydrogen atoms on one or more carbons of the hydrocarbon backbone. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphonium, phosphanyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, polyaryl, polyheteroaryl, and combinations thereof.

"Heteroalkynyl," as used herein, refers to straight or branched chain, or cyclic carbon-containing alkynyl radicals, or combinations thereof, containing at least one heteroatom. Suitable heteroatoms include, but are not limited to, O, N, Si, P and S, wherein the nitrogen, phosphorous and sulfur atoms are optionally oxidized, and the nitrogen heteroatom is optionally quaternized. For example, the term "heterocycloalkynyl group" is a cycloalkynyl group where at least one of the carbon atoms of the ring is substituted with a heteroatom such as, but not limited to, nitrogen, oxygen, sulphur, or phosphorus.

The term "aryl" as used herein is any $C_5$-$C_{26}$ carbon-based aromatic group, heteroaromatic, fused aromatic, or fused heteroaromatic. For example, "aryl," as used herein can include 5-, 6-, 7-, 8-, 9-, 10-, 14-, 18-, and 24-membered single-ring aromatic groups, including, but not limited to, benzene, naphthalene, anthracene, phenanthrene, chrysene, pyrene, corannulene, coronene, etc. "Aryl" further encompasses polycyclic ring systems having two or more cyclic rings in which two or more carbons are common to two adjoining rings (i.e., "fused aromatic rings"), wherein at least one of the rings is aromatic, e.g., the other cyclic ring or rings can be cycloalkyls, cycloalkenyls, cycloalkynyls, aryls and/or heterocycles. The aryl group can be substituted with one or more groups including, but not limited to, alkyl, alkynyl, alkenyl, aryl, halide, nitro, amino, ester, ketone, aldehyde, hydroxy, carboxylic acid, or alkoxy.

The term "substituted aryl" refers to an aryl group, wherein one or more hydrogen atoms on one or more aromatic rings are substituted with one or more substituents. Such substituents can be any substituents described above, e.g., halogen, azide, alkyl, aralkyl, alkenyl, alkynyl, cycloalkyl, hydroxyl, alkoxy, carbonyl (such as a ketone, aldehyde, carboxyl, alkoxycarbonyl, formyl, or an acyl), silyl, ether, ester, thiocarbonyl (such as a thioester, a thioacetate, or a thioformate), alkoxyl, phosphonium, phosphanyl, phosphoryl, phosphate, phosphonate, phosphinate, amino (e.g. quarternized amino), amido, amidine, imine, cyano, nitro, azido, sulfhydryl, imino, alkylthio, sulfate, sulfonate, sulfamoyl, sulfonamido, sulfonyl, heterocyclyl, alkylaryl, haloalkyl (such as CF3, $-CH_2-CF_3$, $-CCl_3$), -CN, aryl, heteroaryl, and combinations thereof.

"Heterocycle" and "heterocyclyl" are used interchangeably, and refer to a cyclic radical attached via a ring carbon or nitrogen atom of a non-aromatic monocyclic or polycyclic ring containing 3-30 ring atoms, 3-20 ring atoms, 3-10 ring atoms, or 5-6 ring atoms, where each ring contains carbon and one to four heteroatoms each selected from the group consisting of non-peroxide oxygen, sulfur, and N(Y) wherein Y is absent or is H, O, $C_1$-$C_{10}$ alkyl, phenyl or benzyl, and optionally containing 1-3 double bonds and optionally substituted with one or more substituents. Heterocyclyl are distinguished from heteroaryl by definition. Heterocycles can be a heterocycloalkyl, a heterocycloalkenyl, a heterocycloalkynyl, etc, such as piperazinyl, piperidinyl, piperidonyl, 4-piperidonyl, dihydrofuro[2,3-*b*]tetrahydrofuran, morpholinyl, piperazinyl, piperidinyl, piperidonyl, 4-piperidonyl, piperonyl, pyranyl, 2H-pyrrolyl, 4*H*-quinolizinyl, quinuclidinyl, tetrahydrofuranyl, 6*H*-1,2,5-thiadiazinyl. Heterocyclic groups can optionally be substituted with one or more substituents as

defined above for alkyl and aryl.

The term "heteroaryl" refers to $C_5$-$C_{30}$-membered aromatic, fused aromatic, biaromatic ring systems, or combinations thereof, in which one or more carbon atoms on one or more aromatic ring structures have been substituted with a heteroatom. Suitable heteroatoms include, but are not limited to, oxygen, sulfur, and nitrogen. Broadly defined, "heteroaryl," as used herein, includes 5-, 6-, 7-, 8-, 9-, 10-, 14-, 18-, and 24-membered single-ring aromatic groups that may include from one to four heteroatoms, for example, pyrrole, furan, thiophene, imidazole, oxazole, thiazole, triazole, tetrazole, pyrazole, pyridine, pyrazine, pyridazine and pyrimidine, and the like. The heteroaryl group may also be referred to as "aryl heterocycles" or "heteroaromatics". "Heteroaryl" further encompasses polycyclic ring systems having two or more rings in which two or more carbons are common to two adjoining rings (*i.e.*, "fused rings") wherein at least one of the rings is heteroaromatic, e.g., the other cyclic ring or rings can be cycloalkyls, cycloalkenyls, cycloalkynyls, aryls, heterocycles, or combinations thereof. Examples of heteroaryl rings include, but are not limited to, benzimidazolyl, benzofuranyl, benzothiofuranyl, benzothiophenyl, benzoxazolyl, benzoxazolinyl, benzthiazolyl, benztriazolyl, benztetrazolyl, benzisoxazolyl, benzisothiazolyl, benzimidazolinyl, carbazolyl, 4a*H*-carbazolyl, carbolinyl, chromanyl, chromenyl, cinnolinyl, decahydroquinolinyl, 2*H*,6*H*-1,5,2-dithiazinyl, furanyl, furazanyl, imidazolidinyl, imidazolinyl, imidazolyl, 1*H*-indazolyl, indolenyl, indolinyl, indolizinyl, indolyl, 3H-indolyl, isatinoyl, isobenzofuranyl, isochromanyl, isoindazolyl, isoindolinyl, isoindolyl, isoquinolinyl, isothiazolyl, isoxazolyl, methylenedioxyphenyl, naphthyridinyl, octahydroisoquinolinyl, 1,2,3-oxadiazolyl, 1,2,4-oxadiazolyl, 1,2,5-oxadiazolyl, 1,3,4-oxadiazolyl, oxazolidinyl, oxazolyl, oxindolyl, pyrimidinyl, phenanthridinyl, phenanthrolinyl, phenazinyl, phenothiazinyl, phenoxathinyl, phenoxazinyl, phthalazinyl, pteridinyl, purinyl, pyrazinyl, pyrazolidinyl, pyrazolinyl, pyrazolyl, pyridazinyl, pyridooxazole, pyridoimidazole, pyridothiazole, pyridinyl, pyridyl, pyrimidinyl, pyrrolidinyl, pyrrolinyl, pyrrolyl, quinazolinyl, quinolinyl, quinoxalinyl, tetrahydroisoquinolinyl, tetrahydroquinolinyl, tetrazolyl, 1,2,3-thiadiazolyl, 1,2,4-thiadiazolyl, 1,2,5-thiadiazolyl, 1,3,4-thiadiazolyl, thianthrenyl, thiazolyl, thienyl, thienothiazolyl, thienooxazolyl, thienoimidazolyl, thiophenyl and xanthenyl. One or more of the rings can be substituted as defined below for "substituted heteroaryl".

The term "substituted heteroaryl" refers to a heteroaryl group in which one or more hydrogen atoms on one or more heteroaromatic rings are substituted with one or more substituents. Such substituents can be any substituents described above, e.g., halogen, azide, alkyl, aralkyl, alkenyl, alkynyl, cycloalkyl, hydroxyl, alkoxy, carbonyl (such as a ketone, aldehyde, carboxyl, alkoxycarbonyl, formyl, or an acyl), silyl, ether, ester, thiocarbonyl (such as a thioester, a thioacetate, or a thioformate), alkoxyl, phosphonium, phosphanyl, phosphoryl, phosphate, phosphonate, phosphinate, amino (e.g. quarternized amino), amido, amidine, imine, cyano, nitro, azido, sulfhydryl, imino, alkylthio, sulfate, sulfonate, sulfamoyl, sulfonamido, sulfonyl, heterocyclyl, alkylaryl, haloalkyl (such as CF3, $-CH_2-CF_3$, $-CCl_3$), -CN, aryl, heteroaryl, and combinations thereof.

The term "polyaryl" refers to a chemical moiety that includes two or more aryls, heteroaryls, and combinations thereof. The aryls, heteroaryls, and combinations thereof, are fused, or linked via a single bond, ether, ester, carbonyl, amide, sulfonyl, sulfonamide, alkyl, azo, and combinations thereof. For example, a "polyaryl" can be polycyclic ring systems having two or more cyclic rings in which two or more carbons are common to two adjoining rings (i.e., "fused aromatic rings"), wherein two or more of the rings are aromatic. When two or more heteroaryls are involved, the chemical moiety can be referred to as a "polyheteroaryl."

The term "substituted polyaryl" refers to a polyaryl in which one or more of the aryls, heteroaryls are substituted, with one or more substituents. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphonium, phosphanyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, and combinations thereof. When two or more heteroaryls are involved, the chemical moiety can be referred to as a "substituted polyheteroaryl."

The term "cyclic ring" refers to a substituted or unsubstituted monocyclic ring or a substituted or unsubstituted polycyclic ring (such as those formed from single or fused ring systems), such as a substituted or unsubstituted cycloalkyl, a substituted or unsubstituted cycloalkenyl, a substituted or unsubstituted cycloalkynyl, a substituted or unsubstituted heterocyclyl, a substituted or unsubstituted aryl, a substituted or unsubstituted polyaryl, a substituted or unsubstituted heteroaryl, and a substituted or unsubstituted polyheteroaryl, that have from three to 30 carbon atoms, as geometric constraints permit. The substituted cycloalkyls, cycloalkenyls, cycloalkynyls, and heterocyclyls are substituted as defined above for the alkyls, alkenyls, alkynyls, heterocyclyls, aryls, heteroaryl, polyaryls, and polyheteroaryls, respectively.

The term "aralkyl" as used herein is an aryl group or a heteroaryl group having an alkyl, alkynyl, or alkenyl group as defined above attached to the aromatic group, such as an aryl, a heteroaryl, a polyaryl, or a polyheteroaryl. An example of an aralkyl group is a benzyl group.

The terms "alkoxyl" or "alkoxy," "aroxy" or "aryloxy," generally describe compounds represented by the formula $-OR^v$, wherein $R^v$ includes, but is not limited to, a substituted or unsubstituted alkyl, a substituted or unsubstituted alkenyl, a substituted or unsubstituted alkynyl, a substituted or unsubstituted cycloalkyl, a substituted or unsubstituted heterocyclyl,

a substituted or unsubstituted cycloalkenyl, a substituted or unsubstituted heterocycloalkenyl, a substituted or unsubstituted aryl, a substituted or unsubstituted heteroaryl, a substituted or unsubstituted polyaryl, a substituted or unsubstituted polyheteroaryl, a substituted or unsubstituted arylalkyl, a substituted or unsubstituted heteroalkyl, a substituted or unsubstituted alkylaryl, a substituted or unsubstituted alkylheteroaryl, a substituted or unsubstituted aralkyl, a substituted or unsubstituted carbonyl, a phosphonium, a phosphanyl, a phosphonyl, a sulfinyl, a silyl, a thiol, an amido, and an amino. Exemplary alkoxyl groups include methoxy, ethoxy, propyloxy, tert-butoxy and the like. A "lower alkoxy" group is an alkoxy group containing from one to six carbon atoms. An "ether" is two functional groups covalently linked by an oxygen as defined below. Accordingly, the substituent of an alkyl that renders that alkyl an ether is or resembles an alkoxyl, such as can be represented by one of -O-alkyl, -O-alkenyl, -O-alkynyl, -O-aryl, -O-heteroaryl, -O-polyaryl, -O-polyheteroaryl, -O-heterocyclyl, etc.

The term "substituted alkoxy" refers to an alkoxy group having one or more substituents replacing one or more hydrogen atoms on one or more carbons of the alkoxy backbone. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphonium, phosphanyl, phosphoryl, phosphate, phosphonate, phosphinate, amino (e.g. quarternized amino), amido, amidine, imine, cyano, nitro, azido, sulfhydryl, alkylthio, oxo, sulfate, sulfonate, sulfamoyl, sulfonamido, sulfonyl, heterocyclyl, alkylaryl, haloalkyl, -CN, aryl, heteroaryl, and combinations thereof.

The term "ether" as used herein is represented by the formula $A^2OA^1$, where $A^2$ and $A^1$ can be, independently, a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted aralkyl, a substituted or unsubstituted polyaryl, a substituted or unsubstituted polyheteroaryl, a phosphonium, a phosphanyl, a phosphonyl, a sulfinyl, a silyl, a thiol, a substituted or unsubstituted carbonyl, an alkoxy, an amido, or an amino, described above.

The term "polyether" as used herein is represented by the formula:

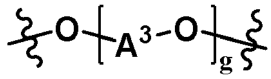

where $A^3$, $A^2$, and $A^1$ can be, independently, a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted aralkyl, a substituted or unsubstituted polyaryl, a substituted or unsubstituted polyheteroaryl, a phosphonium, a phosphanyl, a substituted or unsubstituted carbonyl, an alkoxy, an amido, or an amino, described above; g can be a positive integer from 1 to 30.

The term "phenoxy" is art recognized and refers to a compound of the formula $-OR^v$ wherein $R^v$ is (*i.e.,* $-O-C_6H_5$). One of skill in the art recognizes that a phenoxy is a species of the aroxy genus.

The term "substituted phenoxy" refers to a phenoxy group, as defined above, having one or more substituents replacing one or more hydrogen atoms on one or more carbons of the phenyl ring. Such substituents include, but are not limited to, halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphonium, phosphanyl, phosphanyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, and combinations thereof.

The terms "aroxy" and "aryloxy," as used interchangeably herein, are represented by -O-aryl or -O-heteroaryl, wherein aryl and heteroaryl are as defined herein.

The terms "substituted aroxy" and "substituted aryloxy," as used interchangeably herein, represent -O-aryl or -O-heteroaryl, having one or more substituents replacing one or more hydrogen atoms on one or more ring atoms of the aryl and heteroaryl, as defined herein. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphonium, phosphanyl, phosphanyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, polyaryl, polyheteroaryl, and combinations thereof.

The term "amino" as used herein includes the group

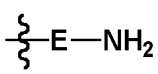

(primary amino),

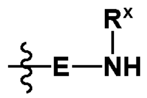

(secondary amino),

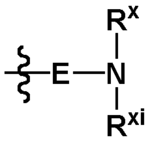

(tertiary amino), and

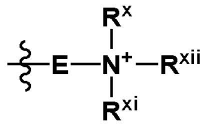

(quaternary amino),
wherein, E is absent, or E is substituted or unsubstituted alkyl, substituted or unsubstituted alkenyl, substituted or unsubstituted alkynyl, substituted or unsubstituted aralkyl, substituted or unsubstituted aryl, substituted or unsubstituted heteroaryl, a substituted or unsubstituted polyaryl, a substituted or unsubstituted polyheteroaryl, substituted or unsubstituted heterocyclyl, wherein independently of E, $R^x$, $R^{xi}$, and $R^{xii}$ each independently represent a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted aralkyl (e.g. a substituted or unsubstituted alkylaryl, a substituted or unsubstituted arylalkyl), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, a phosphonyl, a sulfinyl, a silyl, a thiol, an amido, an amino, or $-(CH_2)_m-R'''$; R‴ represents a hydroxyl group, a substituted or unsubstituted carbonyl group, a substituted or unsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino; and m is zero or an integer ranging from 1 to 8. The term "quaternary amino" also includes the groups where the nitrogen, $R^x$, $R^{xi}$, and $R^{xii}$ with the $N^+$ to which they are attached complete a heterocyclyl or heteroaryl having from 3 to 14 atoms in the ring structure.

The terms "amide" or "amido" are used interchangeably, refer to both "unsubstituted amido" and "substituted amido" and are represented by the general formula:

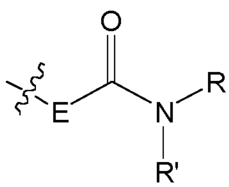
or
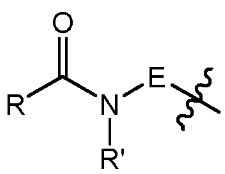

wherein, E is absent, or E is a substituted or unsubstituted alkyl, a substituted or unsubstituted alkenyl, a substituted or unsubstituted alkynyl, a substituted or unsubstituted aralkyl, a substituted or unsubstituted aryl, substituted or unsubstituted heteroaryl, a substituted or unsubstituted polyaryl, a substituted or unsubstituted polyheteroaryl, or a substituted or unsubstituted heterocyclyl, wherein independently of E, R and R' each independently represent a hydrogen, a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted aralkyl (e.g. a substituted or unsubstituted alkylaryl, a substituted or unsubstituted arylalkyl), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, a phosphonyl, a sulfinyl, a silyl, a thiol, an amido, an amino, or $-(CH_2)_m-R'''$, or R and R' taken together with the N atom to which they are

attached complete a heterocycle having from 3 to 14 atoms in the ring structure; R‴ represents a hydroxyl group, a substituted or unsubstituted carbonyl group, a substituted or unsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino; and m is zero or an integer ranging from 1 to 8. In some forms, when E is oxygen, a carbamate is formed.

"Carbonyl," as used herein, is art-recognized and includes such moieties as can be represented by the general formula:

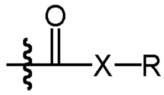
or
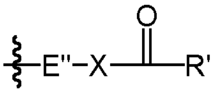

wherein X is a bond, or represents an oxygen or a sulfur, and R represents a hydrogen, a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted aralkyl (e.g. a substituted or unsubstituted alkylaryl, a substituted or unsubstituted arylalkyl), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, an amido, an amino, or $-(CH_2)_m-R''$, or a pharmaceutical acceptable salt; E" is absent, or E" is substituted or unsubstituted alkyl, substituted or unsubstituted alkenyl, substituted or unsubstituted alkynyl, substituted or unsubstituted aralkyl, substituted or unsubstituted aryl, substituted or unsubstituted heteroaryl, a substituted or unsubstituted polyaryl, a substituted or unsubstituted polyheteroaryl, substituted or unsubstituted heterocyclyl; R' represents a hydrogen, a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted aralkyl (e.g. a substituted or unsubstituted alkylaryl, a substituted or unsubstituted arylalkyl), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, an amido, an amino, or $-(CH_2)_m-R''$; R" represents a hydroxyl group, a substituted or unsubstituted carbonyl group, a substituted or unsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino; and m is zero or an integer ranging from 1 to 8. Where X is oxygen and R is defined as above, the moiety is also referred to as a carboxyl group. When X is oxygen and R is hydrogen, the formula represents a "carboxylic acid". Where X is oxygen and R' is hydrogen, the formula represents a "formate". Where X is oxygen and R or R' is not hydrogen, the formula represents an "ester". In general, where the oxygen atom of the above formula is replaced by a sulfur atom, the formula represents a "thiocarbonyl" group. Where X is sulfur and R or R' is not hydrogen, the formula represents a "thioester". Where X is sulfur and R is hydrogen, the formula represents a "thiocarboxylic acid". Where X is sulfur and R' is hydrogen, the formula represents a "thioformate". Where X is a bond and R is not hydrogen, the above formula represents a "ketone". Where X is a bond and R is hydrogen, the above formula represents an "aldehyde".

The term "substituted carbonyl" refers to a carbonyl, as defined above, wherein one or more hydrogen atoms in R, R' or a group to which the moiety

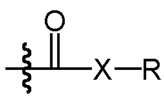
or
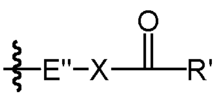
,

is attached, are independently substituted. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphonium, phosphanyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, and combinations thereof.

The term "carboxyl" is as defined above for carbonyl and is defined more specifically by the formula $-R^{iv}COOH$, wherein $R^{iv}$ is a substituted or unsubstituted alkyl, a substituted or unsubstituted alkenyl, a substituted or unsubstituted alkynyl, a substituted or unsubstituted heterocyclyl, a substituted or unsubstituted alkylaryl, a substituted or unsubstituted arylalkyl, a substituted or unsubstituted aryl, a substituted or unsubstituted polyaryl, a substituted or unsubstituted

polyheteroaryl, or a substituted or unsubstituted heteroaryl.

The term "substituted carboxyl" refers to a carboxyl, as defined above, wherein one or more hydrogen atoms in $R^{iv}$ are substituted. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphonium, phosphanyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, polyaryl, polyheteroaryl, and combinations thereof.

The term "phosphanyl" is represented by the formula

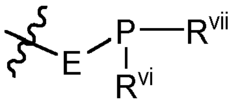

wherein, E is absent, or E is a substituted or unsubstituted alkyl, a substituted or unsubstituted alkenyl, a substituted or unsubstituted alkynyl, a substituted or unsubstituted aralkyl, a substituted or unsubstituted cycloalkyl, a substituted or unsubstituted aryl, a substituted or unsubstituted heteroaryl, a substituted or unsubstituted polyaryl, a substituted or unsubstituted polyheteroaryl, a substituted or unsubstituted heterocyclyl, wherein independently of E, $R^{vi}$ and $R^{vii}$ each independently represent a hydrogen, a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted aralkyl (e.g. a substituted or unsubstituted alkylaryl, a substituted or unsubstituted arylalkyl, etc.), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, a phosphonyl, a sulfinyl, a silyl, a thiol, an amido, an amino, or $-(CH_2)_m-R'''$, or $R^{vi}$ and $R^{vii}$ taken together with the P atom to which they are attached complete a heterocycle having from 3 to 14 atoms in the ring structure; $R'''$ represents a hydroxyl group, a substituted or unsubstituted carbonyl group, a substituted or unsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino; and m is zero or an integer ranging from 1 to 8.

The term "phosphonium" is represented by the formula

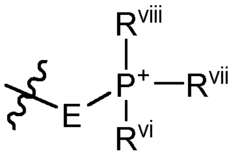

wherein, E is absent, or E is a substituted or unsubstituted alkyl, a substituted or unsubstituted alkenyl, a substituted or unsubstituted alkynyl, a substituted or unsubstituted aralkyl, a substituted or unsubstituted cycloalkyl, a substituted or unsubstituted aryl, a substituted or unsubstituted heteroaryl, a substituted or unsubstituted polyaryl, a substituted or unsubstituted polyheteroaryl, a substituted or unsubstituted heterocyclyl, wherein independently of E, $R^{vi}$, $R^{vii}$, and $R^{viii}$ each independently represent a hydrogen, a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted aralkyl (e.g. a substituted or unsubstituted alkylaryl, a substituted or unsubstituted arylalkyl, etc.), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, a phosphonyl, a sulfinyl, a silyl, a thiol, an amido, an amino, or $-(CH_2)_m-R'''$, or $R^{vi}$, $R^{vii}$, and $R^{viii}$ taken together with the $P^+$ atom to which they are attached complete a heterocycle having from 3 to 14 atoms in the ring structure; $R'''$ represents a hydroxyl group, a substituted or unsubstituted carbonyl group, a substituted or unsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino; and m is zero or an integer ranging from 1 to 8.

The term "phosphonyl" is represented by the formula

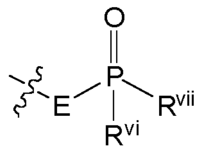

wherein E is absent, or E is a substituted or unsubstituted alkyl, a substituted or unsubstituted alkenyl, a substituted or unsubstituted alkynyl, a substituted or unsubstituted aralkyl (e.g., a substituted or unsubstituted alkylaryl, a substituted or unsubstituted arylalkyl, etc.), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, oxygen, alkoxy, aroxy, or substituted alkoxy or substituted aroxy, wherein, independently of E, $R^{vi}$ and $R^{vii}$ are independently a hydrogen, a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted aralkyl (e.g. a substituted or unsubstituted alkylaryl, a substituted or unsubstituted arylalkyl, etc.), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, a phosphonyl, a sulfinyl, a silyl, a thiol, an amido, an amino, or $-(CH_2)_m-R'''$, or $R^{vi}$ and $R^{vii}$ taken together with the P atom to which they are attached complete a heterocycle having from 3 to 14 atoms in the ring structure; $R'''$ represents a hydroxyl group, a substituted or unsubstituted carbonyl group, a substituted or unsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino; and m is zero or an integer ranging from 1 to 8.

The term "substituted phosphonyl" represents a phosphonyl in which E, $R^{vi}$ and $R^{vii}$ are independently substituted. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, polyaryl, polyheteroaryl, and combinations thereof.

The term "phosphoryl" defines a phosphonyl in which E is absent, oxygen, alkoxy, aroxy, substituted alkoxy or substituted aroxy, as defined above, and independently of E, $R^{vi}$ and $R^{vii}$ are independently hydroxyl, alkoxy, aroxy, substituted alkoxy or substituted aroxy, as defined above. When E is oxygen, the phosphoryl cannot be attached to another chemical species, such as to form an oxygen-oxygen bond, or other unstable bonds, as understood by one of ordinary skill in the art. When E, $R^{vi}$ and $R^{vii}$ are substituted, the substituents include, but are not limited to, halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, polyaryl, polyheteroaryl, and combinations thereof.

The term "sulfinyl" is represented by the formula

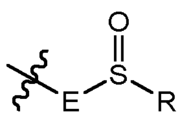

wherein E is absent, or E is a substituted or unsubstituted alkyl, a substituted or unsubstituted alkenyl, a substituted or unsubstituted alkynyl, a substituted or unsubstituted aralkyl (e.g., a substituted or unsubstituted alkylaryl, a substituted or unsubstituted arylalkyl, etc.), a substituted or unsubstituted aryl, a substituted or unsubstituted heteroaryl, a substituted or unsubstituted heterocyclyl, a substituted or unsubstituted polyaryl, a substituted or unsubstituted polyheteroaryl, wherein independently of E, R represents a hydrogen, a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted aralkyl (e.g. a substituted or unsubstituted alkylaryl, a substituted or unsubstituted arylalkyl), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, a phosphonyl, a silyl, a thiol, an amido, an amino, or $-(CH_2)_m-R'''$, or E and R taken together with the S atom to which they are attached complete a heterocycle having from 3 to 14 atoms in the ring structure; $R'''$ represents a

hydroxyl group, a substituted or unsubstituted carbonyl group, a substituted or unsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino; and m is zero or an integer ranging from 1 to 8.

The term "sulfonyl" is represented by the formula

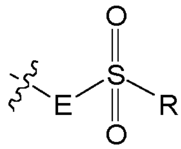

wherein E is absent, or E is a substituted or unsubstituted alkyl, a substituted or unsubstituted alkenyl, a substituted or unsubstituted alkynyl, a substituted or unsubstituted aralkyl (e.g., a substituted or unsubstituted alkylaryl, a substituted or unsubstituted arylalkyl, etc.), a substituted or unsubstituted aryl, a substituted or unsubstituted heteroaryl, a substituted or unsubstituted heterocyclyl, a substituted or unsubstituted polyaryl, a substituted or unsubstituted polyheteroaryl, wherein independently of E, R represents a hydrogen, a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted aralkyl (e.g. a substituted or unsubstituted alkylaryl, a substituted or unsubstituted arylalkyl), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, an amido, an amino, or $-(CH_2)_m-R'''$, or E and R taken together with the S atom to which they are attached complete a heterocycle having from 3 to 14 atoms in the ring structure; R‴ represents a hydroxyl group, a substituted or unsubstituted carbonyl group, a substituted or unsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino; and m is zero or an integer ranging from 1 to 8.

The term "substituted sulfonyl" represents a sulfonyl in which E, R, or both, are independently substituted. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphonium, phosphanyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, polyaryl, polyheteroaryl, and combinations thereof.

The term "sulfonic acid" refers to a sulfonyl, as defined above, wherein R is hydroxyl, and E is absent, or E is substituted or unsubstituted cycloalkyl, substituted or unsubstituted heterocyclyl, substituted or unsubstituted alkylaryl, substituted or unsubstituted arylalkyl, substituted or unsubstituted aryl, a substituted or unsubstituted polyaryl, a substituted or unsubstituted polyheteroaryl, or substituted or unsubstituted heteroaryl.

The term "sulfate" refers to a sulfonyl, as defined above, wherein E is absent, oxygen, alkoxy, aroxy, substituted alkoxy or substituted aroxy, as defined above, and R is independently hydroxyl, alkoxy, aroxy, substituted alkoxy or substituted aroxy, as defined above. When E is oxygen, the sulfate cannot be attached to another chemical species, such as to form an oxygen-oxygen bond, or other unstable bonds, as understood by one of ordinary skill in the art.

The term "sulfonate" refers to a sulfonyl, as defined above, wherein E is oxygen, alkoxy, aroxy, substituted alkoxy or substituted aroxy, as defined above, and R is independently hydrogen, substituted or unsubstituted alkyl, substituted or unsubstituted alkenyl, substituted or unsubstituted alkynyl, substituted or unsubstituted amino, substituted or unsubstituted cycloalkyl, substituted or unsubstituted heterocyclyl, substituted or unsubstituted aralkyl, substituted or unsubstituted alkylaryl, substituted or unsubstituted arylalkyl, substituted or unsubstituted aryl, substituted or unsubstituted heteroaryl, a substituted or unsubstituted polyaryl, a substituted or unsubstituted polyheteroaryl, $-(CH_2)_m-R'''$, R‴ represents a hydroxy group, substituted or unsubstituted carbonyl group, an aryl, a cycloalkyl ring, a cycloalkenyl ring, a heterocycle, an amido, an amino, or a polycycle; and m is zero or an integer ranging from 1 to 8. When E is oxygen, sulfonate cannot be attached to another chemical species, such as to form an oxygen-oxygen bond, or other unstable bonds, as understood by one of ordinary skill in the art.

The term "sulfamoyl" refers to a sulfonamide or sulfonamide represented by the formula

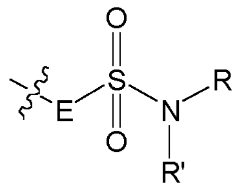

wherein E is absent, or E is substituted or unsubstituted alkyl, a substituted or unsubstituted alkenyl, a substituted or unsubstituted alkynyl, a substituted or unsubstituted aralkyl (e.g., a substituted or unsubstituted alkylaryl, a substituted or unsubstituted cycloalkyl, etc.), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, wherein independently of E, R and R' each independently represent a hydrogen, a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted aralkyl (e.g. a substituted or unsubstituted alkylaryl, a substituted or unsubstituted arylalkyl, etc.), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, an amido, an amino, or $-(CH_2)_m-R'''$, or R and R' taken together with the N atom to which they are attached complete a heterocycle having from 3 to 14 atoms in the ring structure; R''' represents a hydroxyl group, a substituted or unsubstituted carbonyl group, a substituted or unsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino; and m is zero or an integer ranging from 1 to 8.

The term "silyl group" as used herein is represented by the formula -SiRR'R", where R, R', and R" can be, independently, a hydrogen, a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted aralkyl (e.g. a substituted or unsubstituted alkylaryl, a substituted or unsubstituted arylalkyl, etc.), a substituted or unsubstituted polyaryl, a substituted or unsubstituted polyheteroaryl, a substituted or unsubstituted carbonyl, a phosphonium, a phosphanyl, a phosphonyl, a sulfinyl, a thiol, an amido, an amino, an alkoxy, or an oxo, described above.

The terms "thiol" are used interchangeably and are represented by -SR, where R can be a hydrogen, a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted aralkyl (e.g. a substituted or unsubstituted alkylaryl, a substituted or unsubstituted arylalkyl, etc.), a substituted or unsubstituted polyaryl, a substituted or unsubstituted polyheteroaryl, a substituted or unsubstituted carbonyl, a phosphonium, a phosphanyl, an amido, an amino, an alkoxy, an oxo, a phosphonyl, a sulfinyl, or a silyl, described above.

The term "alkylthio" refers to an alkyl group, as defined above, having a sulfur radical attached thereto. The "alkylthio" moiety is represented by -S-alkyl. Representative alkylthio groups include methylthio, ethylthio, and the like. The term "alkylthio" also encompasses cycloalkyl groups having a sulfur radical attached thereto.

The term "substituted alkylthio" refers to an alkylthio group having one or more substituents replacing one or more hydrogen atoms on one or more carbon atoms of the alkylthio backbone. Such substituents include, but are not limited to, halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphonium, phosphanyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, and combinations thereof.

The term "phenylthio" is art recognized, and refers to $-S-C_6H_5$, *i.e.,* a phenyl group attached to a sulfur atom.

The term "substituted phenylthio" refers to a phenylthio group, as defined above, having one or more substituents replacing a hydrogen on one or more carbons of the phenyl ring. Such substituents include, but are not limited to, halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphonium, phosphanyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, and combinations thereof.

"Arylthio" refers to -S-aryl or -S-heteroaryl groups, wherein aryl and heteroaryl as defined herein.

The term "substituted arylthio" represents -S-aryl or -S-heteroaryl, having one or more substituents replacing a hydrogen atom on one or more ring atoms of the aryl and heteroaryl rings as defined herein. Such substituents include, but

are not limited to, halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphonium, phosphanyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, and combinations thereof.

The terms "hydroxyl" and "hydroxy" are used interchangeably and are represented by -OH.

The term "oxo" refers to =O bonded to a carbon atom.

The terms "cyano" and "nitrile" are used interchangeably to refer to -CN.

The term "nitro" refers to $-NO_2$.

The term "phosphate" refers to $-O-PO_3$.

The term "azide" or "azido" are used interchangeably to refer to $-N_3$.

The disclosed compounds and substituent groups, can, independently, possess two or more of the groups listed above. For example, if the compound or substituent group is a straight chain alkyl group, one of the hydrogen atoms of the alkyl group can be substituted with a hydroxyl group, an alkoxy group, etc. Depending upon the groups that are selected, a first group can be incorporated within second group or, alternatively, the first group can be pendant (*i.e.,* attached) to the second group. For example, with the phrase "an alkyl group comprising an ester group," the ester group can be incorporated within the backbone of the alkyl group. Alternatively, the ester can be attached to the backbone of the alkyl group. The nature of the group(s) that is (are) selected will determine if the first group is embedded or attached to the second group.

The compounds and substituents can be substituted with, independently, with the substituents described above in the definition of "substituted."

### II. Gold (I) Complexes

Gold (I) complexes that can catalyze organic reactions under near UV and/or visible light have been developed. Generally, the gold (I) complexes disclosed herein contain diphosphine lignads with functionlized ring structures. Without being bound to any theories, these gold (I) complexes have vacant coordination sites that can facilitate binding of substrate(s) and trapping of radical(s). The electronic and steric properties of the bridging ligand of these gold (I) complexes allow reactivity of the metal-metal bonded $^3[5d\sigma^*6p\sigma]$ excited state toward incoming substrate/trapping of carbon central radical and improve the light absorption in the visible spectral region.

These gold (I) complexes have superior photochemical reactivity (e.g. strong absorption in near UV and/or visible light wavelength, large quenching rate constants, large radiative decay rate, etc.), and should be suitable for use in photoredox catalysis, such as homocoupling of organic halides (e.g. alkyl halides and aryl halides), alkylation of 2-phenyl-1,2,3,4-tetrahydroisoquinoline, cyclization of indoles, reductive dehalogenation of aryl halides, and/or C-H bonds cleavage. In particular, these gold (I) complexes can absorb in the near UV and/or visible light wavelength range, such as from 360 nm to about 450 nm or from about 380 nm to about 450 nm, and thus can catalyze photoredox reations under near-UV and/or visible light. For example, these gold (I) complexes can act as near UV- and/or visible light-activated carbon-halide cleaving agents under mild reaction conditions, such as at room temperature.

The photocatalytic activity of these gold (I) complexes is higher compared to known catalysts, such as $[Au_2(\mu\text{-dppm})_2](Cl)_2$, $[Ru(bpy)_3](Cl)_2$, and/or [*fac*-Ir(ppy)$_3$]. For example, the product of a photo-induced organic reaction using the one or more gold (I) complexes described herein, such as those described above, has a yield that is higher than the yield of the same product of the same reaction under the same reaction conditions (e.g. same amount of reactants, base, and solvent, light at the same wavelength, same temperature, pressure, gas environment, humidity, and reaction time, etc.), using the same loading or a higher loading of $[Au_2(\mu\text{-dppm})_2](Cl)_2$, $[Ru(bpy)_3](Cl)_2$, and/or [*fac*-Ir(ppy)$_3$] compared to the loading of the gold (I) complex disclosed herein.

### A. Gold (I) Complex Structures

The gold (I) complexes can have the structure of Formula I:

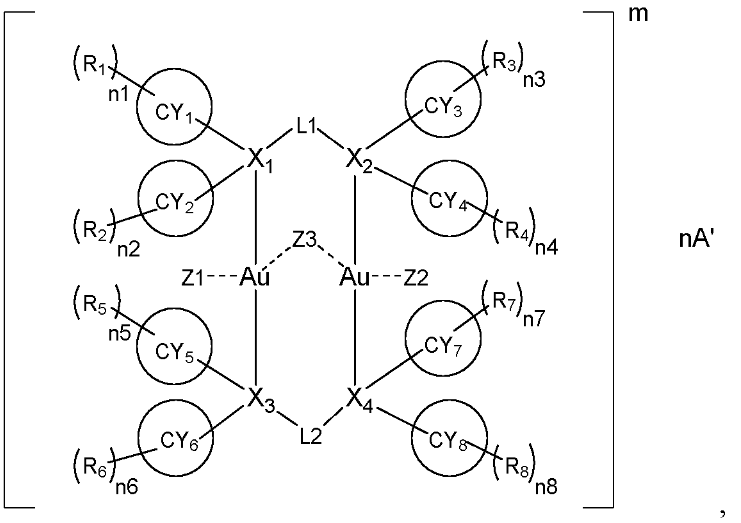

Formula I

where: (a) m can be 0, one positive charge, or two positive charges; (b) n can be an integer between 0 and 2; (c) when present, each occurrence of A' can be an anion; (d) $X_1$-$X_4$ can be independently P or N; (e) $L_1$ and $L_2$ can be independently absent, a single bond, a double bond, a triple bond, oxygen, sulfur, amino, amido, substituted or unsubstituted alkyl, substituted or unsubstituted alkenyl, carbonyl, sulfonyl, sulfonic acid, phosphoryl, or phosphonyl; (f) $CY_1$-$CY_8$ can be independently substituted or unsubstituted aryl, substituted or unsubstituted polyaryl, substituted or unsubstituted heteroaryl, substituted or unsubstituted polyheteroaryl, substituted or unsubstituted heterocyclyl, substituted or unsubstituted cycloalkyl, substituted or unsubstituted cycloalkenyl, or substituted or unsubstituted cycloalkynyl; (g) $R_1$-$R_8$ can be independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol; (h) n1-n8 can be independently an integer between zero and 10; (i) each ------ can be independently absent, a single bond, a double bond, or a triple bond; (j) Z1 and Z2 can be independently absent, a halide (fluoride, chloride, bromide, or iodide), a triflate, a sulfonate, a phosphate, a perchlorate, a dicyanoaurate, a cyano, a nitrate, a hydroxyl, an oxo, an oxalate, or a carboxylate; (k) Z3 can be absent, a halide (fluoride, chloride, bromide, or iodide), an oxygen, a sulfur, an oxalate, or a carboxylate; and (l) the substituents can be independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a haloalkyl (e.g. $-CF_3$), a phenoxy, an aroxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

In some forms, when $CY_1$-$CY_8$ of Formula I are independently substituted or unsubstituted aryl, at least one of $R_1$-$R_8$ is not hydrogen. In some forms of Formula I, at least one of $CY_1$-$CY_8$ is not an unsubstituted aryl. In some forms, the gold (I) complex discosed herein is not $[Au_2(\mu\text{-dppm})_2](Cl)_2$.

In some forms, the gold (I) complexes can have the structure of Formula Ia, Formula Ib, or Formula Ic:

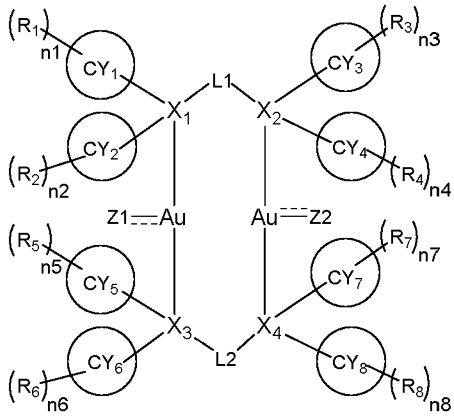

Formula Ia

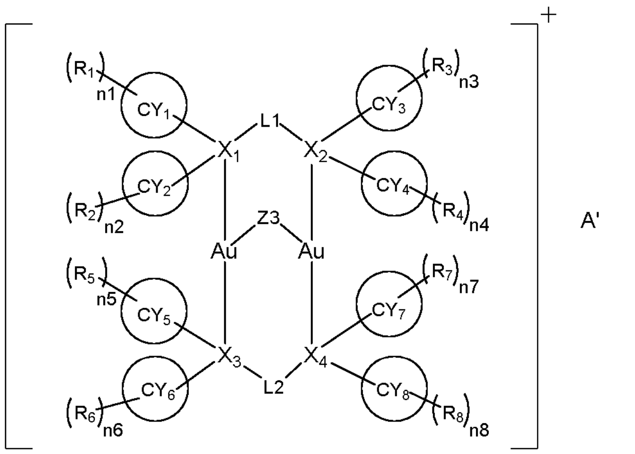

Formula Ib

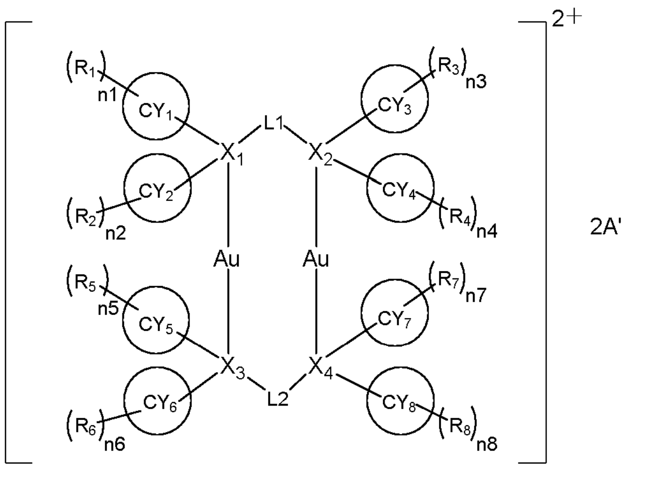

Formula Ic

where: (a) each occurrence of A' can be an anion; (b) $X_1$-$X_4$ can be independently P or N; (c) $L_1$ and $L_2$ can be independently absent, a single bond, a double bond, a triple bond, oxygen, sulfur, amino, amido, ether, polyether, thioether, substituted or unsubstituted alkyl, substituted or unsubstituted alkenyl, carbonyl, sulfonyl, sulfonic acid, phosphoryl, or phosphonyl; (d) $CY_1$-$CY_8$ can be independently substituted or unsubstituted aryl, substituted or unsubstituted polyaryl, substituted or unsubstituted heteroaryl, substituted or unsubstituted polyheteroaryl, substituted or unsubstituted heterocyclyl, substituted or unsubstituted cycloalkyl, substituted or unsubstituted cycloalkenyl, or substituted or unsubstituted cycloalkynyl; (e) $R_1$-$R_8$ can be independently hydrogen, substituted or unsubstituted alkyl, substituted or unsubstituted alkenyl,

substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol; (f) n1-n8 can be independently an integer between 0 and 10; (g) each ------ can be independently absent or a single bond; (h) Z1 and Z2 can be independently a halide (fluoride, chloride, bromide, or iodide), a triflate, a sulfonate, a phosphate, a perchlorate, a dicyanoaurate, a cyano, a nitrate, a hydroxyl, an oxo, an oxalate, or a carboxylate; (i) Z3 can be a halide (fluoride, chloride, bromide, or iodide), an oxygen, a sulfur, an oxalate, or a carboxylate; and (j) the substituents can be as defined above for Formula I.

In some forms of Formulae I, Ia, Ib, and/or Ic, $L_1$ and $L_2$ can be independently a single bond or

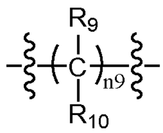

,

$R_9$ and $R_{10}$ can be independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol, and n9 can be an integer between 1 and 10, between 1 and 8, between 1 and 6, between 1 and 4, between 1 and 3, between 1 and 2, or 1.

In some forms of Formulae I, Ia, Ib, and/or Ic, X1-X4 can be P.

In some forms of Formulae I, Ia, Ib, and/or Ic, $CY_1$-$CY_8$ can be independently substituted or unsubstituted aryl, substituted or unsubstituted polyaryl, substituted or unsubstituted heteroaryl, or substituted or unsubstituted polyheteroaryl. In some forms of Formulae I, Ia, Ib, and/or Ic, $CY_1$-$CY_8$ can be independently:

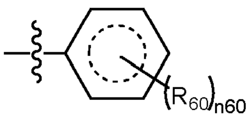 , 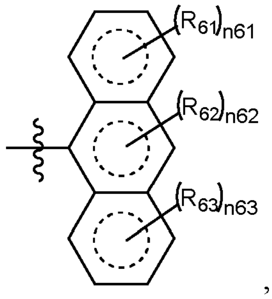 , 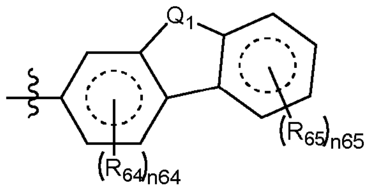 , or 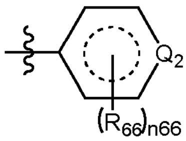 ,

where: (a) $R_{60}$-$R_{66}$ can be independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol; (b) n60-n66 can be independently an integer from 0 to 5, from 0 to 4, from 0 to 3, from 0 to 2, 0 or 1; (c) $Q_1$ and $Q_2$ can be independently oxygen, sulfur, $NR_{67}$, or $CR_{68}R_{69}$, and $R_{67}$-$R_{69}$ can be independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol; and (d) the substituents can be as defined above for Formula I. In some forms, $R_{67}$-$R_{69}$ can be independently hydrogen or a substituted or unsubstituted alkyl, such as a substituted or unsubstituted $C_1$-$C_6$ alkyl, a substituted or unsubstituted $C_1$-$C_4$ alkyl, a substituted or unsubstituted $C_1$-$C_3$ alkyl, a substituted or unsubstituted $C_1$-$C_2$ alkyl, an unsubstituted $C_1$-$C_6$ alkyl, an unsubstituted $C_1$-$C_4$ alkyl, an unsubstituted $C_1$-$C_3$ alkyl, or an unsubstituted $C_1$-$C_2$ alkyl.

In some forms, $R_{60}$-$R_{66}$ can be independently hydrogen, substituted or unsubstituted alkyl, substituted or unsubstituted alkenyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, aliphatic alcohol, haloalkyl (e.g. $-CF_3$), amino, or alkoxy; and the substituents can be independently an unsubstituted alkyl, an unsubstituted alkenyl, a substituted or unsubstituted heterocyclyl, a subsituted or unsubstituted aryl, a substituted or unsubstituted polyaryl, an oxo, an alkoxyl, a halogen, a hydroxyl, a haloalkyl (e.g. $-CF_3$), or an amino, or a combination thereof.

In some forms, $R_{60}$-$R_{66}$ can be independently hydrogen, haloalkyl (e.g. $-CF_3$), alkoxyl (e.g. -O-alkyl, such as -OMe), a substituted or unsubstituted heterocyclyl, a substituted or unsubstituted aryl, an amino, a substituted or unsubstituted polyaryl, a hydroxyl, aliphatic alcohol, a substituted or unsubstituted alkyl, or an unsubstituted alkenyl;

and the substituents can be independently an unsubstituted alkyl (e.g. methyl, ethyl, propyl, butyl, pentyl, hexyl, etc.), an unsubstituted alkenyl (methylene, ethylene, propylene, butylene, pentylene, hexylene, etc.), an unsubstituted heterocyclyl, a phenyl, an unsubstituted polyaryl, an alkoxyl (e.g. -O-alkyl, such as -OMe), a halogen, a hydroxyl, or a haloalkyl (e.g. $-CF_3$), or a combination thereof.

In some forms, the gold (I) complexes can have the structure of Formula IIa, Formula IIb, or Formula IIc:

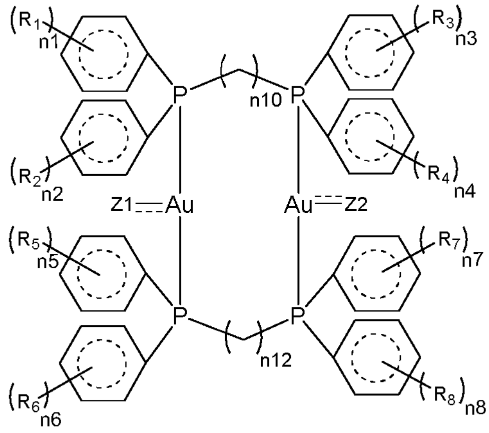,

Formula IIa

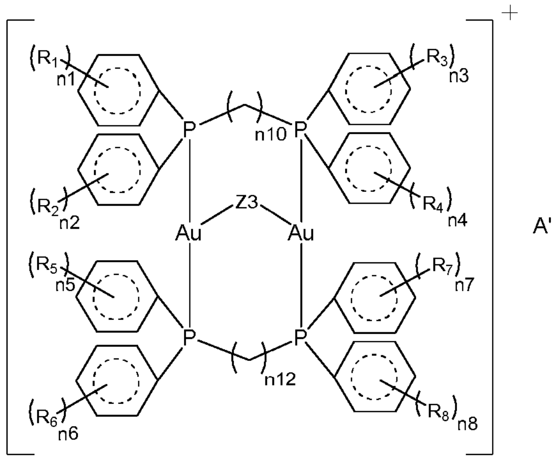,

Formula IIb

or

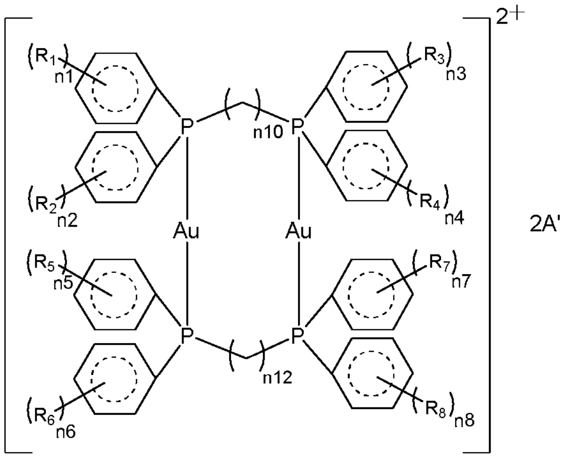

Formula IIc

where: (a) n10 and n12 can be independently an integer between 1 and 6, between 1 and 4, between 1 and 3, between 1 and 2, or 1; (b) $R_1$-$R_8$ can be independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol; (c) n1-n8 can be independently an integer between zero and 5; (d) each ------ can be independently absent or a single bond; (e) Z1 and Z2 can be independently a halide (fluoride, chloride, bromide, or iodide), a triflate, a sulfonate, a phosphate, a perchlorate, a dicyanoaurate, a cyano, a nitrate, a hydroxyl, an oxo, an oxalate, or a carboxylate; (f) Z3 can be a halide (fluoride, chloride, bromide, or iodide), an oxygen, a sulfur, an oxalate, or a carboxylate; (g) each occurrence of A' can be an anion; and (h) the substituents can be as defined for Formula I.

In some forms of Formulae I, Ia, Ib, Ic, IIa, IIb, and/or IIc, $R_1$-$R_8$ can be independently hydrogen, substituted or unsubstituted alkyl, substituted or unsubstituted alkenyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, haloalkyl (e.g. $-CF_3$), oxo, amino, or alkoxy

In some forms of Formulae I, Ia, Ib, Ic, IIa, IIb, and/or IIc, $R_1$-$R_8$ can be independently hydrogen, substituted or unsubstituted alkyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, oxo, or alkoxy.

In some forms of Formulae I, Ia, Ib, Ic, IIa, IIb, and/or IIc, $R_1$-$R_8$ can be independently hydrogen, haloalkyl (e.g. $-CF_3$), alkoxyl (e.g. -O-alkyl, such as -OMe), a substituted or unsubstituted heterocyclyl, a substituted or unsubstituted aryl, an amino, a substituted or unsubstituted polyaryl, a hydroxyl, a substituted or unsubstituted alkyl, or an unsubstituted alkenyl.

In some forms of Formulae I, Ia, Ib, Ic, IIa, IIb, and/or IIc, $R_1$-$R_8$ can be independently hydrogen, hydroxyl, unsubstituted alkyl (such as unsubstituted $C_1$-$C_6$ alkyl), unsubstituted alkenyl (such as unsubstiuted $C_1$-$C_6$ alkenyl), haloalkyl (e.g. $-CF_3$), aliphatic alcohol, $-NR_{70}R_{71}$, substituted or unsubstituted polyaryl, substituted or unsubstituted heterocyclyl,

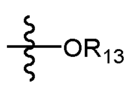, or 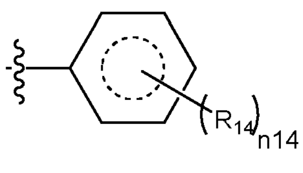,

$R_{13}$ and $R_{14}$ can be independently halogen, hydrogen, hydroxyl, haloalkyl (e.g. $-CF_3$), alkoxyl (e.g. -O-alkyl, such as -OMe), unsubstituted alkenyl, or substituted or unsubstituted alkyl, and n14 can be an integer from 0 to 5, from 0 to 4, from 0 to 3, from 0 to 2, such as 0, 1, or 2, and $R_{70}$ and $R_{71}$ can be independently hydrogen, a substituted or unsubstituted alkyl, a substituted or unsubstituted aryl, an amino, an alkoxyl, or a carbonyl. In some forms, $R_{70}$ and $R_{71}$ can be independently hydrogen, unsubstituted alkyl (such as unsubstituted $C_1$-$C_6$ alkyl), or unsubstituted phenyl. When $R_1$-$R_8$ are all trifluoromethyl and n14 is 2, at least one of $R_1$-$R_8$ is not

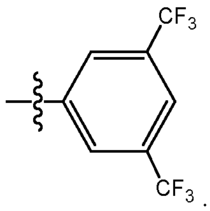

In some forms, $R_{13}$ and $R_{14}$ can be independently unsubstituted $C_1$-$C_{10}$ alkyl, unsubstituted $C_1$-$C_8$ alkyl, unsubstituted $C_1$-$C_6$ alkyl, unsubstituted $C_1$-$C_5$ alkyl, unsubstituted $C_1$-$C_4$ alkyl, or unsubstituted $C_1$-$C_3$ alkyl, such as methyl, ethyl, propyl, butyl (e.g. n-butyl or t-butyl), pentyl, hexyl, etc. When any of $R_1$-$R_8$ for Formulae I, Ia, Ib, Ic, IIa, IIb, and/or IIc is a substituted or unsubstituted heterocyclyl or polyaryl, the heterocyclyl or polyaryl can have the structure of:

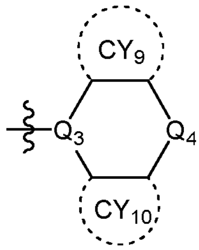

or

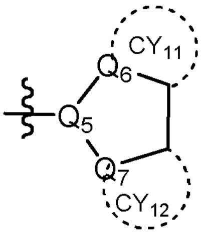

where $CY_9$-$CY_{12}$ can be independently absent or a substituted or unsubstituted aryl; and $Q_3$-$Q_7$ can be indpendently oxygen, sulfur, $NR_{72}$, or $CR_{73}R_{74}$, and $R_{72}$-$R_{74}$ can be independently absent, hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol; and the substituents can be as defined above for Formula I. In some forms, $R_{72}$-$R_{74}$ can be independently absent, hydrogen, a substituted or unsubstituted alkyl, a substituted or unsubstituted aryl, an amino, an alkoxyl, or a carbonyl. In some forms, $R_{72}$-$R_{74}$ can be independently absent, hydrogen, or a substituted or unsubstituted alkyl. In some forms, $R_{72}$-$R_{74}$ can be independently absent or hydrogen.

In some forms of Formulae I, Ia, Ib, Ic, IIa, IIb, and/or IIc, Z1-Z3 can be independently a halide, such as fluride, chloride, bromide, or iodide, for example, chloride or bromide.

In some forms of Formulae I, Ia, Ib, Ic, IIa, IIb, and/or IIc, each occurrence of A' can be hydride, oxide, fluoride, sulfide, chloride, bromide, iodide, hydrogen phosphate, dihydrogen phosphate, hexafluorophosphate, triflate, sulfate, nitrate, hydrogen sulfate, nitrite, thiosulfate, sulfite, chlorate, bromate, chlorite, hypochlorite, hypobromite, carbonate, chromate, hydrogen carbonate, dichromate, perchlorate, acetate, formate, cyanide, amide, cyanate, peroxide, thiocyanate, oxalate, hydroxide, or permanganate. In some forms of Formulae I, Ia, Ib, Ic, IIa, IIb, and/or IIc, each occurrence of A' can be a halide (e.g., fluoride, bromide, iodide), perchlorate, hydrogen phosphate, dihydrogen phosphate, sulfate, nitrate, hydrogen sulfate, nitrite, chlorate, bromate, chlorite, hypochlorite, or hypobromite, for example, a halide or perchlorate.

For any of Formulae I, Ia, Ib, Ic, IIa, IIb, and IIc, the substituents can be independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a haloalkyl (e.g. $-CF_3$), a cyano, an isocyano, a nitro, an amino, an amido, an oxo, a sulfonyl, a phosphonyl, or a thiol, or a combination thereof.

For any of Formulae I, Ia, Ib, Ic, IIa, IIb, and IIc, the substituents can be independently an unsubstituted alkyl, an unsubstituted alkenyl, an unsubstituted alkynyl, an unsubstituted heterocyclyl, an unsubstituted aryl, an unsubstituted heteroaryl, an unsubstituted polyaryl, an unsubstituted polyheteroaryl, a substituted or unsubstituted aralkyl, carbonyl, alkoxy, a halogen, a hydroxyl, a haloalkyl (e.g. $-CF_3$), a cyano, a nitro, an amino, an amido, an oxo, a sulfonyl, a phosphonyl, or a thiol, or a combination thereof.

For any of Formulae I, Ia, Ib, Ic, IIa, IIb, and IIc, the substituents can be an unsubstituted alkyl, an unsubstituted alkenyl, a substituted or unsubstituted heterocyclyl, a subsituted or unsubstituted aryl, a substituted or unsubstituted polyaryl, an oxo, an alkoxyl, a halogen, a hydroxyl, a haloalkyl (e.g. $-CF_3$), an amino, a cyano, or a carbonyl, or a combination thereof.

For any of Formulae I, Ia, Ib, Ic, IIa, IIb, and IIc, the substituents can be independently an unsubstituted alkyl (e.g. methyl, ethyl, propyl, butyl, pentyl, hexyl, etc.), an unsubstituted alkenyl (methylene, ethylene, propylene, butylene, pentylene, hexylene, etc.), an unsubstituted heterocyclyl, a phenyl, an unsubstituted polyaryl, an alkoxyl (e.g. -O-alkyl,

such as -OMe), a halogen, a hydroxyl, or a haloalkyl (e.g. $-CF_3$), or a combination thereof.

For any of Formulae I, Ia, Ib, Ic, IIa, IIb, and IIc, the alkyl can be a linear alkyl, a branched alkyl, or a cyclic alkyl (either monocyclic or polycyclic). The terms "cyclic alkyl" and "cycloalkyl" are used interchangably herein. Exemplary alkyl include a linear $C_1$-$C_{30}$ alkyl, a branched $C_4$-$C_{30}$ alkyl, a cyclic $C_3$-$C_{30}$ alkyl, a linear $C_1$-$C_{20}$ alkyl, a branched $C_4$-$C_{20}$ alkyl, a cyclic $C_3$-$C_{20}$ alkyl, a linear $C_1$-$C_{10}$ alkyl, a branched $C_4$-$C_{10}$ alkyl, a cyclic $C_3$-$C_{10}$ alkyl, a linear $C_1$-$C_6$ alkyl, a branched $C_4$-$C_6$ alkyl, a cyclic $C_3$-$C_6$ alkyl, a linear $C_1$-$C_4$ alkyl, cyclic $C_3$-$C_4$ alkyl, such as a linear $C_1$-$C_{10}$, $C_1$-$C_9$, $C_1$-$C_8$, $C_1$-$C_7$, $C_1$-$C_6$, $C_1$-$C_5$, $C_1$-$C_4$, $C_1$-$C_3$, or $C_1$-$C_2$ alkyl group, a branched $C_3$-$C_9$, $C_3$-$C_9$, $C_3$-$C_8$, $C_3$-$C_7$, $C_3$-$C_6$, $C_3$-$C_5$, or $C_3$-$C_4$ alkyl group, or a cyclic $C_3$-$C_9$, $C_3$-$C_9$, $C_3$-$C_8$, $C_3$-$C_7$, $C_3$-$C_6$, $C_3$-$C_5$, or $C_3$-$C_4$ alkyl group. The cyclic alkyl can be polycyclic alkyl, such as a $C_4$-$C_{30}$, $C_4$-$C_{25}$, $C_4$-$C_{20}$, $C_4$-$C_{18}$, $C_4$-$C_{16}$, $C_4$-$C_{15}$, $C_4$-$C_{14}$, $C_4$-$C_{13}$, $C_4$-$C_{12}$, $C_4$-$C_{10}$, $C_4$-$C_9$, $C_4$-$C_8$, $C_4$-$C_7$, $C_4$-$C_6$, or $C_4$-$C_5$ polycyclic alkyl group.

For any of Formulae I, Ia, Ib, Ic, IIa, IIb, and IIc, the alkenyl can be a linear alkenyl, a branched alkenyl, or a cyclic alkenyl (either monocyclic or polycyclic). The terms "cyclic alkenyl" and "cycloalkenyl" are used interchangably herein. Exemplary alkenyl include a linear $C_2$-$C_{30}$ alkenyl, a branched $C_4$-$C_{30}$ alkenyl, a cyclic $C_3$-$C_{30}$ alkenyl, a linear $C_2$-$C_{20}$ alkenyl, a branched $C_4$-$C_{20}$ alkenyl, a cyclic $C_3$-$C_{20}$ alkenyl, a linear $C_2$-$C_{10}$ alkenyl, a branched $C_4$-$C_{10}$ alkenyl, a cyclic $C_3$-$C_{10}$ alkenyl, a linear $C_2$-$C_6$ alkenyl, a branched $C_4$-$C_6$ alkenyl, a cyclic $C_3$-$C_6$ alkenyl, a linear $C_2$-$C_4$ alkenyl, cyclic $C_3$-$C_4$ alkenyl, such as a linear $C_2$-$C_{10}$, $C_2$-$C_9$, $C_2$-$C_8$, $C_2$-$C_7$, $C_2$-$C_6$, $C_2$-$C_5$, $C_2$-$C_4$, $C_2$-$C_3$, $C_2$ alkenyl group, a branched $C_3$-$C_9$, $C_3$-$C_9$, $C_3$-$C_8$, $C_3$-$C_7$, $C_3$-$C_6$, $C_3$-$C_5$, $C_3$-$C_4$ alkenyl group, or a cyclic $C_3$-$C_9$, $C_3$-$C_9$, $C_3$-$C_8$, $C_3$-$C_7$, $C_3$-$C_6$, $C_3$-$C_5$, $C_3$-$C_4$ alkenyl group. The cyclic alkenyl can be polycyclic alkenyl, such as a $C_4$-$C_{30}$, $C_4$-$C_{25}$, $C_4$-$C_{20}$, $C_4$-$C_{18}$, $C_4$-$C_{16}$, $C_4$-$C_{15}$, $C_4$-$C_{14}$, $C_4$-$C_{13}$, $C_4$-$C_{12}$, $C_4$-$C_{10}$, $C_4$-$C_9$, $C_4$-$C_8$, $C_4$-$C_7$, $C_4$-$C_6$, or $C_4$-$C_5$ polycyclic alkenyl group.

For any of Formulae I, Ia, Ib, Ic, IIa, IIb, and IIc, the alkynyl can be a linear alkynyl, a branched alkynyl, or a cyclic alkynyl (either monocyclic or polycyclic). The terms "cyclic alkynyl" and "cycloalkynyl" are used interchangably herein. Exemplary alkynyl include a linear $C_2$-$C_{30}$ alkynyl, a branched $C_4$-$C_{30}$ alkynyl, a cyclic $C_3$-$C_{30}$ alkynyl, a linear $C_2$-$C_{20}$ alkynyl, a branched $C_4$-$C_{20}$ alkynyl, a cyclic $C_3$-$C_{20}$ alkynyl, a linear $C_2$-$C_{10}$ alkynyl, a branched $C_4$-$C_{10}$ alkynyl, a cyclic $C_3$-$C_{10}$ alkynyl, a linear $C_2$-$C_6$ alkynyl, a branched $C_4$-$C_6$ alkynyl, a cyclic $C_3$-$C_6$ alkynyl, a linear $C_2$-$C_4$ alkynyl, cyclic $C_3$-$C_4$ alkynyl, such as a linear $C_2$-$C_{10}$, $C_2$-$C_9$, $C_2$-$C_8$, $C_2$-$C_7$, $C_2$-$C_6$, $C_2$-$C_5$, $C_2$-$C_4$, $C_2$-$C_3$, $C_2$ alkynyl group, a branched $C_3$-$C_9$, $C_3$-$C_9$, $C_3$-$C_8$, $C_3$-$C_7$, $C_3$-$C_6$, $C_3$-$C_5$, $C_3$-$C_4$ alkynyl group, or a cyclic $C_3$-$C_9$, $C_3$-$C_9$, $C_3$-$C_8$, $C_3$-$C_7$, $C_3$-$C_6$, $C_3$-$C_5$, $C_3$-$C_4$ alkynyl group. The cyclic alkynyl can be polycyclic alkynyl, such as a $C_4$-$C_{30}$, $C_4$-$C_{25}$, $C_4$-$C_{20}$, $C_4$-$C_{18}$, $C_4$-$C_{16}$, $C_4$-$C_{15}$, $C_4$-$C_{14}$, $C_4$-$C_{13}$, $C_4$-$C_{12}$, $C_4$-$C_{10}$, $C_4$-$C_9$, $C_4$-$C_8$, $C_4$-$C_7$, $C_4$-$C_6$, or $C_4$-$C_5$ polycyclic alkynyl group.

It is understood that any of the exemplary alkyl, alkenyl, and alkynyl groups can be heteroalkyl, heteroalkenyl, and heteroalkynyl, respectively. For example, the alkyl can be a linear $C_2$-$C_{30}$ heteroalkyl, a branched $C_4$-$C_{30}$ heteroalkyl, a cyclic $C_3$-$C_{30}$ heteroalkyl (i.e. a monocycloheteroalkyl or polycycloheteroalkyl), a linear $C_2$-$C_{20}$ heteroalkyl, a branched $C_4$-$C_{20}$ heteroalkyl, a cyclic $C_3$-$C_{20}$ heteroalkyl, a linear $C_2$-$C_{10}$ heteroalkyl, a branched $C_4$-$C_{10}$ heteroalkyl, a cyclic $C_3$-$C_{10}$ heteroalkyl, a linear $C_2$-$C_6$ heteroalkyl, a branched $C_4$-$C_6$ heteroalkyl, a cyclic $C_3$-$C_6$ heteroalkyl, a linear $C_2$-$C_4$ heteroalkyl, cyclic $C_3$-$C_4$ heteroalkyl, such as a linear $C_2$-$C_{10}$, $C_2$-$C_9$, $C_2$-$C_8$, $C_2$-$C_7$, $C_2$-$C_6$, $C_2$-$C_5$, $C_2$-$C_4$, $C_2$-$C_3$, $C_2$ heteroalkyl group, a branched $C_3$-$C_9$, $C_3$-$C_9$, $C_3$-$C_8$, $C_3$-$C_7$, $C_3$-$C_6$, $C_3$-$C_5$, $C_3$-$C_4$ heteroalkyl group, or a cyclic $C_3$-$C_9$, $C_3$-$C_9$, $C_3$-$C_8$, $C_3$-$C_7$, $C_3$-$C_6$, $C_3$-$C_5$, $C_3$-$C_4$ heteroalkyl group. The cyclic heteroalkyl can be polycyclic, such as a $C_4$-$C_{30}$, $C_4$-$C_{25}$, $C_4$-$C_{20}$, $C_4$-$C_{18}$, $C_4$-$C_{16}$, $C_4$-$C_{15}$, $C_4$-$C_{14}$, $C_4$-$C_{13}$, $C_4$-$C_{12}$, $C_4$-$C_{10}$, $C_4$-$C_9$, $C_4$-$C_8$, $C_4$-$C_7$, $C_4$-$C_6$, or $C_4$-$C_5$ polycyclic heteroalkyl group.

For any of Formulae I, Ia, Ib, Ic, IIa, IIb, and IIc, the alkenyl can be a linear $C_2$-$C_{30}$ heteroalkenyl, a branched $C_4$-$C_{30}$ heteroalkenyl, a cyclic $C_3$-$C_{30}$ heteroalkenyl (i.e. a monocycloheteroalkenyl or polycycloheteroalkenyl), a linear $C_2$-$C_{20}$ heteroalkenyl, a branched $C_4$-$C_{20}$ heteroalkenyl, a cyclic $C_3$-$C_{20}$ heteroalkenyl, a linear $C_2$-$C_{10}$ heteroalkenyl, a branched $C_4$-$C_{10}$ heteroalkenyl, a cyclic $C_3$-$C_{10}$ heteroalkenyl, a linear $C_2$-$C_6$ heteroalkenyl, a branched $C_4$-$C_6$ heteroalkenyl, a cyclic $C_3$-$C_6$ heteroalkenyl, a linear $C_2$-$C_4$ heteroalkenyl, cyclic $C_3$-$C_4$ heteroalkenyl, such as a linear $C_2$-$C_{10}$, $C_2$-$C_9$, $C_2$-$C_8$, $C_2$-$C_7$, $C_2$-$C_6$, $C_2$-$C_5$, $C_2$-$C_4$, $C_2$-$C_3$, $C_2$ heteroalkenyl group, a branched $C_3$-$C_9$, $C_3$-$C_9$, $C_3$-$C_8$, $C_3$-$C_7$, $C_3$-$C_6$, $C_3$-$C_5$, $C_3$-$C_4$ heteroalkenyl group, or a cyclic $C_3$-$C_9$, $C_3$-$C_9$, $C_3$-$C_8$, $C_3$-$C_7$, $C_3$-$C_6$, $C_3$-$C_5$, $C_3$-$C_4$ heteroalkenyl group. The cyclic heteroalkenyl can be polycyclic, such as a $C_4$-$C_{30}$, $C_4$-$C_{25}$, $C_4$-$C_{20}$, $C_4$-$C_{18}$, $C_4$-$C_{16}$, $C_4$-$C_{15}$, $C_4$-$C_{14}$, $C_4$-$C_{13}$, $C_4$-$C_{12}$, $C_4$-$C_{10}$, $C_4$-$C_9$, $C_4$-$C_8$, $C_4$-$C_7$, $C_4$-$C_6$, or $C_4$-$C_5$ polycyclic heteroalkenyl group.

For any of Formulae I, Ia, Ib, Ic, IIa, IIb, and IIc, the alkynyl can be a linear $C_2$-$C_{30}$ heteroalkynyl, a branched $C_4$-$C_{30}$ heteroalkynyl, a cyclic $C_3$-$C_{30}$ heteroalkynyl (i.e. a monocycloheteroalkynyl or polycycloheteroalkynyl), a linear $C_2$-$C_{20}$ heteroalkynyl, a branched $C_4$-$C_{20}$ heteroalkynyl, a cyclic $C_3$-$C_{20}$ heteroalkynyl, a linear $C_2$-$C_{10}$ heteroalkynyl, a branched $C_4$-$C_{10}$ heteroalkynyl, a cyclic $C_3$-$C_{10}$ heteroalkynyl, a linear $C_2$-$C_6$ heteroalkynyl, a branched $C_4$-$C_6$ heteroalkynyl, a cyclic $C_3$-$C_6$ heteroalkynyl, a linear $C_2$-$C_4$ heteroalkynyl, cyclic $C_3$-$C_4$ heteroalkynyl, such as a linear $C_2$-$C_{10}$, $C_2$-$C_9$, $C_2$-$C_8$, $C_2$-$C_7$, $C_2$-$C_6$, $C_2$-$C_5$, $C_2$-$C_4$, $C_2$-$C_3$, $C_2$ heteroalkynyl group, a branched $C_3$-$C_9$, $C_3$-$C_9$, $C_3$-$C_8$, $C_3$-$C_7$, $C_3$-$C_6$, $C_3$-$C_5$, $C_3$-$C_4$ heteroalkynyl group, or a cyclic $C_3$-$C_9$, $C_3$-$C_9$, $C_3$-$C_8$, $C_3$-$C_7$, $C_3$-$C_6$, $C_3$-$C_5$, $C_3$-$C_4$ heteroalkynyl group. The cyclic heteroalkynyl can be polycyclic, such as a $C_4$-$C_{30}$, $C_4$-$C_{25}$, $C_4$-$C_{20}$, $C_4$-$C_{18}$, $C_4$-$C_{16}$, $C_4$-$C_{15}$, $C_4$-$C_{14}$, $C_4$-$C_{13}$, $C_4$-$C_{12}$, $C_4$-$C_{10}$, $C_4$-$C_9$, $C_4$-$C_8$, $C_4$-$C_7$, $C_4$-$C_6$, or $C_4$-$C_5$ polycyclic heteroalkynyl group.

For any of Formulae I, Ia, Ib, Ic, IIa, IIb, and IIc, the aryl group can be a $C_5$-$C_{30}$ aryl, a $C_5$-$C_{20}$ aryl, a $C_5$-$C_{12}$ aryl, a $C_5$-$C_{11}$ aryl, a $C_5$-$C_9$ aryl, a $C_6$-$C_{20}$ aryl, a $C_6$-$C_{12}$ aryl, a $C_6$-$C_{11}$ aryl, or a $C_6$-$C_9$ aryl. It is understood that the aryl can be a

heteroaryl, such as a $C_5$-$C_{30}$ heteroaryl, a $C_5$-$C_{20}$ heteroaryl, a $C_5$-$C_{12}$ heteroaryl, a $C_5$-$C_{11}$ heteroaryl, a $C_5$-$C_9$ heteroaryl, a $C_6$-$C_{30}$ heteroaryl, a $C_6$-$C_{20}$ heteroaryl, a $C_6$-$C_{12}$ heteroaryl, a $C_6$-$C_{11}$ heteroaryl, or a $C_6$-$C_9$ heteroaryl. For any of Formulae I, Ia, Ib, Ic, IIa, IIb, and IIc, the polyaryl group can be a $C_{10}$-$C_{30}$ polyaryl, a $C_{10}$-$C_{20}$ polyaryl, a $C_{10}$-$C_{12}$ polyaryl, a $C_{10}$-$C_{11}$ polyaryl, or a $C_{12}$-$C_{20}$ polyaryl. It is understood that the aryl can be a polyheteroaryl, such as a $C_{10}$-$C_{30}$ polyheteroaryl, a $C_{10}$-$C_{20}$ polyheteroaryl, a $C_{10}$-$C_{12}$ polyheteroaryl, a $C_{10}$-$C_{11}$ polyheteroaryl, or a $C_{12}$-$C_{20}$ polyheteroaryl.

In some forms, the gold (I) complexes disclosed herein are not $[Au_2(\mu\text{-dppm})_2](Cl)_2$ having the structure of **1a** and are not $[Au_2(\mu\text{-dppm})_2](ClO_4)_2$ having the structure of **1b**:

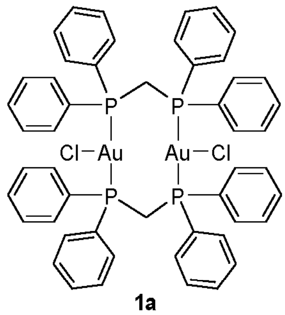

**1a**

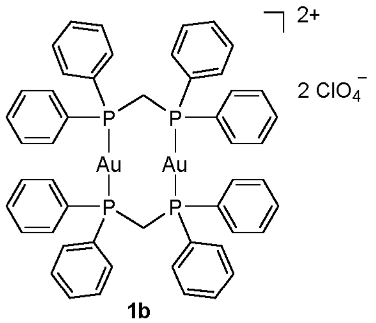

**1b**

The gold (I) complexes may contain one or more chiral centers or may otherwise be capable of existing as multiple stereoisomers. These may be pure (single) stereoisomers or mixtures of stereoisomers, such as enantiomers, diastereomers, and enantiomerically or diastereomerically enriched mixtures. The compounds may be capable of existing as geometric isomers. Accordingly, it is to be understood that the present invention includes pure geometric isomers or mixtures of geometric isomers.

### 1. Exemplary Gold (I) Complexes

Exemplary gold (I) complexes are presented below.

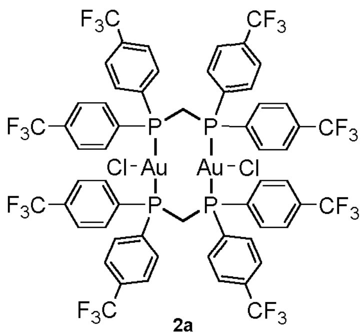

**2a**

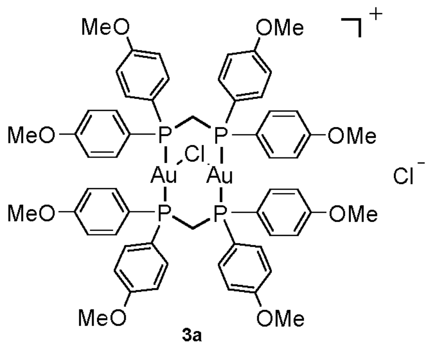

**3a**

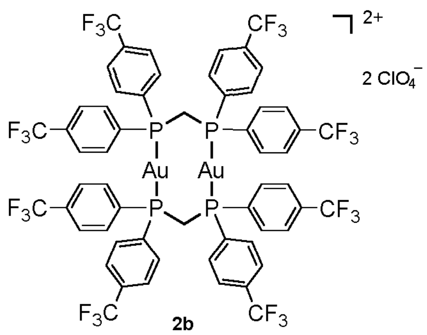

**2b**

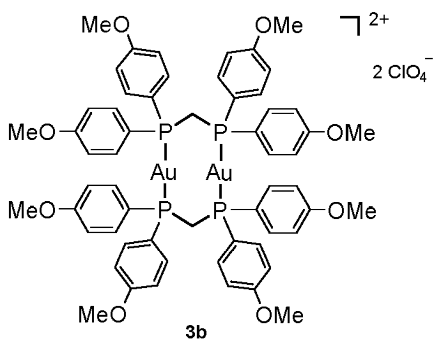

**3b**

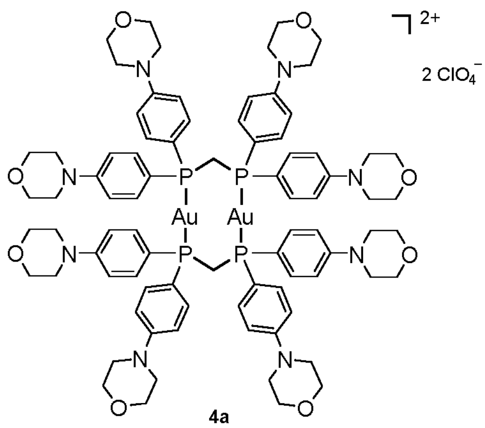

4a

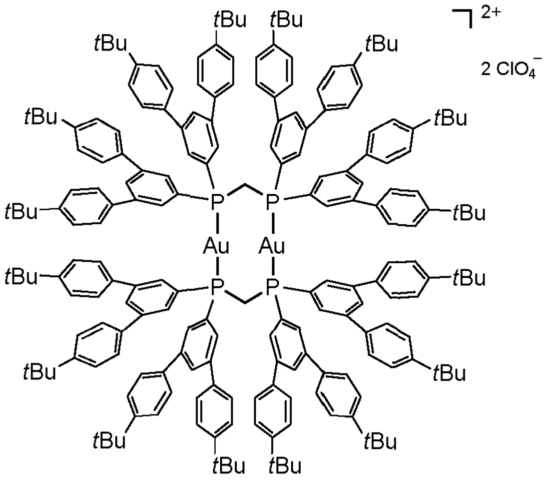

5a

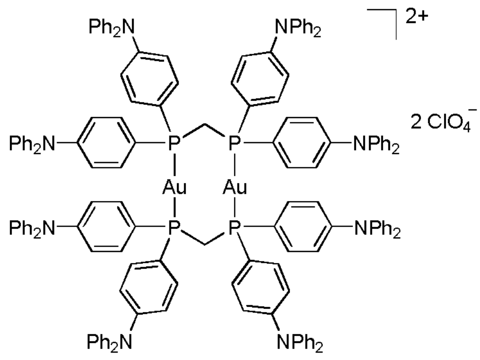

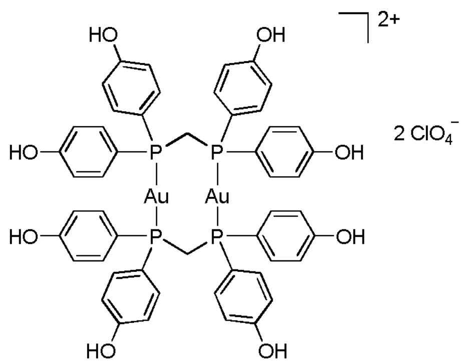

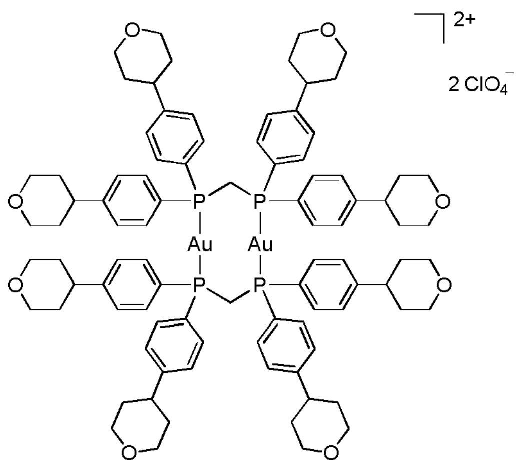

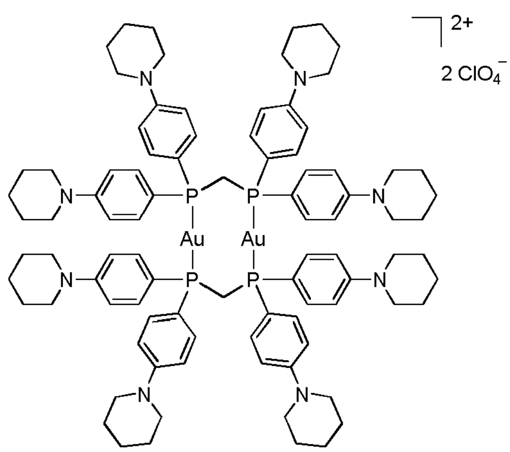

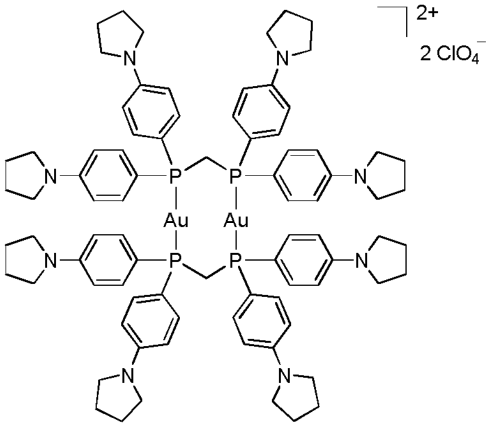
2 $ClO_4^-$

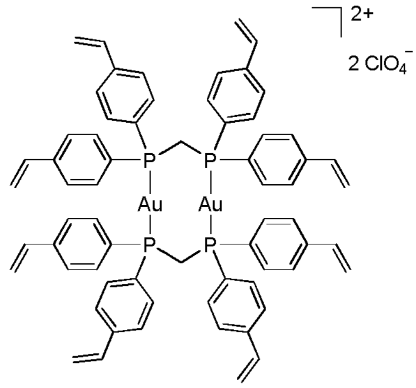
2 $ClO_4^-$

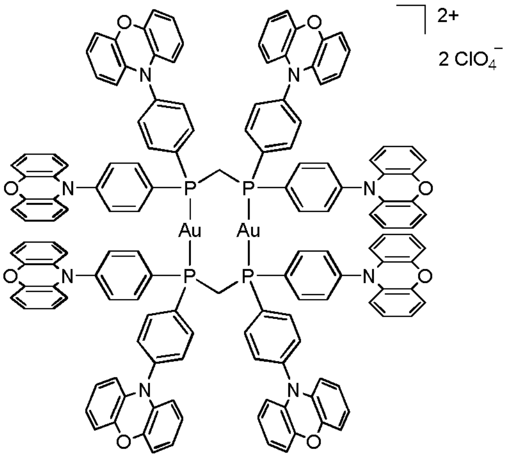
2 $ClO_4^-$

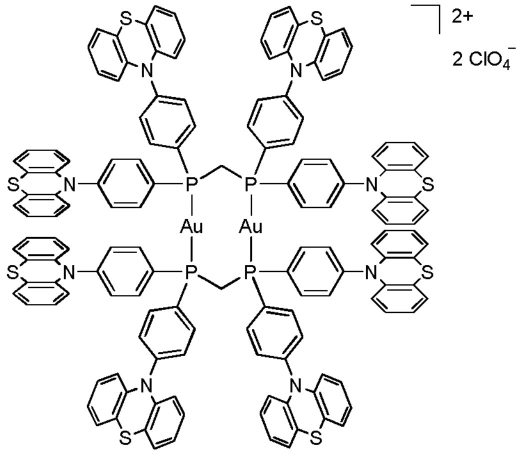
2 $ClO_4^-$

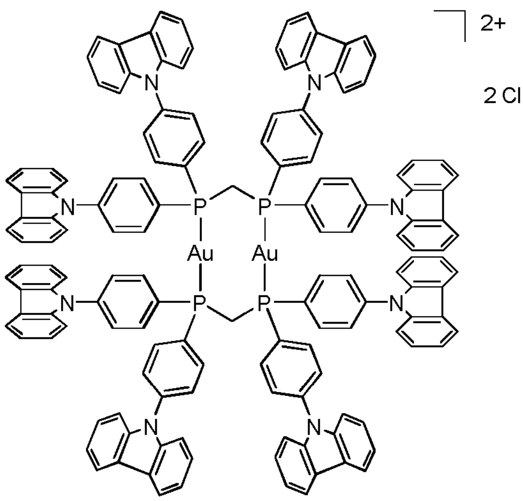
2 $ClO_4^-$

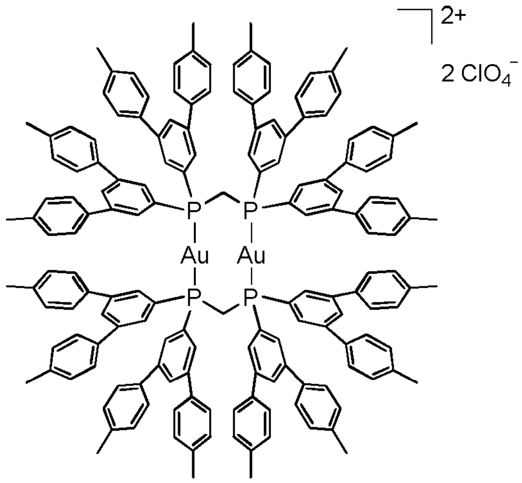

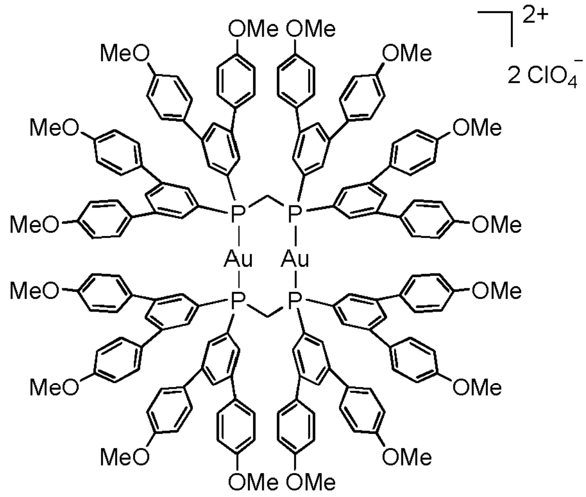

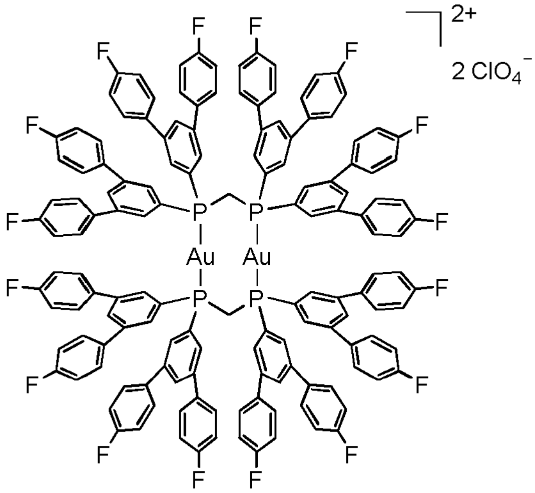

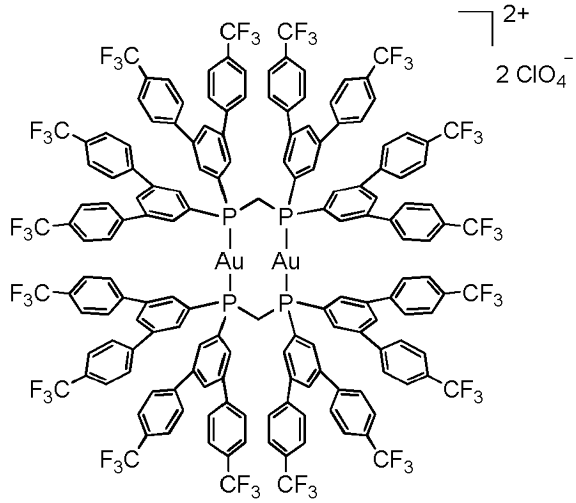

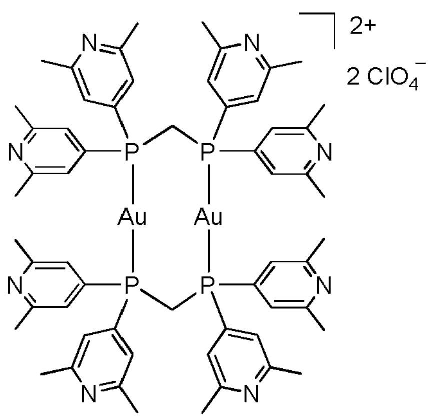

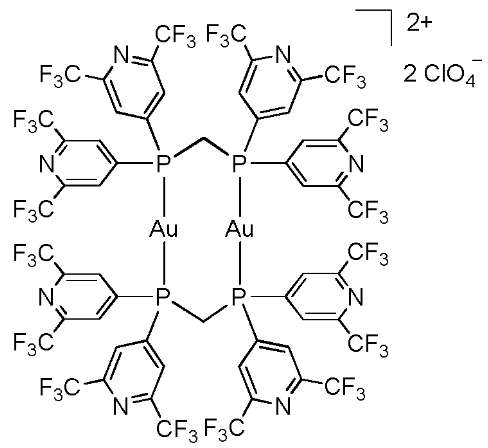

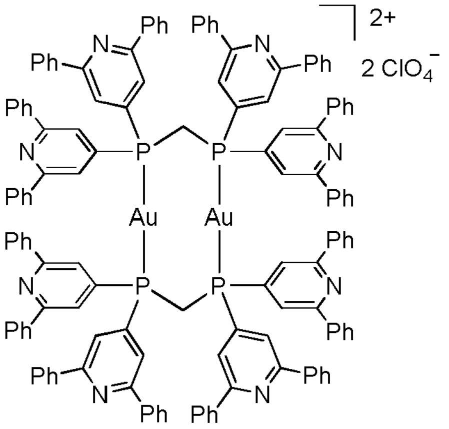

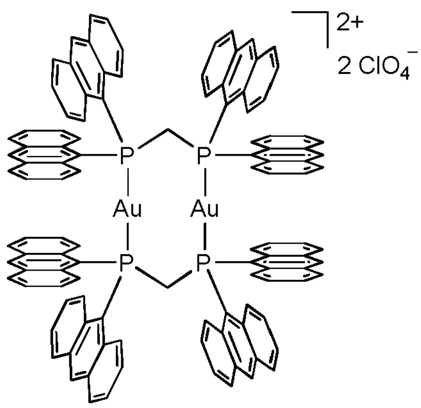

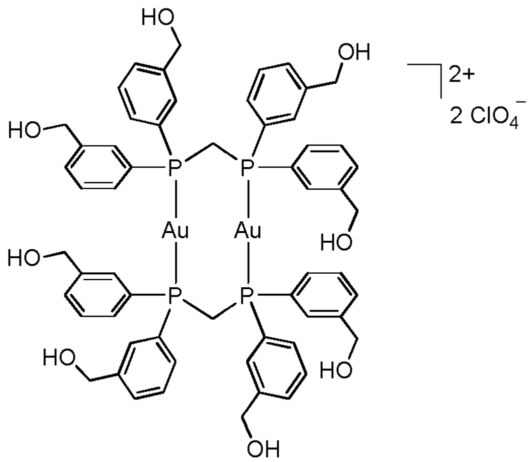

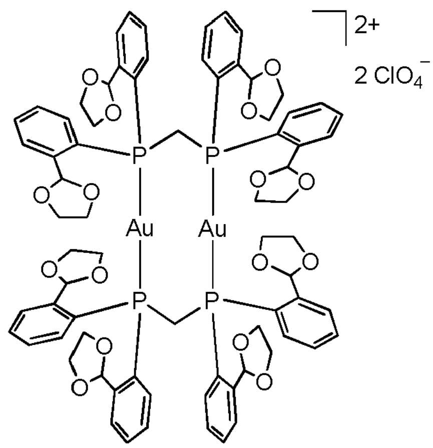

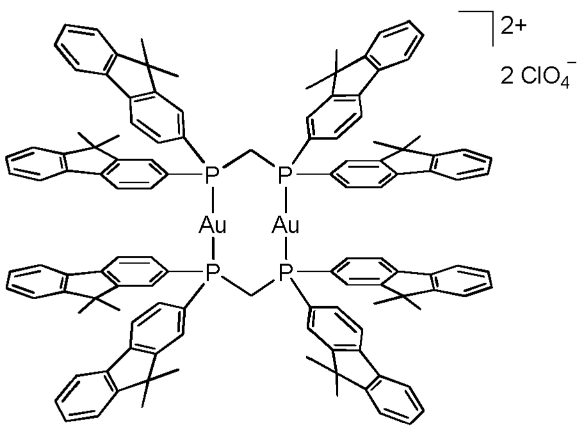

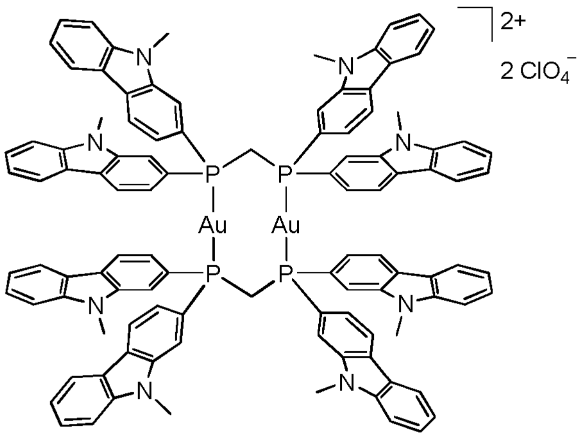 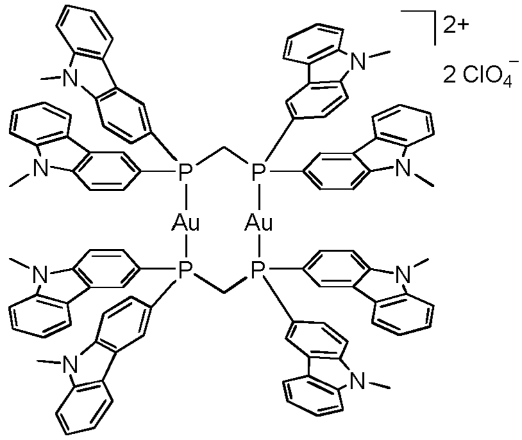

**B. Gold (I) Complexes Properties**

The gold (I) complexes disclosed herein can have superior photochemical reactivity (e.g. strong absorption in near UV and/or visible light wavelength, large quenching rate constants, large radiative decay rate, etc.) suitable for use in photoredox catalysis. In particular, the gold (I) complexes disclosed herein can absorb in the near UV and/or visible light wavelength range, such as from about 360 nm to about 450 nm or from about 380 nm to about 450 nm, and thus can catalyze photoredox reactions under near-UV and/or visible light.

The photochemical reactivities of the gold (I) complexes disclosed herein can be evaluated by absorption wavelength, extinction coefficient ("ε"), radiative decay rate ("$k_r$"), diffusion-corrected bimolecular quenching rate constant ("$k_q$'"), and/or reduction potential ("$E_c$"). Techniques for measuring the absorption wavelength, ε, $k_r$, $k_q$', and $E_c$ of these gold (I) complexes are known. For example, the absorption wavelength, ε, and $k_r$ can be obtained by measuring the absorption and/or emission spectra and/or emission lifetime of a gold (I) complex disclosed herein. For example, the absorption wavelength of the disclosed gold (I) complexes in solutions or as powders, can be directly obtained by absolute measurement using a UV-visible spectrophotometer, such as a Hewlett Packard (HP) 8453 UV-visible spectrophotometer.

For example, the ε of the disclosed gold (I) complexes can be obtained based on the measured absorption spectra. For example, ε is obtained using the equation, $\varepsilon = A/(c \times l)$, where A is the measured absorbance, c is the concentration of the gold (I) complex in a solvent, such as acetonitrile or N,N-dimethyl formamide or a combination thereof, l is path length of the measured solution, which is 1 cm. In these measurements, the concentration of the gold (I) complex can be in a range from about $5 \times 10^{-6}$ to about $3 \times 10^{-5}$ M.

For example, the $k_r$ of the disclosed gold (I) complexes can be obtained using the equation, $k_r = \Phi/\tau$, where Φ is the emission quantum yield, τ is the emission lifetime. Emission quantum yield can be obtained using, for example, $[Ru(bpy)_3](PF_6)_2$ in degassed acetonitrile as standard (Φ = 0.062) or quinine sulfate in 1N $H_2SO_4$ as standard (Φ = 0.546). Emission lifetime can be obtained by (1) measuring the emission intensity with an oscilloscope to obtain intensity of current (I(t)) as a function of time; (2) fitting the initial current and current measured at time t in formula (1) below to derive the τ value by fitting with equation $I(t) = A + B \times (e^{-t/\tau})$.

For example, the $k_q$' of the disclosed gold (I) complexes can be obtained by (1) measuring the emission lifetime τ of the gold (I) complex in the presence of different concentrations of a quencher; (2) fitting the τ obtained at different concentrations of the quencher with formula (1) to derive the $k_q$ value, where [Q] is the concentration of the quencher, $\tau_0$ is the emission lifetime of the gold (I) complex in the absence of quencher; and (3) fitting the $k_q$ value in formula (2) to obtain the *kq'* values, taking $k_D = 1.0 \times 10^{10}\ M^{-1}s^{-1}$ (which is the diffusion-limited rate constant in acetonitrile).

$$\tau_0/\tau = 1 + kq[\tau_0][Q] \qquad \text{formula (1)}$$

$$(k_q')^{-1} = k_q^{-1} - k_D^{-1} \qquad \text{formula (2)}$$

Examples of quenchers suitable for measuring the $k_q$' of the disclosed gold (I) complexes as described above include, but are not limited to, pyridinium salts and neutral organic compounds, such as those described in **Table 2** in the Examples below, 1,4-cyclohexadiene, benzyl alcohol, and 1-phenylethanol.

The $E_c$ of the disclosed gold (I) complexes can be measured using a voltammetry technique, such as cyclic voltammetry, linear sweep voltammetry, or pulsed voltammetry (e.g. differential pulse voltammetry, square wave voltammetry, etc.).

In some forms, the gold (I) complexes disclosed herein can absorb light at a wavelength of up to 520 nm, up to 500 nm, up to 480 nm, up to 450 nm, up to 420 nm, in a range from about 250 nm to about 520 nm, from about 250 nm to about 500 nm, from about 250 nm to about 480 nm, from about 250 nm to about 450 nm, from about 250 nm to about 420 nm, from about 280 nm to about 520 nm, from about 280 nm to about 500 nm, from about 280 nm to about 480 nm, from about 280 nm to about 450 nm, from about 280 nm to about 420 nm, from about 300 nm to about 520 nm, from about 300 nm to about 500 nm, from about 300 nm to about 480 nm, from about 300 nm to about 450 nm, from about 300 nm to about 420 nm, from about 320 nm to about 520 nm, from about 320 nm to about 500 nm, from about 320 nm to about 480 nm, from about 320 nm to about 450 nm, from about 320 nm to about 420 nm, from about 350 nm to about 520 nm, from about 350 nm to about 500 nm, from about 350 nm to about 480 nm, from about 350 nm to about 450 nm, from about 350 nm to about 420 nm, from about 360 nm to about 520 nm, from about 360 nm to about 500 nm, from about 360 nm to about 480 nm, from about 360 nm to about 450 nm, from about 360 nm to about 420 nm, from about 380 nm to about 520 nm, from about 380 nm to about 500 nm, from about 380 nm to about 480 nm, from about 380 nm to about 450 nm, or from about 380 nm to about 420 nm, in solution or as powders, such as determined using the absorption spectrum of the gold (I) complexes.

In some forms, the gold (I) complexes disclosed herein can have an extinction coefficient ("$\varepsilon$") of at least $0.1\times10^4$ $M^{-1}cm^{-1}$, at least $0.5\times10^4$ $M^{-1}cm^{-1}$, at least $1.0\times10^4$ $M^{-1}cm^{-1}$, at least $2.0\times10^4$ $M^{-1}cm^{-1}$, at least $3.0\times10^4$ $M^{-1}cm^{-1}$, at least $5.0\times10^4$ $M^{-1}cm^{-1}$ , at least $8.0\times10^4$ $M^{-1}cm^{-1}$, or at least $10.0\times10^4$ $M^{-1}cm^{-1}$, in solution at wavelengths > 250 nm or as powders, such as determined using the absorption spectrum of the gold (I) complexes as described above.

In some forms, the gold (I) complexes disclosed herein can have a radiative decay rate ("$k_r$") of at least $0.45\times10^4$ $s^{-1}$, at least $0.80\times 10^4$ $s^{-1}$, at least $1.00\times10^4$ $s^{-1}$, at least $2.00\times10^4$ $s^{-1}$, at least $4.00\times10^4$ $s^{-1}$, at least $8.00\times10^4$ $s^{-1}$, at least $1.00\times10^5$ $s^{-1}$, at least $1.50\times10^5$ $s^{-1}$, at least $2.00\times10^5$ $s^{-1}$, at least $2.50\times10^5$ $s^{-1}$, or at least $2.80\times10^5$ $s^{-1}$, such as about $2.95\times10^5$ $s^{-1}$, in solution or as powders, such as as determined using the emission quantum yield and emission lifetime of the gold (I) complexes as described above.

In some forms, the gold (I) complexes disclosed herein can have a diffusion-corrected bimolecular quenching rate constant ("$k_q$'") of at least $3.5\times10^5$ $M^{-1}s^{-1}$, at least $5.0\times10^5$ $M^{-1}s^{-1}$, at least $1.0\times10^6$ $M^{-1}s^{-1}$, at least $5.0\times10^6$ $M^{-1}s^{-1}$, at least $1.0\times10^7$ $M^{-1}s^{-1}$, at least $5.0\times10^7$ $M^{-1}s^{-1}$, at least $1.0\times10^8$ $M^{-1}s^{-1}$, at least $3.5\times10^8$ $M^{-1}s^{-1}$, at least $5.0\times10^8$ $M^{-1}s^{-1}$, at least $8.0\times10^8$ $M^{-1}s^{-1}$, or at least $1.0\times10^9$ $M^{-1}s^{-1}$, such as in a range from about $3.5\times10^8$ $M^{-1}s^{-1}$ to about $1.5\times10^9$ $M^{-1}s^{-1}$, such as determined using a quencher as described above.

In some forms, the gold (I) complexes disclosed herein can have a reduction potential of less than -1.46 V, less than -1.50 V, less than -1.55 V, or less than -1.60 V versus a saturated calomel electrode ("SCE"), such as less than -1.50 V vs SCE, determined by a suitable method, such as cyclic voltammetry.

In some forms, the gold (I) complexes disclosed herein can have an absorption wavelength, $\varepsilon$, $k_r$, $k_q$', and/or $E_c$ in any one of the above-described ranges. For example, the gold (I) complex can absorb light at a wavelength of up to 520 nm, up to 480 nm, up to 450 nm, in a range from about 280 nm to about 520 nm, from about 280 nm to about 480 nm, from about 280 nm to about 450 nm, from about 360 nm to about 520 nm, from about 360 nm to about 480 nm, from about 360 nm to about 450 nm, from about 380 nm to about 520 nm, from about 380 nm to about 480 nm, or from about 380 nm to about 450 nm, in solution or as powders, as determined using the absorption spectrum of the gold (I) complex; has a $\varepsilon$ of at least $1.0\times10^4$ $M^{-1}cm^{-1}$, in solution or as powders, as determined using the absorption spectrum of the gold (I) complex; a $k_r$ of at least $2.50\times10^5$ $s^{-1}$, in solution or as powders, as determined using the emission quantum yield and emission lifetime of the gold (I) complex; a $k_q$' of at least $1.0\times10^8$ $s^{-1}$, as determined using a quencher; and/or an $E_c$ of less than -1.46 V, less than -1.50 V, less than -1.55 V, or less than -1.60 V versus SCE, as determined by cyclic voltammetry.

Exemplary solutions suitable for measuring the absorption wavelength, $\varepsilon$, $k_r$, $k_q$', and/or $E_c$ of the gold (I) complexes include those that contain an organic solvent. Exemplary organic solvents suitable for use to form the measurement solutions include, but are not limited to, acetonitrile, methylcyclopropane, dichloromethane and toluene, and a combination thereof. Optionally, the solutions for measuring the absorption wavelength, $\varepsilon$, $k_r$, $k_q$', and/or $E_c$ of the gold (I) complexes is degassed with an inert gas, such as nitrogen, argon, or helium, or a combination thereof, or via freeze-pump-thaw cycles.

### III. Methods of Making

The gold (I) complexes and the ligands forming the gold (I) complexes described herein can be synthesized using methods known in the art of organic chemical synthesis. The target gold (I) complex can be synthesized by reacting a corresponding ligand, optionally more than one corresponding ligand, with a gold precursor in a suitable solvent. Exemplary solvents include organic solvents, such as methylene chloride. The corresponding ligand(s) can be prepared using methods known in the art, such as those described in the Examples. The reaction solution containing the one or more corresponding ligands and the gold precursor can be stirred at room temperature and optionally under an inert gas atmosphere, such as nitrogen atmosphere, for a suitable time to form a product containing the target gold (I) complex. The product containing the target gold (I) complex can be purified and optinally recrystallized to provide the target gold (I) complex. More specific reagents, reaction conditions, and gold (I) complexes formed are described in the Examples.

**IV. Methods of Using**

The gold (I) complexes disclosed herein are suitable for use in photoredox catalysis, such as photo-induced organic reactions, for example, homocoupling of organic halides (e.g. alkyl halides and aryl halides), alkylation of 2-phenyl-1,2,3,4-tetrahydroisoquinoline, cyclization of indoles, reductive dehalogenation of aryl halides, and/or C-H bonds cleavage. In particular, these gold (I) complexes can absorb in the near UV and/or visible light wavelength range, such as from about 360 nm to about 450 nm or from about 380 nm to about 450 nm, and thus can catalyze photoredox reactions under near-UV and/or visible light.

Generally, the methods of catalyzing an organic reaction using one or more gold (I) complex(es) disclosed herein include: (i) exposing a reaction mixture to a light at a temperature for a period of time sufficient to form a product. Typically, the light for inducing the organic reaction has a wavelength in a range from about 350 nm to about 450 nm, from about 360 nm to about 450 nm, from about 370 nm to about 450 nm, from about 380 nm to about 450 nm, from about 390 nm to about 450 nm, from about 400 nm to about 450 nm, or from about 405 nm to about 450 nm, such as about 405 nm or about 445 nm.

The reaction mixture can contain a reactant, optionally more than one reactant, a solvent, and the one or more gold (I) complex(es), where at least one of the reactants is a substrate. The term "substrate" refers to the reactant in the reaction mixture being converted in a chemical reaction. Optionally, the reaction mixture can further contain a suitable base, such as $Et_3N$, $i$$Pr_2NMe$, $i$$Pr_2NEt$, 2, 4, 6-trimethylpyridine, imidazole, potassium carbonate, or sodium carbonate, or a combination thereof. Without being bound to any theories, the base in the reaction mixture may act as an electron donor for providing an electron to the gold complex(es) and/or for neutralizing the hydrogen halide generated during the reaction. For example, the base in the reaction mixture can (1) provide electrons to the gold(I) complexes upon light-excitation (i.e. reductive quenching); (2) provide electrons to any gold(II) complexes produced during the reaction to regenerate the gold(I) complexes; and/or (3) neutralize the hydrogen halide generated during the reaction.

Optionally, the methods disclosed herein further includes a step of mixing the reactant, optionally more than one reactant, and the one or more gold (I) complex(es), and optionally the base in a suitable solvent to form the reaction mixture prior to step (i).

Exemplary solvents suitable for forming the reaction mixture include those that contain an organic solvent. Exemplary organic solvents suitable for use to form the reaction mixture include, but are not limited to, acetonitrile and alcohols, or a combination thereof. For example, the organic solvent forming the reaction mixture is acetonitrile or a mixture of acetonitrile and an alcohol, such as a mixture of acetonitrile and methanol, a mixture of acetonitrile and ethanol, or a mixture of acetonitrile, methanol, and ethanol. When two or more solvents are used for forming the reaction mixture, the volume ratio between the solvents depend on the solubility of the specific reactants. For example, when two solvents are used for forming the reaction mixture, i.e. a first solvent and a second solvent, the volume ratio between the first and second solvents can be in a range from 1:100 to 100:1, from 1:50 to 50:1, or from 1:10 to 10:1, such as about 1:100, about 1:50, about 1:20, about 1: 10, about 1:5, about 1:2, about 1:1, about 100: 1, about 50:1, about 20:1, about 10: 1, or about 5:1.

Generally, the total amount of the one or more gold (I) complex(es) in the reaction mixture can be up to 10 mol%, up to 5 mol%, up to 2 mol%, at least 0.05 mol%, at least 0.1 mol%, in a range from about 0.05 mol% to about 10 mol%, from about 0.05 mol% to about 5 mol%, from about 0.05 mol% to about 2 mol%, from about 0.05 mol% to about 1 mol%, from about 0.05 mol% to about 0.5 mol%, from about 0.1 mol% to about 10 mol%, from about 0.1 mol% to about 5 mol%, from about 0.1 mol% to about 2 mol%, from about 0.1 mol% to about 1 mol%, from about 0.1 mol% to about 0.5 mol%, from about 0.5 mol% to about 10 mol%, from about 0.5 mol% to about 5 mol%, from about 0.5 mol% to about 2 mol%, or from about 0.5 mol% to about 1 mol%. The total amount of the one or more gold (I) complex(es) in the reaction mixture can be calculated using the formula: mol% of the gold complex(es) = [(the sum of the nos. of moles of the one or more gold complexes)/(the sum of the nos. of moles of the substrate(s)]$\times$ 100%.

The reaction conditions for performing the organic reaction, such as reaction temperature, peirod of time, gas environment, stiring, etc., depend on the specific type of reactions. For example, the organic reaction catalyzed by one or more gold (I) complex(es) disclosed herein is performed at room temperature (i.e. 20-22 °C at 101.325 kPa [1 atm]) for a period of time in a range from about 2 hours to about 20 hours, from about 4 hours to about 16 hours, from about 4 hours to about 14 hours, or from about 6 hours to about 12 hours, such as about 6 hours or about 12 hours, and optionally under an inert gas environment, such as under nitrogen, helium, or argon, and/or with stirring.

Typically, the product formed from the organic reaction catalyzed by the one or more gold (I) complex(es) disclosed herein can have a yield of at least 12%, at least 15%, at least 20%, at least 25%, at least 30%, at least 35%, at least 40%, at least 45%, at least 50%, at least 55%, at least 60%, at least 65%, at least 70%, at least 75%, at least 80%, at least 85%, at least 90%, up to 99%, up to 98%, up to 95%, in a range from about 15% to about 99%, from about 20% to about 99%, from about 40% to about 99%, from about 50% to about 99%, from about 15% to about 95%, from about 20% to about 99%, from about 40% to about 95%, from about 50% to about 95%, from about 15% to about 90%, from about 20% to about 90%, from about 40% to about 90%, from about 50% to about 90%, from about 15% to about 80%, from about 20% to about 80%, from about 40% to about 80%, or from about 50% to about 80%. The yield of product can be calculated using the formula: product yield = (experimentally obtained no. of mole of the product)/(theoretical no. of mole of product)$\times$100%.

The experimentally obtained no. of mole of the product can be determined using known methods, such as using NMR (e.g. $^{1}H$ NMR, $^{13}C$ NMR, $^{19}F$ NMR, and/or $^{31}P$ NMR) spectroscopy with an internal standard of known quantity.

The photocatalytic activity of the gold (I) complexes disclosed herein can be higher compared to known catalysts, such as $[Au_2(\mu\text{-dppm})_2](Cl)_2$, $[Ru(bpy)_3](Cl)_2$, and/or [*fac*-$Ir(ppy)_3$]. For example, the product of a photo-induced organic reaction using the one or more gold (I) complexes described herein, such as those described above, has a yield that is higher than the yield of the same product of the same reaction under the same reaction conditions, using the same loading or a higher loading of $[Au_2(\mu\text{-dppm})_2](Cl)_2$, $[Ru(bpy)_3](Cl)_2$, and/or [*fac*-$Ir(ppy)_3$] compared to the loading of the gold (I) complex discosed herein. The term "under the same reaction conditions" means the reaction catalyzed by each of $[Au_2(\mu\text{-dppm})_2](Cl)_2$, $[Ru(bpy)_3](Cl)_2$, and [*fac*-$Ir(ppy)_3$] is performed using the same amount of reactant(s), the same base (if any), the same solvent, under light at the same wavelength, at the same temperature, under the same pressure, in the same gas environment, the same humidity, and the same period of time, etc.

**A. Catalyzing Homocoupling of Organic Halides**

In some forms, the one or more gold (I) complexes can be used for catalyzing homocoupling of organic halides. The method can include the step of exposing a reaction mixture to a light at a temperature for a period of time sufficient to form a product. The light for inducing the homocoupling of organic halides can have a wavelength in a range from about 380 nm to about 450 nm, or from about 400 nm to about 450 nm, such as about 405 nm.

The reaction mixture can contain an organic halide, such as an alkyl halide or aryl halide, optionally more than one organic halide, a solvent, and the one or more gold (I) complex(es) disclosed herein, where the organic halide(s) is/are the substrate(s). In some forms, the reaction mixture can further contain a suitable base, such as $Et_3N$, *i*$Pr_2NMe$, *i*$Pr_2NEt$, 2,4,6-trimethylpyridine, imidazole, potassium carbonate, or sodium carbonate, or a combination thereof.

Typically, the total amount of the one or more gold (I) complex(es) in the reaction mixture for catalyzing homocoupling of organic halides can be in a range from about 0.1 mol% to about 5 mol%, from about 0.5 mol% to about 5 mol%, or from about 1 mol% to about 5 mol%, such as about 1 mol%, about 2 mol%, or about 5 mol%. The total amount of the one or more gold (I) complex(es) in the reaction mixture for catalyzing homocoupling of organic halides can be calculated using the formula: mol% of the gold complex(es) = [(the sum of the nos. of moles of the one or more gold complexes)/(the sum of the nos. of moles of the one or more organic halides]$\times$100%.

Optionally, the methods for catalyzing homocoupling of organic halides disclosed herein further includes a step of mixing the one or more organic halide(s) and the one or more gold (I) complex(es), and optionally the base in a suitable solvent to form the reaction mixture prior to reaction.

Exemplary solvents suitable for use in forming the reaction mixture containing the one or more organic halide(s) and the one or more gold (I) complex(es), and optionally the base include, but are not limited to, acetonitrile, methanol, ethanol, or N,N-dimethylformamide, or a mixture thereof, such as a mixture of acetonitrile and methanol. When a mixture of two solvents is used for forming the reaction mixture, such as a mixture of acetonitrile and methanol is used for forming the reaction mixture, the volume ratio between a first solvent and a second solvent, such as the volume ratio between acetonitrile and methanol, can be in a range from about 1:5 to 5:1, such as about 1:1.

The reaction for homocoupling of organic halides using the one or more gold (I) complexes disclosed herein as photocatalyst can be performed at room temperature for a period of time in a range from about 2 hours to about 20 hours, from about 4 hours to about 16 hours, or from about 6 hours to about 14 hours, such as about 12 hours.

**1. Reactants**

In some forms, the oganic halide contained in the reaction mixture can have the structure of Formula III:

$A_1$'-L3-Z4 Formula III

where: (a) $A_1$' can be substituted or unsubstituted alkyl, substituted or unsubstituted aryl, substituted or unsubstituted heteroaryl, substituted or unsubstituted polyaryl, substituted or unsubstituted polyheteroaryl, substituted or unsubstituted cycloalkyl, substituted or unsubstituted cycloalkenyl, substituted or unsubstituted cycloalkynyl, or substituted or unsubstituted heterocyclyl; (b) L3 can be a bond or

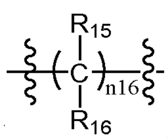

,

$R_{15}$ and $R_{16}$ are independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol, and n16 is an integer between 1 and 10, between 1 and 8, between 1 and 6, between 1 and 4, between 1 and 3, between 1 and 2, such as 1 or 2; (c) Z4 can be a halogen, such as fluorine, chlorine, or bromine; and (d) the substituents can be independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

**2. Products**

In some forms, the product formed from the homocoupling of organic halide(s) of Formula III catalyzed by the one or more gold (I) complex(es) disclosed herein can have the structure of Formula IV:

$A_1'$-L3-L3-$A_1'$ Formula IV

where $A_1'$ and L3 can be as defined above for Formula III. In some forms, the homocouling of organic halide(s) of Formula III catalyzed by the one or more gold (I) complex(es) disclosed herein can form two products, where a first product has the structure of Formula IV (also referred herein as a homocoupling product) and a second product has the structure of Formula IV' (also referred herein as a hydrodehalogenation product):

$A_1'$-L3-H Formula IV'

where $A_1'$ and L3 can be as defined above for Formula III. The ratio between the homocoupling product and hydrodehalogenation product depends on the specific reaction conditions.

In some forms of Formula III, Formula IV, and/or Formula IV', $A_1'$ can be substituted or unsubstituted alkyl, substituted or unsubstituted aryl, substituted or unsubstituted heteroaryl, substituted or unsubstituted polyaryl, or substituted or unsubstituted polyheteroaryl.

In some forms of Formula III, Formula IV, and/or Formula IV', the substituents can be independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a cyano, an isocyano, a nitro, an amino, an amido, an oxo, a sulfonyl, a phosphonyl, or a thiol, or a combination thereof.

In some forms of Formula III, Formula IV, and/or Formula IV', the substituents can be independently an unsubstituted alkyl, an unsubstituted alkenyl, an unsubstituted alkynyl, an unsubstituted heterocyclyl, an unsubstituted aryl, an unsubstituted heteroaryl, an unsubstituted polyaryl, an unsubstituted polyheteroaryl, a substituted or unsubstituted aralkyl, carbonyl, alkoxy, a halogen, a hydroxyl, a cyano, a nitro, an amino, an amido, an oxo, a sulfonyl, a phosphonyl, or a thiol, or a combination thereof.

In some forms of Formula III, Formula IV, and/or Formula IV', the substituents can be an unsubstituted alkyl, a haloalkyl, an oxo, an alkoxyl, a halogen, a cyano, or a carbonyl, or a combination thereof.

In some forms of Formula III, Formula IV, and/or Formula IV', $A_1'$ can be an unsubstituted alkyl or has a structure:

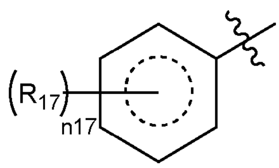

,

Formula V

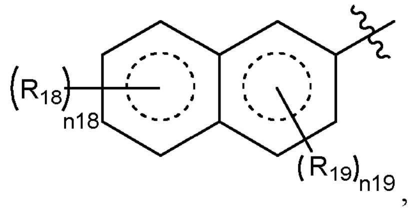

Formula VI

or

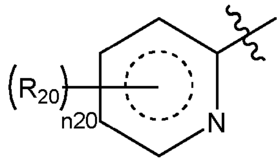

Formula VII

where: (a) $R_{17}$-$R_{20}$ can be independently hydrogen, unsubstituted alkyl, a haloalkyl, an alkoxyl, a halogen, a cyano, or a carbonyl; and (b) n17-n20 can be independently an integer between 0 and 5, between 0 and 4, between 0 and 3, between 0 and 2.

In some forms, when L3 of Fomrula III and/or IV is

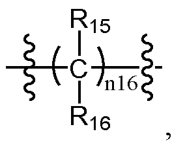

$R_{15}$ and $R_{16}$ can be independently hydrogen, unsubstituted $C_1$-$C_{10}$ alkyl, unsubstituted $C_1$-$C_8$ alkyl, unsubstituted $C_1$-$C_6$ alkyl, unsubstituted $C_1$-$C_5$ alkyl, unsubstituted $C_1$-$C_4$ alkyl, or unsubstituted $C_1$-$C_3$ alkyl.

The alkyl, alkenyl, alkynyl, and aryl for Formulae III, IV, V, VI, and/or VII can be any one the alkyls, alkenyls, alkynyls, and aryls described above for Formulae I, Ia, Ib, Ic, IIa, IIb, and IIc. For example, the alkyl for Formula III, V, VI, and/or VII can be a linear alkyl, a branched alkyl, or a cyclic alkyl (either monocyclic or polycyclic), such as a linear $C_1$-$C_{30}$ alkyl, a branched $C_4$-$C_{30}$ alkyl, a cyclic $C_3$-$C_{30}$ alkyl, a linear $C_1$-$C_{20}$ alkyl, a branched $C_4$-$C_{20}$ alkyl, a cyclic $C_3$-$C_{20}$ alkyl, a linear $C_1$-$C_{10}$ alkyl, a branched $C_4$-$C_{10}$ alkyl, a cyclic $C_3$-$C_{10}$ alkyl, a linear $C_1$-$C_6$ alkyl, a branched $C_4$-$C_6$ alkyl, a cyclic $C_3$-$C_6$ alkyl, a linear $C_1$-$C_4$ alkyl, cyclic $C_3$-$C_4$ alkyl, such as a linear $C_1$-$C_{10}$, $C_1$-$C_9$, $C_1$-$C_8$, $C_1$-$C_7$, $C_1$-$C_6$, $C_1$-$C_5$, $C_1$-$C_4$, $C_1$-$C_3$, or $C_1$-$C_2$ alkyl group, a branched $C_3$-$C_9$, $C_3$-$C_9$, $C_3$-$C_8$, $C_3$-$C_7$, $C_3$-$C_6$, $C_3$-$C_5$, or $C_3$-$C_4$ alkyl group, a cyclic $C_3$-$C_9$, $C_3$-$C_9$, $C_3$-$C_8$, $C_3$-$C_7$, $C_3$-$C_6$, $C_3$-$C_5$, or $C_3$-$C_4$ alkyl group, or a $C_4$-$C_{30}$, $C_4$-$C_{25}$, $C_4$-$C_{20}$, $C_4$-$C_{18}$, $C_4$-$C_{16}$, $C_4$-$C_{15}$, $C_4$-$C_{14}$, $C_4$-$C_{13}$, $C_4$-$C_{12}$, $C_4$-$C_{10}$, $C_4$-$C_9$, $C_4$-$C_8$, $C_4$-$C_7$, $C_4$-$C_6$, or $C_4$-$C_5$ polycyclic alkyl group.

### 3. Product Yield

In some forms, the product formed from the homocoupling of organic halides catalyzed by the one or more gold (I) complex(es) disclosed herein can have a yield in a range from about 15% to about 99%, from about 30% to about 99%, from about 50% to about 99%, from about 30% to about 55%, or from about 70% to about 99%.

In some forms, the homocoupling of organic halides catalyzed by the one or more gold (I) complex(es) disclosed herein can form more than one product, such as two products (e.g., a homocoupling product of Formula IV and a hydrodehalogenation product of Formula IV'), and each product can have a yield in a range from about 15% to about 55% or from about 30% to about 55%.

In some forms, the product formed from the homocoupling of organic halides catalyzed by the one or more gold (I) complex(es) disclosed herein can have a yield that is at least 2-time, at least 5-time, at least 10-time, at least 12-time, at least 20-time, at least 30-time, at least 40-time, at least 50-time, or at least 60-time higher than the yield of the same product formed from the same reaction using $[Au_2(\mu\text{-dppm})_2](Cl)_2$, the same reaction using $[Ru(bpy)_3](Cl)_2$, and/or the same reaction using [*fac*-Ir(ppy)$_3$], under the same reaction conditions, where the total amount of the one or more gold (I) complexes is the same as or lower than the amount of $[Au_2(\mu\text{-dppm})_2](Cl)_2$, $[Ru(bpy)_3](Cl)_2$, or [*fac*-Ir(ppy)$_3$] in the reaction mixture. The amount of each of $Au_2(\mu\text{-dppm})_2](Cl)_2$, $[Ru(bpy)_3](Cl)_2$, and [*fac*-Ir(ppy)$_3$] in the reaction mixture for

catalyzing homocoupling of organic halides can be calculated by the formula: mol% of the $[Au_2(\mu\text{-dppm})_2](Cl)_2$, $[Ru(bpy)_3](Cl)_2$, or [*fac*-$Ir(ppy)_3$]= [(no. of mole of $[Au_2(\mu\text{-dppm})_2](Cl)_2$, $[Ru(bpy)_3](Cl)_2$, or [*fac*-$Ir(ppy)_3$])/(the sum of the nos. of moles of the one or more organic halides)] $\times$100%.

For example, the product of Formula IV formed from the homocoupling of an organic halide of Formula III catalyzed by the one or more gold (I) complex(es) disclosed herein can have a yield that is at least 2-time, at least 5-time, at least 10-time, at least 12-time, at least 20-time, at least 30-time, at least 40-time, at least 50-time, or at least 60-time higher than the yield of the same product formed from the same reaction using $[Au_2(\mu\text{-dppm})_2](Cl)_2$, the same reaction using $[Ru(bpy)_3](Cl)_2$, and/or the same reaction using [*fac*-$Ir(ppy)_3$], under the same reaction conditions, where the total amount of the one or more gold (I) complexes is the same as or lower than the amount of $[Au_2(\mu\text{-dppm})_2](Cl)_2$, $[Ru(bpy)_3](Cl)_2$, or [*fac*-$Ir(ppy)_3$] in the reaction mixture.

Specific exemplary organic halides, products and their corresponding yields, and the yield of the same product formed from the same homocoupling of organic halides reaction using known catalysts, such as $[Au_2(\mu\text{-dppm})_2](Cl)_2$, $[Ru(bpy)_3](Cl)_2$, and/or [*fac*-$Ir(ppy)_3$], are described in the Examples below.

**B. Catalyzing Alkylation of 2-Phenyl-1, 2, 3, 4-tetrahydroisoquinoline**

In some forms, the one or more gold (I) complexes can be used for catalyzing alkylation of 2-phenyl-1, 2, 3, 4-tetrahydroisoquinoline. The method can include the step of exposing a reaction mixture to a light at a temperature for a period of time sufficient to form a product. The light for inducing the alkylation of 2-phenyl-1, 2, 3, 4-tetrahydroisoquinoline can have a wavelength in a range from about 380 nm to about 450 nm, or from about 400 nm to about 450 nm, such as about 405 nm or about 442 nm.

The reaction mixture can contain 2-phenyl-1, 2, 3, 4-tetrahydroisoquinoline and an organic halide, such as an alkyl halide or aryl halide, a solvent, and the one or more gold (I) complex(es) disclosed herein, where the 2-phenyl-1, 2, 3, 4-tetrahydroisoquinoline is the substrate. In some forms, the reaction mixture can further contain a suitable base, such as 2, 4, 6-trimethylpyridine, imidazole, potassium carbonate, or sodium carbonate, or a combination thereof.

Typically, the total amount of the one or more gold (I) complex(es) in the reaction mixture for catalyzing alkylation of 2-phenyl-1, 2, 3, 4-tetrahydroisoquinoline can be in a range from about 0.1 mol% to about 2 mol%, from about 0.5 mol% to about 2 mol%, or from about 1 mol% to about 2 mol%, such as about 1 mol% or about 2 mol%. The total amount of the one or more gold (I) complex(es) in the reaction mixture for catalyzing alkylation of 2-phenyl-1, 2, 3, 4-tetrahydroisoquinoline can be calculated using the formula: mol% of the gold complex(es) = [(the sum of the nos. of moles of the one or more gold complexes)/(the no. of mole of 2-phenyl-1, 2, 3, 4-tetrahydroisoquinoline]$\times$100%.

Optionally, the methods for catalyzing alkylation of 2-phenyl-1, 2, 3, 4-tetrahydroisoquinoline disclosed herein further includes a step of mixing the 2-phenyl-1, 2, 3, 4-tetrahydroisoquinoline, the one or more organic halide(s) and the one or more gold (I) complex(es), and optionally the base in a suitable solvent to form the reaction mixture prior to reaction.

An exemplary solvent suitable for use in forming the reaction mixture containing 2-phenyl-1, 2, 3, 4-tetrahydroisoquinoline, the one or more organic halide(s), and the one or more gold (I) complex(es), and optionally the solvent is acetonitrile, methanol, or N,N-dimethylformamide, or a combination thereof.

The reaction for alkylation of 2-phenyl-1, 2, 3, 4-tetrahydroisoquinoline using the one or more gold (I) complexes disclosed herein as photocatalyst can be performed at room temperature for a period of time in a range from about 2 hours to about 20 hours, from about 4 hours to about 16 hours, or from about 6 hours to about 14 hours, such as about 12 hours, and optionally under an inert gas envirionemnt, such as nitrogen.

**1. Reactants**

In some forms, the organic halide contained in the reaction mixture that can react with 2-phenyl-1, 2, 3, 4-tetrahydroisoquinoline can have a structure of Formula VIII:

A"-L4-Z5 Formula VIII

where: (a) A'' can be substituted or unsubstituted alkyl, substituted or unsubstituted aryl, substituted or unsubstituted heteroaryl, substituted or unsubstituted polyaryl, substituted or unsubstituted polyheteroaryl, substituted or unsubstituted cycloalkyl, substituted or unsubstituted cycloalkenyl, substituted or unsubstituted cycloalkynyl, or substituted or unsubstituted heterocyclyl; (b) L4 can be a bond or

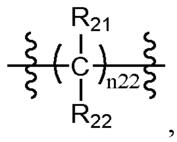

$R_{21}$ and $R_{22}$ can be independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol, and n22 is an integer between 1 and 10, between 1 and 8, between 1 and 6, between 1 and 4, between 1 and 3, between 1 and 2, such as 1 or 2; (c) Z5 can be a halogen, such as fluorine, chlorine, bromine, or iodine; and (d) the substituents can be independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

**2. Products**

In some forms, the product formed from the alkylation of 2-phenyl-1, 2, 3, 4-tetrahydroisoquinoline with organic halide(s) of Formula VIII catalyzed by the one or more gold (I) complex(es) disclosed herein can have the structure of Formula IX:

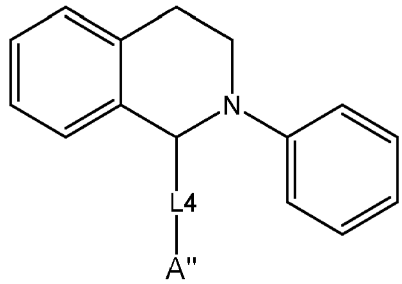

Formula IX

where A'' and L4 can be as defined above for Formula VIII.

In some forms of Formula VIII and/or Formula IX, A" can be substituted or unsubstituted linear alkyl, substituted or unsubstituted branched alkyl, substituted or unsubstituted cycloalkyl, substituted or unsubstituted heterocyclyl, substituted or unsubstituted aryl, or substituted or unsubstituted polyaryl.

In some forms of Formula VIII and/or Formula IX, A'' can be an unsubstituted linear alkyl, an unsubstituted branched alkyl, a substituted or unsubstituted polycycloalkyl, or have the structure of Formula X, Formula XI, or Formula XII:

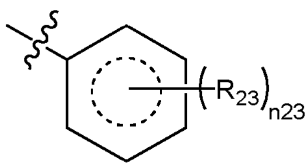

Formula X

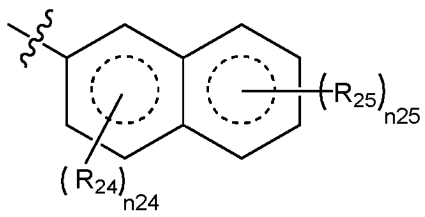

Formula XI

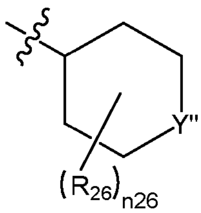

Formula XII

where: (a) $R_{23}$-$R_{26}$ can be independently hydrogen, unsubstituted alkyl, a haloalkyl, an oxo, an amino, an alkoxyl, a halogen, a cyano, or a carbonyl; (b) n23-n26 can be independently an integer between 0 and 5, between 0 and 4, between 0 and 3, between 0 and 2, or 0 or 1; (c) Y" can be O, S, $CR_{27}$, or $NR_{28}$, and $R_{27}$ and $R_{28}$ are independently absent, hydrogen, substituted or unsubstituted alkyl, substituted or unsubstituted alkenyl, substituted or unsubstituted alkynyl, substituted or unsubstituted aryl, substituted or unsubstituted heteroaryl, substituted or unsubstituted heterocyclyl, a halogen, an oxo, an amino, an alkoxyl, a cyano, a nitro, or a carbonyl; and (d) the substituents can be as defined for Formula VIII.

In some forms of Formulae VIII, IX, X, XI, and/or XII, the substituents can be independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a cyano, an isocyano, a nitro, an amino, an amido, an oxo, a sulfonyl, a phosphonyl, or a thiol, or a combination thereof.

In some forms of Formulae VIII, IX, X, XI, and/or XII, the substituents can be independently an unsubstituted alkyl, an unsubstituted alkenyl, an unsubstituted alkynyl, an unsubstituted heterocyclyl, an unsubstituted aryl, an unsubstituted heteroaryl, an unsubstituted polyaryl, an unsubstituted polyheteroaryl, a substituted or unsubstituted aralkyl, carbonyl, alkoxy, a halogen, a hydroxyl, a cyano, a nitro, an amino, an amido, an oxo, a sulfonyl, a phosphonyl, or a thiol, or a combination thereof.

In some forms of Formulae VIII, IX, X, XI, and/or XII, the substituents can be an unsubstituted alkyl, a haloalkyl, an oxo, an alkoxyl, a halogen, a cyano, or a carbonyl, or a combination thereof.

In some forms of Formula VIII and/or IX, L4 can be a bond or

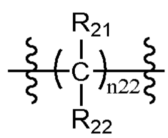

,

where $R_{21}$ and $R_{22}$ can be independently hydrogen, unsubstituted $C_1$-$C_{10}$ alkyl, unsubstituted $C_1$-$C_8$ alkyl, unsubstituted $C_1$-$C_6$ alkyl, unsubstituted $C_1$-$C_5$ alkyl, unsubstituted $C_1$-$C_4$ alkyl, or unsubstituted $C_1$-$C_3$ alkyl.

The alkyl, alkenyl, alkynyl, and aryl for Formulae VIII, IX, X, XI, and/or XII can be any one the alkyls, alkenyls, alkynyls, and aryls described above for Formulae I, Ia, Ib, Ic, IIa, IIb, and IIc. For example, the alkyl for Formulae VIII, IX, X, XI, and/or XII, can be a linear alkyl, a branched alkyl, or a cyclic alkyl (either monocyclic or polycyclic), such as a linear $C_1$-$C_{30}$ alkyl, a branched $C_4$-$C_{30}$ alkyl, a cyclic $C_3$-$C_{30}$ alkyl, a linear $C_1$-$C_{20}$ alkyl, a branched $C_4$-$C_{20}$ alkyl, a cyclic $C_3$-$C_{20}$ alkyl, a linear $C_1$-$C_{10}$ alkyl, a branched $C_4$-$C_{10}$ alkyl, a cyclic $C_3$-$C_{10}$ alkyl, a linear $C_1$-$C_6$ alkyl, a branched $C_4$-$C_6$ alkyl, a cyclic $C_3$-$C_6$ alkyl, a linear $C_1$-$C_4$ alkyl, cyclic $C_3$-$C_4$ alkyl, such as a linear $C_1$-$C_{10}$, $C_1$-$C_9$, $C_1$-$C_8$, $C_1$-$C_7$, $C_1$-$C_6$, $C_1$-$C_5$, $C_1$-$C_4$, $C_1$-$C_3$, or $C_1$-$C_2$ alkyl group, a branched $C_3$-$C_9$, $C_3$-$C_9$, $C_3$-$C_8$, $C_3$-$C_7$, $C_3$-$C_6$, $C_3$-$C_5$, or $C_3$-$C_4$ alkyl group, a cyclic $C_3$-$C_9$, $C_3$-$C_9$, $C_3$-$C_8$, $C_3$-$C_7$, $C_3$-$C_6$, $C_3$-$C_5$, or $C_3$-$C_4$ alkyl group, or a $C_4$-$C_{30}$, $C_4$-$C_{25}$, $C_4$-$C_{20}$, $C_4$-$C_{18}$, $C_4$-$C_{16}$, $C_4$-$C_{15}$, $C_4$-$C_{14}$, $C_4$-$C_{13}$, $C_4$-$C_{12}$, $C_4$-$C_{10}$, $C_4$-$C_9$, $C_4$-$C_8$, $C_4$-$C_7$, $C_4$-$C_6$, or $C_4$-$C_5$ polycyclic alkyl group.

### 3. Product Yield

In some forms, the product formed from the alkylation of 2-phenyl-1, 2, 3, 4-tetrahydroisoquinoline catalyzed by the one or more gold (I) complex(es) disclosed herein can have a yield in a range from about 40% to about 90%, from about 40% to about 85%, from about 50% to about 90%, from about 50% to about 85%, from about 60% to about 90%, from about 60% to about 85%.

In some forms, the product formed from the alkylation of 2-phenyl-1, 2, 3, 4-tetrahydroisoquinoline catalyzed by the one or more gold (I) complex(es) disclosed herein can have a yield that is at least 1.2-time, at least 1.5-time, at least 2-time, at least 3-time, at least 4-time, at least 5-time, at least 6-time, at least 8-time, or at least 10-time higher than the yield of the same product formed from the same reaction using $[Au_2(\mu\text{-dppm})_2](Cl)_2$, the same reaction using $[Ru(bpy)_3](Cl)_2$, and/or the same reaction using [*fac*-Ir(ppy)$_3$], under the same reaction conditions, where the total amount of the one or more gold (I) complexes is the same as or lower than the amount of $[Au_2(\mu\text{-dppm})_2](Cl)_2$, $[Ru(bpy)_3](Cl)_2$, or [*fac*-Ir(ppy)$_3$] in the reaction mixture. The amount of each of $[Au_2(\mu\text{-dppm})_2](Cl)_2$, $[Ru(bpy)_3](Cl)_2$, and [*fac*-Ir(ppy)$_3$] in the reaction mixture for catalyzing alkylation of 2-phenyl-1, 2, 3, 4-tetrahydroisoquinoline can be calculated by the formula: mol% of the $[Au_2(\mu\text{-dppm})_2](Cl)_2$, $[Ru(bpy)_3](Cl)_2$, or [*fac*-Ir(ppy)$_3$]= [(no. of mole of $[Au_2(\mu\text{-dppm})_2](Cl)_2$, $[Ru(bpy)_3](Cl)_2$, or [*fac*-Ir(ppy)$_3$])/(the no. of mole of 2-phenyl-1, 2, 3, 4-tetrahydroisoquinoline)]$\times$100%.

For example, the product of Formula IX formed from the the alkylation of 2-phenyl-1, 2, 3, 4-tetrahydroisoquinoline with the organic halide of Formula VIII catalyzed by the one or more gold (I) complex(es) disclosed herein can have a yield that is at least 1.2-time, at least 1.5-time, at least 2-time, at least 3-time, at least 4-time, at least 5-time, at least 6-time, at least 8-time, or at least 10-time higher than the yield of the same product formed from the same reaction using $[Au_2(\mu\text{-dppm})_2](Cl)_2$, the same reaction using $[Ru(bpy)_3](Cl)_2$, and/or the same reaction using [*fac*-Ir(ppy)$_3$], under the same reaction conditions, where the total amount of the one or more gold (I) complexes is the same as or lower than the amount of $[Au_2(\mu\text{-dppm})_2](Cl)_2$, $[Ru(bpy)_3](Cl)_2$, or [*fac*-Ir(ppy)$_3$] in the reaction mixture.

Specific exemplary organic halides, products and their corresponding yields, and the yield of the same product formed from the same alkylation of 2-phenyl-1, 2, 3, 4-tetrahydroisoquinoline reaction using known catalysts, such as $[Au_2(\mu\text{-dppm})_2](Cl)_2$, $[Ru(bpy)_3](Cl)_2$, and/or [*fac*-Ir(ppy)$_3$], are described in the Examples below.

### C. Catalyzing Cyclization of Indoles

In some forms, the one or more gold (I) complexes can be used for catalyzing cyclization of indoles. The method can include the step of exposing a reaction mixture to a light at a temperature for a period of time sufficient to form a product. The light for inducing the cyclization of indoles can have a wavelength in a range from about 380 nm to about 450 nm, or from about 400 nm to about 450 nm, such as about 405 nm.

The reaction mixture can contain an indole, optionally more than one indole, and the one or more gold (I) complex(es) disclosed herein, where the indole(s) is/are the substrate(s). In some forms, the reaction mixture can further contain a suitable base, such as sodium carbonate.

Typically, the total amount of the one or more gold (I) complex(es) in the reaction mixture for catalyzing cyclization of indoles can be in a range from about 0.1 mol% to about 1 mol% or from about 0.5 mol% to about 1 mol%, such as about 0.5 mol% or about 1 mol%. The total amount of the one or more gold (I) complex(es) in the reaction mixture for catalyzing cyclization of indoles can be calculated using the formula: mol% of the gold complex(es) = [(the sum of the nos. of moles of the one or more gold complexes)/(the sum of the nos. of moles of the one or more indoles]$\times$100%.

Optionally, the methods for catalyzing cyclization of indoles disclosed herein further includes a step of mixing the one or more indole(s) and the one or more gold (I) complex(es), and optionally the base in a suitable solvent to form the reaction mixture prior to reaction.

An exemplary solvent suitable for use in forming the reaction mixture containing the one or more indole(s) and the one or more gold (I) complex(es), and optionally the solvent is acetonitrile, methanol, or N,N-dimethylformamide, or a combination thereof.

The reaction for cyclization of indoles using the one or more gold (I) complexes disclosed herein as photocatalyst can be performed at room temperature for a period of time in a range from about 2 hours to about 10 hours, from about 2 hours to about 8 hours, or from about 4 hours to about 8 hours, such as about 6 hours, and optionally under an inert gas environemnt, such as nitrogen.

### 1. Reactants

In some forms, the indole(s) contained in the reaction mixture can have the structure of Formula XIII:

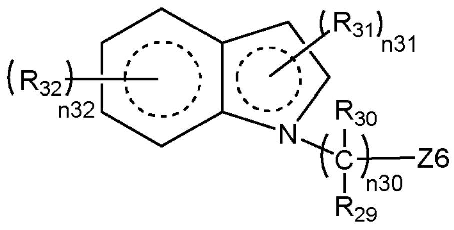

Formula XIII

where: (a) $R_{29}$ and $R_{30}$ can be independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol; (b) n30 can be an integer between 2 and 10, between 2 and 8, between 2 and 6, or between 2 and 4, such as 3 or 4; (c) $R_{31}$ and $R_{32}$ can be independently hydrogen, substituted or unsubstituted alkyl, substituted or unsubstituted alkenyl, substituted or unsubstituted alkynyl, substituted or unsubstituted heterocyclyl, substituted or unsubstituted aryl, substituted or unsubstituted heteroaryl, substituted or unsubstituted polyaryl, substituted or unsubstituted polyheteroaryl, substituted or unsubstituted aralkyl, carbonyl, alkoxyl, a halogen, a hydroxyl, a cyano, an isocyano, a nitro, an amino, an amido, an oxo, a sulfonyl, a phosphonyl, or a thiol, or a combination thereof; (d) n31 and n32 can be independently an integer between 0 and 4, between 0 and 3, between 0 and 2, or 0 or 1; (e) Z6 can be a halogen, such as fluorine, chlorine, bromine, or iodine; and (f) the substituents can be independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

In some forms, the indole(s) contained in the reaction mixture can have the structure of Formula XIV:

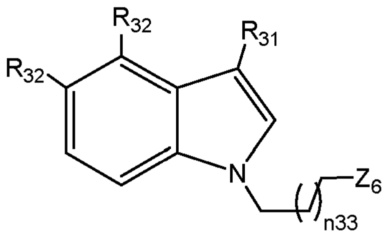

Formula XIV

where: (a) n33 can be an integer between 0 and 8, between 0 and 6, between 0 and 4, between 0 and 2, such as 1 or 2; (b) each occurrence of $R_{31}$ and $R_{32}$ can be independently substituted or unsubstituted alkyl, substituted or unsubstituted alkenyl, substituted or unsubstituted alkynyl, substituted or unsubstituted heterocyclyl, substituted or unsubstituted aryl, substituted or unsubstituted heteroaryl, substituted or unsubstituted polyaryl, substituted or unsubstituted polyheteroaryl, substituted or unsubstituted aralkyl, carbonyl, alkoxyl, a halogen, a hydroxyl, a cyano, an isocyano, a nitro, an amino, an amido, an oxo, a sulfonyl, a phosphonyl, or a thiol, or a combination thereof; (c) Z6 can be a halogen; and (d) the substituents can be as defined in Formula XIII.

## 2. Products

In some forms, the product formed from the cyclization of indole(s) of Formula XIII catalyzed by the one or more gold (I) complex(es) disclosed herein can have the structure of Formula XV:

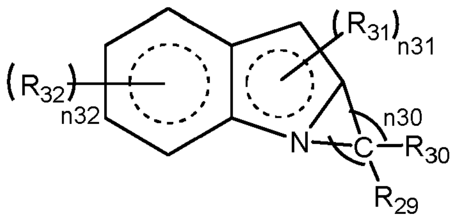

Formula XV

where $R_{29}$-$R_{32}$, n30-n32 can be as defined for Formula XIII.

In some forms, the product formed from the cyclization of indole(s) of Formula XIII or Formula XIV catalyzed by the one or more gold (I) complex(es) disclosed herein can have the structure of Formula XVI:

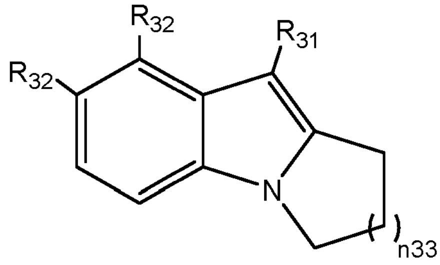

Formula XVI

where n33, $R_{31}$, and $R_{32}$ can be as defined for Formula XIV.

In some forms of Formulae XIII, XIV, XV, and/or XVI, the substituents can be independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a cyano, an isocyano, a nitro, an amino, an amido, an oxo, a sulfonyl, a phosphonyl, or a thiol, or a combination thereof.

In some forms of Formulae XIII, XIV, XV, and/or XVI, the substituents can be independently an unsubstituted alkyl, an unsubstituted alkenyl, an unsubstituted alkynyl, an unsubstituted heterocyclyl, an unsubstituted aryl, an unsubstituted heteroaryl, an unsubstituted polyaryl, an unsubstituted polyheteroaryl, a substituted or unsubstituted aralkyl, carbonyl, alkoxy, a halogen, a hydroxyl, a cyano, a nitro, an amino, an amido, an oxo, a sulfonyl, a phosphonyl, or a thiol, or a combination thereof.

In some forms of Formulae XIII, XIV, XV, and/or XVI, the substituents can be an unsubstituted alkyl, a haloalkyl, an oxo, an alkoxyl, a halogen, a cyano, or a carbonyl, or a combination thereof.

In some forms of Formulae XIII, XIV, XV, and/or XVI, each occurrence of $R_{31}$ and $R_{32}$ can be independently unsubstituted alkyl, a haloalkyl, an oxo, an amino, an alkoxyl, a halogen, a cyano, or a carbonyl.

In some forms of Formulae XIII, XIV, XV, and/or XVI, each occurrence of $R_{31}$ and $R_{32}$ can be independently halogen,

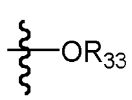

, or

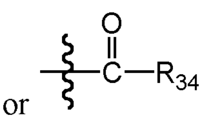

,

and $R_{33}$ and $R_{34}$ can be independently hydrogen, unsubstituted $C_1$-$C_{10}$ alkyl, unsubstituted $C_1$-$C_8$ alkyl, unsubstituted $C_1$-$C_6$ alkyl, unsubstituted $C_1$-$C_5$ alkyl, unsubstituted $C_1$-$C_4$ alkyl, or unsubstituted $C_1$-$C_3$ alkyl.

The alkyl, alkenyl, alkynyl, and aryl for Formulae XIII, XIV, XV, and/or XVI can be any one the alkyls, alkenyls, alkynyls, and aryls described above for Formulae I, Ia, Ib, Ic, IIa, IIb, and IIc. For example, the alkyl for Formulae XIII, XIV, XV, and/or XVI, can be a linear alkyl, a branched alkyl, or a cyclic alkyl (either monocyclic or polycyclic), such as a linear $C_1$-$C_{30}$ alkyl, a branched $C_4$-$C_{30}$ alkyl, a cyclic $C_3$-$C_{30}$ alkyl, a linear $C_1$-$C_{20}$ alkyl, a branched $C_4$-$C_{20}$ alkyl, a cyclic $C_3$-$C_{20}$ alkyl, a linear $C_1$-$C_{10}$ alkyl, a branched $C_4$-$C_{10}$ alkyl, a cyclic $C_3$-$C_{10}$ alkyl, a linear $C_1$-$C_6$ alkyl, a branched $C_4$-$C_6$ alkyl, a cyclic $C_3$-$C_6$ alkyl, a linear $C_1$-$C_4$ alkyl, cyclic $C_3$-$C_4$ alkyl, such as a linear $C_1$-$C_{10}$, $C_1$-$C_9$, $C_1$-$C_8$, $C_1$-$C_7$, $C_1$-$C_6$, $C_1$-$C_5$, $C_1$-$C_4$, $C_1$-$C_3$, or $C_1$-$C_2$ alkyl group, a branched $C_3$-$C_9$, $C_3$-$C_9$, $C_3$-$C_8$, $C_3$-$C_7$, $C_3$-$C_6$, $C_3$-$C_5$, or $C_3$-$C_4$ alkyl group, a cyclic

$C_3$-$C_9$, $C_3$-$C_9$, $C_3$-$C_8$, $C_3$-$C_7$, $C_3$-$C_6$, $C_3$-$C_5$, or $C_3$-$C_4$ alkyl group, or a $C_4$-$C_{30}$, $C_4$-$C_{25}$, $C_4$-$C_{20}$, $C_4$-$C_{18}$, $C_4$-$C_{16}$, $C_4$-$C_{15}$, $C_4$-$C_{14}$, $C_4$-$C_{13}$, $C_4$-$C_{12}$, $C_4$-$C_{10}$, $C_4$-$C_9$, $C_4$-$C_8$, $C_4$-$C_7$, $C_4$-$C_6$, or $C_4$-$C_5$ polycyclic alkyl group.

### 3. Product Yield

In some forms, the product formed from the cyclization of indoles catalyzed by the one or more gold (I) complex(es) disclosed herein can have a yield of at least 90%, at least 92%, in a range from about 90% to about 99%, from about 92% to about 98% or from about 94% to about 96%.

In some forms, the product formed from the cyclization of indoles catalyzed by the one or more gold (I) complex(es) disclosed herein can have a yield that is at least 1.5-time, 2-time, 3-time, 4-time, 5-time, 6-time, 7-time, or at least 8-time higher than the yield of the same product formed from the same reaction using $[Au_2(\mu\text{-dppm})_2](Cl)_2$, the same reaction using $[Ru(bpy)_3](Cl)_2$, and/or the same reaction using [*fac*-Ir(ppy)$_3$], under the same reaction conditions, where the total amount of the one or more gold (I) complexes is the same as or lower than the amount of $[Au_2(\mu\text{-dppm})_2](Cl)_2$, $[Ru(bpy)_3](Cl)_2$, or [*fac*-Ir(ppy)$_3$] in the reaction mixture. The amount of each of $[Au_2(\mu\text{-dppm})_2](Cl)_2$, $[Ru(bpy)_3](Cl)_2$, and *[fac*-Ir(ppy)$_3$] in the reaction mixture for catalyzing cyclization of indoles can be calculated by the formula: mol% of the $[Au_2(\mu\text{-dppm})_2](Cl)_2$, $[Ru(bpy)_3](Cl)_2$, or [*fac*-Ir(ppy)$_3$]= [(no. of mole of $[Au_2(\mu\text{-dppm})_2](Cl)_2$, $[Ru(bpy)_3](Cl)_2$, or [*fac*-Ir(ppy)$_3$])/(the sum of the nos. of moles of the one or more indoles)]$\times$100%.

For example, the product of Formula XV or Formula XVI formed from the cyclization of indoles of Formula XIII or XIV catalyzed by the one or more gold (I) complex(es) disclosed herein can have a yield that is at least 1.5-time, 2-time, 3-time, 4-time, 5-time, 6-time, 7-time, or at least 8-time higher than the yield of the same product formed from the same reaction using $[Au_2(\mu\text{-dppm})_2](Cl)_2$, the same reaction using $[Ru(bpy)_3](Cl)_2$, and/or the same reaction using [*fac*-Ir(ppy)$_3$], under the same reaction conditions, where the total amount of the one or more gold (I) complexes is the same as or lower than the amount of $[Au_2(\mu\text{-dppm})_2](Cl)_2$, $[Ru(bpy)_3](Cl)_2$, or [*fac*-Ir(ppy)$_3$] in the reaction mixture.

Specific exemplary indoles, products and their corresponding yields, and the yield of the same product formed from the same cyclization of indoles reaction using known catalysts, such as $[Au_2(\mu\text{-dppm})_2](Cl)_2$, $[Ru(bpy)_3](Cl)_2$, and/or [*fac*-Ir(ppy)$_3$], are described in the Examples below.

### D. Catalyzing Reductive Dehalogenation of Aryl Halides

In some forms, the one or more gold (I) complexes can be used for catalyzing reductive dehalogenation of aryl halides. The method can include the step of exposing a reaction mixture to a light at a temperature for a period of time sufficient to form a product. The light for inducing the reductive dehalogenation of aryl halides can have a wavelength in a range from about 380 nm to about 450 nm, or from about 400 nm to about 450 nm, such as about 405 nm or about 442 nm.

The reaction mixture can contain an aryl halide, optionally more than one aryl halide, and the one or more gold (I) complex(es) disclosed herein, where the aryl halide(s) is/are the substrate(s). In some forms, the reaction mixture can further contain a suitable base, such as $Et_3N$, *i*$Pr_2$NMe, or *i*$Pr_2$NEt, or a combination thereof.

Typically, the total amount of the one or more gold (I) complex(es) in the reaction mixture for catalyzing reductive dehalogenation of aryl halides can be in a range from about 0.05 mol% to about 5 mol%, from about 0.05 mol% to about 2 mol%, from about 0.05 mol% to about 1 mol%, from about 0.05 mol% to about 0.5 mol%, or from about 0.05 mol% to about 0.25 mol%, such as about 0.05 mol%, about 0.25 mol%, about 2 mol%, or about 5 mol%. The total amount of the one or more gold (I) complex(es) in the reaction mixture for catalyzing reductive dehalogenation of aryl halides can be calculated using the formula: mol% of the gold complex(es) = [(the sum of the nos. of moles of the one or more gold complexes)/(the sum of the nos. of moles of the one or more aryl halides]$\times$100%.

Optionally, the methods for catalyzing reductive dehalogenation of aryl halides disclosed herein further includes a step of mixing the one or more aryl halides and the one or more gold (I) complex(es), and optionally the base in a suitable solvent to form the reaction mixture prior to reaction.

Exemplary solvents suitable for use in forming the reaction mixture containing the one or more aryl halide(s) and the one or more gold (I) complex(es), and optionally the base include, but are not limited to, acetonitrile, methanol, or N,N-dimethylformamide, or a mixture thereof, such as a mixture of acetonitrile and methanol. When a mixture of two solvents is used for forming the reaction mixture, such as a mixture of acetonitrile and methanol is used for forming the reaction mixture, the volume ratio between a first solvent and a second solvent, such as the volume ratio between acetonitrile and methanol, can be in a range from about 1:5 to 5:1, such as about 1:1.

The reaction for reductive dehalogenation of aryl halides using the one or more gold (I) complexes disclosed herein as photocatalyst can be performed at room temperature for a period of time in a range from about 2 hours to about 20 hours, from about 4 hours to about 16 hours, or from about 6 hours to about 14 hours, such as about 12 hours, and optionally under an inert gas environment, such as nitrogen.

### 1. Reactants

In some forms, the aryl halide(s) contained in the reaction mixture can have the structure of Formula XVII:

A‴-Z7 Formula XVII

where: (a) A‴ can be substituted or unsubstituted aryl, substituted or unsubstituted heteroaryl, substituted or unsubstituted polyaryl, substituted or unsubstituted polyheteroaryl; (b) Z7 can be a halogen, such as fluorine, chlorine, bromine, or iodine; and (c) the substituents can be independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

### 2. Products

In some forms, the product formed from the reductive dehalogenation of aryl halide(s) of Formula XVII catalyzed by the one or more gold (I) complex(es) disclosed herein can have the structure of Formula XVIII:

A‴-H Formula XVIII

where A‴ can be as defined above for Formula XVII.

In some forms of Formulae XVII and/or XVIII, A‴ can have the structure of Formula XIX, XX, or XXI:

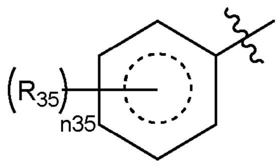
,

Formula XIX

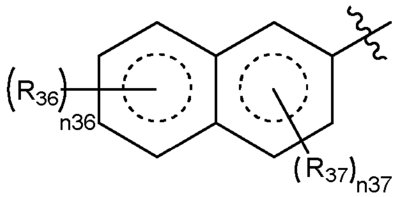
,

Formula XX

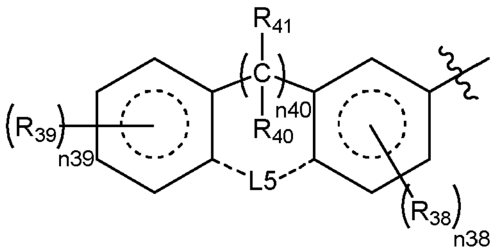
,

Formula XXI

or

where: (a) $R_{35}$-$R_{39}$ can be independently hydrogen, substituted or unsubstituted alkyl, substituted or unsubstituted alkenyl, substituted or unsubstituted alkynyl, substituted or unsubstituted heterocyclyl, substituted or unsubstituted aryl,

substituted or unsubstituted heteroaryl, substituted or unsubstituted polyaryl, substituted or unsubstituted polyheteroaryl, substituted or unsubstituted aralkyl, carbonyl, alkoxyl, a halogen, a hydroxyl, a cyano, an isocyano, a nitro, an amino, an amido, an oxo, a sulfonyl, a phosphonyl, or a thiol, or a combination thereof; (b) n35-n39 can be independently an integer between 0 and 5, between 0 and 4, between 0 and 3, between 0 and 2, or 0 or 1; (c) $R_{40}$ and $R_{41}$ can be independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol; (d) n40 can be an integer between 0 and 10, between 0 and 8, between 0 and 6, between 0 and 4, between 0 and 3, between 0 and 2, such as 1 or 2; (e) ------ can be absent or a bond and L5 can be absent, a substituted or unsubstituted alkylene, an ether, a polyether, or a thioether; and (f) the substituents can be as defined for Formula XVII.

In some forms of Formulae XIX, XX, and/or XXI, $R_{35}$-$R_{39}$ can be independently unsubstituted $C_1$-$C_{10}$ alkyl, unsubstituted $C_1$-$C_8$ alkyl, unsubstituted $C_1$-$C_6$ alkyl, unsubstituted $C_1$-$C_5$ alkyl, unsubstituted $C_1$-$C_4$ alkyl, or unsubstituted $C_1$-$C_3$ alkyl, an oxo, an alkoxyl, a halogen, a cyano, or a carbonyl.

In some forms of Formula XXI, $R_{40}$ and $R_{41}$ can be independently hydrogen, unsubstituted $C_1$-$C_{10}$ alkyl, unsubstituted $C_1$-$C_8$ alkyl, unsubstituted $C_1$-$C_6$ alkyl, unsubstituted $C_1$-$C_5$ alkyl, unsubstituted $C_1$-$C_4$ alkyl, or unsubstituted $C_1$-$C_3$ alkyl, an oxo, an alkoxyl, or a carbonyl.

In some forms of Formulae XIX, XX, and/or XXI, each occurrence of ------ can be absent or a bond and L5 can be absent or an unsubstituted alkylene.

In some forms of Formulae XVII, XVIII, XIX, XX, and/or XXI, the substituents can be independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a cyano, an isocyano, a nitro, an amino, an amido, an oxo, a sulfonyl, a phosphonyl, or a thiol, or a combination thereof.

In some forms of Formulae XVII, XVIII, XIX, XX, and/or XXI, the substituents can be independently an unsubstituted alkyl, an unsubstituted alkenyl, an unsubstituted alkynyl, an unsubstituted heterocyclyl, an unsubstituted aryl, an unsubstituted heteroaryl, an unsubstituted polyaryl, an unsubstituted polyheteroaryl, a substituted or unsubstituted aralkyl, carbonyl, alkoxy, a halogen, a hydroxyl, a cyano, a nitro, an amino, an amido, an oxo, a sulfonyl, a phosphonyl, or a thiol, or a combination thereof.

In some forms of Formulae XVII, XVIII, XIX, XX, and/or XXI, the substituents can be an unsubstituted alkyl, a haloalkyl, an oxo, an alkoxyl, a halogen, a cyano, or a carbonyl, or a combination thereof.

The alkyl, alkenyl, alkynyl, and aryl for Formulae XVII, XVIII, XIX, XX, and/or XXI can be any one the alkyls, alkenyls, alkynyls, and aryls described above for Formulae I, Ia, Ib, Ic, IIa, IIb, and IIc. For example, the alkyl for Formulae XVII, XVIII, XIX, XX, and/or XXI, can be a linear alkyl, a branched alkyl, or a cyclic alkyl (either monocyclic or polycyclic), such as a linear $C_1$-$C_{30}$ alkyl, a branched $C_4$-$C_{30}$ alkyl, a cyclic $C_3$-$C_{30}$ alkyl, a linear $C_1$-$C_{20}$ alkyl, a branched $C_4$-$C_{20}$ alkyl, a cyclic $C_3$-$C_{20}$ alkyl, a linear $C_1$-$C_{10}$ alkyl, a branched $C_4$-$C_{10}$ alkyl, a cyclic $C_3$-$C_{10}$ alkyl, a linear $C_1$-$C_6$ alkyl, a branched $C_4$-$C_6$ alkyl, a cyclic $C_3$-$C_6$ alkyl, a linear $C_1$-$C_4$ alkyl, cyclic $C_3$-$C_4$ alkyl, such as a linear $C_1$-$C_{10}$, $C_1$-$C_9$, $C_1$-$C_8$, $C_1$-$C_7$, $C_1$-$C_6$, $C_1$-$C_5$, $C_1$-$C_4$, $C_1$-$C_3$, or $C_1$-$C_2$ alkyl group, a branched $C_3$-$C_9$, $C_3$-$C_9$, $C_3$-$C_8$, $C_3$-$C_7$, $C_3$-$C_6$, $C_3$-$C_5$, or $C_3$-$C_4$ alkyl group, a cyclic $C_3$-$C_9$, $C_3$-$C_9$, $C_3$-$C_8$, $C_3$-$C_7$, $C_3$-$C_6$, $C_3$-$C_5$, or $C_3$-$C_4$ alkyl group, or a $C_4$-$C_{30}$, $C_4$-$C_{25}$, $C_4$-$C_{20}$, $C_4$-$C_{18}$, $C_4$-$C_{16}$, $C_4$-$C_{15}$, $C_4$-$C_{14}$, $C_4$-$C_{13}$, $C_4$-$C_{12}$, $C_4$-$C_{10}$, $C_4$-$C_9$, $C_4$-$C_8$, $C_4$-$C_7$, $C_4$-$C_6$, or $C_4$-$C_5$ polycyclic alkyl group.

### 3. Product Yield

In some forms, the product formed from the reductive dehalogenation of aryl halide(s) catalyzed by the one or more gold (I) complex(es) disclosed herein can have a yield in a range from about 25% to about 99%, from about 25% to about 70%, or from about 55% to about 99%.

In some forms, the product formed from the reductive dehalogenation of aryl halide(s) catalyzed by the one or more gold (I) complex(es) disclosed herein can have a yield that is at least 1.5-time, at least 2-time, at least 2.5-time, at least 3-time, at least 4-time, at least 5-time, at least 8-time, at least 10-time, at least 15-time, at least 20-time, or at least 25-time higher than the yield of the same product formed from the same reaction using $[Au_2(\mu\text{-dppm})_2](Cl)_2$, the same reaction using $[Ru(bpy)_3](Cl)_2$, and/or the same reaction using *[fac*-Ir(ppy)$_3$], under the same reaction conditions, where the total amount of the one or more gold (I) complexes is the same as or lower than the amount of $[Au_2(\mu\text{-dppm})_2](Cl)_2$, $[Ru(bpy)_3](Cl)_2$, or [*fac*-Ir(ppy)$_3$] in the reaction mixture. The amount of each of $[Au_2(\mu\text{-dppm})_2](Cl)_2$, $[Ru(bpy)_3](Cl)_2$, and [*fac*-Ir(ppy)$_3$] in the reaction mixture for catalyzing reductive dehalogenation of aryl halides can be calculated by the formula: mol% of the $[Au_2(\mu\text{-dppm})_2](Cl)_2$, $[Ru(bpy)_3](Cl)_2$, or [*fac*-Ir(ppy)$_3$]= [(no. of mole of $[Au_2(\mu\text{-dppm})_2](Cl)_2$, $[Ru(bpy)_3](Cl)_2$, or [*fac*-Ir(ppy)$_3$])/(the sum of the nos. of moles of the one or more aryl halides)]$\times$100%.

For example, the product of Formula XVIII formed from the reductive dehalogenation of aryl halide(s) of Formula

XVII catalyzed by the one or more gold (I) complex(es) disclosed herein can have a yield that is at least 1.5-time, at least 2-time, at least 2.5-time, at least 3-time, at least 4-time, at least 5-time, at least 8-time, at least 10-time, at least 15-time, at least 20-time, or at least 25-time higher than the yield of the same product formed from the same reaction using $[Au_2(\mu\text{-dppm})_2](Cl)_2$, the same reaction using $[Ru(bpy)_3](Cl)_2$, and/or the same reaction using [*fac*-Ir(ppy)$_3$], under the same reaction conditions, where the total amount of the one or more gold (I) complexes is the same as or lower than the amount of $[Au_2(\mu\text{-dppm})_2](Cl)_2$, $[Ru(bpy)_3](Cl)_2$, or [*fac*-Ir(ppy)$_3$] in the reaction mixture.

Specific exemplary aryl halide(s), products and their corresponding yields, and the yield of the same product formed from the same reductive dehalogenation of aryl halide(s) reaction using known catalysts, such as $[Au_2(\mu\text{-dppm})_2](Cl)_2$, $[Ru(bpy)_3](Cl)_2$, and/or [*fac*-Ir(ppy)$_3$], are described in the Examples below.

### E. Catalyzing Cleavage of C-H Bonds

In some forms, the one or more gold (I) complexes, such as the exemplary gold (I) complex **5a,** can be used for catalyzing the cleavage of C-H bonds in organic compounds. The method can include the step of exposing a reaction mixture to a light at a temperature for a period of time sufficient to form a product. The light for inducing the cleavage of C-H bonds in the organic compound can have a wavelength in a range from about 350 nm to about 450 nm, from about 360 nm to about 450 nm, from about 380 nm to about 450 nm, from about 350 nm to about 420 nm, from about 380 nm to about 420 nm, or from about 400 nm to about 420 nm, such as about 405 nm.

The reaction mixture can contain an organic compound having at least one C-H bond, optionally more than one organic compound where each organic compound having at least one C-H bond, and the one or more gold (I) complex(es) disclosed herein, where the organic compound(s) having at least one C-H bond is/are the substrate(s).

Typically, the total amount of the one or more gold (I) complex(es) in the reaction mixture for catalyzing cleavage of C-H bonds can be in a range from about 0.1 mol% to about 5 mol%, from about 0.5 mol% to about 5 mol%, or from about 1 mol% to about 5 mol%, such as about 5 mol%. The total amount of the one or more gold (I) complex(es) in the reaction mixture for catalyzing cleavage of C-H bonds in organic compound(s) can be calculated using the formula: mol% of the gold complex(es) = [(the sum of the nos. of moles of the one or more gold complexes)/(the sum of the nos. of moles of the one or more organic compounds having at least one C-H bond]$\times$100%.

Optionally, the methods for catalyzing cleavage of C-H bonds disclosed herein further includes a step of mixing the one or more organic compounds and the one or more gold (I) complex(es) in a suitable solvent to form the reaction mixture prior to reaction.

Exemplary solvents suitable for use in forming the reaction mixture containing the one or more organic compounds and the one or more gold (I) complex(es) include, but are not limited to, acetonitrile and alcohols (e.g. methanol, ethanol, isopropanol, etc.), and a combination thereof, such as acetonitrile or isopropanol.

The reaction for catalyzing cleavage of C-H bonds using the one or more gold (I) complexes disclosed herein as photocatalyst can be performed at room temperature for a period of time in a range from about 2 hours to about 20 hours, from about 4 hours to about 16 hours, or from about 6 hours to about 14 hours, such as about 12 hours, and optionally under an inert gas environemnt, such as nitrogen.

In some forms, the one or more gold (I) complexes disclosed herein can have a turnover number of at least 10, at least 20, at least 30, or at least 40 for catalyzing cleavage of C-H bonds of organic compound(s). The turnover number of the gold (I) complexes can be calculated by dividing the no. of mole of the product by the sum of the nos. of moles of the gold complexes. For example, to determine the turnover number, an excess amount of substrate(s) is used, such as 1000 times or 10000 times relative to the amount of gold (I) complexes (i.e. the amount of the gold (I) complexes in the reaction mixture is about 0.1 mol% or 0.01mol%), and the reaction is conducted for a long period of time, such as at least 12 hours.

### 1. Reactants

In some forms, the organic compound(s) having at least one C-H bond contained in the reaction mixture can have the structure of Formula XXII, XXIII, or XXIV:

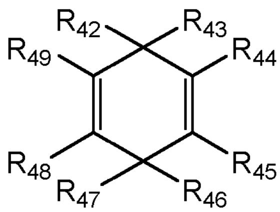

Formula XXII

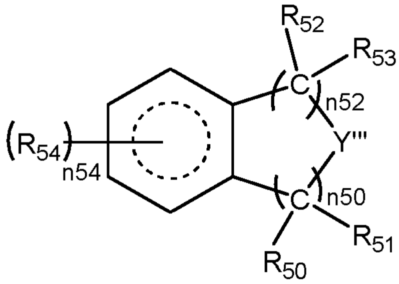

Formula XXIII

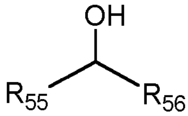

Formula XXIV

where: (a) $R_{42}$-$R_{49}$ and $R_{54}$ can be independently hydrogen, substituted or unsubstituted alkyl, substituted or unsubstituted alkenyl, substituted or unsubstituted alkynyl, substituted or unsubstituted heterocyclyl, substituted or unsubstituted aryl, substituted or unsubstituted heteroaryl, substituted or unsubstituted polyaryl, substituted or unsubstituted polyheteroaryl, substituted or unsubstituted aralkyl, carbonyl, alkoxyl, a halogen, a hydroxyl, a cyano, an isocyano, a nitro, an amino, an amido, an oxo, a sulfonyl, a phosphonyl, or a thiol, or a combination thereof, or two adjacent R groups form a substituted or unsubstituted aryl, a substituted or unsubstituted polyaryl, a substituted or unsubstituted heteroaryl, or a substituted or unsubstituted polyheteroaryl, and at least one of $R_{42}$ and $R_{43}$ and one of $R_{46}$ and $R_{47}$ are hydrogen; (b) n54 can be an integer between 0 and 4; (c) $R_{50}$-$R_{53}$ can be independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol; (d) n50 and n52 can be independently an integer between 0 and 6; (e) Y‴ can be O, S, $CR_{27}$, or $NR_{28}$, and $R_{27}$ and $R_{28}$ are independently hydrogen, substituted or unsubstituted alkyl, substituted or unsubstituted alkenyl, substituted or unsubstituted alkynyl, substituted or unsubstituted aryl, substituted or unsubstituted heteroaryl, substituted or unsubstituted heterocyclyl, a halogen, an oxo, an amino, an alkoxyl, a cyano, a nitro, or a carbonyl; (f) $R_{55}$ and $R_{56}$ can be independently hydrogen, substituted or unsubstituted alkyl, substituted or unsubstituted alkenyl, substituted or unsubstituted alkynyl, substituted or unsubstituted heterocyclyl, substituted or unsubstituted aryl, substituted or unsubstituted heteroaryl, substituted or unsubstituted polyaryl, substituted or unsubstituted polyheteroaryl, substituted or unsubstituted aralkyl; and (g) the substituents can be independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

**2. Products**

In some forms, the product formed from the cleavage of C-H bonds of the organic compound of Formula XXII, XXIII, and XXIV catalyzed by the one or more gold (I) complex(es) disclosed herein can have the structure of Formula XXV, XXVI, and XXVII or XXVII', respectively:

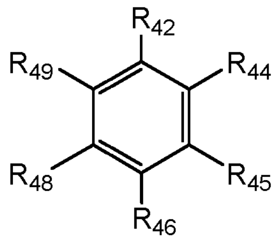

Formula XXV

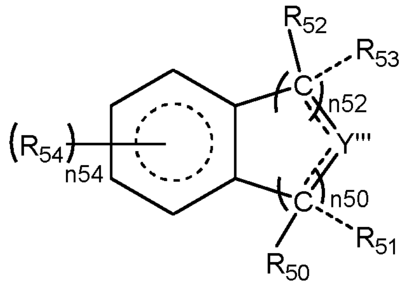

Formula XXVI

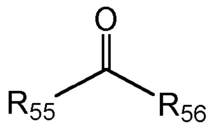

Formula XXVII

where $R_{42}$, $R_{44}$-$R_{46}$, $R_{48}$, $R_{49}$-$R_{56}$, n54, n50, n52, ------, Y''' can be as defined for Formulae XXII, XXIII, and XXIV.

In some forms, $R_{56}$ of the organic compounds of Formula XXIV can be hydrogen and the product formed from the cleavage of C-H bonds of such organic compounds catalyzed by the one or more gold (I) complex(es) disclosed herein can have the structure of Formula XXVII described above or Formula XXVII', or a combination thereof:

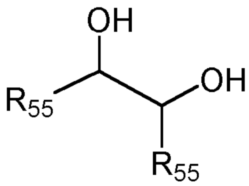

Formula XXVII'

where $R_{55}$ can be as defined for Formula XXIV.

In some forms, $R_{56}$ of the organic compounds of Formula XXIV can be hydrogen and two products can be formed from the cleavage of C-H bonds of such organic compounds catalyzed by the one or more gold (I) complex(es) disclosed herein, where a first product can have the structure of Formula XXVII and a second product can have the structure of Formula XXVII'. The ratio between the first product and second product depends on the specific reaction conditions (e.g. the choice of solvent). In some forms, when $R_{56}$ is hydrogen, $R_{55}$ of Formulae XXIV, XXVII, and/or XXVII' can be substituted or unsubstituted aryl, substituted or unsubstituted heteroaryl, substituted or unsubstituted polyaryl, substituted or unsubstituted polyheteroaryl, or substituted or unsubstituted aralkyl, such as a substituted or unsubstituted aryl.

In some forms, the product formed from the cleavage of C-H bonds of the organic compound of Formula XXIII catalyzed by the one or more gold (I) complex(es) disclosed herein can have the structure of Formula XXVIII or XXIX:

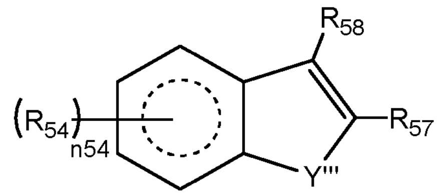

Formula XXVIII

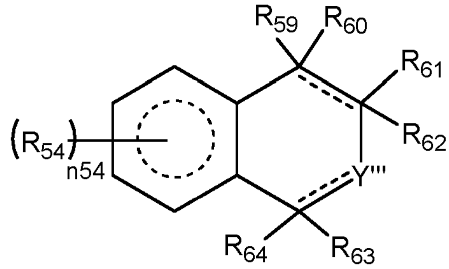

Formula XXIX

where (a) $R_{54}$, n54, Y''' can be as defined above for Formula XXIII; (b) $R_{57}$-$R_{64}$ can be independent absent, hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol; (c) each occurrence of ------ can be independently absent or a bond; and (d) the substituents can be as defined above for Formula XXIII.

In some forms of Formulae XXII, XXIII, XXIV, XXV, XXVI, XXVII, XXVII', XXVIII, and/or XXIX, the substituents can be independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a cyano, an isocyano, a nitro, an amino, an amido, an oxo, a sulfonyl, a phosphonyl, or a thiol, or a combination thereof.

In some forms of Formulae XXII, XXIII, XXIV, XXV, XXVI, XXVII, XXVII', XXVIII, and/or XXIX, the substituents can be independently an unsubstituted alkyl, an unsubstituted alkenyl, an unsubstituted alkynyl, an unsubstituted heterocyclyl, an unsubstituted aryl, an unsubstituted heteroaryl, an unsubstituted polyaryl, an unsubstituted polyheteroaryl, a substituted or unsubstituted aralkyl, carbonyl, alkoxy, a halogen, a hydroxyl, a cyano, a nitro, an amino, an amido, an oxo, a sulfonyl, a phosphonyl, or a thiol, or a combination thereof.

In some forms of Formulae XXII, XXIII, XXIV, XXV, XXVI, XXVII, XXVII', XXVIII, and/or XXIX, the substituents can be an unsubstituted alkyl, a haloalkyl, an oxo, an alkoxyl, a halogen, a cyano, or a carbonyl, or a combination thereof.

In some forms of Formulae XXII, XXIII, XXIV, XXV, XXVI, XXVII, XXVII', XXVIII, and/or XXIX, $R_{42}$-$R_{49}$ and $R_{54}$ can be independently hydrogen, unsubstituted $C_1$-$C_{10}$ alkyl, unsubstituted $C_1$-$C_8$ alkyl, unsubstituted $C_1$-$C_6$ alkyl, unsubstituted $C_1$-$C_5$ alkyl, unsubstituted $C_1$-$C_4$ alkyl, or unsubstituted $C_1$-$C_3$ alkyl.

The alkyl, alkenyl, alkynyl, and aryl for Formulae XXII, XXIII, XXIV, XXV, XXVI, XXVII, XXVII', XXVIII, and/or XXIX can be any one the alkyls, alkenyls, alkynyls, and aryls described above for Formulae I, Ia, Ib, Ic, IIa, IIb, and IIc. For example, the alkyl for Formulae XXII, XXIII, XXIV, XXV, XXVI, XXVII, XXVII', XXVIII, and/or XXIX, can be a linear alkyl, a branched alkyl, or a cyclic alkyl (either monocyclic or polycyclic), such as a linear $C_1$-$C_{30}$ alkyl, a branched $C_4$-$C_{30}$ alkyl, a cyclic $C_3$-$C_{30}$ alkyl, a linear $C_1$-$C_{20}$ alkyl, a branched $C_4$-$C_{20}$ alkyl, a cyclic $C_3$-$C_{20}$ alkyl, a linear $C_1$-$C_{10}$ alkyl, a branched $C_4$-$C_{10}$ alkyl, a cyclic $C_3$-$C_{10}$ alkyl, a linear $C_1$-$C_6$ alkyl, a branched $C_4$-$C_6$ alkyl, a cyclic $C_3$-$C_6$ alkyl, a linear $C_1$-$C_4$ alkyl, cyclic $C_3$-$C_4$ alkyl, such as a linear $C_1$-$C_{10}$, $C_1$-$C_9$, $C_1$-$C_8$, $C_1$-$C_7$, $C_1$-$C_6$, $C_1$-$C_5$, $C_1$-$C_4$, $C_1$-$C_3$, or $C_1$-$C_2$ alkyl group, a branched $C_3$-$C_9$, $C_3$-$C_9$, $C_3$-$C_8$, $C_3$-$C_7$, $C_3$-$C_6$, $C_3$-$C_5$, or $C_3$-$C_4$ alkyl group, a cyclic $C_3$-$C_9$, $C_3$-$C_9$, $C_3$-$C_8$, $C_3$-$C_7$, $C_3$-$C_6$, $C_3$-$C_5$, or $C_3$-$C_4$ alkyl group, or a $C_4$-$C_{30}$, $C_4$-$C_{25}$, $C_4$-$C_{20}$, $C_4$-$C_{18}$, $C_4$-$C_{16}$, $C_4$-$C_{15}$, $C_4$-$C_{14}$, $C_4$-$C_{13}$, $C_4$-$C_{12}$, $C_4$-$C_{10}$, $C_4$-$C_9$, $C_4$-$C_8$, $C_4$-$C_7$, $C_4$-$C_6$, or $C_4$-$C_5$ polycyclic alkyl group.

### 3. Product Yield

In some forms, the product formed from the cleavage of C-H bonds of organic compound(s) catalyzed by the one or more gold (I) complex(es) disclosed herein can have a yield in a range from about 14% to about 80%, from about 35% to

about 80%, or from about 14% to about 55%.

In some forms, the product formed from the cleavage of C-H bonds of organic compound(s) catalyzed by the one or more gold (I) complex(es) disclosed herein can have a yield that is at least 5-time, at least 8-time, at least 10-time, at least 15-time, at least 20-time, or at least 25-time higher than the yield of the same product formed from the same reaction using $[Au_2(\mu\text{-dppm})_2](Cl)_2$, the same reaction using $[Ru(bpy)_3](Cl)_2$, and/or the same reaction using [*fac*-Ir(ppy)$_3$], under the same reaction conditions, where the total amount of the one or more gold (I) complexes is the same as or lower than the amount of $[Au_2(\mu\text{-dppm})_2](Cl)_2$, $[Ru(bpy)_3](Cl)_2$, or [*fac*-Ir(ppy)$_3$] in the reaction mixture. The amount of each of $[Au_2(\mu\text{-dppm})_2](Cl)_2$, $[Ru(bpy)_3](Cl)_2$, and [*fac*-Ir(ppy)$_3$] in the reaction mixture for catalyzing cleavage of C-H bonds in organic compound(s) can be calculated by the formula:

mol% of the $[Au_2(\mu\text{-dppm})_2](Cl)_2$, $[Ru(bpy)_3](Cl)_2$, or [*fac*-Ir(ppy)$_3$]= [(no. of mole of $[Au_2(\mu\text{-dppm})_2](Cl)_2$, $[Ru(bpy)_3](Cl)_2$, or [*fac*-Ir(ppy)$_3$])/(the sum of the nos. of moles of the one or more organic compounds having at least one C-H bond)] $\times$100%.

For example, the product of Formula XXV, XXVI, XXVII, XXVIII, or XXIX formed from the cleavage of C-H bonds of organic compound(s) of Formula XXII, XXIII, or XXIV catalyzed by the one or more gold (I) complex(es) disclosed herein can have a yield that is at least 5-time, at least 8-time, at least 10-time, at least 15-time, at least 20-time, or at least 25-time higher than the yield of the same product formed from the same reaction using $[Au_2(\mu\text{-dppm})_2](Cl)_2$, the same reaction using $[Ru(bpy)_3](Cl)_2$, and/or the same reaction using [*fac*-Ir(ppy)$_3$], under the same reaction conditions, where the total amount of the one or more gold (I) complexes is the same as or lower than the amount of $[Au_2(\mu\text{-dppm})_2](Cl)_2$, $[Ru(bpy)_3](Cl)_2$, or [*fac*-Ir(ppy)$_3$] in the reaction mixture.

Specific exemplary organic compounds containing C-H bonds for cleavage, products and their corresponding yields, and the yield of the same product formed from the same C-H bond cleavage reaction using known catalysts, such as $[Au_2(\mu\text{-dppm})_2](Cl)_2$, $[Ru(bpy)_3](Cl)_2$, and/or [*fac*-Ir(ppy)$_3$], are described in the Examples below.

The disclosed compounds, methods of using, and methods of making can be further understood through the following enumerated paragraphs.

1. A gold (I) complex having a structure:

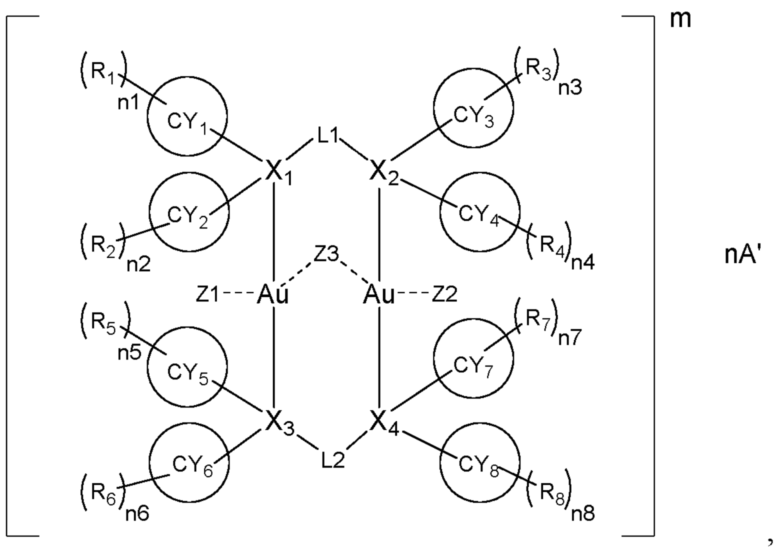

Formula I

wherein:

(a) m is 0, one positive charge, or two positive charges;
(b) n is an integer between 0 and 2;
(c) when present, each occurrence of A' is an anion;
(d) $X_1$-$X_4$ are independently P or N;
(e) $L_1$ and $L_2$ are independently absent, a single bond, a double bond, a triple bond, oxygen, sulfur, amino, amido, substituted or unsubstituted alkyl, substituted or unsubstituted alkenyl, carbonyl, sulfonyl, sulfonic acid, phos-

phoryl, or phosphonyl;

(f) $CY_1$-$CY_8$ are independently substituted or unsubstituted aryl, substituted or unsubstituted polyaryl, substituted or unsubstituted heteroaryl, substituted or unsubstituted polyheteroaryl, substituted or unsubstituted heterocyclyl, substituted or unsubstituted cycloalkyl, substituted or unsubstituted cycloalkenyl, or substituted or unsubstituted cycloalkynyl;

(g) $R_1$-$R_8$ are independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol;

(h) n1-n8 are independently an integer between zero and 10;

(i) each ------ is independently absent, a single bond, a double bond, or a triple bond;

(j) Z1 and Z2 are independently absent, a halide (fluoride, chloride, bromide, or iodide), a triflate, a sulfonate, a dicyanoaurate, a cyano, a nitrate, a hydroxyl, an oxo, an oxalate, or a carboxylate;

(k) Z3 is absent, a halide (fluoride, chloride, bromide, or iodide), an oxygen, a sulfur, an oxalate, or a carboxylate; and

(l) the substituents are independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an aroxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof,

(m) with the proviso that when $CY_1$-$CY_8$ are independently substituted or unsubstituted aryl, at least one of $R_1$-$R_8$ is not hydrogen.

2. The gold (I) complex of paragraph 1 having a structure:

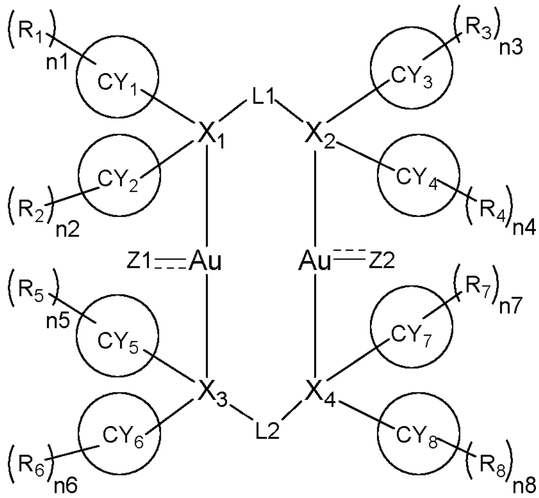

,

Formula Ia

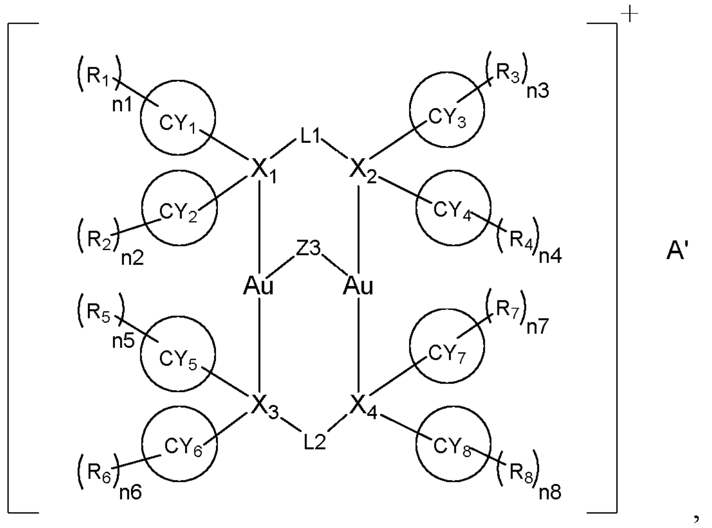

Formula Ib

or

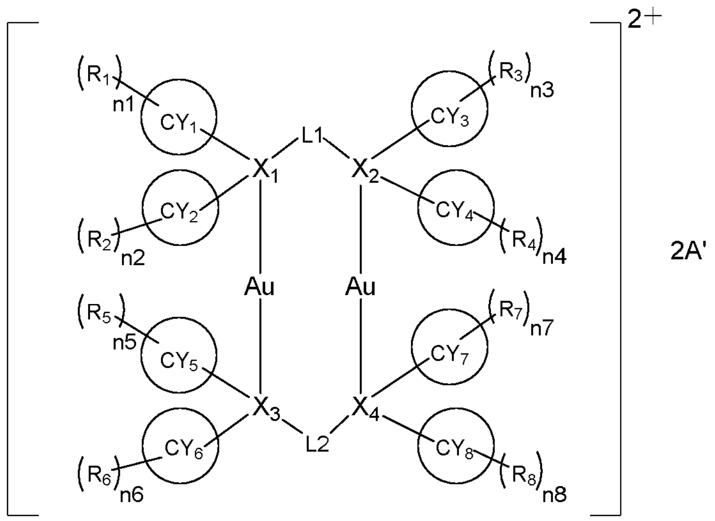

Formula Ic

wherein:

(a) each occurrence of A' is an anion;
(b) $X_1$-$X_4$ are independently P or N;
(c) $L_1$ and $L_2$ are independently absent, a single bond, a double bond, a triple bond, oxygen, sulfur, amino, amido, ether, polyether, thioether, substituted or unsubstituted alkyl, substituted or unsubstituted alkenyl, carbonyl, sulfonyl, sulfonic acid, phosphoryl, or phosphonyl;
(d) $CY_1$-$CY_8$ are independently substituted or unsubstituted aryl, substituted or unsubstituted polyaryl, substituted or unsubstituted heteroaryl, substituted or unsubstituted polyheteroaryl, substituted or unsubstituted heterocyclyl, substituted or unsubstituted cycloalkyl, substituted or unsubstituted cycloalkenyl, or substituted or unsubstituted cycloalkynyl;
(e) $R_1$-$R_8$ are independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol;
(f) n1-n8 are independently an integer between zero and 10;
(g) each ------ is independently absent or a single bond;

(h) Z1 and Z2 are independently a halide (fluoride, chloride, bromide, or iodide), a triflate, a sulfonate, a dicyanoaurate, a cyano, a nitrate, a hydroxyl, an oxo, an oxalate, or a carboxylate;
(i) Z3 is a halide (fluoride, chloride, bromide, or iodide), an oxygen, a sulfur, an oxalate, or a carboxylate; and
(j) the substituents are independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an aroxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

3. The gold (I) complex of paragraph 1 or paragraph 2, wherein $L_1$ and $L_2$ are independently a single bond or

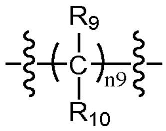

,

$R_9$ and $R_{10}$ are independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol, and n9 is an integer between 1 and 10, between 1 and 8, between 1 and 6, between 1 and 4, between 1 and 3, between 1 and 2, or 1.
4. The gold (I) complex of any one of paragraphs 1-3, wherein X1-X4 are P.
5. The gold (I) complex of any one of paragraphs 1-4, wherein $CY_1$-$CY_8$ are independently substituted or unsubstituted aryl, substituted or unsubstituted polyaryl, substituted or unsubstituted heteroaryl, or substituted or unsubstituted polyheteroaryl.
6. The gold (I) complex of any one of paragraphs 1-5 having a structure:

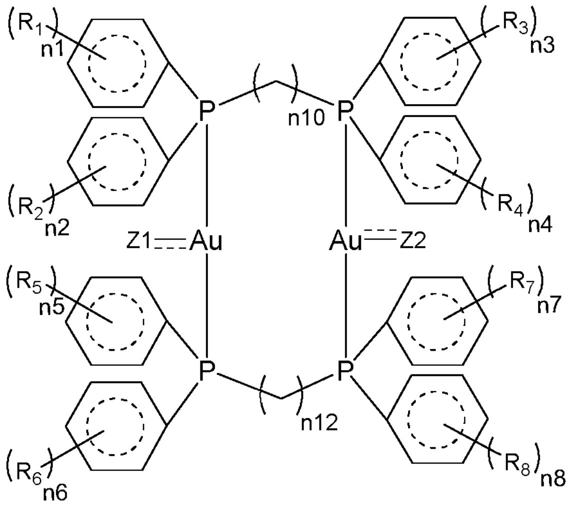

,

Formula IIa

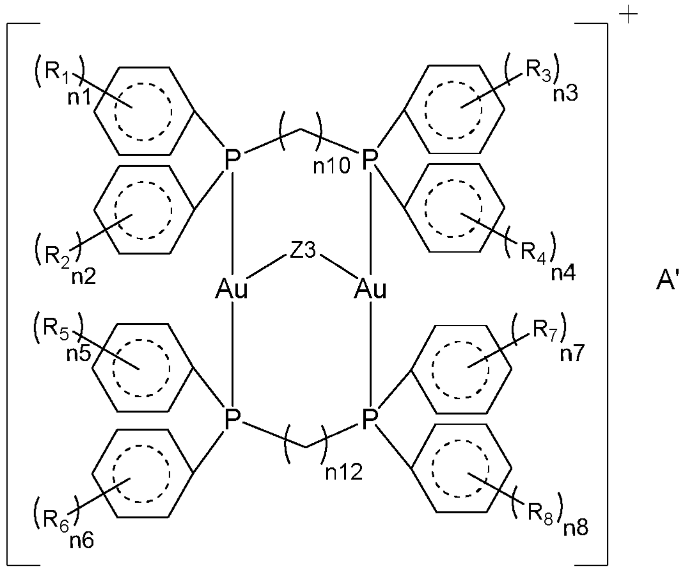

,

Formula IIb

or

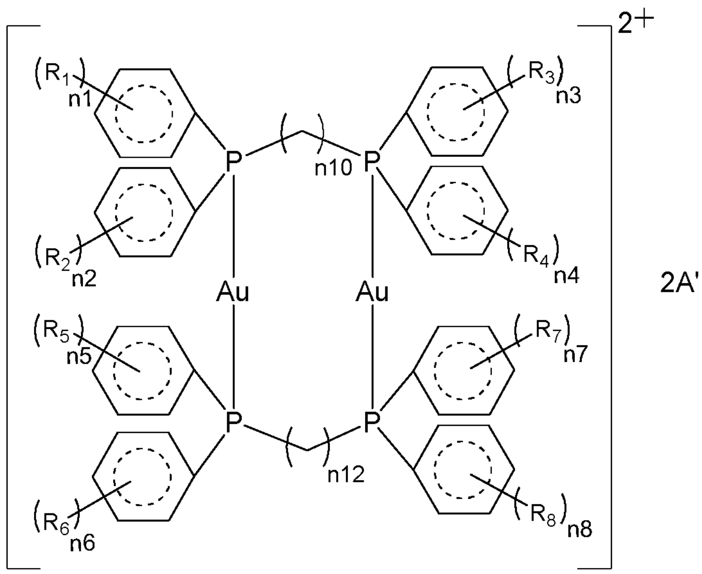

Formula IIc

wherein:

(a) n10 and n12 are independently an integer between 1 and 6, between 1 and 4, between 1 and 3, between 1 and 2, or 1;

(b) $R_1$-$R_8$ are independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol;

(c) n1-n8 are independently an integer between zero and 5;

(d) each ------ is independently absent or a single bond;

(e) Z1 and Z2 are independently a halide (fluoride, chloride, bromide, or iodide), a triflate, a sulfonate, a dicyanoaurate, a cyano, a nitrate, a hydroxyl, an oxo, an oxalate, or a carboxylate;

(f) Z3 is a halide (fluoride, chloride, bromide, or iodide), an oxygen, a sulfur, an oxalate, or a carboxylate;

(g) each occurrence of A' is an anion; and

(h) the substituents are independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an aroxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

7. The gold (I) complex of any one of paragraphs 1-6, wherein $R_1$-$R_8$ are independently hydrogen, substituted or unsubstituted alkyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, oxo, or alkoxy.

8. The gold (I) complex of any one of paragraphs 1-7, wherein $R_1$-$R_8$ are independently hydrogen, hydroxyl, unsubstituted alkyl, unsubstituted alkenyl, haloalkyl, aliphatic alcohol, - $NR_{70}R_{71}$, substituted or unsubstituted polyaryl, substituted or unsubstituted heterocyclyl,

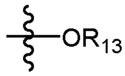 , or 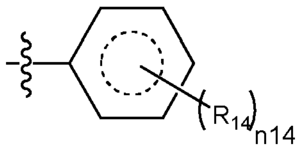 ,

$R_{13}$ and $R_{14}$ are independently halogen, hydrogen, hydroxyl, haloalkyl, alkoxyl, unsubstituted alkenyl, or substituted or unsubstituted alkyl, n14 is an integer from 0 to 5, and $R_{70}$ and $R_{71}$ are independently hydrogen, a substituted or unsubstituted alkyl, a substituted or unsubstituted aryl, an amino, an alkoxyl, or a carbonyl.

9. The gold (I) complex of paragraph 8, wherein $R_{13}$ and $R_{14}$ are independently unsubstituted $C_1$-$C_{10}$ alkyl, unsubstituted $C_1$-$C_8$ alkyl, unsubstituted $C_1$-$C_6$ alkyl, unsubstituted $C_1$-$C_5$ alkyl, unsubstituted $C_1$-$C_4$ alkyl, or unsubstituted $C_1$-$C_3$ alkyl.

10. The gold (I) complex of any one of paragraphs 1-9, wherein Z1-Z3 are independently a halide.

11. The gold (I) complex of any one of paragraphs 1-10, wherein each occurrence of A' is hydride, oxide, fluoride, sulfide, chloride, bromide, iodide, hydrogen phosphate, dihydrogen phosphate, hexafluorophosphate, triflate, sulfate, nitrate, hydrogen sulfate, nitrite, thiosulfate, sulfite, chlorate, bromate, chlorite, hypochlorite, hypobromite, carbonate, chromate, hydrogen carbonate, dichromate, perchlorate, acetate, formate, cyanide, amide, cyanate, peroxide, thiocyanate, oxalate, hydroxide, or permanganate.

12. The gold (I) complex of any one of paragraphs 1-11 having a structure:

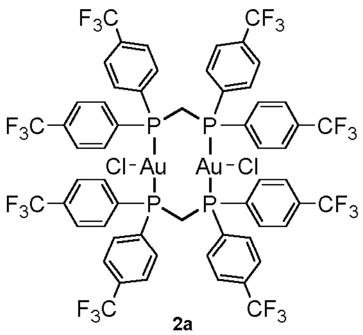

2a

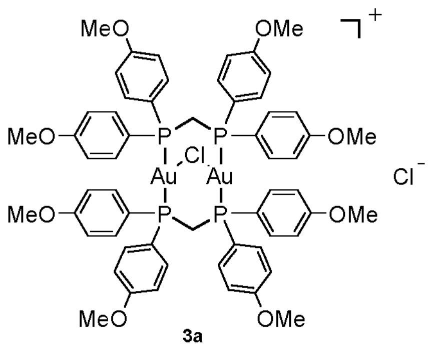

3a

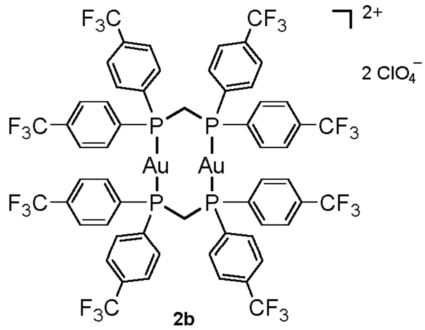

2b

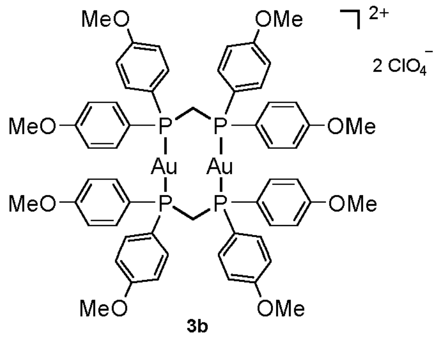

3b

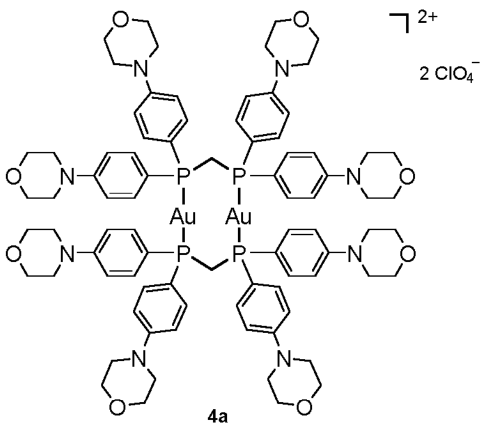

4a

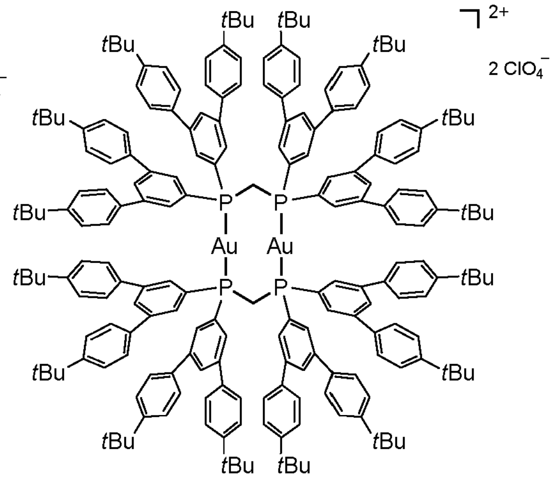

5a

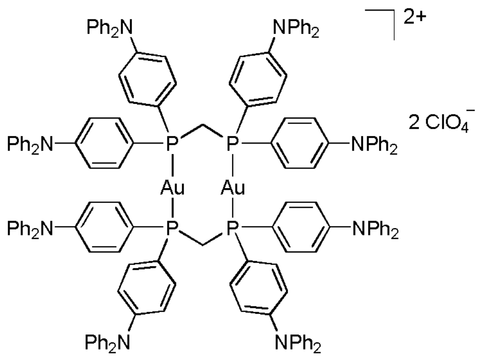

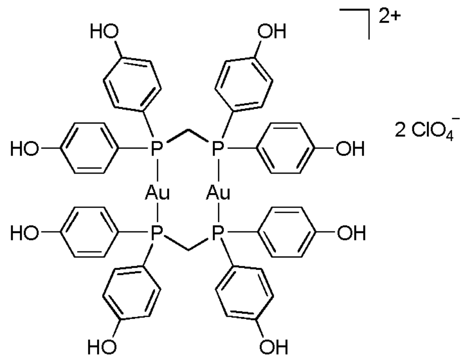

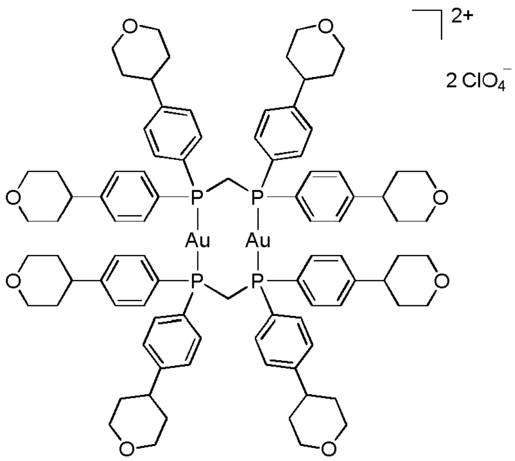

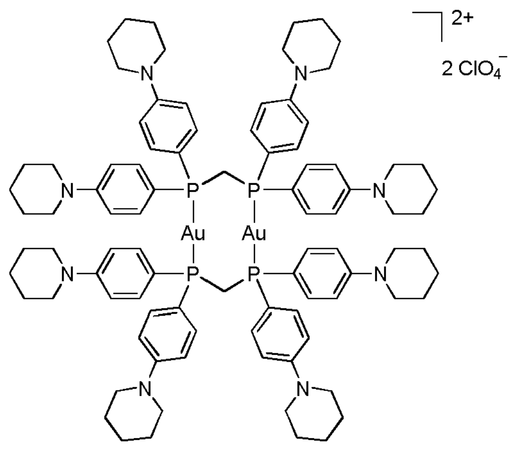

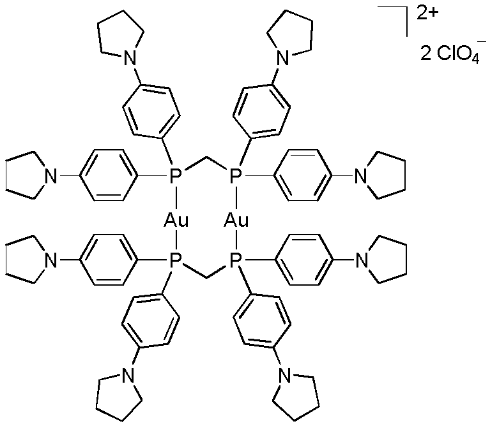

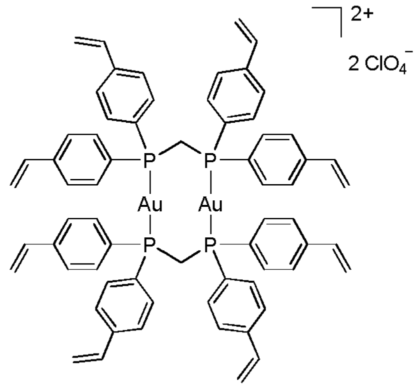

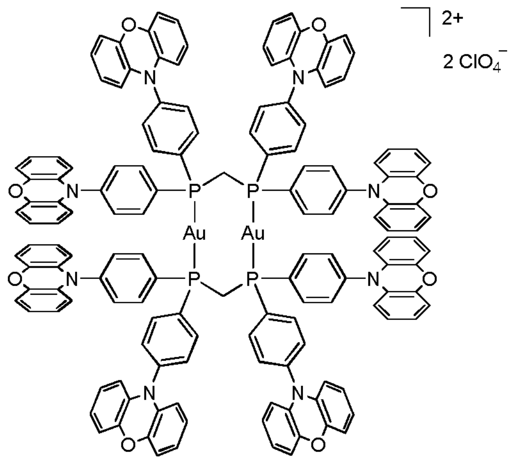

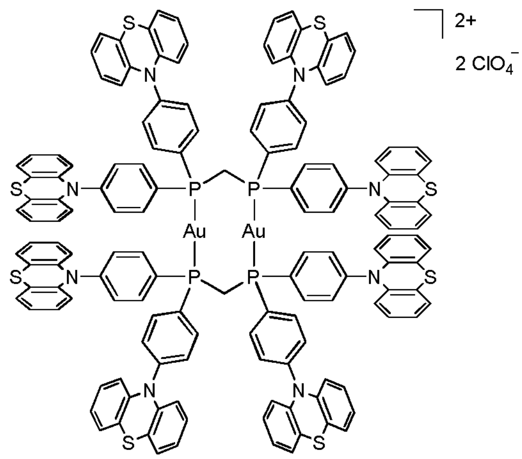

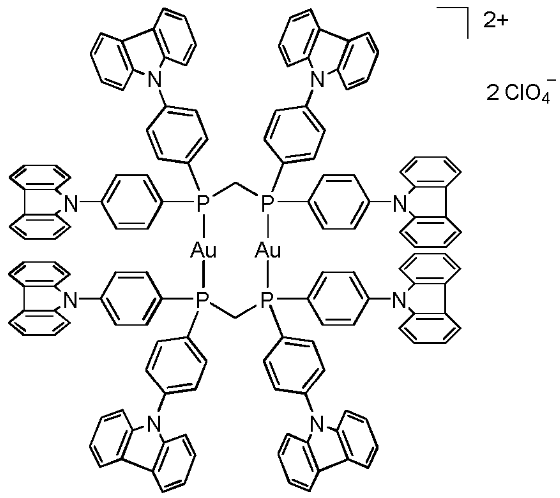

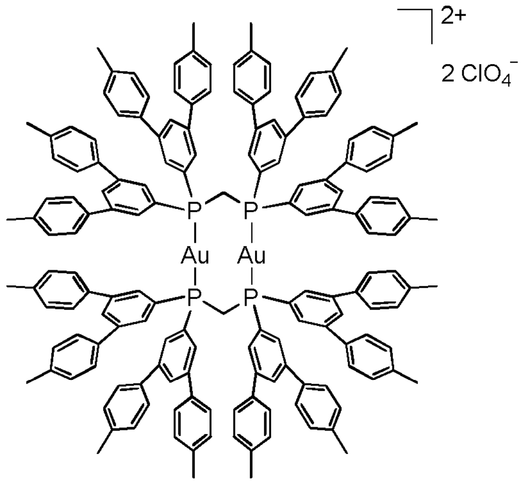

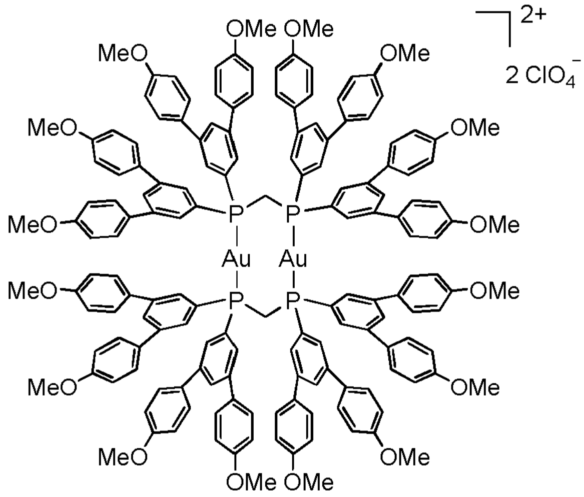

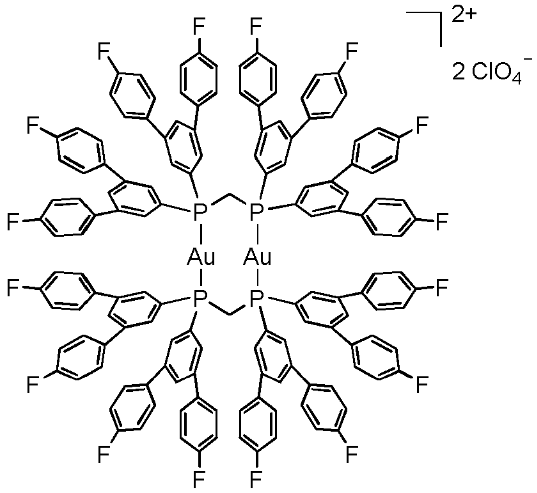

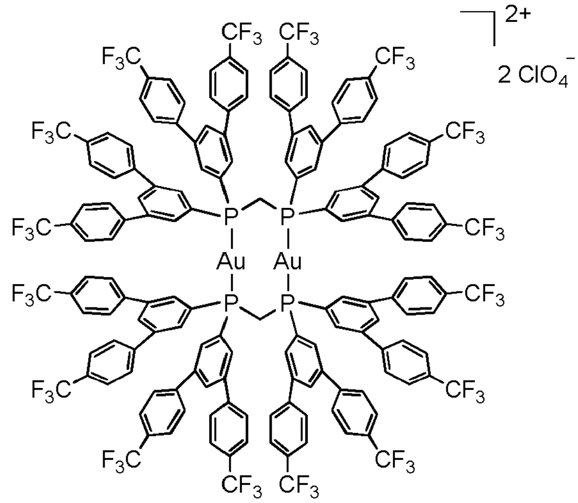

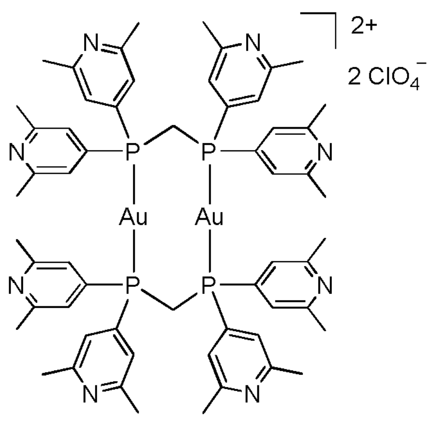

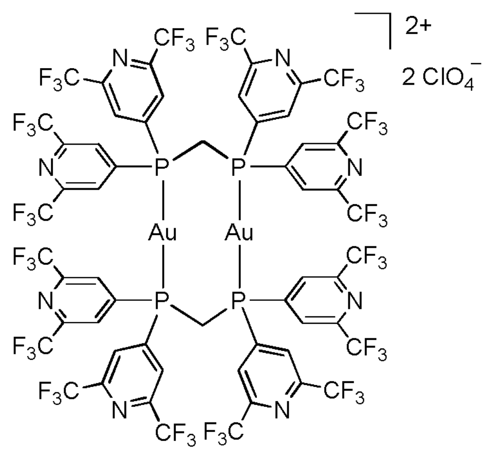

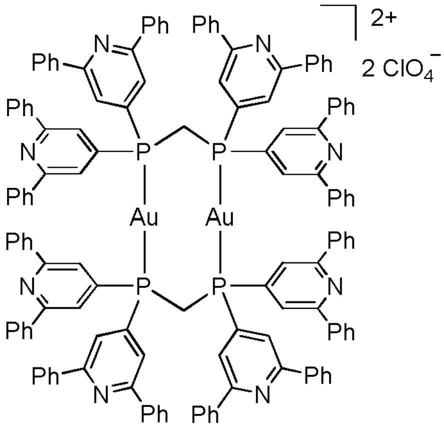

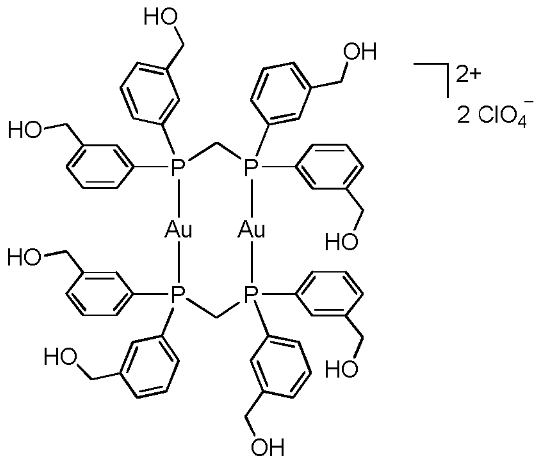

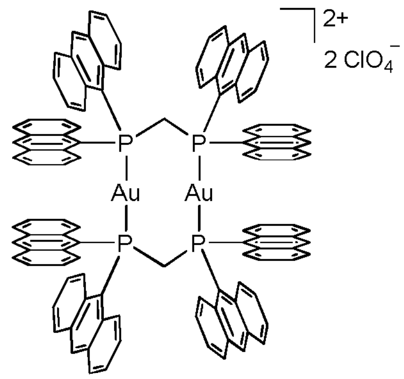

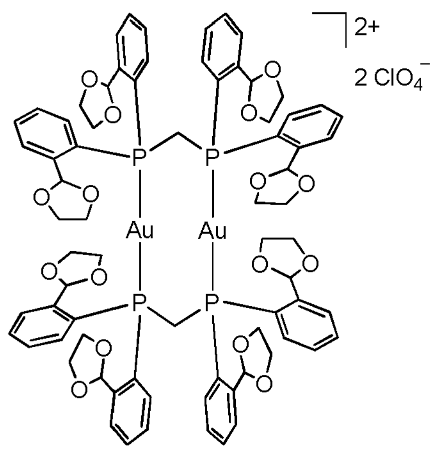

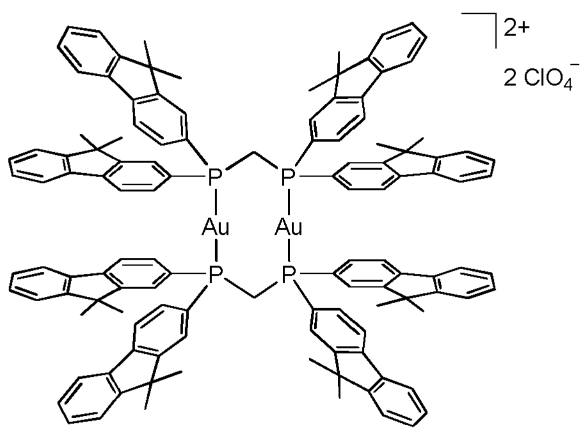

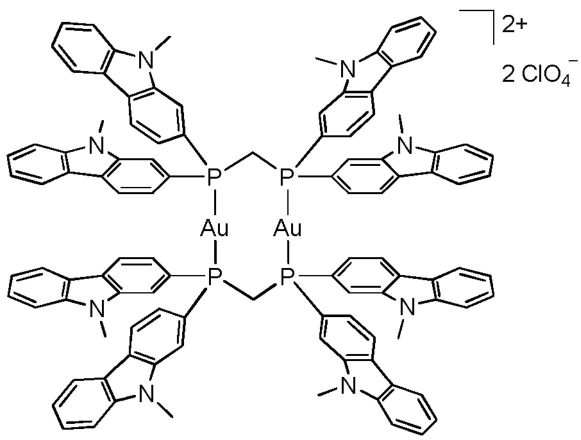

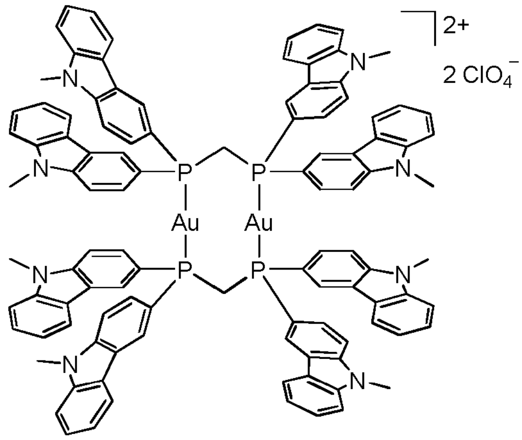

13. The gold (I) complex of any one of paragraphs 1-12 absorbing light at a wavelength of up to 520 nm, up to 500 nm, up to 480 nm, up to 450 nm, up to 420 nm, in a range from about 250 nm to about 520 nm, from about 250 nm to about 500 nm, from about 250 nm to about 480 nm, from about 250 nm to about 450 nm, from about 250 nm to about 420 nm, from about 280 nm to about 520 nm, from about 280 nm to about 500 nm, from about 280 nm to about 480 nm, from about 280 nm to about 450 nm, from about 280 nm to about 420 nm, from about 300 nm to about 520 nm, from about 300 nm to about 500 nm, from about 300 nm to about 480 nm, from about 300 nm to about 450 nm, from about 300 nm to about 420 nm, from about 320 nm to about 520 nm, from about 320 nm to about 500 nm, from about 320 nm to about 480 nm, from about 320 nm to about 450 nm, from about 320 nm to about 420 nm, from about 350 nm to about 520 nm, from about 350 nm to about 500 nm, from about 350 nm to about 480 nm, from about 350 nm to about 450 nm, from about 350 nm to about 420 nm, from about 380 nm to about 520 nm, from about 380 nm to about 500 nm, from about 380 nm to about 480 nm, from about 380 nm to about 450 nm, or from about 380 nm to about 420 nm, in solution or as powders, as determined using the absorption spectrum of the gold (I) complex.

14. The gold (I) complex of any one of paragraphs 1-13 having an extinction coefficient ("ε") of at least $0.1\times10^4$ $M^{-1}cm^{-1}$, at least $0.5\times10^4$ $M^{-1}cm^{-1}$, at least $1.0\times10^4$ $M^{-1}cm^{-1}$, at least $2.0\times10^4$ $M^{-1}cm^{-1}$, at least $3.0\times10^4$ $M^{-1}cm^{-1}$, at least $5.0\times10^4$ $M^{-1}cm^{-1}$, at least $8.0\times10^4$ $M^{-1}cm^{-1}$, or at least $10.0\times10^4$ $M^{-1}cm^{-1}$, in solution or as powders, as determined using the absorption spectrum of the gold (I) complex.

15. The gold (I) complex of any one of paragraphs 1-14 having a radiative decay rate ("$k_r$") of at least $0.45\times10^4$ $s^{-1}$, at least $0.80\times10^4$ $s^{-1}$, at least $1.00\times10^4$ $s^{-1}$, at least $2.00\times10^4$ $s^{-1}$, at least $4.00\times10^4$ $s^{-1}$, at least $8.00\times10^4$ $s^{-1}$, at least $1.00\times10^5$ $s^{-1}$, at least $1.50\times10^5$ $s^{-1}$, at least $2.00\times10^5$ $s^{-1}$, at least $2.50\times10^5$ $s^{-1}$, or at least $2.80\times10^5$ $s^{-1}$, such as about $2.95\times10^5$ $s^{-1}$, in solution or as powders, as determined using the emission quantum yield and emission lifetime of the gold (I) complex.

16. The gold (I) complex of any one of paragraphs 1-15 having a diffusion-corrected bimolecular quenching rate constant ("$k_q$"') of at least $3.5\times10^5$ $s^{-1}$, at least $5.0\times10^5$ $s^{-1}$, at least $1.0\times10^6$ $s^{-1}$, at least $5.0\times10^6$ $s^{-1}$, at least $1.0\times10^7$ $s^{-1}$, at least $5.0\times10^7$ $s^{-1}$, at least $1.0\times10^8$ $s^{-1}$, at least $3.5\times10^8$ $s^{-1}$, at least $5.0\times10^8$ $s^{-1}$, at least $8.0\times10^8$ $s^{-1}$, or at least $1.0\times10^9$ $s^{-1}$, such as in a range from about $3.5\times10^8$ $s^{-1}$ to about $1.5\times10^9$ $s^{-1}$, as determined using a quencher.

17. The gold (I) complex of any one of paragraphs 1-16 having a reduction potential of less than -1.46 V, less than -1.50 V, less than -1.55 V, or less than -1.60 V versus a saturated calomel electrode ("SCE"), as determined by cyclic voltammetry.

18. A method of catalyzing an organic reaction using one or more gold (I) complex(es) of any one of paragraphs 1-17 comprising:

(i) exposing a reaction mixture to a light at a temperature for a period of time sufficient to form a product,

wherein the reaction mixture comprises a reactant, optionally more than one reactant, a solvent, and the one or more gold (I) complex(es), and
wherein the light has a wavelength in a range from about 360 nm to about 450 nm, from about 370 nm to about 450 nm, from about 380 nm to about 450 nm, from about 390 nm to about 450 nm, from about 400 nm to about 450 nm, or from about 405 nm to about 450 nm, such as about 405 nm or about 445 nm.

19. The method of paragraph 18, wherein the solvent is acetonitrile or an alcohol, or a combination thereof.

20. The method of paragraph 18 or paragraph 19, wherein the total amount of the one or more gold (I) complex(es) in the reaction mixture is up to 10 mol%, up to 5 mol%, up to 2 mol%, at least 0.05 mol%, at least 0.1 mol%, in a range from about 0.05 mol% to about 10 mol%, from about 0.05 mol% to about 5 mol%, from about 0.05 mol% to about 2 mol%,

from about 0.05 mol% to about 1 mol%, from about 0.05 mol% to about 0.5 mol%, from about 0.1 mol% to about 10 mol%, from about 0.1 mol% to about 5 mol%, from about 0.1 mol% to about 2 mol%, from about 0.1 mol% to about 1 mol%, from about 0.1 mol% to about 0.5 mol%, from about 0.5 mol% to about 10 mol%, from about 0.5 mol% to about 5 mol%, from about 0.5 mol% to about 2 mol%, or from about 0.5 mol% to about 1 mol%.

21. The method of any one of paragraphs 18-20, wherein the organic reaction is performed at room temperature for a period of time in a range from about 2 hours to about 20 hours, from about 4 hours to about 16 hours, from about 4 hours to about 14 hours, or from about 6 hours to about 12 hours, such as about 6 hours or about 12 hours.

22. The method of any one of paragraphs 18-21, wherein the product has a yield of at least 12%, at least 15%, at least 20%, at least 25%, at least 30%, at least 35%, at least 40%, at least 45%, at least 50%, at least 55%, at least 60%, at least 65%, at least 70%, at least 75%, at least 80%, at least 85%, at least 90%, up to 99%, up to 98%, up to 95%, in a range from about 15% to about 99%, from about 20% to about 99%, from about 40% to about 99%, from about 50% to about 99%, from about 15% to about 95%, from about 20% to about 99%, from about 40% to about 95%, from about 50% to about 95%, from about 15% to about 90%, from about 20% to about 90%, from about 40% to about 90%, from about 50% to about 90%, from about 15% to about 80%, from about 20% to about 80%, from about 40% to about 80%, or from about 50% to about 80%.

23. The method of any one of paragraphs 18-22 catalyzing homocoupling of organic halides, wherein the reaction mixture comprises a reactant having a structure of:

Ä$_1$’-L3-Z4 Formula III

wherein:

(a) $A_1$’ is substituted or unsubstituted alkyl, substituted or unsubstituted aryl, substituted or unsubstituted heteroaryl, substituted or unsubstituted polyaryl, substituted or unsubstituted polyheteroaryl, substituted or unsubstituted cycloalkyl, substituted or unsubstituted cycloalkenyl, substituted or unsubstituted cycloalkynyl, or substituted or unsubstituted heterocyclyl;
(b) L3 is a bond or

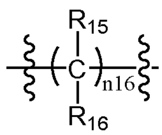
,

$R_{15}$ and $R_{16}$ are independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol, and n16 is an integer between 1 and 10, between 1 and 8, between 1 and 6, between 1 and 4, between 1 and 3, between 1 and 2, such as 1 or 2;
(c) Z4 is a halogen; and
(d) the substituents are independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

24. The method of paragraph 23, wherein the product has a structure of:

$A_1$’-L3-L3-$A_1$’ Formula IV

wherein:

(a) $A_1$’ is substituted or unsubstituted alkyl, substituted or unsubstituted aryl, substituted or unsubstituted heteroaryl, substituted or unsubstituted polyaryl, substituted or unsubstituted polyheteroaryl, substituted or unsubstituted cycloalkyl, substituted or unsubstituted cycloalkenyl, substituted or unsubstituted cycloalkynyl, or

substituted or unsubstituted heterocyclyl;
(b) L3 is a bond or

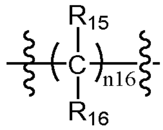

,

$R_{15}$ and $R_{16}$ are independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol, and n16 is an integer between 1 and 10, between 1 and 8, between 1 and 6, between 1 and 4, between 1 and 3, between 1 and 2, such as 1 or 2; and
(c) the substituents are independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

25. The method of paragraph 23 or paragraph 24, wherein $A_1$' is substituted or unsubstituted alkyl, substituted or unsubstituted aryl, substituted or unsubstituted heteroaryl, substituted or unsubstituted polyaryl, or substituted or unsubstituted polyheteroaryl.
26. The method of any one of paragraphs 23-25, wherein $A_1$' is an unsubstituted alkyl or has a structure:

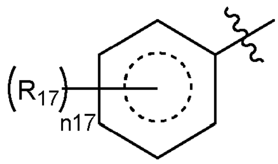

,

Formula V

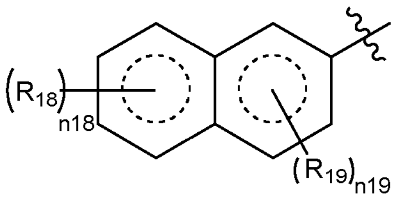

,

Formula VI

or

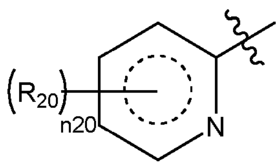

Formula VII

wherein:

(a) $R_{17}$-$R_{20}$ are independently hydrogen, unsubstituted alkyl, a haloalkyl, an oxo, an alkoxyl, a halogen, a cyano, or a carbonyl; and

(b) n17-n20 are independently an integer between 0 and 5, between 0 and 4, between 0 and 3, between 0 and 2.

27. The method of any one of paragraphs 23-26, wherein $R_{15}$ and $R_{16}$ are independently hydrogen, unsubstituted $C_1$-$C_{10}$ alkyl, unsubstituted $C_1$-$C_8$ alkyl, unsubstituted $C_1$-$C_6$ alkyl, unsubstituted $C_1$-$C_5$ alkyl, unsubstituted $C_1$-$C_4$ alkyl, or unsubstituted $C_1$-$C_3$ alkyl.

28. The method of any one of paragraphs 23-27, wherein the reaction mixture further comprises a base selected from the group consisting of $Et_3N$, *i*$Pr_2$NMe, *i*$Pr_2$NEt, imidazole, 2,4,6-trimethylpyridine, and potassium carbonate, and a combination thereof.

29. The method of any one of paragraphs 23-28, wherein the total amount of the one or more gold (I) complex(es) in the reaction mixture is in a range from about 1 mol% to about 5 mol%.

30. The method of any one of paragraphs 23-29, wherein the product has a yield in a range from about 15% to about 99% or from about 15% to about 95%.

31. The method of any one of paragraphs 23-30, wherein the product has a yield that is at least 2-time, at least 5-time, at least 10-time, at least 12-time, at least 20-time, at least 30-time, at least 40-time, at least 50-time, or at least 60-time higher than the yield of the same product formed from the same reaction using $[Au_2(\mu\text{-dppm})_2](Cl)_2$, the same reaction using $[Ru(bpy)_3](Cl)_2$, and/or the same reaction using [*fac*-Ir(ppy)$_3$], under the same reaction conditions, and wherein the total amount of the one or more gold (I) complexes is the same as or lower than the amount of $[Au_2(\mu\text{-dppm})_2](Cl)_2$, $[Ru(bpy)_3](Cl)_2$, or [*fac*-Ir(ppy)$_3$] in the reaction mixture.

32. The method of any one of paragraphs 18-22 catalyzing alkylation of 2-phenyl-1, 2, 3, 4-tetrahydroisoquinoline, wherein the reaction mixture comprises a first reactant and a second reactant, wherein the first reactant is 2-phenyl-1,2,3,4-tetrahydroisoquinoline and the second reactant has a structure of:

A"-L4-Z5 Formula VIII

wherein:

(a) A'' is substituted or unsubstituted alkyl, substituted or unsubstituted aryl, substituted or unsubstituted heteroaryl, substituted or unsubstituted polyaryl, substituted or unsubstituted polyheteroaryl, substituted or unsubstituted cycloalkyl, substituted or unsubstituted cycloalkenyl, substituted or unsubstituted cycloalkynyl, or substituted or unsubstituted heterocyclyl;

(b) L4 is a bond or

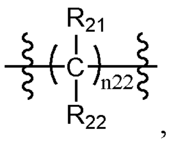
,

$R_{21}$ and $R_{22}$ are independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol, and n22 is an integer between 1 and 10, between 1 and 8, between 1 and 6, between 1 and 4, between 1 and 3, between 1 and 2, such as 1 or 2;

(c) Z5 is a halogen; and

(d) the substituents are independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

33. The method of paragraph 32, wherein the product has a structure of:

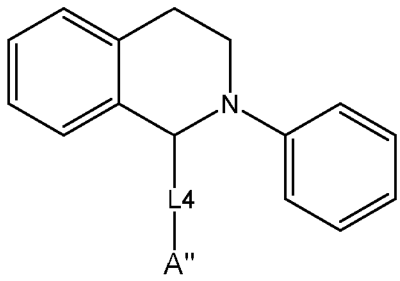

Formula IX

(a) A" is substituted or unsubstituted alkyl, substituted or unsubstituted aryl, substituted or unsubstituted heteroaryl, substituted or unsubstituted polyaryl, substituted or unsubstituted polyheteroaryl, substituted or unsubstituted cycloalkyl, substituted or unsubstituted cycloalkenyl, substituted or unsubstituted cycloalkynyl, or substituted or unsubstituted heterocyclyl;
(b) L4 is a bond or

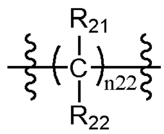

,

$R_{21}$ and $R_{22}$ are independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol, and n22 is an integer between 1 and 10, between 1 and 8, between 1 and 6, between 1 and 4, between 1 and 3, between 1 and 2, such as 1 or 2; and
(c) the substituents are independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

34. The method of paragraph 32 or paragraph 33, wherein A" is substituted or unsubstituted linear alkyl, substituted or unsubstituted branched alkyl, substituted or unsubstituted cycloalkyl, substituted or unsubstituted heterocyclyl, substituted or unsubstituted aryl, or substituted or unsubstituted polyaryl.
35. The method of any one of paragraphs 32-34, wherein A" is an unsubstituted linear alkyl, an unsubstituted branched alkyl, a substituted or unsubstituted polycycloalkyl, or has a structure:

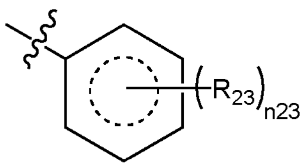

,

Formula X

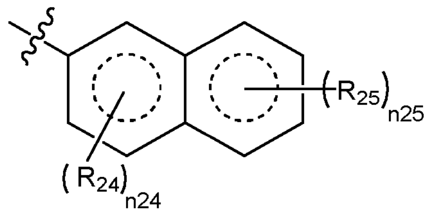

,

Formula XI

or

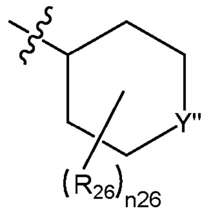

Formula XII

wherein:

(a) $R_{23}$-$R_{26}$ are independently hydrogen, unsubstituted alkyl, a haloalkyl, an oxo, an amino, an alkoxyl, a halogen, a cyano, or a carbonyl;
(b) n23-n26 are independently an integer between 0 and 5, between 0 and 4, between 0 and 3, between 0 and 2, or 0 or 1;
(c) Y" is O, S, $CR_{27}$, or $NR_{28}$, and $R_{27}$ and $R_{28}$ are independently absent, hydrogen, substituted or unsubstituted alkyl, substituted or unsubstituted alkenyl, substituted or unsubstituted alkynyl, substituted or unsubstituted aryl, substituted or unsubstituted heteroaryl, substituted or unsubstituted heterocyclyl, a halogen, an oxo, an amino, an alkoxyl, a cyano, a nitro, or a carbonyl; and
(d) the substituents are independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

36. The method of any one of paragraphs 32-35, wherein L4 is a bond or

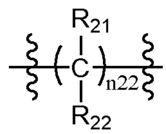

,

wherein $R_{21}$ and $R_{22}$ are independently hydrogen, unsubstituted $C_1$-$C_{10}$ alkyl, unsubstituted $C_1$-$C_8$ alkyl, unsubstituted $C_1$-$C_6$ alkyl, unsubstituted $C_1$-$C_5$ alkyl, unsubstituted $C_1$-$C_4$ alkyl, or unsubstituted $C_1$-$C_3$ alkyl.
37. The method of any one of paragraphs 32-36, wherein the reaction mixture further comprises a base selected from the group consisting of 2, 4, 6-trimethylpyridine, $Et_3N$, *i*$Pr_2NMe$, i$Pr_2NEt$, imidazole, potassium carbonate, and sodium carbonate, and a combination thereof.
38. The method of any one of paragraphs 32-37, wherein the total amount of the one or more gold (I) complex(es) in the reaction mixture is in a range from about 0.1 mol% to about 2 mol%, such as about 1 mol% or 2 mol%.
39. The method of any one of paragraphs 32-38, wherein the reaction is performed in an inert gas environment, such as nitrogen.
40. The method of any one of paragraphs 32-39, wherein the product has a yield in a range from about 40% to about 90%, from about 40% to about 85%, from about 50% to about 90%, from about 50% to about 85%, from about 60% to

about 90%, from about 60% to about 85%.

41. The method of any one of paragraphs 32-40, wherein the product has a yield that is at least 1.2-time, at least 1.5-time, at least 2-time, at least 3-time, at least 4-time, at least 5-time, at least 6-time, at least 8-time, or at least 10-time higher than the product yield of the same reaction using $[Au_2(\mu\text{-dppm})_2](Cl)_2$, the same reaction using $[Ru(bpy)_3](Cl)_2$, and/or the same reaction using [*fac*-Ir(ppy)$_3$], under the same reaction conditions, and wherein the totalamount of the one or more gold (I) complexes is the same as or lower than the amount of $[Au_2(\mu\text{-dppm})_2](Cl)_2$, $[Ru(bpy)_3](Cl)_2$, or [*fac*-Ir(ppy)$_3$] in the reaction mixture.

42. The method of any one of paragraphs 18-22 catalyzing cyclization of indoles, wherein the reaction mixture comprises a reactant having a structure of:

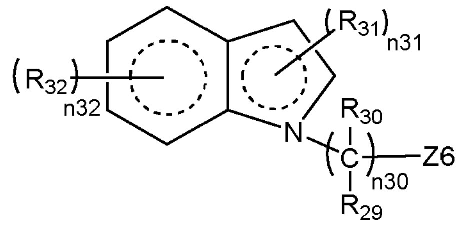

Formula XIII

wherein:

(a) $R_{29}$ and $R_{30}$ are independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol;

(b) n30 is an integer between 2 and 10, between 2 and 8, between 2 and 6, or between 2 and 4, such as 3 or 4;

(c) $R_{31}$ and $R_{32}$ are independently hydrogen, substituted or unsubstituted alkyl, substituted or unsubstituted alkenyl, substituted or unsubstituted alkynyl, substituted or unsubstituted heterocyclyl, substituted or unsubstituted aryl, substituted or unsubstituted heteroaryl, substituted or unsubstituted polyaryl, substituted or unsubstituted polyheteroaryl, substituted or unsubstituted aralkyl, carbonyl, alkoxyl, a halogen, a hydroxyl, a cyano, an isocyano, a nitro, an amino, an amido, an oxo, a sulfonyl, a phosphonyl, or a thiol, or a combination thereof;

(d) n31 and n32 are independently an integer between 0 and 4, between 0 and 3, between 0 and 2, or 0 or 1;

(e) Z6 is a halogen; and

(f) the substituents are independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

43. The method of paragraph 42, wherein the reactant having a structure of:

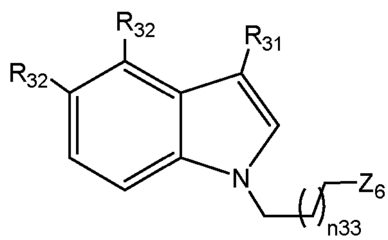

Formula XIV

wherein:

(a) n33 is an integer between 0 and 8, between 0 and 6, between 0 and 4, between 0 and 2, such as 1 or 2;
(b) each occurrence of $R_{31}$ and $R_{32}$ is independently substituted or unsubstituted alkyl, substituted or unsubstituted alkenyl, substituted or unsubstituted alkynyl, substituted or unsubstituted heterocyclyl, substituted or unsubstituted aryl, substituted or unsubstituted heteroaryl, substituted or unsubstituted polyaryl, substituted or unsubstituted polyheteroaryl, substituted or unsubstituted aralkyl, carbonyl, alkoxyl, a halogen, a hydroxyl, a cyano, an isocyano, a nitro, an amino, an amido, an oxo, a sulfonyl, a phosphonyl, or a thiol, or a combination thereof;
(c) Z6 is a halogen; and
(d) the substituents are independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

44. The method of paragraph 42, wherein the product has a structure of:

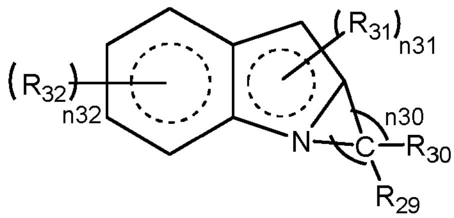

Formula XV

wherein:

(a) $R_{29}$ and $R_{30}$ are independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol;
(b) n30 is an integer between 2 and 10, between 2 and 8, between 2 and 6, or between 2 and 4, such as 3 or 4;
(c) $R_{31}$ and $R_{32}$ are independently hydrogen, substituted or unsubstituted alkyl, substituted or unsubstituted alkenyl, substituted or unsubstituted alkynyl, substituted or unsubstituted heterocyclyl, substituted or unsubstituted aryl, substituted or unsubstituted heteroaryl, substituted or unsubstituted polyaryl, substituted or unsubstituted polyheteroaryl, substituted or unsubstituted aralkyl, carbonyl, alkoxyl, a halogen, a hydroxyl, a cyano, an isocyano, a nitro, an amino, an amido, an oxo, a sulfonyl, a phosphonyl, or a thiol, or a combination thereof;
(d) n31 and n32 are independently an integer between 0 and 4, between 0 and 3, between 0 and 2, or 0 or 1; and
(e) the substituents are independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

45. The method of any one of paragraphs 42-44, wherein the product has a structure of:

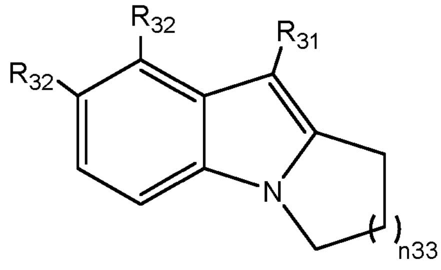

Formula XVI

wherein:

(a) n33 is an integer between 0 and 8, between 0 and 6, between 0 and 4, between 0 and 2, such as 1 or 2;
(b) each occurrence of $R_{31}$ and $R_{32}$ is independently substituted or unsubstituted alkyl, substituted or unsubstituted alkenyl, substituted or unsubstituted alkynyl, substituted or unsubstituted heterocyclyl, substituted or unsubstituted aryl, substituted or unsubstituted heteroaryl, substituted or unsubstituted polyaryl, substituted or unsubstituted polyheteroaryl, substituted or unsubstituted aralkyl, carbonyl, alkoxyl, a halogen, a hydroxyl, a cyano, an isocyano, a nitro, an amino, an amido, an oxo, a sulfonyl, a phosphonyl, or a thiol, or a combination thereof; and
(c) the substituents are independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

46. The method of any one of paragraphs 42-45, wherein each occurrence of $R_{31}$ and $R_{32}$ is independently unsubstituted alkyl, a haloalkyl, an oxo, an amino, an alkoxyl, a halogen, a cyano, or a carbonyl.
47. The method of any one of paragraphs 42-46, wherein each occurrence of $R_{31}$ and $R_{32}$ is independently halogen,

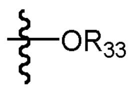
, or
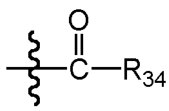
,

and $R_{33}$ and $R_{34}$ are independently hydrogen, unsubstituted $C_1$-$C_{10}$ alkyl, unsubstituted $C_1$-$C_8$ alkyl, unsubstituted $C_1$-$C_6$ alkyl, unsubstituted $C_1$-$C_5$ alkyl, unsubstituted $C_1$-$C_4$ alkyl, or unsubstituted $C_1$-$C_3$ alkyl.
48. The method of any one of paragraphs 42-47, wherein the reaction mixture further comprises a base selected from the group consisting of 2, 4, 6-trimethylpyridine, $Et_3N$, *i*$Pr_2NMe$, *i*$Pr_2NEt$, imidazole, potassium carbonate, and sodium carbonate, and a combination thereof.
49. The method of any one of paragraphs 42-48, wherein the total amount of the one or more gold (I) complex(es) in the reaction mixture is in a range from about 0.1 mol% to about 0.5 mol%.
50. The method of any one of paragraphs 42-49, wherein the product has a yield in a range from about 90% to about 99% or from about 92% to about 98%.
51. The method of any one of paragraphs 42-50, wherein the product has a yield that is at least 1.5-time, 2-time, 3-time, 4-time, 5-time, 6-time, 7-time, or at least 8-time higher than the product yield of the same reaction using $[Au_2(\mu\text{-dppm})_2](Cl)_2$, the same reaction using $[Ru(bpy)_3](Cl)_2$, and/or the same reaction using [*fac*-$Ir(ppy)_3$], under the same reaction conditions, and wherein the total amount of the one or more gold (I) complexes is the same as or lower than the amount of $[Au_2(\mu\text{-dppm})_2](Cl)_2$, $[Ru(bpy)_3](Cl)_2$, or [*fac*-$Ir(ppy)_3$] in the reaction mixture.
52. The method of any one of paragraphs 18-22 catalyzing reductive dehalogenation of aryl halides, wherein the reaction mixture comprises a reactant having a structure of:

A‴-Z7 Formula XVII

wherein:

(a) $A'''$ is substituted or unsubstituted aryl, substituted or unsubstituted heteroaryl, substituted or unsubstituted polyaryl, substituted or unsubstituted polyheteroaryl;
(b) Z7 is a halogen; and
(c) the substituents are independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

53. The method of paragraph 52, wherein the product has a structure of:

$A'''$-H Formula XVIII

wherein:

(a) $A'''$ is substituted or unsubstituted aryl, substituted or unsubstituted heteroaryl, substituted or unsubstituted polyaryl, substituted or unsubstituted polyheteroaryl; and
(b) the substituents are independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

54. The method of paragraph 52 or paragraph 53, wherein $A'''$ has a structure:

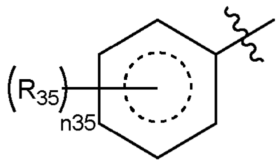,

Formula XIX

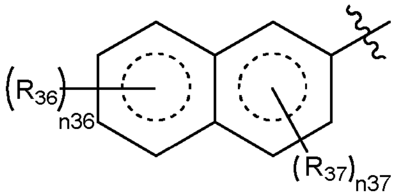,

Formula XX

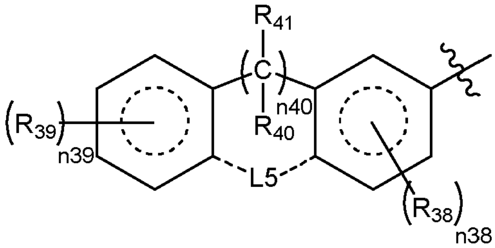,

Formula XXI

or
wherein:

(a) $R_{35}$-$R_{39}$ are independently hydrogen, substituted or unsubstituted alkyl, substituted or unsubstituted alkenyl, substituted or unsubstituted alkynyl, substituted or unsubstituted heterocyclyl, substituted or unsubstituted aryl, substituted or unsubstituted heteroaryl, substituted or unsubstituted polyaryl, substituted or unsubstituted polyheteroaryl, substituted or unsubstituted aralkyl, carbonyl, alkoxyl, a halogen, a hydroxyl, a cyano, an isocyano, a nitro, an amino, an amido, an oxo, a sulfonyl, a phosphonyl, or a thiol, or a combination thereof;
(b) n35-n39 are independently an integer between 0 and 5, between 0 and 4, between 0 and 3, between 0 and 2, or 0 or 1;
(c) $R_{40}$ and $R_{41}$ are independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol;
(d) n40 is an integer between 0 and 10, between 0 and 8, between 0 and 6, between 0 and 4, between 0 and 3, between 0 and 2, such as 1 or 2;
(e) ------ is absent or a bond and L5 is absent, a substituted or unsubstituted alkylene, an ether, a polyether, or a thioether; and
(f) the substituents are independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

55. The method of paragraph 54, wherein $R_{35}$-$R_{39}$ are independently unsubstituted $C_1$-$C_{10}$ alkyl, unsubstituted $C_1$-$C_8$ alkyl, unsubstituted $C_1$-$C_6$ alkyl, unsubstituted $C_1$-$C_5$ alkyl, unsubstituted $C_1$-$C_4$ alkyl, or unsubstituted $C_1$-$C_3$ alkyl, an oxo, an alkoxyl, a halogen, a cyano, or a carbonyl.
56. The method of paragraph 54 or paragraph 55, wherein $R_{40}$ and $R_{41}$ are independently hydrogen, unsubstituted $C_1$-$C_{10}$ alkyl, unsubstituted $C_1$-$C_8$ alkyl, unsubstituted $C_1$-$C_6$ alkyl, unsubstituted $C_1$-$C_5$ alkyl, unsubstituted $C_1$-$C_4$ alkyl, or unsubstituted $C_1$-$C_3$ alkyl, an oxo, an alkoxyl, or a carbonyl.
57. The method of any one of paragraphs 54-56, wherein ------ is absent or a bond and L5 is absent or an unsubstituted alkylene.
58. The method of any one of paragraphs 52-57, wherein the reaction mixture further comprises a base selected from the group consisting of $Et_3N$, *i*$Pr_2NMe$, *i*$Pr_2NEt$, imidazole, potassium carbonate, and sodium carbonate, and a combination thereof.
59. The method of any one of paragraphs 52-58, wherein the total amount of the one or more gold (I) complex(es) in the reaction mixture is in a range from about 0.05 mol% to about 5 mol%.
60. The method of any one of paragraphs 52-59, wherein the product has a yield in a range from about 25% to about 99%, from about 25% to about 70%, or from about 55% to about 99%.
61. The method of any one of paragraphs 52-60, wherein the product has a yield that is at least 1.5-time, at least 2-time, at least 2.5-time, at least 3-time, at least 4-time, 5-time, at least 8-time, at least 10-time, at least 15-time, at least 20-time, or at least 25-time higher than the yield of the same product formed from the same reaction using $[Au_2(\mu\text{-dppm})_2](Cl)_2$, the same reaction using $[Ru(bpy)_3](Cl)_2$, and/or the same reaction using [*fac*-$Ir(ppy)_3$], under the same reaction conditions, wherein the total amount of the one or more gold (I) complexes is the same as or lower than the amount of $[Au_2(\mu\text{-dppm})_2](Cl)_2$, $[Ru(bpy)_3](Cl)_2$, or [*fac*-$Ir(ppy)_3$] in the reaction mixture.
62. The method of any one of paragraphs 18-22 catalyzing cleavage of C-H bonds, wherein the reaction mixture comprises a reactant having a structure of:

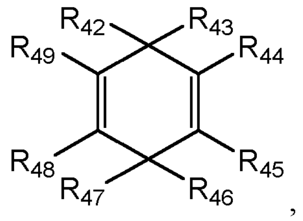

Formula XXII

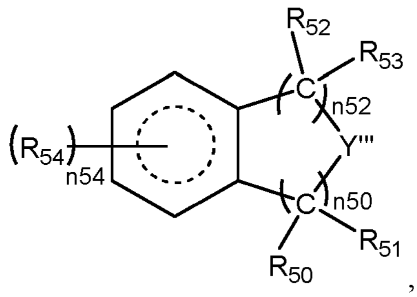

Formula XXIII

or

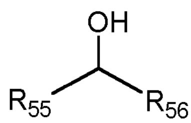

Formula XXIV

wherein:

(a) $R_{42}$-$R_{49}$ and $R_{54}$ are independently hydrogen, substituted or unsubstituted alkyl, substituted or unsubstituted alkenyl, substituted or unsubstituted alkynyl, substituted or unsubstituted heterocyclyl, substituted or unsubstituted aryl, substituted or unsubstituted heteroaryl, substituted or unsubstituted polyaryl, substituted or unsubstituted polyheteroaryl, substituted or unsubstituted aralkyl, carbonyl, alkoxyl, a halogen, a hydroxyl, a cyano, an isocyano, a nitro, an amino, an amido, an oxo, a sulfonyl, a phosphonyl, or a thiol, or a combination thereof, or two adjacent R groups form a substituted or unsubstituted aryl, a substituted or unsubstituted polyaryl, a substituted or unsubstituted heteroaryl, or a substituted or unsubstituted polyheteroaryl, and at least one of $R_{42}$ and $R_{43}$ and one of $R_{46}$ and $R_{47}$ are hydrogen;
(b) n54 is an integer between 0 and 4;
(c) $R_{50}$-$R_{53}$ are independently hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol;
(d) n50 and n52 are independently an integer between 0 and 6;
(e) Y‴ is O, S, $CR_{27}$, or $NR_{28}$, and $R_{27}$ and $R_{28}$ are independently hydrogen, substituted or unsubstituted alkyl, substituted or unsubstituted alkenyl, substituted or unsubstituted alkynyl, substituted or unsubstituted aryl, substituted or unsubstituted heteroaryl, substituted or unsubstituted heterocyclyl, a halogen, an oxo, an amino, an alkoxyl, a cyano, a nitro, or a carbonyl;
(f) $R_{55}$ and $R_{56}$ are independently hydrogen, substituted or unsubstituted alkyl, substituted or unsubstituted alkenyl, substituted or unsubstituted alkynyl, substituted or unsubstituted heterocyclyl, substituted or unsubstituted aryl, substituted or unsubstituted heteroaryl, substituted or unsubstituted polyaryl, substituted or unsubstituted polyheteroaryl, substituted or unsubstituted aralkyl; and
(g) the substituents are independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

63. The method of paragraph 62, wherein the product has a structure of:

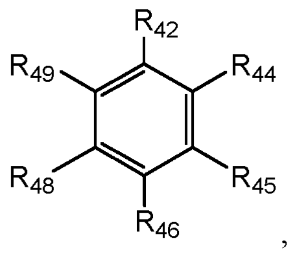

,

Formula XXV

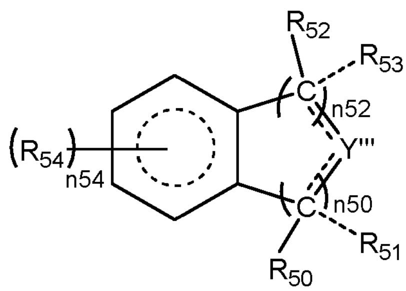

,

Formula XXVI

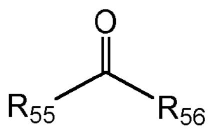

, or

Formula XXVII

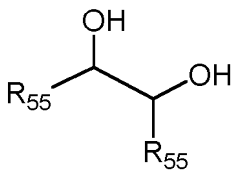

Formula XXVII'

wherein:

(a) $R_{42}$, $R_{44}$-$R_{46}$, $R_{48}$, $R_{49}$, and $R_{54}$ are independently hydrogen, substituted or unsubstituted alkyl, substituted or unsubstituted alkenyl, substituted or unsubstituted alkynyl, substituted or unsubstituted heterocyclyl, substituted or unsubstituted aryl, substituted or unsubstituted heteroaryl, substituted or unsubstituted polyaryl, substituted or unsubstituted polyheteroaryl, substituted or unsubstituted aralkyl, carbonyl, alkoxyl, a halogen, a hydroxyl, a cyano, an isocyano, a nitro, an amino, an amido, an oxo, a sulfonyl, a phosphonyl, or a thiol, or a combination thereof, or two adjacent R groups form a substituted or unsubstituted aryl, a substituted or unsubstituted polyaryl, a substituted or unsubstituted heteroaryl, or a substituted or unsubstituted polyheteroaryl;

(b) n54 is an integer between 0 and 4;

(c) $R_{50}$-$R_{53}$ are independently absent, hydrogen, substituted or unsubstituted alkyl, substituted or unsubstituted alkenyl, substituted or unsubstituted alkynyl, substituted or unsubstituted aryl, substituted or unsubstituted

polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol;

(d) n50 and n52 are independently an integer between 0 and 6;

(e) each occurrence of ------ is independently absent or a bond;

(f) Y‴ is O, S, $CR_{27}$, or $NR_{28}$, and $R_{27}$ and $R_{28}$ are independently hydrogen, substituted or unsubstituted alkyl, substituted or unsubstituted alkenyl, substituted or unsubstituted alkynyl, substituted or unsubstituted aryl, substituted or unsubstituted heteroaryl, substituted or unsubstituted heterocyclyl, a halogen, an oxo, an amino, an alkoxyl, a cyano, a nitro, or a carbonyl;

(g) $R_{55}$ and $R_{56}$ are independently hydrogen, substituted or unsubstituted alkyl, substituted or unsubstituted alkenyl, substituted or unsubstituted alkynyl, substituted or unsubstituted heterocyclyl, substituted or unsubstituted aryl, substituted or unsubstituted heteroaryl, substituted or unsubstituted polyaryl, substituted or unsubstituted polyheteroaryl, substituted or unsubstituted aralkyl; and

(h) the substituents are independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

64. The method of paragraph 63, wherein the product has a structure:

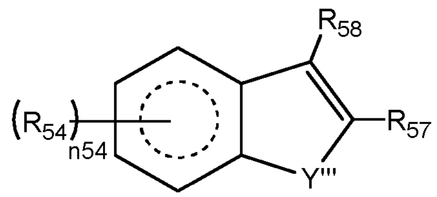

Formula XXVIII

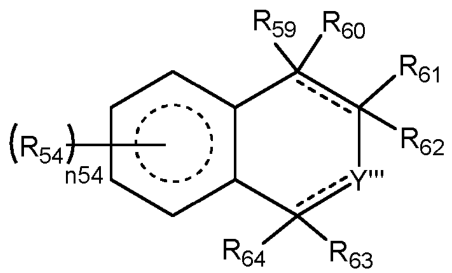

Formula XXIX

wherein:

(a) $R_{54}$ is hydrogen, substituted or unsubstituted alkyl, substituted or unsubstituted alkenyl, substituted or unsubstituted alkynyl, substituted or unsubstituted heterocyclyl, substituted or unsubstituted aryl, substituted or unsubstituted heteroaryl, substituted or unsubstituted polyaryl, substituted or unsubstituted polyheteroaryl, substituted or unsubstituted aralkyl, carbonyl, alkoxyl, a halogen, a hydroxyl, a cyano, an isocyano, a nitro, an amino, an amido, an oxo, a sulfonyl, a phosphonyl, or a thiol, or a combination thereof, or two adjacent R groups form a substituted or unsubstituted aryl, a substituted or unsubstituted polyaryl, a substituted or unsubstituted heteroaryl, or a substituted or unsubstituted polyheteroaryl;

(b) n54 is an integer between 0 and 4;

(c) Y‴ is O, S, $CR_{27}$, or $NR_{28}$, and $R_{27}$ and $R_{28}$ are independently absent, hydrogen, substituted or unsubstituted alkyl, substituted or unsubstituted alkenyl, substituted or unsubstituted alkynyl, substituted or unsubstituted aryl, substituted or unsubstituted heteroaryl, substituted or unsubstituted heterocyclyl, a halogen, an oxo, an amino, an alkoxyl, a cyano, a nitro, or a carbonyl;

(d) $R_{57}$-$R_{64}$ are independent absent, hydrogen, substituted or unsubstituted alkyl, substituted or unsubstituted alkenyl, substituted or unsubstituted alkynyl, substituted or unsubstituted aryl, substituted or unsubstituted polyaryl, substituted or unsubstituted heteroaryl, substituted or unsubstituted polyheteroaryl, substituted or unsubstituted heterocyclyl, halogen, hydroxyl, oxo, amino, azido, alkoxy, cyano, isocyano, carbonyl, nitro, or thiol;

(e) each occurrence of ------ is independently absent or a bond; and

(f) the substituents are independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a substituted or unsubstituted carbonyl, a substituted or unsubstituted alkoxy, a halogen, a hydroxyl, a phenoxy, an alkylthio, a phenylthio, an arylthio, a cyano, an isocyano, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

65. The method of paragraph 62 or paragraph 63, wherein $R_{42}$-$R_{49}$ and $R_{54}$ are independently hydrogen, unsubstituted $C_1$-$C_{10}$ alkyl, unsubstituted $C_1$-$C_8$ alkyl, unsubstituted $C_1$-$C_6$ alkyl, unsubstituted $C_1$-$C_5$ alkyl, unsubstituted $C_1$-$C_4$ alkyl, or unsubstituted $C_1$-$C_3$ alkyl.

66. The method of any one of paragraphs 62-65, wherein $R_{55}$ is substituted or unsubstituted aryl, substituted or unsubstituted heteroaryl, subsittued or unsubstituted polyaryl, substituted or unsubstituted polyheteroaryl, and $R_{56}$ is hydrogen.

67. The method of any one of paragraphs 62-66, wherein the reaction is performed in an inert gas environment, such as nitrogen.

68. The method of any one of paragraphs 62-67, wherein the total amount of the one or more gold (I) complex(es) in the reaction mixture is in a range from about 0.1 mol% to about 5 mol%.

69. The method of any one of paragraphs 62-68, wherein the product has a yield in a range from about 14% to about 80%, from about 35% to about 80%, or from about 14% to about 55%.

70. The method of any one of paragraphs 62-69, wherein the reaction has a turnover number of at least 10, at least 20, at least 30, or at least 40.

71. The method of any one of paragraphs 62-70, wherein the product has a yield that is at least 5-time, at least 8-time, at least 10-time, at least 15-time, at least 20-time, or at least 25-time higher than the product yield of the same reaction using $[Au_2(\mu\text{-dppm})_2](Cl)_2$, the same reaction using $[Ru(bpy)_3](Cl)_2$, and/or the same reaction using [*fac*-Ir(ppy)$_3$], under the same reaction conditions, and wherein the total amount of the one or more gold (I) complexes is the same as or lower than the amount of $[Au_2(\mu\text{-dppm})_2](Cl)_2$, $[Ru(bpy)_3](Cl)_2$, or [*fac*-Ir(ppy)$_3$] in the reaction mixture.

The present invention will be further understood by reference to the following non-limiting examples.

## Examples

### Example 1. Exemplary Au(I) complexes and their properties

#### *Materials and Methods*

*Materials*

All manipulations of air-sensitive materials were carried out under an atmosphere of nitrogen by using modified Schlenk line. All chemicals, unless otherwise noted, were purchased from Alfa-Aesar and J&K Scientific Ltd. All solvents were distilled from appropriate drying agents under argon before use. $[Au_2(\mu\text{-dppm})_2](Cl)_2$, $[Au_2(\mu\text{-dppm})_2](ClO_4)_2$, 1-(4-bromobutyl)-1*H*-indole, 1-(3-bromopropyl)-1*H*-indole, 1-(2-bromobenzyl)-1*H*-indole, 1-(4-bromobutyl)-5-fluoro-1*H*-indole, *tert*-butyl indoline-1-carboxylate and 2-phenyl-1,2,3,4-tetrahydroisoquinoline were synthesized according to the published procedures (Massai, et al., Dalton Trans. 2015, 44, 11067-11076; Che, et al., J. Chem. Soc. Dalton Trans. 1990, 3215-3219; Greco and Schrock, Inorg. Chem. 2001, 40, 3850-3860; Kaldas, et al., Org. Lett. 2015, 17, 2864-2866; Hatzenbuhler, et al., J. Med. Chem. 2008, 51, 6980-7004; Jia, et al., Org. Lett. 2019, 21, 9339-9342; Zhou, et al., Angew. Chem. Int. Ed. 2017, 56, 15683-15687).

*Structure Characterization*

The $^1H$, $^{13}C$, $^{19}F$ and $^{31}P$ NMR spectroscopic data were recorded on Bruker Mercury Plus 400 MHz and 500 MHz NMR spectrometers. Chemical shifts ($\delta$) for $^1H$ and $^{13}C$ are referenced to internal solvent resonances and reported relative

to $SiMe_4$. Chemical shifts for $^{19}F$ are reported relative to an external $CFCl_3$ standard. Chemical shifts for $^{31}P$ are reported relative to an external 85% $H_3PO_4$ standard. Elemental analysis was carried out on an Elemental Vario EL analyzer. High resolution mass analysis is performed on Varian 7.0T Fourier-transform mass spectrometry with ESI resource. Gas Chromatography-Mass Spectrometer analysis is performed on Shimadzu GCMS-QP2020.

*General Procedure for the Synthesis of $Ar_2PCH_2PAr_2$*

Synthesis of ligands **2-4.** In a 100 mL Schlenk under $N_2$, bis(dichlorophosphanyl)methane (1.0 g, 4.59 mmol in 10 mL of THF) was added slowly at 0 °C to the (aryl)magnesium bromide solution, which was synthesized from aryl bromides (20 mmol) and Mg (0.49 g, 19 mmol) in THF (40 mL). After stirring at room temperature for 12 h, the mixture was added to saturated $NH_4Cl$ aqueous solution. The organic phase was separated, and water phase was extracted with $CH_2Cl_2$. The combined organic phase was washed with brine, dried over $MgSO_4$, filtered, and concentrated in vacuum. The obtained crude product was purified by flash column chromatography eluting with $CH_2Cl_2$/hexane to afford the desired $Ar_2PCH_2PAr_2$.

Synthesis of ligand **5.** In a 100 mL Schlenk under $N_2$, nBuLi (2.5 M in n-hexane, 4.4 mL, 11 mmol) was added to a solution of 5'-bromo-4,4"-di-tert-butyl-1,1':3',1"-terphenyl (4.21 g, 10 mmol) in THF (50 mL) at -78 °C over 10 min. The solution was maintained at this temperature for 2 h. Bis(dichlorophosphanyl)methane (500 mg, 2.3 mmol in 5 mL of THF) was added dropwise to the solution over 15 min at -78 °C. The reaction mixture was further stirred at -78 °C for 1 h, and at room temperature for 12 h. Then, the mixture was added to saturated $NH_4Cl$ aqueous solution. The organic phase was separated, and water phase was extracted with $CH_2Cl_2$. The combined organic phase was washed with brine, dried over $MgSO_4$, filtered, and concentrated in vacuum. The obtained crude product was purified by flash column chromatography eluting with $CH_2Cl_2$/hexane to afford white solid of ligand **5** (1.66 g, 50%).

*Structure Characterization of $Ar_2PCH_2PAr_2$*

**Bis(bis(4-(trifluoromethyl)phenyl)phosphanyl)methane (2).** White solid, 1.54g (51%). $^1H$ NMR (400 MHz, $CDCl_3$): δ 7.59 (d, *J* = 8.0 Hz, 8 H, Ar), 7.51 - 7.53 (m, 8 H, Ar), 2.92 (s, 2 H, PC*H*$_2$P). $^{13}C$ NMR (101 MHz, $CDCl_3$): δ 142.1 (t, $J_{C-P}$ = 4.7 Hz, Ar), 133.1 (t, $J_{C-P}$ = 10.5 Hz, Ar), 131.4 (q, $J_{C-F}$ = 32.7 Hz, Ar), 125.4 (m, Ar), 123.8 (q, $J_{C-F}$ = 272.4 Hz, *C*$F_3$), 27.0 (t, $J_{C-P}$ = 24.4 Hz, P*C*$H_2$P). $^{31}P$ NMR (162 MHz, $CDCl_3$): δ -21.8 (s). $^{19}F$ NMR (376 MHz, $CDCl_3$): δ -63.0 (s). HRMS (ESI): m/z: $[M + H]^+$ calculated for $C_{29}H_{19}F_{12}P_2$: 657.0765, found 657.0772.

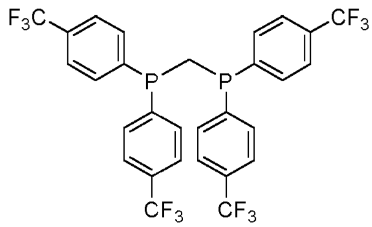

**Bis(bis(4-methoxyphenyl)phosphanyl)methane (3).** White solid, 1.25g (54%). $^1H$ NMR (400 MHz, $CDCl_3$): δ 7.33 - 7.37 (m, 8 H, Ar), 6.83 (d, *J* = 8.6 Hz, 8 H, Ar), 3.78 (s, 12 H, O*Me*), 2.69 (s, 2 H, PC*H*$_2$P). $^{13}C$ NMR (101 MHz, $CDCl_3$): δ 160.0 (s, Ar), 134.1 (t, $J_{C-P}$ = 11.0 Hz, Ar), 129.9 (s, Ar), 114.0 (t, $J_{C-P}$ = 4.0 Hz, Ar), 55.1 (s, *OMe),* 29.2 (t, $J_{C-P}$ = 21.5 Hz, P*C*$H_2$P). $^{31}P$ NMR (162 MHz, $CDCl_3$): δ -25.8 (s). HRMS (ESI): m/z: $[M + H]^+$ calculated for $C_{29}H_{31}O_4P_2$: 505.1692, found 505.1695.

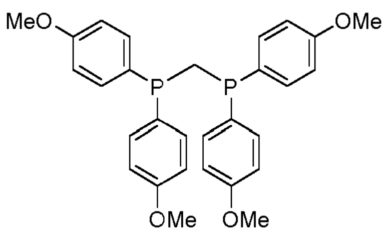

**Bis(bis(4-morpholinophenyl)phosphanyl)methane (4).** White solid, 1.4 g (42%). $^1H$ NMR (400 MHz, $CDCl_3$): δ 7.31 - 7.35 (m, 8 H, Ar), 6.82 (d, *J* = 8.0 Hz, 8H, Ar), 3.82 - 3.85 (m, 18 H, $NCH_2$C*H*$_2$O), 3.14 - 3.17 (m, 18 H, NC*H*$_2$$CH_2O$), 2.66 (s, 2 H, PC*H*$_2$P). $^{13}C$ NMR (101 MHz, $CDCl_3$): δ 151.2 (s, Ar), 133.8 (t, $J_{C-P}$ = 10.8 Hz, Ar), 128.8 (s, Ar), 115.0 (t, $J_{C-P}$ = 3.8 Hz, Ar), 66.8 (s, Ar $NCH_2CH_2O$), 48.6 (s, N$CH_2CH_2O$), 29.0 (t, $J_{C-P}$ = 21.5 Hz, P$CH_2$P). $^{31}P$ NMR (162 MHz, $CDCl_3$): δ

-26.7 (s). HRMS (ESI): m/z: $[M + H]^+$ calculated for $C_{41}H_{51}N_4O_4P_2$: 725.3380, found 725.3384.

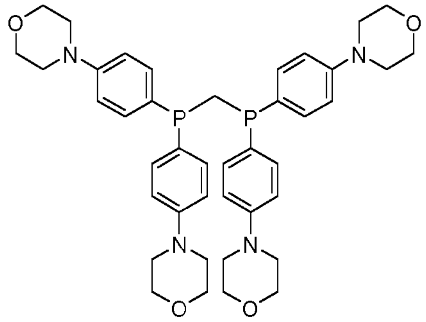

**Ligand 5.** White solid, 1.66 g (50%). $^1$H NMR (500 MHz, $CDCl_3$): δ 7.68 - 7.69 (m, 8 H, Ar), 7.62 (s, 4 H, Ar), 7.44 (d, *J* = 8.4 Hz, 16 H, Ar), 7.38 (d, *J* = 8.4 Hz, 16 H, Ar), 3.15 (s, 2 H, $PCH_2P$), 1.34 (s, 72 H, $CMe_3$). $^{13}$C NMR (126 MHz, $CDCl_3$): δ 150.4 (s, Ar), 141.4 (t, $J_{C-P}$ = 3.6 Hz, Ar), 139.6 (t, $J_{C-P}$= 3.7 Hz, Ar), 138.0 (s, Ar), 130.3 (t, $J_{C-P}$ = 10.6 Hz, Ar), 127.0 (s, Ar), 126.6 (s, Ar), 125.7 (s, Ar), 34.6 (s, $CMe_3$), 31.4 (s, $CMe_3$), 27.9 (t, $J_{C-P}$ = 24.0 Hz, $PCH_2P$). $^{31}$P NMR (202 MHz, $CDCl_3$): δ -19.1 (s). HRMS (ESI): m/z: $[M + H]^+$ calculated for $C_{105}H_{119}P_2$: 1441.8782, found 1441.8772.

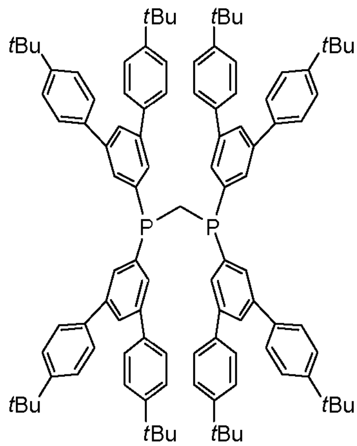

*Synthesis of gold complex **2a***

(THT)AuCl (64.1 mg, 0.2 mmol) was added to a solution of bis(bis(4-(trifluoromethyl)phenyl)phosphanyl) methane **(2)** (131.3 mg, 0.2 mmol) in $CH_2Cl_2$ (10 mL) and stirred at room temperature for 12 h under nitrogen atmosphere. After removal of solvent in vacuo, the product was recrystallized from $CH_2Cl_2$ to give white solid of **2a** (127 mg, 71%). $^1$H NMR (400 MHz, $CD_2Cl_2$): δ 7.96 (d, *J* = 7.1 Hz, 16 H, Ar), 7.57 (d, *J* = 7.9 Hz, 16 H, Ar), 4.76 (s, 4 H, $PCH_2P$). $^{13}$C NMR (101 MHz, $CD_2Cl_2$): δ 135.7 (s, Ar), 134.6 (q, $J_{C-F}$ = 32.9 Hz, Ar), 134.6 (s, Ar), 127.0 (s, Ar), 124.7 (q, $J_{C-F}$ = 272.8 Hz, $CF_3$), 32.8 (m, $PCH_2P$). $^{19}$F NMR (376 MHz, $CD_2Cl_2$): δ -63.7 (s). $^{31}$P NMR (162 MHz, $CD_2Cl_2$): δ 28.7 (s). Anal. Calcd for $C_{58}H_{36}Au_2Cl_2F_{24}P_4$: C, 39.19; H, 2.04. Found: C, 39.21; H, 2.05.

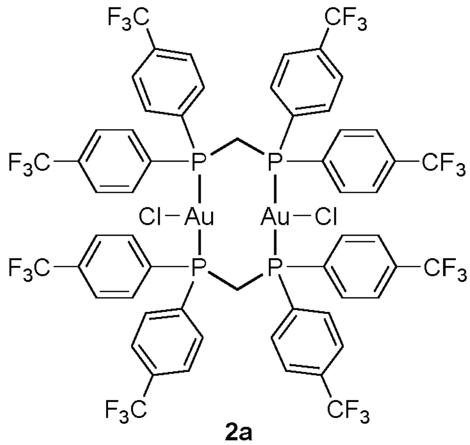

**2a**

*Synthesis of gold complex* ***2b***

(THT)AuCl (64.1 mg, 0.2 mmol) was added to a solution of bis(bis(4-(trifluoromethyl)phenyl)phosphanyl) methane **(2)** (131.3 mg, 0.2 mmol) in $CH_2Cl_2$ (10 mL) and stirred at room temperature for 12 h under nitrogen atmosphere. After removal of solvent in vacuo, $LiClO_4$ (106.4 mg, 1 mmol) was added to the mixture in MeOH (20 mL) and stirred at room temperature for 1 h. After removal of solvent in vacuo, the product was recrystallized from $CH_2Cl_2$ to give white solid of **2b** (162 mg, 85%). $^1$H NMR (400 MHz, d$^6$-DMSO): δ 8.12 (br, 16 H, Ar), 7.89 (d, $J$ = 6.8 Hz, 16 H, Ar), 5.24 (s, 4 H, PC$H_2$P). $^{13}$C NMR (101 MHz, d$^6$-DMSO): δ 135.3 (s, Ar), 133.2 (q, $J_{C-F}$ = 32.7 Hz, Ar), 132.3 (m, Ar), 123.8 (q, $J_{C-F}$ = 273.0 Hz, $CF_3$), 25.8 (m, $PCH_2P$). $^{31}$P NMR (162 MHz, d$^6$-DMSO): δ 35.6 (s). $^{19}$F NMR (376 MHz, d$^6$-DMSO): δ -62.0 (s). Anal. Calcd for $C_{58}H_{36}Au_2Cl_2F_{24}O_8P_4$: C, 36.58; H, 1.90. Found: C, 36.55; H, 1.92.

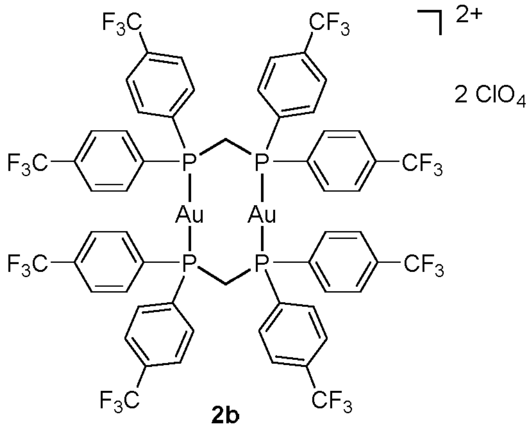

**2b**

*Synthesis of gold complex* ***3a***

(THT)AuCl (64.1 mg, 0.2 mmol) was added to a solution of bis(bis(4-methoxyphenyl)phosphanyl)methane (**3**) (100.8 mg, 0.2 mmol) in $CH_2Cl_2$ (10 mL) and stirred at room temperature for 12 h under nitrogen atmosphere. After removal of solvent in vacuo, the product was recrystallized from $CH_2Cl_2$/MeOH to give white solid of **3a** (118 mg, 80%). $^1$H NMR (400 MHz, $CD_2Cl_2$): δ 7.76 - 7.79 (m, 16 H, Ar), 6.87 (d, $J$ = 8.5 Hz, 16 H, Ar), 4.42 - 4.56 (m, 4 H, PC$H_2$P), 3.81 (s, 24 H, O*Me*). $^{13}$C NMR (101 MHz, $CD_2Cl_2$): δ 163.80 (s, Ar), 136.8 (m, Ar), 120.5 (m, Ar), 116.1 (m, Ar), 56.80 (s, *OMe),* 32.4 (t, $J$ = 15.2 Hz, $PCH_2P$). $^{31}$P NMR (162 MHz, $CD_2Cl_2$): δ 30.7 (s). Anal. Calcd for $C_{58}H_{60}Au_2Cl_2O_8P_4$: C, 47.27; H, 4.10. Found: C, 47.25; H, 4.12.

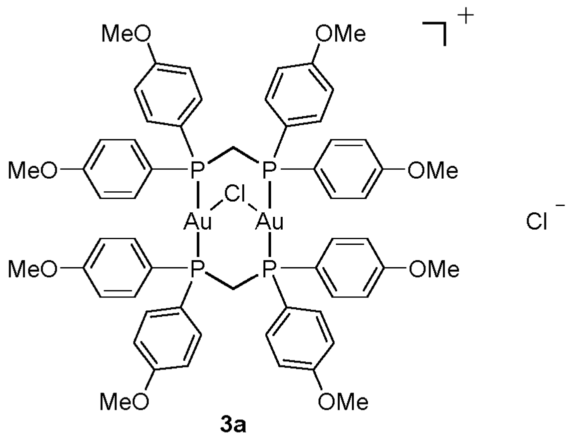

**3a**

*Synthesis of gold complex* ***3b***

(THT)AuCl (64.1 mg, 0.2 mmol) was added to a solution of bis(bis(4-methoxyphenyl)phosphanyl)methane (**3**) (100.8 mg, 0.2 mmol) in $CH_2Cl_2$ (10 mL) and stirred at room temperature for 12 h under nitrogen atmosphere. After removal of solvent in vacuo, $LiClO_4$ (106.4 mg, 1 mmol) was added to the mixture in MeOH (20 mL) and stirred at room temperature for 1 h. After removal of solvent in vacuo, the product was recrystallized from $CH_2Cl_2$/MeOH to give white solid of **3b** (141 mg, 88%). $^1H$ NMR (400 MHz, $CD_2Cl_2$): δ 7.56 - 7.60 (m, 16 H, Ar), 6.93 (d, $J$ = 8.5 Hz, 16 H, Ar), 4.10 - 4.15 (m, 4 H, $PCH_2P$), 3.83 (s, 24 H, O*Me*). $^{13}C$ NMR (101 MHz, $CD_2Cl_2$): δ 162.9 (s, Ar), 135.3 (m, Ar), 117.6 (m, Ar), 115.4 (m, Ar), 55.6 (s, *OMe),* 29.7 (t, $J$ = 14.1 Hz, $PCH_2P$). $^{31}P$ NMR (162 MHz, $CD_2Cl_2$): δ 33.1 (s). Anal. Calcd for $C_{58}H_{60}Au_2Cl_2O_{16}P_4$: C, 43.49; H, 3.78. Found: C, 43.52; H, 3.79.

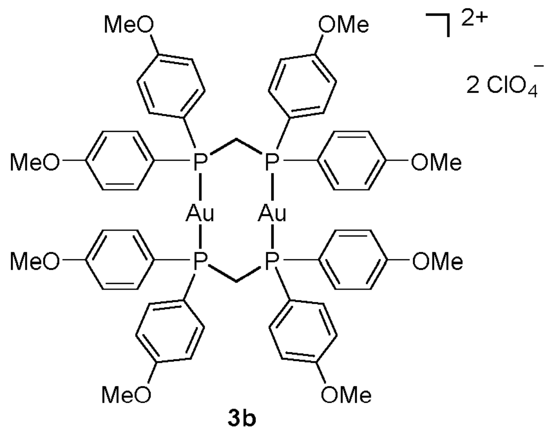

**3b**

*Synthesis of gold complex* ***4a***

(THT)AuCl (64.1 mg, 0.2 mmol) was added to a solution of bis(bis(4-morpholinophenyl)phosphanyl)methane (**4**) (145.0 mg, 0.2 mmol) in $CH_2Cl_2$ (10 mL) and stirred at room temperature for 12 h under nitrogen atmosphere. After removal of solvent in vacuo, $LiClO_4$ (106.4 mg, 1 mmol) was added to the mixture in MeOH (20 mL) and stirred at room temperature for 1 h. After removal of solvent in vacuo, the product was recrystallized from $CH_2Cl_2$/MeOH to give light yellow solid of **4a** (169 mg, 83%). $^1H$ NMR (400 MHz, $CD_2Cl_2$): δ 7.51 (s, 16 H, Ar), 6.90 (d, $J$ = 7.4 Hz, 16 H, Ar), 4.03 (s, 4 H, $PCH_2P$), 3.84 (s, 32 H, $NCH_2CH_2O$), 3.24 (s, 32 H, $NCH_2CH_2O$). $^{31}P$ NMR (162 MHz, $CD_2Cl_2$): δ 31.4 (s). $^{13}C$ NMR not recorded due to low solubility. Anal. Calcd for $C_{82}H_{100}Au_2Cl_2N_8O_{16}P_4$: C, 48.22; H, 4.94; N, 5.49. Found: C, 48.20; H, 4.96; N, 5.48.

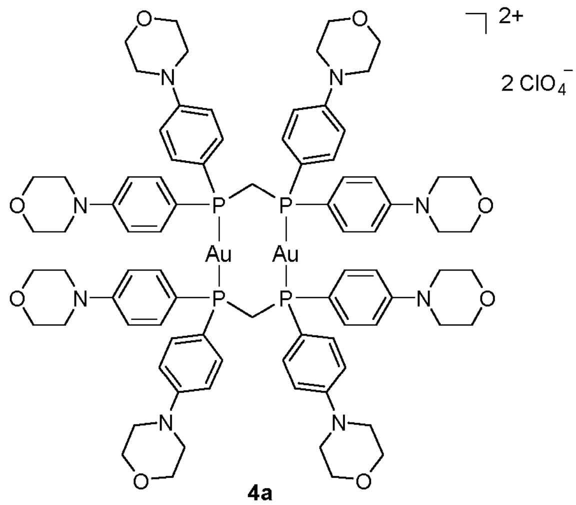

**4a**

*Synthesis of gold complex* ***5a***

(THT)AuCl (64.1 mg, 0.2 mmol) was added to a solution of ligand **5** (288.4 mg, 0.2 mmol) in $CH_2Cl_2$ (10 mL) and stirred at room temperature for 12 h under nitrogen atmosphere. After removal of solvent in vacuo, $LiClO_4$ (106.4 mg, 1 mmol) was added to the mixture in MeOH (20 mL) and stirred at room temperature for 1 h. After removal of solvent in vacuo, the product was recrystallized from $CH_2Cl_2$/MeOH to give white solid of **5a** (229.5 mg, 66%). $^1H$ NMR (400 MHz, $CD_2Cl_2$): $\delta$ 7.96 (br, 16 H, Ar), 7.77 (br, 8 H, Ar), 7.30 (d, $J$ = 8.3 Hz, 32 H, Ar), 7.21 (d, $J$ = 8.3 Hz, 32 H, Ar), 4.63 - 4.91 (m, 4 H, P$CH_2$P), 1.18 (s, 144 H, C*Me*$_3$). $^{13}C$ NMR (101 MHz, $CD_2Cl_2$): $\delta$ 152.9 (s, Ar), 144.5 (m, Ar), 137.1 (s, Ar), 131.8 (s, Ar), 131.4 (m, Ar), 129.9 (m, Ar), 128.0 (s, Ar), 127.3 (s, Ar), 35.7 (s, C*Me*$_3$), 32.2 (s, C*Me*$_3$), 29.6 (t, $J_{C-P}$ = 13.4 Hz, P$CH_2$P). $^{31}P$ NMR (162 MHz, $CD_2Cl_2$): $\delta$ 39.9 (s). Anal. Calcd for $C_{210}H_{236}Au_2Cl_2O_8P_4$: C, 72.54; H, 6.84. Found: C, 72.48; H, 6.81.

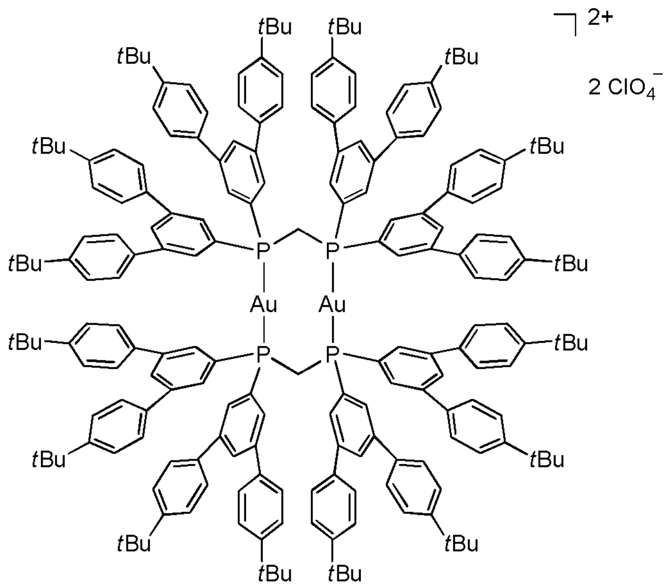

**5a**

*Photophysical Measurement*

UV-vis absorption spectrum was recorded on a Hewlett-Packard 8453 diode array spectrophotometer. Steady-state emission spectra were obtained on a Horiba Fluorolog-3 spectrophotometer. Nanosecond time-resolved absorption difference spectra (ns-TA) were acquired with LP920-KS Laser Flash Photolysis spectrophotometer (Edinburgh Instrument Ltd.) equipped with a Q-switched Nd:YAG laser at room temperature. The emission lifetime measurements were performed on a Quanta Ray GCR 150-10 pulsed Nd:YAG laser system. Errors for $\lambda$ values ($\pm$1 nm), $\tau$ ($\pm$10 %), and $\Phi$ ($\pm$ 10 %) were estimated. All solutions for photophysical measurements at room temperature were degassed by using a high-vacuum line in a two-compartment cell with five freeze-pump-thaw cycles. Emission quantum yields of solutions were measured using a solution of $[Ru(bpy)_3](PF_6)_2$ in $CH_3CN$ ($\Phi$ = 0.062) as the standard. Errors for (10%) are estimated.

The instrumental set-ups for femtosecond transient absorption (fs-TA) and the related spectral calibrations have been described previously (Kwok, et al., J. Am. Chem. Soc. 2006, 128, 11894-11905; Kwok, et al., J. Am. Chem. Soc. 2008, 130, 5131-5139; Chan, et al., Phys. Chem. Chem. Phys. 2011, 13, 16306-16313; Lu, et al., J. Am. Chem. Soc. 2011, 133, 14120-14135). Briefly, all these measurements were performed based on a commercial Ti: Sapphire regenerative amplifier laser system (800 nm, 40 fs, 1 kHz, and 3.5 mJ/pulse). In the fs-TA, the samples were probed by a white light continuum pulse created from a rotating $CaF_2$ plate pumped by the 800 nm laser. For fs-TA, the temporal delay of probe to pump pulse was varied by a computer controlled optical delay line. The fs-TA, signals were collected by a monochromator and detected with a liquid nitrogen cooled CCD detector. The instrument response function (IRF) for the fs-TA is ~100-200 fs varying slightly with the spectral wavelength. To eliminate the effect of rotational diffusion, the polarization direction of the pump laser was set at the magic angle in relative to that of probe for all the measurements. The measurements were done at room temperature and atmospheric pressure.

*Electrochemical Measurement*

Cyclic voltammetric measurements were performed with Princeton Applied Research electrochemical analyzers (PARSTATMC multichannel potentiostat for gold(I) complexes and potentiostat/galvanostat Model 273A for organic substrates). $^{n}Bu_4NPF_6$ (0.1 M) in DMF was used as a supporting electrolyte for the electrochemical measurements at room temperature. DMF used in electrochemical measurements was deaerated with argon gas. Saturated calomel electrode (SCE) was used as reference electrode for gold(I) complexes. A glassy carbon electrode and a platinum wire were used as working electrode and counter electrode, respectively.

*X-ray Structural Determination*

The X-ray date was collected on a Rigaku Saturn CCD diffractometer using graphite-monochromated Mo $K\alpha$ radiation ($\lambda$ = 0.71073 Å) and Cu $K\alpha$ radiation ($\lambda$ = 0.15417 Å). The structure was solved by direct methods (SHELXS-97) (Sheldrick, SHELXS-90/96, Program for Structure Solution, Acta Crystallogr. Sect A 1990, *46*, 467) and refined by full-matrix least squares on $F^2$. All non-hydrogen atoms were refined anisotropically and hydrogen atoms by a riding model (SHELXL-97) (Sheldrick, SHELXL 97, Program for Crystal structure Refinement, University of Goettingen:Geottingen, Germany, 1997). The crystal data and structural refinements details are listed in **Table 1a.** CCDC 1877689 (**2a**), CCDC 1877702 (**3a**) and CCDC 1906508 (**4a**) contain the supplementary crystallographic data for this paper. This data can be obtained free of charge from The Cambridge Crystallographic Data Centre via web site ccdc.cam.ac.uk/data_request/cif.

*Computational Details*

DFT/TDDFT calculations were performed using the Gaussian16 program package (Frisch, et al., *Inc.: Wallingford CT* 2010). The real vibrational frequencies of these optimized structures were computed to confirm that all the optimized structures are potential energy minima. Hybrid functional PBE0 with dispersion corrections in revision three (D3BJ) was employed (Adamo and Barone, J. Chem. Phys. 1999, 110, 6158-6170; Grimme, et al., J. Chem. Phys. 2010, 132, 154104). The LANL2DZ basis set and corresponding effective core potentials (ECPs) proposed by Hay and Wadt were employed for the valence atomic orbitals of Au (Wadt and Hay, J. Chem. Phys. 1985, 82, 284-298; Hay and Wadt, J. Chem. Phys. 1985, 82, 299-310). The 6-31G* basis set was used for other atoms (Frisch, et al., J. Chem. Phys. 1984, 80, 3265-3269; Radom, et al., J. Am. Chem. Soc. 1973, 95, 6531-6544). Solvent effects were taken into account using the polarizable continuum model (PCM) with $CH_3CN$ as solvent (Cossi, et al., J. Chem. Phys. 2002, 117, 43-54). Half-Width at Half-Maximum for the convolution of the absorption spectrum using a Gaussian distribution was set as 3000 $cm^{-1}$. The orbital composition analysis was based on the natural atomic orbitals (NAOs) by the software of Multiwfn 3.8 (Lu and Chen, J. Comput. Chem. 2012, 33, 580-592).

The calculations of SO electronic transitions were performed by the TDDFT methods in the ADF2019 package (Te Velde, et al., J. Comput. Chem. 2001, 22, 931-967; Guerra, et al., Theor. Chem. Acc. 1998, 99, 391-403) at the level of ZORA (Zeroth Order Regular Approximation) (van Lenthe, et al., J. Chem. Phys. 1999, 110, 8943-8953; van Lenthe, et al., J. Chem. Phys. 1993, 99, 4597-4610; van Lenthe, et al., J. Chem. Phys. 1994, 101, 9783-9792)-PBE0/TZP for Pt and DZP for other atoms (Adamo and Barone, J. Chem. Phys. 1999, 110, 6158-6170; Van Lenthe and Baerends, J. Comput. Chem. 2003, 24, 1142-1156) at the optimized $T_1$ structure. Representations of molecular orbitals were drawn by ADF view. In a medium, the $k_r$ should be corrected for the refractive index according to the Strickler-Berg relationship (Nozaki, J. Chin. Chem. Soc. 2006, 53, 101-112; Strickler and Berg, J. Chem. Phys. 1962, 37, 814-822). Therefore, the calculated radiative rate $k_r$ was multiplied by the square of the refractive index of acetonitrile (n = 1.344). The calculated total radiative lifetime is an average over the three substates under the assumption of fast thermalization (Mori, et al., PCCP 2014, 16,

14523-14530):

$$\tau_{av} = \frac{1}{k_{av}} = \frac{3}{k_I + k_{II} + k_{III}}$$

### *Results*

*Structural Analysis*

Ligands **2-4** are designed to examine the electronic effect of diphosphine ligands on the triplet excited states of $[Au_2(diphosphine)_2]^{2+}$ while ligand **5** is designed to create a hydrophobic environment that may facilitate the binding of substrate in the inner coordination sphere. Reaction of ligands **2** and **3** with [Au(tht)Cl] (tht = tetrahydrothiophene) produces complexes **2a** and **3a,** isolated as chloride salts in 71% and 80% yields, respectively. Complexes **2b, 3b, 4a,** and **5a** have been obtained in 66-88% yields by metathesis reaction with $LiClO_4$ in MeOH. These complexes have been characterized by NMR spectroscopy and elemental analysis. Diffraction-quality crystals of **2a, 3a, 4a,** and **5a** have been obtained by slow evaporation of $Et_2O/CH_2Cl_2$ solutions at room temperature (**Figures 1A-1D**). The intramolecular Au-Au distances are 3.0112(10), 2.9567(7), 2.9805(5) and 2.9190(8) Å for **2a, 3a, 4a** and **5a** respectively, which are in the range conceived to have weak Au-Au interactions with that of **5a** being the shortest among the series. The chloride ion in **2a** and **3a** interacts weakly with Au(I), as revealed by the long Au-Cl distances (**2a**: 2.726(3) Å, **3a:** 3.047(3) and 2.848(2) Å). The Au-P distances are in the range of 2.283(3) to 2.3798(8) Å being comparable to those found in other gold(I) phosphine complexes.

*Photophysical Properties*

Perchlorate has been used as counter-anion in the photophysical measurements of these gold(I) complexes in order to minimize Au(I)-anion binding interactions in the ground state and excited state. In $CH_3CN$, **1b, 2b** and **3b** exhibit strong absorptions at 270-320 nm (**Table 1b, Figures 2A** and **2B**) with $\varepsilon$ on the order of $10^4$ $M^{-1}cm^{-1}$, which are assigned to the singlet [$5d\sigma^*\rightarrow 6p\sigma$] and intraligand transitions. Upon photo-excitation, **2b** and **3b** display structureless emission band with peak maxima ($\lambda_{max}$) at 611 nm and 569 nm respectively, with emission quantum yields ($\Phi$) and lifetimes ($\tau$) ranging 0.11-0.15 and 23.8-28.1 $\mu$s, respectively. Complex **4a** exhibits distinct, intense absorption band at 250-360 nm ($\varepsilon$ = 2.0-15.6$\times 10^4$ $M^{-1}$ $cm^{-1}$) tailing to ~420 nm ($\varepsilon$ at 400 nm = 1.5$\times 10^3$ $M^{-1}$ $cm^{-1}$), which is ascribed to arise predominantly from spin-allowed ligand-to-metal-metal charge transfer (LMMCT) transition. It displays a structureless emission band with $\lambda_{max}$ at 568 nm, $\Phi$ of 0.59 and $\tau$ of 2.0 $\mu$s. Complex **4a** shows strong absorption extending to ~420 nm ($\varepsilon$ at 400 nm = 1.5$\times 10^3$ $M^{-1}$ $cm^{-1}$), which is red-shifted by 50 nm compared to the prototypical $[Au_2(\mu\text{-dppm})_2]^{2+}$. The radiative decay rate constant, $k_r$, of complex **4a** in degassed $CH_3CN$ is estimated to be 2.95$\times 10^5$ $s^{-1}$, which is the highest value among binuclear gold(I) complexes. The calculated $k_r$ and zfs of the spin-orbit electronic $T_1\rightarrow S_0$ transition of **4a** at the optimized $T_1$ structure by the SO-TDDFT method in $CH_3CN$ solution are shown in **Table 1c.** Complex **5a** which has 24 phenyl groups exhibits a very intense absorption with $\lambda_{max}$ at 261 nm ($\varepsilon$ = 219000 $M^{-1}$ $cm^{-1}$), which is attributed to an admixture of spin-allowed ligand-centred and [$5d\sigma^*\rightarrow 6p\sigma$] transitions. Upon light-excitation, **5a** displays a broad, structureless emission band with $\lambda_{max}$ at 583 nm, $\Phi$ of 0.27 and $\tau$ of 5.8 $\mu$s.

**Table 1a.** Crystal data and summary of X-ray data collection for gold complexes **2a-4a.**

| | 2a | 3a | 4a |
|---|---|---|---|
| formula | $C_{58}H_{36}Au_2Cl_2F_{24}P_4$ | $C_{60}H_{64}Au_2Cl_6O_8P_4$ | $C_{84}H_{100}Au_2Cl_2N_8O_{16}P_4$ |
| fw | 1777.58 | 1643.62 | 2042.41 |
| *T* (K) | 100 | 100 | 100 |
| space group | P-1 | P 21/n | P 21/n |
| crystal system | Triclinic | monoclinic | monoclinic |
| *a* (Å) | 13.471(2) | 13.165(2) | 16.639(8) |
| *b* (Å) | 16.473(3) | 22.249(3) | 14.979(7) |
| *c* (Å) | 17.531(3) | 22.010(3) | 23.555(10) |
| $\alpha$ (deg.) | 101.501(3) | 90 | 90 |
| $\beta$ (deg.) | 106.817(3) | 105.298(3) | 96.621(10) |
| $\gamma$ (deg.) | 105.744(3) | 90 | 90 |
| *V* ($Å^3$) | 3417.1(11) | 6218.6(17) | 5831(5) |

(continued)

| | **2a** | **3a** | **4a** |
|---|---|---|---|
| *Z* | 2 | 4 | 2 |
| $d_{calcd.}$ (g/cm$^3$) | 1.728 | 1.756 | 1.248 |
| *F*(000) | 1704.0 | 3232.0 | 2056.0 |
| *GOF* | 0.955 | 1.015 | 1.027 |
| $R_1$ ($I > 2\sigma(I)$) | 0.0642 | 0.0505 | 0.1028 |
| $wR_2$ (all data) | 0.1870 | 0.1224 | 0.3304 |

**Table 1b.** Photophysical and electrochemical data of **1b-3b, 4a,** and **5a,** and their estimated excited state redox potentials.

| Complex | Absorption[a] $\lambda_{max}$ / nm ($\varepsilon$ / $10^4$ $M^{-1}cm^{-1}$) | Emission[a,b] $\lambda_{max}$ / nm ($\tau$ /$\mu$s); $\Phi$; $k_r$ / $10^3$ $s^{-1}$ | $E_{pc}$; $E_{pa}$ [c] / V vs SCE | $E_{0-0}$[d] / eV | E($M^+$/$M^*$); E($M^*$/$M^-$)[e] / V vs SCE |
|---|---|---|---|---|---|
| **1b** | 268 (1.93), 294 (2.79), 350 (0.05, tail) | 579 (32.3); 0.26; 8.0 | -1.46; N.A. | 2.78 | -1.6[5]; 1.43 |
| **2b** | 269 (2.2), 279 (1.93), 295 (1.92), 340 (0.16, tail) | 611 (28.1); 0.15; 5.3 | -1.21; N.A. | 2.69 | -1.65; ND |
| **3b** | 255 (8.75, sh), 277 (4.27, sh), 306 (2.49, sh), 350 (0.15, tail) | 569 (23.8); 0.11; 4.6 | -1.52; N.A. | 2.81 | ND |
| **4a** | 284 (15.6), 350 (3.2, sh), 400 (0.15, tail) | 568 (2.0); 0.59; 295 | -1.63; 1.42 | 2.82 | -1.81; 1.57 |
| **5a** | 261 (21.9), 340 (0.4, tail) | 583 (5.8); 0.27; 46.6 | -1.38; N.A. | 2.76 | ND |

[a] In $CH_3CN$ (**1b-3b**: concentration ~$2\times10^{-5}$ M, **4a:** concentration ~$1\times10^{-5}$ M, **5a:** concentration ~$5\times10^{-6}$ M), "sh" stands for shoulder. [b] $\lambda_{ex}$=320 nm, except for **4a** using 380 nm. [c] Peak values of irreversible redox waves in cyclic voltammograms of **1b-3b, 4a** and **5a** in DMF with 0.1M $^nBu_4NPF_6$. $Fc^{+/0}$ occurs at 0.46-0.48 V vs SCE. [d] $E_{0-0}$ values are estimated from their emission onset at room temperature. [e] E($M^+$/$M^*$) and E($M^*$/$M^-$) are estimated by the plot of ln($k_q$') versus E(Q) (M and M* stands for the Au(I) complex at ground state and triplet excited state, respectively. $k_q$' is the diffusion-corrected bimolecular quenching rate constants estimated by $(k_q')^{-1}=k_q^{-1}-k_D^{-1}$ while taking $k_D=1.0\times10^{10}$ $M^{-1}s^{-1}$, *E(Q)* for the redox potential of the quenchers). [g] ND stands for "not determined."

**Table** 1c. Calculated $k_r$ and zfs of the spin-orbit electronic $T_1\rightarrow S_0$ transition of **4a** at the optimized $T_1$ structure by the SO-TDDFT method in $CH_3CN$ solution. $T_I$, $T_{II}$ and $T_{III}$ represent three sublevels of the $T_1$ state.

| | E/eV | $k_r$/$1\times10^4$ $s^{-1}$ | Total $k_r$/$1\times10^4$ $s^{-1}$ | Exp. $k_r$/$1\times10^5$ $s^{-1}$ | zfs/$cm^{-1}$ |
|---|---|---|---|---|---|
| $T_I$ | 2.82605 | 8.31 | 9.48 | 2.95 | 4.92 |
| $T_{II}$ | 2.82651 | 0.79 | | | |
| $T_{III}$ | 2.82666 | 19.35 | | | |

In the solid state at 77 K, complexes **1b-3b** display a structureless emission band with $\lambda_{max}$ at 382-449 nm and lifetime ranging 1.3-3.8 $\mu$s (**Figures 2C-2G** and **Table 1d**). An additional broad emission band centred at 617 nm with lifetime of 31.1 $\mu$s has been observed for **2b.** For **4a,** the broad, structureless emission profile is maintained in the solid state at 77 K and blue-shifted to 510 nm with lifetime of 22.7 $\mu$s. In glassy media (DMF:EtOH:MeOH= 1:1:4(V/V/V)) at 77 K, **1b-3b** and **4a** display high-energy emission (~430-460 nm) with lifetime of 6.3-11.9 $\mu$s for **1b-3b** and 44.7 $\mu$s for **4a** (**Figures 2C-2G** and **Table 1d**). The high-energy emissions of **1b-3b** at 77 K are assigned as emission from $^3[5d\sigma^*\rightarrow6p\sigma]$ excited state. The broad and structureless emission in $CH_3CN$ of **1b-3b** at room temperature is assigned as complex-anion exciplex instead of complex-solvent exciplex as the emission $\lambda_{max}$ of $[Au_2(\mu\text{-dppm})_2(CF_3SO_3)_2]$ remains almost the same in different solvents ($\lambda_{max}$ = 570 nm in $CH_3CN$, $CH_3OH$, $CH_2Cl_2$). Their emission is unlikely to originate from $^3[5d\sigma^*\rightarrow6p\sigma]$ excited state as this excited state should be high in energy (<450 nm). The marked difference in emission behavoir of these complexes in solution and that at 77 K is due to the high reactivitiy of $^3[5d\sigma^*\rightarrow6p\sigma]$ excited states to form exciplex with surrounding solvent molecules or anions at room temperature which is hampered at 77 K. DFT calculations reveal that the emission of **4a** arises from $^3$LMMCT excited state (vide infra).

**Table 1d.** The emission data of **1b-3b, 4a,** and **5a** in the solid state and glassy media [DMF:EtOH:MeOH = 1:1:4(V/V/V)] at 77 K.

| Complex | Emission | |
|---|---|---|
| | Solid state at 77K $\lambda_{em}$ [nm] ($\tau$ [us]) | Glassy state at 77K $\lambda_{em}$ [nm] ($\tau$ [$\mu$s]) |
| **1b** | 382 (1.3) | 440 (7.3) |
| **2b** | 449 (3.8), 617 (31.1) | 460 (11.9) |
| **3b** | 390 (2.4) | 430 (6.3) |
| **4a** | 510 (22.7) | 442 (44.7) |
| **5a** | 460 (268.2), 496 (223.3), 521 (175.2) | 446 (3.0), 477 (7.9), 506 (8.1) |

The excited state dynamic of **4a** has been probed by ultrafast time-resolved absorption difference spectroscopy. Nanosecond time-resolved absorption difference (ns-ta) spectrum of **4a** shows absorption with $\lambda_{max}$ at 388 and 520 nm as well as a broad absorption band at 650-800 nm (**Figure 3A**). The decay lifetime of the absorption difference profile is 1.6 $\mu$s, comparable to the emission lifetime of **4a** in $CH_3CN$. The femtosecond time-resolved absorption difference (fs-ta) spectra of **4a** obtained immediately after laser pulse excitation at 266 nm have revealed an absorption difference $\lambda_{max}$ at ~390 nm and a broad band from 450-550 nm (**Figure 3B**), which evolves with a time constant of 1.2 ps into another profile resembling **4a**'s ns-ta profile, showing efficient intersystem crossing for **4a.**

*Electrochemical and Excited State Redox Properties*

Electrochemical studies by cyclic voltammetry have revealed that **1b** shows an irreversible reduction wave at -1.46 V vs SCE. Modification of dppm has resulted in significant changes of reduction potentials; an anodic shift of $E_{pc}$ is observed for **2b** (-1.21 V vs SCE) having $CF_3$ groups while cathodic shift is found for **3b** (-1.52 V vs SCE) and **4a** (-1.63 V vs SCE) having electron-donating groups. Oxidation is not observed for **1b-3b** even up to 1.4 V vs SCE, but an irreversible oxidation wave is observed for **4a** with $E_{pa}$ at 1.42 V vs SCE, which can be assigned as the oxidation of morpholine. Complex **5a** shows an irreversible reduction wave with $E_{pc}$ at -1.38 V vs SCE and no oxidation signal.

To estimate the excited state potential of these complexes, diffusion-corrected bimolecular quenching rate constants ($k_q$') for selected quenchers have been obtained and tabulated in **Table 2.** Complex **4a** displays large $k_q$' (from $3.6\times10^8$ to $1.5\times10^9$ $M^{-1}s^{-1}$) being 1-2 orders of magnitude larger than that of **1b** and 2-3 orders of magnitude larger than that of **2b** toward a series of pyridinium salts with reduction potentials from -1.52 to -1.14 V vs SCE (**Table 2**). However, **4a** shows a relatively small $k_q$' ($10^5$-$10^7$ $M^{-1}s^{-1}$) toward neutral organic quenchers with reduction potentials ranging from -2.31 to -1.81 V vs SCE. From the plot of ln($k_q$') vs $E$(Q), the potential [E(4**a+/4a***)] is estimated as -1.81 V vs SCE and [E(**4a*/4a-**)] is estimated as 1.57 V vs SCE by using methoxybenzenes/amines as quenchers showing that **4a** is a stronger photo-reductant than **1b** ([E(**1b+/1b***)] = -1.6 V vs SCE). Generally, if the potential E($M^+$/M*) is more negative than -1.5 V vs SCE, M is considered a strong photo-reductant.

**Table 2.** Rate constants for the quenching of the emission of complexes **1b, 2b** and **4a** by various organic substrates in degassed acetonitrile at room temperature.

| | | 1b | 2b | 4a |
|---|---|---|---|---|
| **Quenchers** | **$E_{red}$ vs SCE[a]** | **Quenching rate constants $k_q$/ $M^{-1}$ $s^{-1}$ [b] (diffusion-corrected quenching rate constants $k'_q$ / $M^{-1}$ $s^{-1}$ [c])** | | |
| 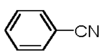 | -2.31[d] | | | $1.3\times10^6$ ($1.3\times10^6$) |
| 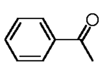 | -2.14[d] | | | $8.0\times10^5$ ($8.0\times10^5$) |
| 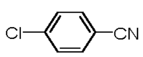 | -2.03[d] | | | $8.7\times10^7$ ($8.7\times10^7$) |
| 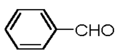 | -1.81[d] | | | $2.1\times10^7$ ($2.1\times10^7$) |
| 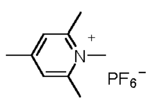 | -1.68[d] | | | $3.7\times10^7$ ($3.7\times10^7$) |

(continued)

| | | 1b | 2b | 4a |
|---|---|---|---|---|
| **Quenchers** | **$E_{red}$ vs SCE[a]** | **Quenching rate constants $k_q$/ $M^{-1}$ $s^{-1}$ [b] (diffusion-corrected quenching rate constants $k'_q$ / $M^{-1}$ $s^{-1}$ [c])** | | |
| 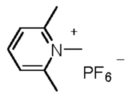 | -1.52[e] | $4.9\times10^6$ ($4.9\times10^6$)[e] | $2.5\times10^6$ ($2.5\times10^6$) | $3.5\times10^8$ ($3.6\times10^8$) |
| 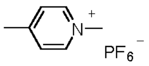 | -1.49[e] | $9.6\times10^6$ ($9.6\times10^6$)[e] | $5.5\times10^5$ ($5.5\times10^5$) | $7.1\times10^8$ ($7.7\times10^8$) |
| 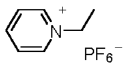 | -1.36[e] | $1.4\times10^8$ ($1.4\times10^8$)[e] | $2.3\times10^6$ ($2.3\times10^6$) | $1.3\times10^9$ ($1.5\times10^9$) |
| 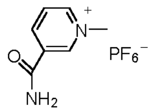 | -1.14[e] | $9.5\times10^8$ ($1.0\times10^9$)[e] | $8.1\times10^7$ ($8.2\times10^7$) | $1.8\times10^9$ ($2.2\times10^9$) |
| 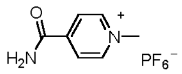 | -0.93[e] | $2.9\times10^9$ ($4.1\times10^9$)[e] | $8.1\times10^8$ ($8.8\times10^8$) | $8.3\times10^8$ ($9.0\times10^8$) |
| 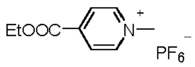 | -0.78[e] | $4.5\times10^9$ ($8.2\times10^9$)[e] | $9.4\times10^8$ ($1.0\times10^9$) | $1.6\times10^9$ ($1.9\times10^9$) |
| 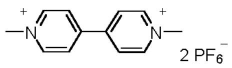 | -0.45[e] | $6.1\times10^9$ ($1.6\times10^{10}$)[e] | $9.0\times10^8$ ($9.9\times10^8$) | $2.6\times10^9$ ($3.6\times10^9$) |
| Chlorobenzene | -2.77[f] | | | $1.83\times10^7$ ($1.83\times10^7$) |
| 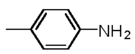 | 0.78[g] | $3.1\times10^9$ ($4.5\times10^9$) | | $5.4\times10^9$ ($1.2\times10^{10}$) |
| *i*$Pr_2NEt$ | 0.36[h] | $2.7\times10^9$ ($3.7\times10^9$) | | $8.5\times10^8$ ($9.4\times10^8$) |
| 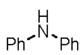 | 0.8[i] | $2.5\times10^9$ ($3.5\times10^9$) | | $3.1\times10^9$ ($4.5\times10^9$) |
| 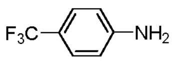 | 1.31[j] | | | $3.3\times10^7$ ($3.3\times10^7$) |
| 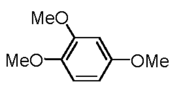 | 1.12[g] | $5.5\times10^6$ ($5.5\times10^6$) | | $1.7\times10^8$ ($1.7\times10^8$) |
| 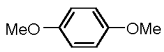 | 1.3[g] | $6.5\times10^5$ ($6.5\times10^5$) | | $2.4\times10^6$ ($2.4\times10^6$) |
| 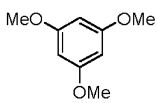 | 1.43[k] | | | $1.5\times10^7$ ($1.5\times10^7$) |
| 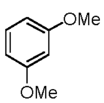 | 1.49[k] | $1.3\times10^5$ ($1.3\times10^5$) | | $3.0\times10^6$ ($3.0\times10^6$) |

(continued)

| | | 1b | 2b | 4a |
|---|---|---|---|---|
| **Quenchers** | **$E_{red}$ vs SCE[a]** | **Quenching rate constants $k_q$/ $M^{-1}$ $s^{-1}$ [b] (diffusion-corrected quenching rate constants $k'_q$ / $M^{-1}$ $s^{-1}$ [c])** | | |
| 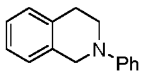 | 0.58[l] | | | $3.43\times10^9$ ($5.21\times10^9$) |

[a] $E_{red}$ refers to the potential for the redox reaction Q + $e^-$ → $Q^-$, where Q represents the quencher; $E_{ox}$ refers to the potential for the redox reaction $Q^+$ + $e^-$ → Q. [b] The values are obtained from Stern-Volmer plot: $\tau_0/\tau = 1 + k_q[\tau_0][Q]$. [c] The diffusion-corrected quenching rate constants are derived from $k'_q = 1.0\times10^{10}\cdot k_q/(1.0\times10^{10}-k_q)$.
[d] Che, et al., J. Chem. Soc. Dalton Trans. 1990, 3215-3219. [e] Li, et al., Angew. Chem. Int. Ed. 2018, 57, 14129-14133. [f] Hoshi, et al., Electrochemistry 2004, 72, 852-854. [g] Broglia, et al., J. Photoch. Photobio. A. 2005, 170, 261-265. [h] Yang, et al., Chem. Sci. 2016, 7, 3123-3136. [i] Guilbault, et al., Anal. Chem. 1963, 35, 582-586. [j] Liddle and Gardinier, J. Org. Chem. 2007, 72, 9794-9797. [k] Ohkubo, et al., Chem. Sci. 2011, 2, 715-722. [1] Chow, et al., Chem. Asian J. 2014, 9, 534-545.

*DFT and TDDFT calculations*

DFT/TDDFT calculations have been performed on **1b** and **4a** to investigate the nature of their excited states. The optimized structure of **4a** is consistent with the X-ray crystal structures, with the calculated Au-Au distance being 3.025 Å. The resolved Au-Au distance of **4a** is 2.9805(5) in the crystal structure.

TDDFT calculations have been performed on the optimized **1b** and **4a** structures to reveal the nature of the lowest-energy absorption band of these dinuclear Au complexes. As shown in **Figure 4A,** the calculated lowest-energy absorption band of **1a** and **4a** locates at 284 nm and 347 nm respectively, which is consistent with the experimental observations ($\lambda_{expt}$ = 294 nm, 350 nm for **1b** and **4a** respectively). The $S_1$ (284 nm) state of **1b** is from the HOMO→LUMO transition, where the HOMO is composed by the 5d-6s hybridized σ*(Au-Au) antibonding orbital and LUMO is mainly composed by the 6pσ(Au-Au) bonding orbital (**Figure 4B**). Therefore, $^1$MC (metal-centered) transition is assigned to the $S_1$ state of **1b.** The $S_1$ transition of **4a** is assigned to be from the π orbital (HOMO) of the morpholine substituents to the 6pσ (Au-Au) bonding orbital. Therefore, the intense lowest-energy absorption in **4a** is attributed to be from the $^1$LMMCT (ligand-to-metal-metal charge transfer) transition.

Unrestricted DFT calculations have been performed on the $T_1$ state of **1b** and **4a,** showing a Au-Au distance contraction from 3.076 Å at $S_0$ state to 2.681 Å at $T_1$ state for **1b** (**Figure 5A**), and from 3.025 Å at $S_0$ state to 2.894 Å at $T_1$ state for **4a** (**Figure 5D**), demonstrating the formation of a Au-Au bonding interaction at $T_1$ state. $^3$MC excited state is responsible for the $T_1$ state of **1b.** Thus, electronic excitation from the 6s-5d hybridized σ(Au-Au) anti-bonding orbital (HOMO) to the 6pσ(Au-Au) bonding orbital (LUMO) would result in the formation of a net Au-Au bond. For **4a,** $^3$LMMCT excited state involving electronic transition from the diphosphine ligand to the 6pσ(Au-Au) bonding orbital (LUMO) is responsible for the $T_1$ state of **4a.** As the anti-bonding orbital of **4a** at $T_1$ state remains occupied, the increase in Au-Au bond order is only one-half that of **1b** at the excited state, which accounts for the relatively smaller Au-Au contraction for $T_1$ of **4a** (0.131 Å) compared to that of **1a** (0.395 Å) based on TDDFT calculations. Two exciplex structures of **1b**-$ClO_4$ and **1b**-$[ClO_4]_2$ at $T_1$ state have been identified and optimized, with binding energy of -21.8 and -33.7 kcal/mol respectively. The emission of $T_1$ state occurs from the HOMO→LUMO transition for **1b, 1b**-$ClO_4$ and **1b**-$[ClO_4]_2$, which is calculated to be 3.18, 2.37 and 2.19 eV respectively. Therefore, the experimentally observed emission peak of **1b** at 579 nm (2.14 eV in **Table 1b)** in $CH_3CN$ is assigned to be from the **1b**-$[ClO_4]_2$ exciplex at the $T_1$ state. In the optimized **1b**-$[ClO_4]_2$ exciplex structure, the calculated Au-$ClO_4$ distance is 2.43 Å and 2.53 Å as shown in **Figure 5B.** The $ClO_4^-$ counter-anion forms an anti-bonding σ* interaction with the Au atom in the HOMO, lifting the orbital energy and decreasing the HOMO-LUMO gap (**Figure 5B** and **Figure 5E**). Therefore, in **1b**-$ClO_4$ and **1b**-$[ClO_4]_2$, a red-shifted emission energy has been calculated and observed compared to that in **1b.** Similarly, two exciplex structures of **4a**-$ClO_4$ and **4a**-$[ClO_4]_2$ at $T_1$ state have been optimized, with the binding energy of -10.1 and -20.6 kcal/mol respectively. The calculated Au-$ClO_4$ distance in **4a**-$[ClO_4]_2$ is 3.29 Å and 4.17 Å as shown in **Figure 5C,** demonstrating weaker Au-$ClO_4$ binding interaction than that in the **1b**-$[ClO_4]_2$ exciplex. The calculated emission energy of **4a, 4a**-$ClO_4$ and **4a**-$[ClO_4]_2$ is 2.67, 2.62 and 2.5 eV respectively. Therefore, the experimentally observed emission peak maximum of **4a** at 568 nm (2.18 eV in **Table 1b)** is assigned to be from the **4a**-$[ClO_4]_2$ exciplex at the $T_1$ state.

Spin-orbit (SO) TDDFT calculations have been performed on **4a** to obtain the $k_r$ of the phosphorescence process. As shown in **Table 2,** the calculated $k_r$ of **4a** is $1.27\times10^5$ $s^{-1}$, which agrees with the measured experimental value of $k_r$ of $2.95\times10^5$ $s^{-1}$ of **4a** in $CH_3CN$. The spin-orbit coupling matrix element (SOCME) has been calculated and two large SOCME are observed between the coupling of $S_{10}$ and $T_1$ (217.76 $cm^{-1}$), $S_8$ and $T_1$ (149.44 $cm^{-1}$). The $S_{10}$ and $S_8$ state of

**4a** are mainly from the HOMO→L+2 transition and HOMO→L+1 transition respectively, and the $T_1$ state occurs mainly from the HOMO→LUMO transition. The LUMO, L+1 and L+2 orbitals have moderate contributions from different Au-6p orbitals ($6p_x$, $6p_y$ or $6p_z$). Therefore, phosphorescence of **4a** is ascribed to the involvement of Au-6p orbitals in the LMMCT transitions.

**Example 2. The Au(I) complexes catalyze light-induced organic reactions under near-UV and/or visible light**

***Materials and Methods***

*Homocouplig of (2-bromoethyl) benzene and alkyl bromides*

**Scheme 1.** Comparison of **1a** and **4a** in the homocoupling of (2-bromoethyl)benzene.

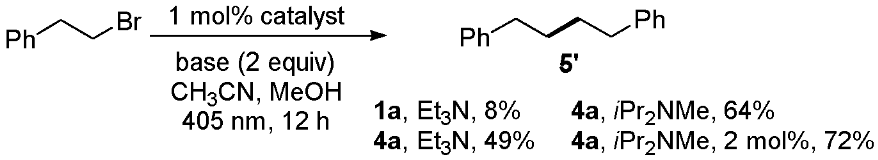


**5'**

**Scheme 2.** Photoinduced homocoupling of alkyl bromides[a]

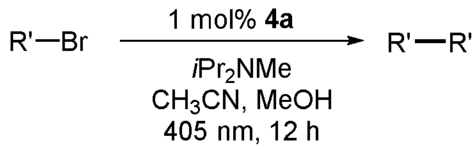


**Exemplary reaction schemes for producing 6, 7, and 8:**

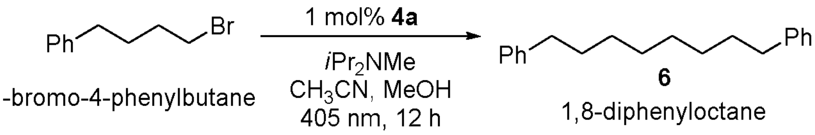


1-bromo-4-phenylbutane

**6**

1,8-diphenyloctane

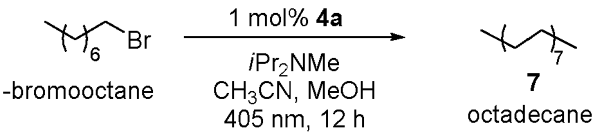


1-bromooctane

**7**

octadecane

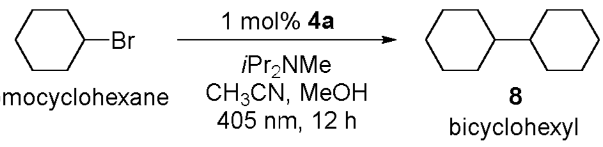


1-bromocyclohexane

**8**

bicyclohexyl

**Other reactants R'-Br:**

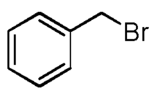 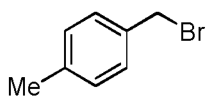 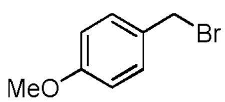 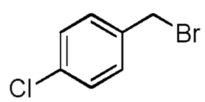

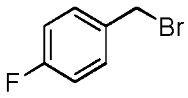 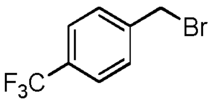 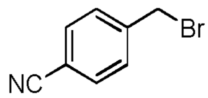 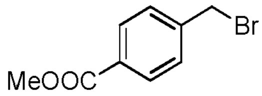

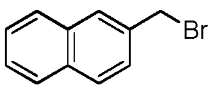 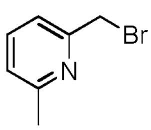 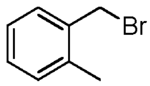 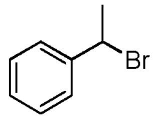

**Reactants R'-Cl:**

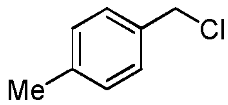

**Products R'-R' and their yields:**

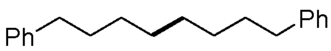

**6**: 53%[b,c]

$CH_3(CH_2)_6CH_2—CH_2(CH_2)_6CH_3$

**7**: 34%[b,d]

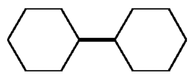

**8**: 32 %[b, d]

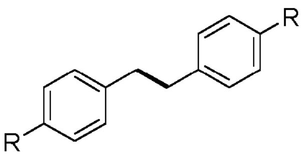

**9**: R = H, 95% (92%[e])
**10**: R = Me, 98% (95%[e], 92%[b],[f], 83%[g])
**11**: R = OMe, 53% (50%[e])
**12**: R = F, 85% (81%[e])
**14**: R = $CF_3$, 80% (75%[e])
**15**: R = CN, 80% (77%[e])
**16**: R = COOMe, 98% (94%[e])

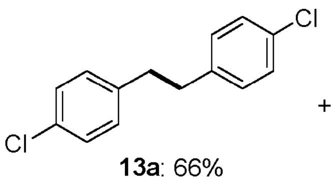

**13a**: 66%

+

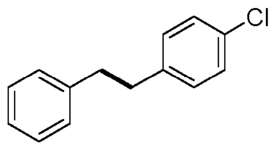

**13b**: 18%

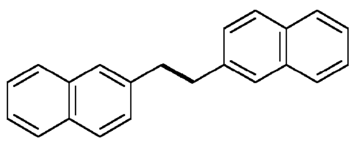

**17**: 75% (71%[e])

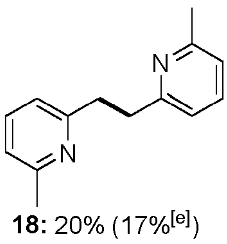

**18:** 20% (17%[e])

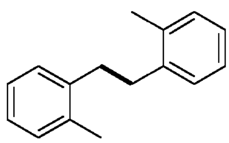

**19**: 89% (87%[e])

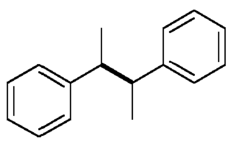

**20**: 52% (50%[e])

[a] Alkyl bromide (1 mmol), **4a** (0.01 mmol), *i*$Pr_2NMe$ (2 mmol), $CH_3CN$ (1 mL) and MeOH (1 mL) under $N_2$ and 405 nm LED (12 W) irradiation for 12 h at room temperature. [b] Product yield based on NMR analysis and GC-MS analysis using 1,3,5-trimethoxybenzene as an internal standard. [c] **4a** (0.02 mmol). [d] **4a** (0.05 mmol). [e] Isolated yield. [f] 4-methylbenzyl chloride as a substrate. [g] Under 442 nm LED (12 W)

To a round bottom flask, alkyl bromides (1 mmol), gold complex **4a** (1-5 mol%, 0.01 mmol), *i*$Pr_2NMe$ (3 mmol), $CH_3CN$ (1 mL) and MeOH (1 mL) were added. The mixture was stirred for 12 h at room temperature under $N_2$ and 405 nm light. After removal of the volatile materials under reduced pressure, the crude product was purified by chromatograph on silica gel (dichloromethane/*n*-hexane). A part of product conversion was determined by GC-MS analysis using internal standards.

**1,4-Diphenylbutane (5').** Performed according to the general procedure to afford 72 mg (68%) of **5'** as colorless oil (Peng, et al., J. Org. Chem. 2013, 78, 10960-10967). $^1$H NMR (500 MHz, $CDCl_3$): δ 7.25 - 7.28 (m, 4 H, Ar), 7.17 (t, *J* = 6.5 Hz, 6 H, Ar), 2.63 (t, *J* = 6.8 Hz, 4 H, Ar$CH_2$$CH_2$), 1.65 - 1.68 (m, 4 H, Ar$CH_2$$CH_2$). $^{13}$C NMR (126 MHz, $CDCl_3$): δ 142.6 (s, Ar), 128.4 (s, Ar), 128.2 (s, Ar), 125.6 (s, Ar), 35.8 (s, Ar$CH_2$$CH_2$), 31.1 (s, Ar$CH_2$$CH_2$).

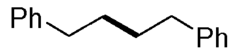

**1,2-Diphenylethane (9).** Performed according to the general procedure to afford 84 mg (92%) of **9** as white solid (Teo, et al., Dalton Trans. 2016, 45, 7312-7319). $^1$H NMR (500 MHz, $CDCl_3$): δ 7.28 (t, *J* = 7.4 Hz, 4 H, Ar), 7.18 - 7.21 (m, 6 H, Ar), 2.92 (s, 4 H, Ar$CH_2$). $^{13}$C NMR (126 MHz, $CDCl_3$): δ 141.8 (s, Ar), 128.4 (s, Ar), 128.3 (s, Ar), 125.9 (s, Ar), 37.9 (s, Ar$CH_2$).

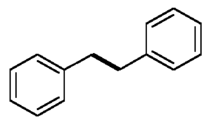

**1,2-Di-*p*-tolylethane (10).** Performed according to the general procedure to afford 100 mg (95%) of **10** as white solid (Teo, et al., Dalton Trans. 2016, 45, 7312-7319). $^1$H NMR (400 MHz, $CDCl_3$): δ 7.09 (s, 8 H, Ar), 2.86 (s, 4 H, Ar$CH_2$), 2.32 (s, 6 H, *Me*). $^{13}$C NMR (101 MHz, $CDCl_3$): δ 138.8 (s, Ar), 135.3 (s, Ar), 129.0 (s, Ar), 128.3 (s, Ar), 37.6 (s, Ar$CH_2$), 21.0 (s, *Me*).

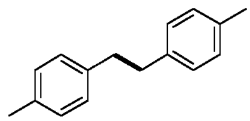

**1,2-Bis(4-methoxyphenyl)ethane (11).** Performed according to the general procedure to afford 61 mg (50%) of **11** as white solid (Liu, et al., Chem. Asian J. 2017, 12, 673-678). $^1$H NMR (500 MHz, $CDCl_3$): δ 7.08 (d, *J* = 8.4 Hz, 4 H, Ar), 6.82 (d, *J* = 8.4 Hz, 4 H, Ar), 3.79 (s, 6 H, *OMe),* 2.82 (s, 4 H, Ar$CH_2$). $^{13}$C NMR (126 MHz, $CDCl_3$): δ 157.8 (s, Ar), 134.0 (s, Ar), 129.4 (s, Ar), 113.7 (s, Ar), 55.2 (s, *OMe),* 37.3 (s, Ar$CH_2$).

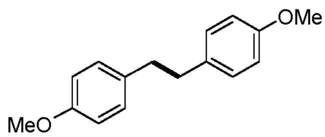

**1,2-Bis(4-fluorophenyl)ethane (12).** Performed according to the general procedure to afford 88 mg (81%) of **12** as white solid (Park, et al., Chem. Eur. J. 2016, 22, 17790-17799). $^1$H NMR (500 MHz, $CDCl_3$): δ 7.05 - 7.08 (m, 4 H, Ar), 6.94 (t, *J* = 8.4 Hz, 4 H, Ar), 2.86 (s, 4 H, Ar$CH_2$). $^{13}$C NMR (126 MHz, $CDCl_3$): δ 161.4 (d, $J_{C-F}$ = 243.6 Hz, Ar), 136.9 (d, $J_{C-F}$ = 3.1 Hz, Ar), 129.8 (d, $J_{C-F}$ = 7.8 Hz, Ar), 115.1 (d, $J_{C-F}$ = 21.1 Hz, Ar), 37.1 (s, Ar$CH_2$). $^{19}$F NMR (471 MHz, $CDCl_3$): δ -117.5 (s).

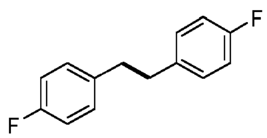

**1,2-Bis(4-(trifluoromethyl)phenyl)ethane (14).** Performed according to the general procedure to afford 119 mg (75%) of **14** as white solid (Teo, et al., Dalton Trans. 2016, 45, 7312-7319). $^1$H NMR (500 MHz, $CDCl_3$): δ 7.53 (d, *J* = 8.0 Hz, 4 H, Ar), 7.24 (d, *J* = 8.0 Hz, 4 H, Ar), 2.99 (s, 4 H, Ar$CH_2$). $^{13}$C NMR (126 MHz, $CDCl_3$): δ 145.0 (s, Ar), 128.8 (s, Ar), 128.5 (s, Ar), 125.4 (q, $J_{C-F}$ = 3.8 Hz, Ar), 124.4 (q, $J_{C-F}$ = 315.2 Hz, $CF_3$), 37.2 (s, Ar$CH_2$). $^{19}$F NMR (471 MHz, $CDCl_3$): δ -62.4 (s).

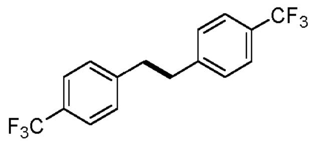

**4,4'-(Ethane-1,2-diyl)dibenzonitrile (15).** Performed according to the general procedure to afford 89 mg (77%) of **15** as white solid (Teo, et al., Dalton Trans. 2016, 45, 7312-7319). $^1H$ NMR (400 MHz, $CDCl_3$): δ 7.57 (d, *J* = 8.1 Hz, 4 H, Ar), 7.22 (d, *J* = 8.1 Hz, 4 H, Ar), 3.00 (s, 4 H, ArC$H_2$). $^{13}C$ NMR (101 MHz, $CDCl_3$): δ 146.0 (s, Ar), 132.3 (s, Ar), 129.2 (s, Ar), 118.8 (s, CN), 110.3 (s, Ar), 37.2 (s, Ar$CH_2$).

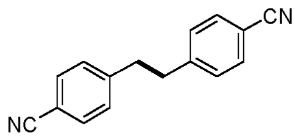

**Dimethyl 4,4'-(ethane-1,2-diyl)dibenzoate (16).** Performed according to the general procedure to afford 140 mg (94%) of **16** as white solid (Teo, et al., Dalton Trans. 2016, 45, 7312-7319). $^1H$ NMR (500 MHz, $CDCl_3$): δ 7.93 (d, *J* = 8.1 Hz, 4 H, Ar), 7.19 (d, *J* = 8.1 Hz, 4 H, Ar), 3.90 (s, 6 H, COO*Me*), 2.99 (s, 4 H, ArC$H_2$). $^{13}C$ NMR (126 MHz, $CDCl_3$): δ 167.0 (s, *C*OOMe), 146.5 (s, Ar), 129.7 (s, Ar), 128.5 (s, Ar), 128.1 (s, Ar), 52.0 (s, COO*Me*), 37.4 (s, Ar$CH_2$).

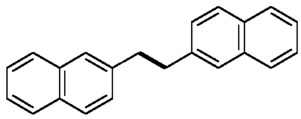

**1,2-Di(naphthalen-2-yl)ethane (17).** Performed according to the general procedure to afford 100 mg (71%) of **17** as white solid (Cao and Shi, J. Am. Chem. Soc. 2017, 139, 6546-6549). $^1H$ NMR (400 MHz, $CDCl_3$): δ 7.76 - 7.82 (m, 6 H, Ar), 7.65 (s, 2 H, Ar), 7.40 - 7.46 (m, 4 H, Ar), 7.36 (d, *J* = 8.3 Hz, 2 H, Ar), 3.18 (s, 4 H, ArC$H_2$). $^{13}C$ NMR (101 MHz, $CDCl_3$): δ 139.3 (s, Ar), 133.6 (s, Ar), 132.0 (s, Ar), 127.9 (s, Ar), 127.6 (s, Ar), 127.5 (s, Ar), 127.3 (s, Ar), 126.5 (s, Ar), 125.9 (s, Ar), 125.2 (s, Ar), 38.0 (s, Ar$CH_2$).

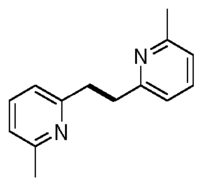

**1,2-Bis(6-methylpyridin-2-yl)ethane (18).** Performed according to the general procedure to afford 18 mg (17%) of **18** as white solid (Ito, et al., J. Organomet. Chem. 1986, 303, 301-308). $^1H$ NMR (500 MHz, $CDCl_3$): δ 7.45 (t, *J* = 7.6 Hz, 2 H, Ar), 6.96 (d, *J*= 7.6 Hz, 2 H, Ar), 6.93 (d, *J*= 7.7 Hz, 2 H, Ar), 3.17 (s, 4 H, ArC$H_2$), 2.55 (s, 6 H, *Me*). $^{13}C$ NMR (126 MHz, $CDCl_3$): δ 160.5 (s, Ar), 157.8 (s, Ar), 136.6 (s, Ar), 120.7 (s, Ar), 119.8 (s, Ar), 38.5 (s, ArC$H_2$), 24.4 (s, *Me).*

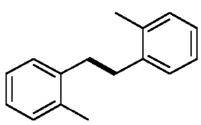

**1,2-Di-*o*-tolylethane (19).** Performed according to the general procedure to afford 91 mg (87%) of **19** as white solid (Teo, et al., Dalton Trans. 2016, 45, 7312-7319). $^1H$ NMR (500 MHz, $CDCl_3$): δ 7.11 - 7.20 (m, 8 H, Ar), 2.85 (s, 4 H, ArC$H_2$), 2.32 (s, 6 H, $M_e$). $^{13}C$ NMR (126 MHz, $CDCl_3$): δ 140.2 (s, Ar), 135.9 (s, Ar), 130.2 (s, Ar), 128.8 (s, Ar), 126.1 (s, Ar), 126.0 (s, Ar), 34.1 (s, Ar$CH_2$), 19.3 (s, *Me).*

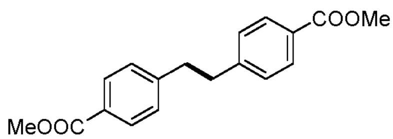

**Butane-2,3-diyldibenzene (20).** Performed according to the general procedure to afford 53 mg (50%) of **20** as white solid (Fallon, et al., New J. Chem. 2016, 40, 9912-9916). $^1$H NMR (500 MHz, $CDCl_3$): δ 7.31 (t, *J* = 7.5 Hz, 4 H, Ar), 7.20 - 7.23 (m, 6 H, Ar), 2.80 (br, 2 H, ArCHMe), 1.02 (d, *J* = 5.8 Hz, 6 H, ArCHMe). $^{13}$C NMR (126 MHz, $CDCl_3$): δ 146.5 (s, Ar), 128.3 (s, Ar), 127.6 (s, Ar), 126.0 (s, Ar), 47.2 (s, ArCHMe), 21.0 (s, ArCH*Me*).

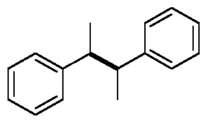

*Alkylation of 2-phenyl-1,2,3,4-tetrahydroisoquinoline*

**Scheme 3.** Photochemical alkylation of 2-phenyl-1,2,3,4-tetrahydroisoquinoline[a]

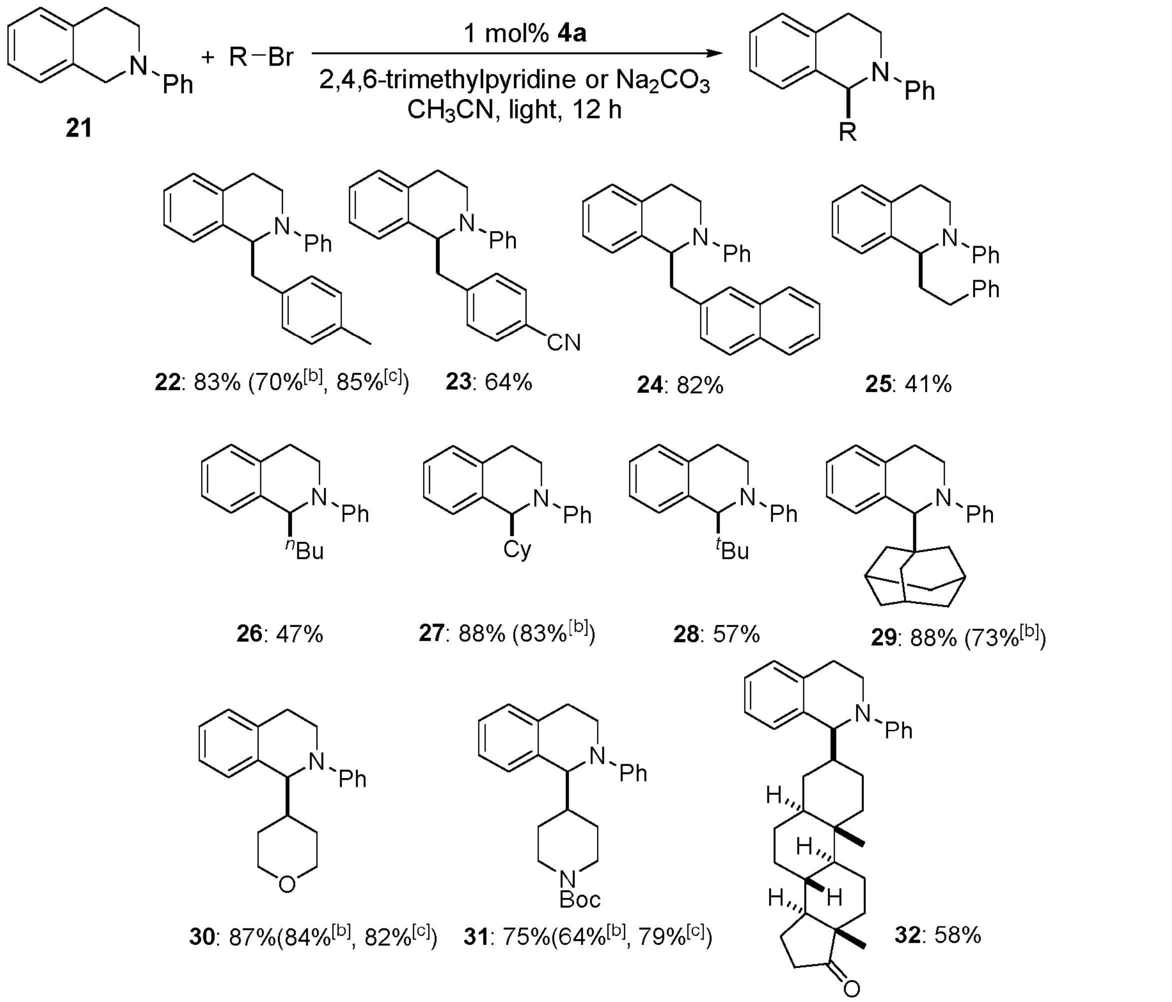


**21**

**22**: 83% (70%[b], 85%[c]) **23**: 64% **24**: 82% **25**: 41%

**26**: 47% **27**: 88% (83%[b]) **28**: 57% **29**: 88% (73%[b])

**30**: 87%(84%[b], 82%[c]) **31**: 75%(64%[b], 79%[c]) **32**: 58%

[a] 2-Phenyl-1,2,3,4-tetrahydroisoquinoline (0.5 mmol), alkyl bromides (0.6 mmol), 4a (0.005 mmol), 2,4,6-trimethylpyridine (1.2 mmol), $CH_3CN$ (2 mL) under $N_2$ and 405 nm LED irradiation (12 W) for 12 h at room temperature and isolated yield. [b] 4a (0.01 mmol), 442 nm LED (12 W). [c] $Na_2CO_3$ instead of 2,4,6-trimethylpyridine.

To a round bottom flask, 2-phenyl-1,2,3,4-tetrahydroisoquinoline (0.5 mmol), alkyl bromides (0.5 mmol), gold complex 4a (1-2 mol%), 2,4,6-trimethylpyridine (1.2 mmol) and $CH_3CN$ (2 mL) were added. The mixture was stirred for 12 h at room temperature under $N_2$ and 405 nm and 442 nm light. After removal of the volatile materials under reduced pressure, the crude product was purified by chromatograph on silica gel (dichloromethane/*n*-hexane).

**1-(4-Methylbenzyl)-2-phenyl-1,2,3,4-tetrahydroisoquinoline (22).** Performed according to the general procedure to afford 130 mg (83%) of **22** as light yellow oil (Zhou, et al., Angew. Chem. Int. Ed. 2017, 56, 15683-15687). $^1$H

NMR (400 MHz, $CDCl_3$): δ 7.21 - 7.25 (m, 2 H, Ar), 7.11 - 7.17 (m, 2 H, Ar), 7.01 - 7.06 (m, 3 H, Ar), 6.90 (d, *J* = 7.8 Hz, 2 H, Ar), 6.85 (d, *J*= 8.4 Hz, 2 H, Ar), 6.70 - 6.75 (m, 2 H, Ar), 4.87 (t, *J* = 6.5 Hz, 1 H, ArCHN), 3.50 - 3.67 (m, 2 H, $ArCH_2CH_2N$), 3.19 - 3.23 (m, 1 H, $ArCH_2CH_2N$), 2.93 - 2.98 (m, 2 H, $ArCH_2CH$), 2.72 - 2.78 (m, 1 H, $ArCH_2CH_2N$), 2.30 (s, 3 H, *Me*). $^{13}C$ NMR (101 MHz, $CDCl_3$): δ 149.3 (s, Ar), 137.7 (s, Ar), 135.7 (s, Ar), 135.7 (s, Ar), 135.1 (s, Ar), 129.6 (s, Ar), 129.2 (s, Ar), 128.8 (s, Ar), 128.2 (s, Ar), 127.7 (s, Ar), 126.5 (s, Ar), 125.4 (s, Ar), 117.0 (s, Ar), 113.5 (s, Ar), 61.5 (s, ArCHN), 42.1 (s, $ArCH_2CH_2N$), 41.9 (s, $ArCH_2CH_2N$), 27.5 (s, $ArCH_2CH$), 21.1 (s, *Me*).

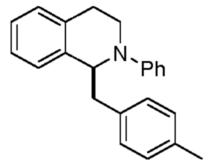

**4-((2-Phenyl-1,2,3,4-tetrahydroisoquinolin-1-yl)methyl)benzonitrile (23).** Performed according to the general procedure to afford 104 mg (64%) of **23** as light yellow oil (Wang, et al., Org. Lett. 2015, 17, 3982-3985). $^1H$ NMR (400 MHz, $CDCl_3$): δ 7.50 (d, *J* = 8.1 Hz, 2 H, Ar), 7.07 - 7.24 (m, 7 H, Ar), 6.75 - 6.82 (m, 4 H, Ar), 4.92 (t, *J* = 6.5 Hz, 1 H, ArCHN), 3.51 - 3.65 (m, 2 H, $ArCH_2CH_2N$), 3.26 - 3.30 (m, 1 H, $ArCH_2CH$), 3.07 - 3.12 (m, 1 H, $ArCH_2CH$), 2.95 - 3.02 (m, 1 H, $ArCH_2CH_2N$), 2.64 - 2.71 (m, 1 H, $ArCH_2CH_2N$). $^{13}C$ NMR (101 MHz, $CDCl_3$): δ 149.1 (s, Ar), 144.5 (s, Ar), 136.8 (s, Ar), 135.1 (s, Ar), 131.9 (s, Ar), 130.5 (s, Ar), 129.3 (s, Ar), 128.5 (s, Ar), 127.3 (s, Ar), 126.9 (s, Ar), 125.8 (s, Ar), 119.1 (s, CN), 117.9 (s, Ar), 114.0 (s, Ar), 110.1 (s, Ar), 61.0 (s, ArCHN), 42.5 (s, $ArCH_2CH_2N$), 42.1 (s, $ArCH_2CH_2N$), 27.3 (s, $ArCH_2CH$).

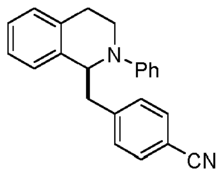

**1-(Naphthalen-2-ylmethyl)-2-phenyl-1,2,3,4-tetrahydroisoquinoline (24).** Performed according to the general procedure to afford 143 mg (82%) of **24** as light yellow oil. $^1H$ NMR (400 MHz, $CDCl_3$): δ 7.69 - 7.80 (m, 3 H, Ar), 7.41 - 7.44 (m, 3 H, Ar), 7.23 - 7.26 (m, 2 H, Ar), 7.14 - 7.16 (m, 3 H, Ar), 6.98 - 7.02 (m, 1 H, Ar), 6.90 (d, *J*= 8.3 Hz, 2 H, Ar), 6.70 - 6.76 (m, 2 H, Ar), 4.99 - 5.02 (m, 1 H, ArCHN), 3.52 - 3.70 (m, 2 H, $ArCH_2CH_2N$), 3.39 - 3.44 (m, 1 H, $ArCH_2CH$), 3.13 - 3.19 (m, 1 H, $ArCH_2CH$), 2.95 - 3.03 (m, 1 H, $ArCH_2CH_2N$), 2.73 - 2.80 (m, 1 H, $ArCH_2CH_2N$). $^{13}C$ NMR (101 MHz, $CDCl_3$): δ 149.3 (s, Ar), 137.5 (s, Ar), 136.4 (s, Ar), 135.0 (s, Ar), 133.4 (s, Ar), 132.1 (s, Ar), 129.3 (s, Ar), 128.3 (s, Ar), 128.2 (s, Ar), 127.7 (s, Ar), 127.6 (s, Ar), 127.5 (s, Ar), 126.6 (s, Ar), 125.8 (s, Ar), 125.5 (s, Ar), 125.3 (s, Ar), 117.3 (s, Ar), 113.8 (s, Ar), 61.4 (s, ArCHN), 42.5 (s, $ArCH_2CH_2N$), 42.2 (s, $ArCH_2CH_2N$), 27.5 (s, $ArCH_2CH$). HRMS (ESI): m/z: $[M + H]^+$ calculated for $C_{26}H_{24}N$: 350.1903, found 350.1901.

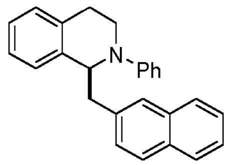

**1-Phenethyl-2-phenyl-1,2,3,4-tetrahydroisoquinoline (25).** Performed according to the general procedure to afford 64 mg (41%) of **25** as light yellow oil (Zhou, et al., Angew. Chem. Int. Ed. 2017, 56, 15683-15687). $^1H$ NMR (400 MHz, $CDCl_3$): δ 7.26 - 7.28 (m, 1 H, Ar), 7.11 - 7.23 (m, 10 H, Ar), 6.83 (d, *J*= 8.2 Hz, 2 H, Ar), 6.72 (t, *J* = 7.2 Hz, 1 H, Ar), 4.68 (t, *J*= 7.1 Hz, 1 H, ArC*H*N), 3.63 - 3.66 (m, 2 H, $ArCH_2CH_2N$), 2.99 - 3.07 (m, 1 H, $ArCH_2CH_2N$), 2.70 - 2.86 (m, 3 H, $ArCH_2CH_2N+PhCH_2CH_2$), 2.23 - 2.33 (m, 1 H, $PhCH_2CH_2$), 2.01 - 2.10 (m, 1 H, $PhCH_2CH_2$). $^{13}C$ NMR (101 MHz, $CDCl_3$): δ 149.7 (s, Ar), 141.9 (s, Ar), 138.8 (s, Ar), 135.0 (s, Ar), 129.2 (s, Ar), 128.6 (s, Ar), 128.5 (s, Ar), 128.3 (s, Ar), 127.3 (s, Ar), 126.5 (s, Ar), 125.8 (s, Ar), 117.3 (s, Ar), 114.2 (s, Ar), 58.4 (s, ArCHN), 41.8 (s, $PhCH_2CH_2$), 38.3 (s, $ArCH_2CH_2N$), 32.9 (s, $ArCH_2CH_2N$), 26.8 (s, $PhCH_2CH_2$).

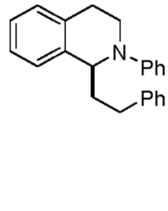

**1-Butyl-2-phenyl-1,2,3,4-tetrahydroisoquinoline (26).** Performed according to the general procedure to afford 62 mg (47%) of **26** as light yellow oil (Zhou, et al., Angew. Chem. Int. Ed. 2017, 56, 15683-15687). $^1H$ NMR (400 MHz, $CDCl_3$): δ 7.21 - 7.23 (m, 1 H, Ar), 7.09 - 7.17 (m, 4 H, Ar), 6.86 (d, *J* = 8.3 Hz, 2 H, Ar), 6.71 (t, *J* = 7.2 Hz, 1 H, Ar), 4.63 (t, *J* = 7.1 Hz, 1 H, ArCHN), 3.56 - 3.66 (m, 2 H, $ArCH_2C\mathit{H}_2N$), 2.82 - 3.06 (m, 2 H, $ArC\mathit{H}_2CH_2N$), 1.91 - 1.99 (m, 1 H, $C\mathit{H}_2CH_2CH_2CH_3$), 1.66 - 1.73 (m, 1 H, $C\mathit{H}_2CH_2CH_2CH_3$), 1.31 - 1.50 (m, 4 H, $CH_2C\mathit{H}_2C\mathit{H}_2CH_3$), 0.89 (t, *J* = 7.1 Hz, 3 H, $CH_2CH_2CH_2C\mathit{H}_3$). $^{13}C$ NMR (101 MHz, $CDCl_3$): δ 149.6 (s, Ar), 139.2 (s, Ar), 135.0 (s, Ar), 129.2 (s, Ar), 128.5 (s, Ar), 127.3 (s, Ar), 126.3 (s, Ar), 125.7 (s, Ar), 116.8 (s, Ar), 113.6 (s, Ar), 59.2 (s, Ar*C*HN), 41.8 (s, $ArCH_2\mathit{C}H_2N$), 36.5 (s, $Ar\mathit{C}H_2CH_2N$), 29.1 (s, $\mathit{C}H_2CH_2CH_2CH_3$), 27.0 (s, $CH_2\mathit{C}H_2CH_2CH_3$), 22.8 (s, $CH_2CH_2\mathit{C}H_2CH_3$), 14.1 (s, $CH_2CH_2CH_2\mathit{C}H_3$).

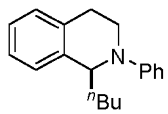

**1-Cyclohexyl-2-phenyl-1,2,3,4-tetrahydroisoquinoline (27).** Performed according to the general procedure to afford 128 mg (88%) **of 27** as light yellow oil (Zhou, et al., Angew. Chem. Int. Ed. 2017, 56, 15683-15687). $^1H$ NMR (400 MHz, $CDCl_3$): δ 7.06 - 7.23 (m, 6 H, Ar), 6.85 (d, *J* = 8.3 Hz, 2 H, Ar), 6.67 (t, *J* = 7.2 Hz, 1 H, Ar), 4.42 (d, *J* = 8.1 Hz, 1 H, ArCHN), 3.69 - 3.75 (m, 1 H, $ArCH_2C\mathit{H}_2N$), 3.43 - 3.49 (m, 1 H, $ArCH_2C\mathit{H}_2N$), 2.96 - 3.03 (m, 2 H, $ArC\mathit{H}_2CH_2N$), 1.61 - 1.98 (m, 6 H, Cy), 1.03 - 1.16 (m, 5 H, Cy). $^{13}C$ NMR (101 MHz, $CDCl_3$): δ 149.9 (s, Ar), 137.8 (s, Ar), 135.3 (s, Ar), 129.1 (s, Ar), 128.3 (s, Ar), 128.1 (s, Ar), 126.5 (s, Ar), 125.1 (s, Ar), 116.2 (s, Ar), 112.9 (s, Ar), 63.7 (s, ArCHN), 44.1 (s, $ArCH_2\mathit{C}H_2N$), 42.9 (s, $Ar\mathit{C}H_2CH_2N$), 30.9 (s, Cy), 30.6 (s, Cy), 27.4 (s, Cy), 26.6 (s, Cy), 26.4 (s, Cy), 26.4 (s, Cy).

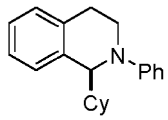

**1-(*Tert*-butyl)-2-phenyl-1,2,3,4-tetrahydroisoquinoline (28).** Performed according to the general procedure to afford 76 mg (57%) of **28** as light yellow oil (Zhou, et al., Angew. Chem. Int. Ed. 2017, 56, 15683-15687). $^1H$ NMR (400 MHz, $CDCl_3$): δ 7.11 - 7.22 (m, 6 H, Ar), 6.92 (d, *J* = 8.4 Hz, 2 H, Ar), 6.67 (t, *J* = 7.2 Hz, 1 H, Ar), 4.67 (s, 1 H, ArCHN), 3.84 - 3.90 (m, 1 H, $ArCH_2C\mathit{H}_2N$), 3.50 - 3.57 (m, 1 H, $ArCH_2C\mathit{H}_2N$), 2.94 - 3.10 (m, 2 H, $ArC\mathit{H}_2CH_2N$), 1.02 (s, 9 H, $C\mathit{Me}_3$). $^{13}C$ NMR (101 MHz, $CDCl_3$): δ 151.1 (s, Ar), 137.0 (s, Ar), 135.4 (s, Ar), 128.9 (s, Ar), 128.7 (s, Ar), 128.3 (s, Ar), 126.5 (s, Ar), 125.0 (s, Ar), 116.6 (s, Ar), 114.1 (s, Ar), 66.0 (s, ArCHN), 44.0 (s, $ArCH_2\mathit{C}H_2N$), 39.2 (s, $Ar\mathit{C}H_2CH_2N$), 29.2 (s, $\mathit{C}Me_3$), 27.3 (s, $C\mathit{Me}_3$).

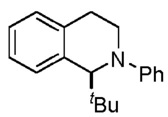

**1-(Adamantan-1-yl)-2-phenyl-1,2,3,4-tetrahydroisoquinoline (29).** Performed according to the general procedure to afford 151 mg (88%) of **29** as light yellow oil (Zhou, et al., Angew. Chem. Int. Ed. 2017, 56, 15683-15687). $^1H$ NMR (400 MHz, $CDCl_3$): δ 7.12 - 7.23 (m, 6 H, Ar), 6.94 (d, *J*= 8.4 Hz, 2 H, Ar), 6.66 (t, *J*= 7.2 Hz, 1 H, Ar), 4.55 (s, 1 H, ArCHN), 3.88 - 3.94 (m, 1 H, $ArCH_2C\mathit{H}_2N$), 3.43 - 3.50 (m, 1 H, $ArCH_2C\mathit{H}_2N$), 3.13 - 3.21 (m, 1 H, $ArC\mathit{H}_2CH_2N$), 2.92 - 2.99 (m, 1 H, $ArC\mathit{H}_2CH_2N$), 1.55 - 1.93 (m, 15 H, 1-adamantanyl). $^{13}C$ NMR (101 MHz, $CDCl_3$): δ 151.2 (s, Ar), 136.2 (s, Ar), 135.5 (s, Ar), 129.1 (s, Ar), 128.9 (s, Ar), 128.0 (s, Ar), 126.6 (s, Ar), 125.0 (s, Ar), 116.2 (s, Ar), 113.7 (s, Ar), 66.9 (s, ArCHN), 45.1 (s, $ArCH_2CH_2N$), 41.3 (s, $Ar\mathit{C}H_2CH_2N$), 41.0 (s, 1-adamantanyl), 36.8 (s, 1-adamantanyl), 28.8 (s, 1-adamantanyl), 27.8 (s, 1-adamantanyl).

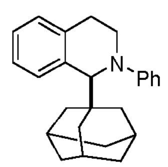

**2-Phenyl-1-(tetrahydro-2H-pyran-4-yl)-1,2,3,4-tetrahydroisoquinoline (30).** Performed according to the general procedure to afford 128 mg (87%) of **30** as light yellow oil (Zhou, et al., Angew. Chem. Int. Ed. 2017, 56, 15683-15687). $^1H$ NMR (500 MHz, $CDCl_3$): δ 7.12 - 7.23 (m, 5 H, Ar), 7.06 (d, *J* = 7.3 Hz, 1 H, Ar), 6.87 (d, *J*= 8.2 Hz, 2 H, Ar),

6.70 (t, *J*= 7.2 Hz, 1 H, Ar), 4.43 (d, *J*= 8.7 Hz, 1 H, ArCHN), 3.95 - 4.01 (m, 2 H, $OCH_2CH_2CH$), 3.50 - 3.75 (m, 2 H, , $OCH_2CH_2CH$), 3.21 - 3.34 (m, 2 H, $ArCH_2CH_2N$), 2.94 - 3.06 (m, 2 H, $ArCH_2CH_2N$), 1.93 - 2.01 (m, 1 H, $OCH_2CH_2CH$), 1.82 - 1.87 (m, 1 H, $OCH_2CH_2CH$), 1.44 - 1.55 (m, 3 H, $OCH_2CH_2CH$). $^{13}C$ NMR (126 MHz, $CDCl_3$): δ 149.9 (s, Ar), 136.8 (s, Ar), 135.1 (s, Ar), 129.2 (s, Ar), 128.5 (s, Ar), 128.2 (s, Ar), 126.9 (s, Ar), 125.3 (s, Ar), 116.9 (s, Ar), 113.4 (s, Ar), 68.3 (s, ArCHN), 67.9 (s, $OCH_2CH_2CH$), 63.2 (s, $OCH_2CH_2CH$), 42.8 (s, $ArCH_2CH_2N$), 41.4 (s, $ArCH_2CH_2N$), 30.9 (s, $OCH_2CH_2CH$), 30.8 (s, $OCH_2CH_2CH$), 27.0 (s, $OCH_2CH_2CH$).

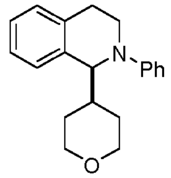

***Tert*-butyl 4-(2-phenyl-1,2,3,4-tetrahydroisoquinolin-1-yl)piperidine-1-carboxylate (31).** Performed according to the general procedure to afford 147 mg (75%) of **31** as light yellow oil (Zhou, et al., Angew. Chem. Int. Ed. 2017, 56, 15683-15687). $^1H$ NMR (500 MHz, $CDCl_3$): δ 7.12 - 7.24 (m, 5 H, Ar), 7.05 (d, *J*= 7.3 Hz, 1 H, Ar), 6.85 (d, *J* = 8.2 Hz, 2 H, Ar), 6.70 (t, *J* = 7.2 Hz, 1 H, Ar), 4.43 (d, *J*= 8.4 Hz, 1 H, ArCHN), 3.75 - 4.31 (m, 2 H, $Me_3COOCNCH_2CH_2CH$), 3.70 - 3.75 (m, 1 H, $Me_3COOCNCH_2CH_2CH$), 3.48 - 3.53 (m, 1 H, $Me_3COOCNCH_2CH_2CH$), 2.95 - 3.02 (m, 2 H, $ArCH_2CH_2N$), 2.33 - 2.77 (m, 2 H, $ArCH_2CH_2N$), 1.84 - 1.93 (m, 2 H, $Me_3COOCNCH_2CH_2CH$), 1.59 - 1.64 (m, 1 H, $Me_3COOCNCH_2CH_2CH$), 1.44 (s, 9 H, $Me_3COOCNCH_2CH_2CH$), 1.24 - 1.36 (m, 2 H, $Me_3COOCNCH_2CH_2CH$). $^{13}C$ NMR (126 MHz, $CDCl_3$): δ 154.7 (s, $Me_3COOCNCH_2CH_2CH$), 149.8 (s, Ar), 136.9 (s, Ar), 135.2 (s, Ar), 129.2 (s, Ar), 128.4 (s, Ar), 128.3 (s, Ar), 126.9 (s, Ar), 125.4 (s, Ar), 116.9 (s, Ar), 113.3 (s, Ar), 79.3 (s, $Me_3COOCNCH_2CH_2CH$), 63.0 (s, ArCHN), 42.9 (s, $ArCH_2CH_2N$), 42.6 (s, $ArCH_2CH_2N$), 30.0 (s, $Me_3COOCNCH_2CH_2CH$), 29.8 (s, $Me_3COOCNCH_2CH_2CH$), 28.4 (s, $Me_3COOCNCH_2CH_2CH$), 27.1 (s, $Me_3COOCNCH_2CH_2CH$).

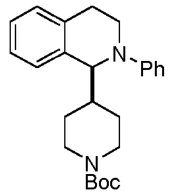

**(3S,5S,8R,9S,10S,13S,14S)-10,13-Dimethyl-3-((S)-2-phenyl-1,2,3,4-tetrahydroisoquinolin-1-yl)hexadecahydro-17H-cyclopenta[a]phenanthren-17-one (32).** Performed according to the general procedure to afford 140 mg (58%) of **32** as white solid. A mixture of *syn*- and *anti*- isomers (1:1). $^1H$ NMR (500 MHz, $CDCl_3$): δ 7.07 - 7.23 (m, 7 H, Ar), 6.84 - 6.87 (m, 2 H, Ar), 6.66 - 6.69 (m, 1 H, Ar), 4.41 (t, *J* = 7.4 Hz, 1 H, CHNPh), 3.46 - 3.74 (m, 2 H, $CH_2CH_2NPh$), 2.96 - 3.01 (m, 2 H, $CH_2CH_2NPh$), 2.39 - 2.44 (m, 1 H, alkyl-H), 2.00 - 2.08 (m, 1 H, alkyl-H), 1.87 - 1.93 (m, 1 H, alkyl-H), 1.70 - 1.83 (m, 4 H, alkyl-H), 1.43 - 1.55 (m, 3 H, alkyl-H), 1.16 - 1.33 (m, 8 H, alkyl-H), 0.84 - 1.03 (m, 7 H, alkyl-H), 0.77 (s, 3 H, *Me*), 0.63 - 0.68 (m, 1 H, alkyl-H). $^{13}C$ NMR (126 MHz, $CDC_3$): δ 221.41 (s, *CO*), 150.08 (s, Ar), 149.96 (s, Ar), 137.79 (s, Ar), 137.68 (s, Ar), 135.20 (s, Ar), 135.17 (s, Ar), 129.12 (s, Ar), 128.32 (s, Ar), 128.27 (s, Ar), 126.56 (s, Ar), 125.18 (s, Ar), 125.16 (s, Ar), 116.51 (s, Ar), 116.42 (s, Ar), 113.31 (s, Ar), 113.10 (s, Ar), 63.77 (s, *C*HNPh), 63.55 (s, *C*HNPh), 54.72 (s, *CCO*), 54.66 (s, *CCO*), 51.48 (s, alkyl-*C*), 47.80 (s, alkyl-*C*), 46.92 (s, alkyl-*C*), 46.71 (s, alkyl-*C*), 44.24 (s, alkyl-*C*), 44.19 (s, alkyl-*C*), 42.79 (s, alkyl-*C*), 38.59 (s, alkyl-*C*), 38.50 (s, alkyl-*C*), 36.06 (s, alkyl-*C*), 36.04 (s, alkyl-*C*), 35.84 (s, alkyl-*C*), 35.08 (s, alkyl-*C*), 32.89 (s, alkyl-*C*), 32.76 (s, alkyl-*C*), 31.58 (s, alkyl-*C*), 30.95 (s, alkyl-*C*), 28.74 (s, alkyl-*C*), 28.71 (s, alkyl-*C*), 27.22 (s, alkyl-*C*), 27.11 (s, alkyl-*C*), 26.21 (s, alkyl-*C*), 26.16 (s, alkyl-*C*), 21.73 (s, alkyl-*C*), 20.28 (s, alkyl-*C*), 13.81 (s, alkyl-*C*), 12.39 (s, alkyl-*C*). HRMS (ESI): m/z: $[M + H]^+$ calculated for $C_{34}H_{44}NO$: 482.3417, found.482.3420.

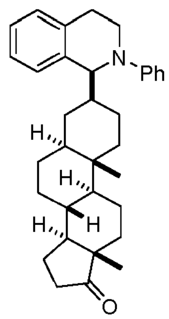

*Cyclization of indoles*

### Scheme 4a. Preparation of 1-(4-bromobutyl)-4-methoxy-1*H*-indole.

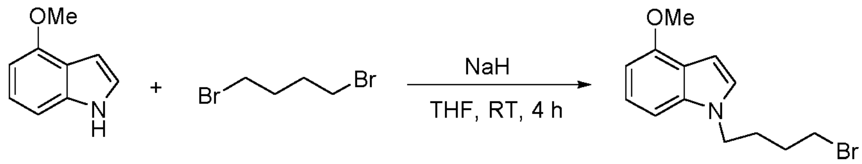


To a stirred suspension of sodium hydride (0.29 g, 12 mmol) in dry THF (20 mL) under $N_2$ at room temperature was added dropwise a solution of 4-methoxy-1H-indole (1.47 g, 10 mmol) in dry THF (20 mL). The mixture was stirred for 0.5 h at room temperature and then added over 1 hour to a solution of 1,4-dibromobutane (4.32 g, 10 mmol) in dry THF (20 mL). The resulting mixture was then stirred at room temperature for 4 h. Saturated aqueous $NH_4Cl$ was then added, layers were separated and aqueous phase was extracted with $Et_2O$. Organic layers were combined, dried over $MgSO_4$, filtered and concentrated under reduced pressure. The residue was then purified by flash chromatography on silica eluting with $CH_2Cl_2$/hexane to afford light yellow oil of 1-(4-bromobutyl)-4-methoxy-1H-indole (1.16 g, 41%).

$^1$H NMR (400 MHz, $CDCl_3$): δ 7.11 - 7.16 (m, 1 H, Ar), 6.95 - 6.99 (m, 2 H, Ar), 6.51 - 6.61 (m, 2 H, Ar), 4.14 (t, *J* = 6.8 Hz, 2 H, $NC\mathit{H}_2CH_2CH_2CH_2Br$), 3.96 (s, 3 H, *OMe),* 3.36 (t, *J* = 6.5 Hz, 2 H, $NCH_2CH_2CH_2C\mathit{H}_2Br$), 1.96 - 2.04 (m, 2 H, $NCH_2CH_2C\mathit{H}_2CH_2Br$), 1.80 - 1.87 (m, 2 H, $NCH_2C\mathit{H}_2CH_2CH_2Br$). $^{13}$C NMR (101 MHz, $CDCl_3$): δ 153.5 (s, Ar), 137.4 (s, Ar), 126.1 (s, Ar), 122.4 (s, Ar), 119.1 (s, Ar), 102.7 (s, Ar), 99.2 (s, Ar), 98.6 (s, Ar), 55.3 (s, *OMe),* 45.7 (s, $NCH_2CH_2C\mathit{H}_2CH_2Br$), 33.0 (s, $NCH_2CH_2C\mathit{H}_2CH_2Br$), 29.9 (s, $NCH_2CH_2C\mathit{H}_2CH_2Br$), 28.8 (s, $NCH_2CH_2CH_2CH_2Br$). HRMS (ESI): m/z: $[M + H]^+$ calculated for $C_{13}H_{17}BrNO$: 282.0488, found 282.0484.

### Scheme 4b. Preparation of 1-(1-(4-bromobutyl)-1*H*-indol-3-yl)ethan-1-one.

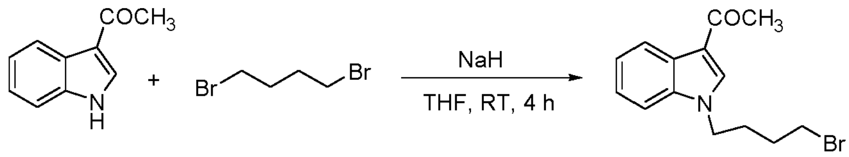


To a stirred suspension of sodium hydride (0.29 g, 12 mmol) in dry THF (20 mL) under $N_2$ at room temperature was added dropwise a solution of 1-(1*H*-indol-3-yl)ethan-1-one (1.59 g, 10 mmol) in dry THF (20 mL). The mixture was stirred for 0.5 h at room temperature and then added over 1 hour to a solution of 1,4-dibromobutane (4.32 g, 10 mmol) in dry THF (20 mL). The resulting mixture was then stirred at room temperature for 4 h. Saturated aqueous $NH_4Cl$ was then added, layers were separated and aqueous phase was extracted with $Et_2O$. Organic layers were combined, dried over $MgSO_4$, filtered and concentrated under reduced pressure. The residue was then purified by flash chromatography on silica eluting with $CH_2Cl_2$/hexane to afford light yellow oil of 1-(1-(4-bromobutyl)-1*H*-indol-3-yl)ethan-1-one (1.06 g, 36%).

$^1$H NMR (400 MHz, $CDCl_3$): δ 8.36 - 8.39 (m, 1 H, Ar), 7.73 (s, 1 H, Ar), 7.29 - 7.36 (m, 3 H, Ar), 4.19 (t, *J* = 7.0 Hz, 2 H, $NCH_2CH_2C\mathit{H}_2CH_2Br$), 3.40 (t, *J* = 6.4 Hz, 2 H, $NCH_2CH_2C\mathit{H}_2CH_2Br$), 2.53 (s, 3 H, CO*Me*)*,* 2.03 - 2.10 (m, 2 H, $NCH_2C\mathit{H}_2C\mathit{H}_2CH_2Br$), 1.85 - 1.92 (m, 2 H, $NCH_2C\mathit{H}_2CH_2CH_2Br$). $^{13}$C NMR (101 MHz, $CDCl_3$): δ 192.9 (s, COMe), 136.6 (s, Ar), 134.4 (s, Ar), 126.3 (s, Ar), 123.3 (s, Ar), 122.7 (s, Ar), 122.5 (s, Ar), 117.2 (s, Ar), 109.6 (s, Ar), 46.2 (s, CO*Me),* 32.6 (s, $NCH_2CH_2CH_2CH_2Br$), 29.7 (s, $NCH_2CH_2CH_2C\mathit{H}_2Br$), 28.4 (s, $NCH_2CH_2C\mathit{H}_2CH_2Br$), 27.6 (s, $NCH_2C\mathit{H}_2CH_2CH_2Br$). HRMS (ESI): m/z: $[M + H]^+$ calculated for $C_{14}H_{17}BrNO$: 294.0488, found 294.0485.

**Scheme 4c.** Photoinduced cyclization of indoles.

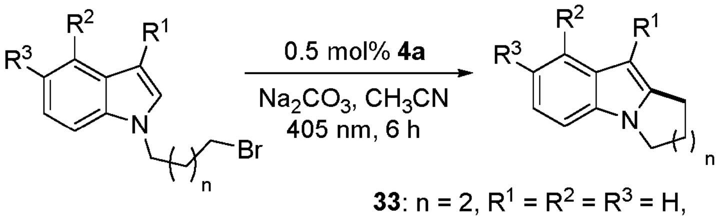


**33**: n = 2, $R^1 = R^2 = R^3$ = H, 96%
**34**: n = 1, $R^1 = R^2 = R^3$ = H, 95%
**35**: n = 2, $R^1 = R^3$= H, $R^2$ = OMe, 95%
**36**: n = 2, $R^1 = R^2$ = H, $R^3$ = F, 94%[a]
**37**: n = 2, $R^1$ = $COCH_3$, $R^2$ = $R^3$ = H, 96%[a]

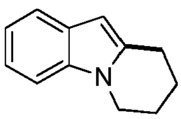
**34**: 96%

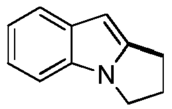
**35**: 94%

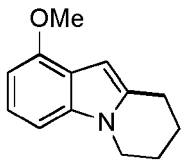
**36**: 95%

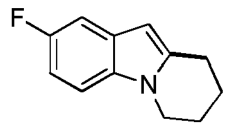
**37**: 94%[b]

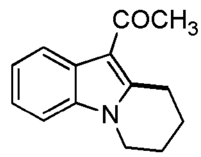
**38**: 96%[b]

Reaction conditions: Bromoalkane (0.5 mmol), $Na_2CO_3$ (1.5 mmol) and **4a** (0.0025 mmol, 0.5 mol%) in $CH_3CN$ (2 mL) under $N_2$ and 405 nm LED (12 W) irradiation for 6 h at room temperature. [a] 1 mol% of **4a**.

To a round bottom flask, bromoalkane (0.5 mmol), gold complex **4a** (0.5 - 1 mol%), $Na_2CO_3$ (1.5 mmol) and $CH_3CN$ (2 mL) were added. The mixture was stirred for 6 h at room temperature under $N_2$ and 405 nm light. After removal of the volatile materials under reduced pressure, the crude product was purified by chromatograph on silica gel (dichloromethane/n-hexane).

**6,7,8,9-Tetrahydropyrido[1,2-a]indole (33).** Performed according to the general procedure to afford 81 mg (94%) **of 33** as white solid (Che, et al., J. Chem. Soc. Dalton Trans. 1990, 3215-3219). $^1$H NMR (400 MHz, $CDCl_3$): δ 7.52 (d, *J* = 7.5 Hz, 1 H, Ar), 7.25 (d, *J*= 8.0 Hz, 1 H, Ar), 7.05 7.14 (m, 2 H, Ar), 6.18 (s, 1 H, Ar), 4.03 (t, *J*= 6.2 Hz, 2 H, $NCH_2CH_2CH_2CH_2Ar$), 2.97 (t, *J* = 6.3 Hz, 2 H, $NCH_2CH_2CH_2CH_2Ar$), 2.04 - 2.10 (m, 2 H, $NCH_2CH_2CH_2CH_2Ar$), 1.85 - 1.91 (m, 2 H, $NCH_2CH_2CH_2CH_2Ar$). $^{13}$C NMR (101 MHz, $CDCl_3$) δ 137.1 (s, Ar), 136.2 (s, Ar), 128.2 (s, Ar), 120.1 (s, Ar), 119.5 (s, Ar), 119.5 (s, Ar), 108.5 (s, Ar), 97.5 (s, Ar), 42.3 (s, $NCH_2CH_2CH_2CH_2Ar$), 24.2 (s, $NCH_2CH_2CH_2CH_2Ar$), 23.4 (s, $NCH_2CH_2CH_2CH_2Ar$), 21.2 (s, $NCH_2CH_2CH_2CH_2Ar$).

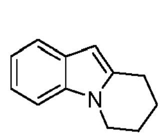

**2,3-Dihydro-1*H*-pyrrolo[1,2-*a*]indole (34).** Performed according to the general procedure to afford 75 mg (95%) of **34** as white solid (Che, et al., J. Chem. Soc. Dalton Trans. 1990, 3215-3219). $^1$H NMR (400 MHz, $CDCl_3$): δ 7.53 (d, *J* = 7.7 Hz, 1 H, Ar), 7.24 (s, 1 H, Ar), 7.02 - 7.12 (m, 2 H, Ar), 6.15 (s, 1 H, Ar), 4.05 (t, *J* = 6.9 Hz, 2 H, $NCH_2CH_2CH_2Ar$), 3.01 (t, *J* = 7.3 Hz, 2 H, $NCH_2CH_2CH_2Ar$), 2.56 - 2.63 (m, 2 H, $NCH_2CH_2CH_2Ar$). $^{13}$C NMR (101 MHz, $CDCl_3$): δ 144.5 (s, Ar), 133.2 (s, Ar), 132.7 (s, Ar), 120.3 (s, Ar), 120.1 (s, Ar), 119.1 (s, Ar), 109.3 (s, Ar), 92.3 (s, Ar), 43.6 (s, $NCH_2CH_2CH_2Ar$), 27.8 (s, $NCH_2CH_2CH_2Ar$), 24.3 (s, $NCH_2CH_2CH_2Ar$).

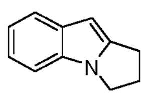

**1-Methoxy-6,7,8,9-tetrahydropyrido[1,2-*a*]indole (35).** Performed according to the general procedure to

afford 96 mg (95%) of **35** as white solid (Zhou, et al., Angew. Chem. 2017, 129, 15889-15893; Angew. Chem. Int. Ed. 2017, 56, 15683-15687). $^1$H NMR (400 MHz, $CDCl_3$): δ 7.05 (t, *J* = 7.9 Hz, 1 H, Ar), 6.90 (d, *J* = 8.2 Hz, 1 H, Ar), 6.52 (d, *J* = 7.7 Hz, 1 H, Ar), 6.27 (d, *J* = 0.9 Hz, 1 H, Ar), 4.01 (t, *J* = 6.2 Hz, 2 H, $NCH_2CH_2CH_2CH_2Ar$), 3.94 (s, 3 H. *OMe),* 2.94 - 2.97 (m, 2 H, $NCH_2CH_2CH_2CH_2Ar$), 2.03 - 2.09 (m, 2 H, $NCH_2CH_2CH_2CH_2Ar$), 1.84 - 1.90 (m, 2 H, $NCH_2CH_2CH_2CH_2Ar$). $^{13}$C NMR (101 MHz, $CDCl_3$): δ 152.6 (s, Ar), 137.7 (s, Ar), 135.6 (s, Ar), 120.8 (s, Ar), 118.5 (s, Ar), 102.3 (s, Ar), 99.9 (s, Ar), 94.7 (s, Ar), 55.4 (s, *OMe),* 42.6 (s, $NCH_2CH_2CH_2CH_2Ar$), 24.2 (s, $NCH_2CH_2CH_2CH_2Ar$), 23.4 (s, $NCH_2CH_2CH_2CH_2Ar$), 21.3 (s, $NCH_2CH_2CH_2CH_2Ar$).

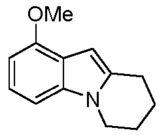

**2-Fluoro-6,7,8,9-tetrahydropyrido[1,2-a]indole (36).** Performed according to the general procedure to afford 89 mg (94%) of **36** as white solid. $^1$H NMR (400 MHz, $CDCl_3$) δ 7.12 - 7.17 (m, 2 H, Ar), 6.83 - 6.88 (m, 1 H, Ar), 6.14 (s, 1 H, Ar), 4.01 (t, *J* = 6.2 Hz, 2 H, $NCH_2CH_2CH_2CH_2Ar$), 2.95 (t, *J* = 6.3 Hz, 2 H, $NCH_2CH_2CH_2CH_2Ar$), 2.04 - 2.10 (m, 2 H, $NCH_2CH_2CH_2CH_2Ar$), 1.84 - 1.90 (m, 2 H, $NCH_2CH_2CH_2CH_2Ar$). $^{13}$C NMR (101 MHz, $CDCl_3$): δ 158.1 (d, $J_{C-F}$ = 233.2 Hz, Ar), 138.9 (s, Ar), 132.9 (s, Ar), 128.4 (d, $J_{C-F}$ = 10.4 Hz, Ar), 108.9 (d, $J_{C-F}$ = 9.9 Hz, Ar), 108.1 (d, $J_{C-F}$ = 26.2 Hz, Ar), 104.4 (d, $J_{C-F}$ = 23.5 Hz, Ar), 97.6 (d, $J_{C-F}$ = 4.5 Hz, Ar), 42.4 (s, $NCH_2CH_2CH_2CH_2Ar$), 24.2 (s, $NCH_2CH_2CH_2CH_2Ar$), 23.3 (s, $NCH_2CH_2CH_2CH_2Ar$), 21.0 (s, $NCH_2CH_2CH_2CH_2Ar$). $^{19}$F NMR (376 MHz, $CDCl_3$): δ -125.3 (s). HRMS (ESI): m/z: $[M + H]^+$ calculated for $C_{12}H_{13}FN$: 190.1027, found 190.1025.

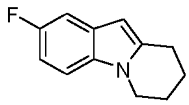

**1-(6,7,8,9-Tetrahydropyrido[1,2-a]indol-10-yl)ethan-1-one (37).** Performed according to the general procedure to afford 102 mg (96%) of **37** as white solid (Wang, et al., Tetrahedron 1999, 55, 6109-6118). $^1$H NMR (400 MHz, $CDCl_3$): δ 7.99 - 8.01 (m, 1 H, Ar), 7.22 - 7.32 (m, 3 H, Ar), 4.08 (t, *J* = 6.1 Hz, 2 H, $NCH_2CH_2CH_2CH_2Ar$), 3.33 (t, *J* = 6.4 Hz, 2 H, $NCH_2CH_2CH_2CH_2Ar$), 2.64 (s, 3 H, $COCH_3$), 2.06 - 2.12 (m, 2 H, $NCH_2CH_2CH_2CH_2Ar$), 1.91 - 1.97 (m, 2 H, $NCH_2CH_2CH_2CH_2Ar$). $^{13}$C NMR (101 MHz, $CDCl_3$): δ 193.9 (s, $COCH_3$), 146.0 (s, Ar), 136.1 (s, Ar), 126.3 (s, Ar), 122.3 (s, Ar), 121.6 (s, Ar), 120.5 (s, Ar), 113.0 (s, Ar), 109.2 (s, Ar), 42.5 (s, $NCH_2CH_2CH_2CH_2Ar$), 31.3 (s, $COCH_3$), 25.6 (s, $NCH_2CH_2CH_2CH_2Ar$), 22.3 (s, $NCH_2CH_2CH_2CH_2Ar$), 20.0 (s, $NCH_2CH_2CH_2CH_2Ar$).

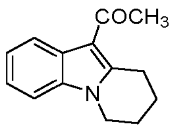

*Dehalogenation of aryl halides*

**Scheme 5.** Photochemical reductive dehalogenation of aryl halides.[a]

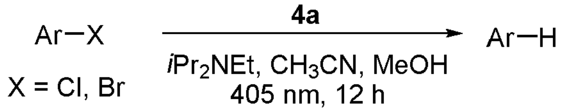


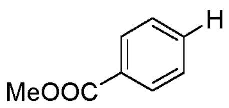

**38**: X = Br, 2 mol%, 99%
X = Cl, 5 mol%, 68%

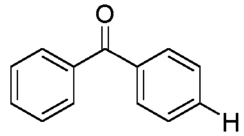

**39**: X = Br, 0.25 mol%, 80%
X = Cl, 5 mol%, 45%

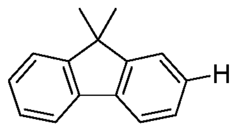

**40**: X = Br, 0.25 mol%, 74%

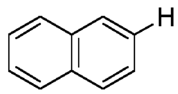

**41**: X = Br, 0.25 mol%, 99%(58%[b])

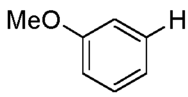

**42**: X = Br, 0.25 mol%, 99%(99%[b], 25%[d])

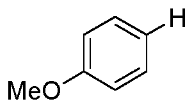

**42**: X = Cl, 5 mol%, 60%

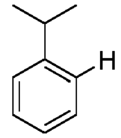

**43**: X = Br, 0.05 mol%, 96%(99%[b], 93%[c])

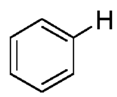

**44**: X = Cl, 5 mol%, 26%

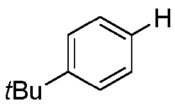

**45**: X = Cl, 5 mol%, 41%

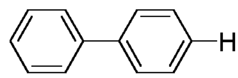

**46**:X = Cl, 5 mol%, 42%

[a] Aryl bromides/chlorides (0.1 mmol), **4a** (0.05-5 mol%), *i*$Pr_2NEt$ (0.2 mmol), $CH_3CN$ (0.5 mL) and MeOH (0.5 mL) under $N_2$ and 405 nm LED (12 W) irradiation for 12 h at room temperature. Yields based on GC-MS analysis using hexadecane as an internal standard. [b] In EtOH (1 mL). [c] **4a** (2 mol%), under 442 nm LED (12 W) irradiation. [d] **1b** (0.25 mol%) instead of **4a**.

To a round bottom flask, aryl bromides or chlorides (0.1 mmol), gold complex 4a (0.05 - 5 mol%), *i*$Pr_2NEt$ (0.2 mmol), $CH_3CN$ (0.5 mL) and MeOH (0.5 mL) were added. The mixture was stirred for 16 h at room temperature under $N_2$ and 405 nm or 442 nm light. The product conversion was determined by GC-MS analysis using hexadecane as an internal standard.

*C-H bonds cleavage*

**Scheme 6.**

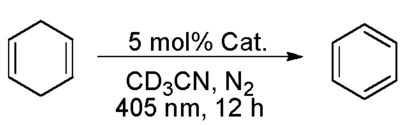


**1b**, 3%
**2b**, 5%
**3b**, 15%
**4a**, 20%
**5a**, 80%

In a glass tube, substrate (0.1 mmol), gold complex (0.005-0.01 mmol), and $CD_3CN$ (0.6 mL) were added. The mixture was stirred for 16 h at room temperature under $N_2$ and 405 nm light. The product conversion was determined by $^1H$ NMR analysis using 1,3,5-trimethoxybenzene as an internal standard.

*ns-TA measurement*

Experiment 1: the ns-TA spectra of complex **4a** [0.04 mM] and in the presence of ISP, BEB, ISP+BEB [2 mM for each] at 31 ns, 10 μs, 100 μs and 2 ms after laser flash [The experiment was conducted in the acetonitrile solution containing $^{n}Bu_4NPF_6$ (0.1 M)]. ISP = 2-phenyl-1,2,3,4-tetrahydroisoquinoline, BEB = (2-bromoethyl)benzene.

Experiment 2: the ns-TA spectra of complex **4a** [0.04 mM] and in the presence of BEB, ISP, BEB+ISP, BEB+TMP, BEB+ISP+TMP [2mM for each] at (left) 100 μs and (right) 2ms after laser flash [The experiment was conducted in the acetonitrile solution containing $^{n}Bu_4NPF_6$ (0.1 M)]. ISP = 2-phenyl-1,2,3,4-tetrahydroisoquinoline, BEB = (2-bromoethyl) benzene, TMP = 2,4,6-trimethylpyridine.

Experiment 3: the ns-TA spectra of complex **4a** [0.04 mM] and in the presence of chloroform, bromoform, 1-bromobutane [2mM] at (left) 0.06 μs; (middle) 10.06 μs and (right) 200.06 μs after laser flash.

***Results***

The capacity of these Au(I) complexes in catalyzing light-induced organic transformation reactions have been examined and the results are described below. The performance of complex **4a** in catalyzing various organic reactions has been compared with known catalysts, such as $[Ru(bpy)_3](Cl)_2$ and [*fac*-$Ir(ppy)_3$], which are most commonly employed photocatalysts in photoredox catalysis. Due to the octahedral geometry of these two photocatalysts, they can only perform outersphere type electron transfer and energy transfer reactions. Complex **4a** has shown results that are comparable to or better than that of $[Ru(bpy)_3](Cl)_2$ and [fac-$Ir(ppy)_3$] in various photocatalytic reactions as described below and some exemplary yields are summerized in **Table 3.** Additionally, the Au(I) complexes, such as complex **4a,** are more cost-friendly compared with known catalysts **(Table 4).**

**Table 3.** Yield of reactions using complex **4a** as the photocatalyst compared with other photocatalysts in a series of reactions.

| Photocatalyst | Yield (%) | | | |
|---|---|---|---|---|
| | homocouplig of (2-bromoethyl) benzene | alkylation of **21** to form **27** | cyclization of indoles to form **33** | reductive dehalogenation of 1-bromo-3-methoxybenzene |
| $[Ru(bpy)_3](Cl)_2$ | < 1 | 12 | < 1 | - |
| [fac-$Ir(ppy)_3$] | 5 | 20 | 2 | - |
| $[Au_2(\mu\text{-dppm})_2](Cl)_2$ (**1a**) | 8 | 65 | 56 | 25 |
| **4a** | 72 | 93 | 99 | 99 |

**Table 4.** Cost of complex **4a** compared with other photocatalysts.

| | Price (1g/RMB) | Brand |
|---|---|---|
| 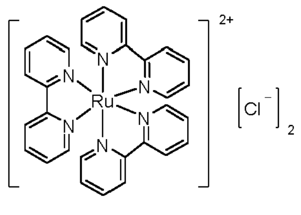 $[Ru(bpy)_3](Cl)_2$ | 1125 | TCI |
| 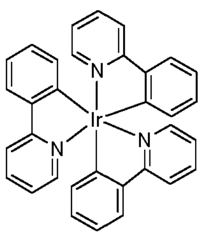 [*fac*-$Ir(ppy)_3$] | 4950 | TCI |

(continued)

| | Price (1g/RMB) | Brand |
|---|---|---|
| 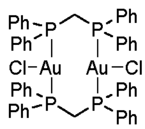 $[Au_2(\mu\text{-dppm})_2](Cl)_2$ (**1a**) | 1100 | synthesized in laboratory |
| 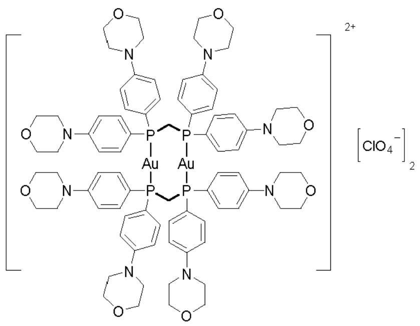 **(4a)** | 1700 | synthesized in laboratory |

*Photoinduced homocouplig of (2-bromoethyl)benzene and alkyl bromides*

Results from the photo-induced homocoupling reaction of (2-bromoethyl)benzene under optimized reaction conditions show the highest yield with **4a** as the photo-catalyst in the presence of *i*$Pr_2$NMe under 405 nm light irradiation **(Table 5a).** Under the same conditions, very low product yields (1-8%) were obtained with other photocatalysts **(Scheme 1).** With **4a** as the photocatalyst, unactivated alkyl bromides can react to give the homocoupled products in 32-53% yields **(Scheme 2, 6-8,** where **6** is produced from the reaction using 1-bromo-4-phenylbutane, **7** is produced from the reaction using 1-bromooctane, and **8** is produced from the reaction using 1-bromocyclohexane). The reaction has proceeded efficiently for various benzyl bromides **(9,10,12,14-16** and **19,** yields: 75-95%), and the substrates with pyridine and methoxy-substituted phenyl groups has given lower product yields **(11:** 53%; **18:** 20%). The reaction with 4-chlorobenzyl bromide afforded the homocoupled product **13a** and dechlorinated product **13b** in 66% and 18% yields, respectively, demonstrating that **4a** can reduce aryl halides upon light irradiation. The reaction with (1-bromoethyl)benzene has given the homocoupled product **20** in 52% yield. Under 442 nm LED irradiation, the reaction with 4-methylbenzyl bromide has given homocoupled product **(10)** in 83% yield, and (2-bromoethyl)benzene has undergone hydrodebromination to give ethylbenzene in 99% yield. Additionally, 4-methylbenzyl chloride has been converted to **10** (92% yield), while no reaction has been observed for (2-chloroethyl)benzene.

**Table 5b** shows the superiority of **4a** among other photocatalysts in the homocoupling of (2-bromoethyl) benzene. Notably, at 2 wt% loading, complex **4a** can catalyze the reaction with a 72% yield, in the presence of *i*$Pr_2$NMe under 405 nm light irradiation. Under the same conditions, when $[Ru(bpy)_3](Cl)_2$, [*fac*-$Ir(ppy)_3$] or **1a** is used, extremely low yields (1-8%) are obtained.

**Table 5a.** Optimization of photoinduced the homocoupling reaction of (2-bromoethyl)benzene

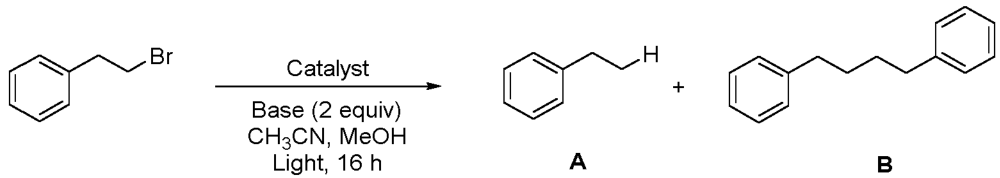


**A** **B**

| Entry[a] | Catalyst | Loading (%) | Light (nm) | Base | **A** (%)[b] | **B** (%)[b] |
|---|---|---|---|---|---|---|
| 1 | **1a** | 1 | 405 | $Et_3N$ | 41 | 8 |
| 2 | **1b** | 1 | 405 | $Et_3N$ | 30 | 11 |
| 3 | **2a** | 1 | 405 | $Et_3N$ | 52 | 13 |
| 4 | **2b** | 1 | 405 | $Et_3N$ | 43 | 14 |
| 5 | **3a** | 1 | 405 | $Et_3N$ | 61 | 20 |
| 6 | **3b** | 1 | 405 | $Et_3N$ | 63 | 17 |
| 7 | **4a** | 1 | 405 | $Et_3N$ | 51 | 49 |
| 8 | **5a** | 1 | 405 | $Et_3N$ | 31 | 9 |
| 9 | **4a** | 1 | 405 | *i*$Pr_2$NEt | 39 | 61 |
| 10 | **4a** | 1 | 405 | *i*$Pr_2$NMe | 33 | 64 |
| 11 | **4a** | 1 | 405 | 1*H*-imidazole | 73 | 9 |
| 12 | **4a** | 1 | 405 | $K_2HPO_4$ | 30 | <1 |
| 13 | **4a** | 1 | 405 | $Na_2CO_3$ | 21 | <1 |
| 14 | **[Ru(bpy)$_3$](Cl)$_2$** | 1 | 405 | *i*$Pr_2$NMe | 9 | <1 |
| 15 | **[*fac*-Ir(ppy)$_3$]** | 1 | 405 | *i*$Pr_2$NMe | 15 | 5 |
| **16** | **4a** | 1 | 442 | *i*$Pr_2$NEt | >99 | <1 |
| **17** | **4a** | 1 | 442 | *i*$Pr_2$NMe | >99 | <1 |
| **18** | **4a** | **2** | **405** | ***i*$Pr_2$NMe** | **28** | **72 (68%[d])** |
| 19 | **4a** | 0.5 | 405 | *i*$Pr_2$NMe | 49 | 51 |
| 20 | - | - | 405 | *i*$Pr_2$NMe | <1 | <1 |
| 21[c] | **4a** | 1 | - | *i*$Pr_2$NMe | <1 | <1 |

[a] Reaction conditions: (2-bromoethyl) benzene (0.125 mmol), base (0.25 mmol) and catalyst in a mixture of solution of MeCN (0.5 mL) and MeOH (0.5 mL) at room temperature under $N_2$ and light (12 W). [b] Based on GC-MS analysis using hexadecane as an internal standard. [c] at 80 °C. [d] Isolated yield.

**Table 5b.** Comparison of **1a, 4a,** $[Ru(bpy)_3](Cl)_2$ and [*fac*-$Ir(ppy)_3$] in catalyzing the homocoupling of (2-bromoethyl) benzene.

| Entry | Photocatalysis | Loading (%) | Base | Yield (%) |
|---|---|---|---|---|
| 1 | $[Au_2(\mu\text{-dppm})_2](Cl)_2$ **(1a)** | 1 | $Et_3N$ | 8 |
| 2 | **4a** | 1 | $Et_3N$ | 49 |
| 3 | **4a** | 1 | *i*$Pr_2NEt$ | 64 |
| 4 | $[Ru(bpy)_3](Cl)_2$ | 1 | *i*$Pr_2NEt$ | < 1 |
| 5 | [*fac*-$Ir(ppy)_3$] | 1 | *i*$Pr_2NEt$ | 5 |
| 6 | **4a** | 2 | *i*$Pr_2NEt$ | 72 |
| 7 | **5a** | 1 | $Et_3N$ | 9 |

*Photochemical alkylation of 2-phenyl-1,2,3,4-tetrahydroisoquinoline*

For photochemical intermolecular C-H alkylation of 2-phenyl-1,2,3,4-tetrahydroisoquinoline **(21)** with alkyl bromides **(Scheme 3** and **Table 6a),** good product yields have been obtained for various benzyl and alkyl bromides **(22-32,** 41-88%) using 2,4,6-trimethylpyridine as a base. **Table 6b** shows the superiority of **4a** among other photocatalysts in the alkylation with bromocyclohexane to form **27.** In sharp contrast to the product yield (53%) obtained with **4a,** the use of $[Ru(bpy)_3](Cl)_2$ or [*fac*-$Ir(ppy)_3$] has given product **27** in low yields of 12-20% under the same reaction conditions, while $[Au_2(\mu\text{-dppm})_2](Cl)_2$ has been found to be almost ineffective (< 5% yield) under 442 nm light irradiation. Further, androsterone bromide has also been successful in the alkylation of **21** to give **32** in 58% yield. The use of $Na_2CO_3$ as a base has also achieved the desired products in 79-85% yields **(22, 30** and **31).** Under 442 nm LED irradiation, products **22, 27** and **29-31** have been obtained in 64-84% yields with 2 mol% loading of complex **4a.**

**Table 6a.** Optimization of photoinduced the reaction of 2-phenyl-1,2,3,4-tetrahydroisoquinoline and bromocyclohexane.

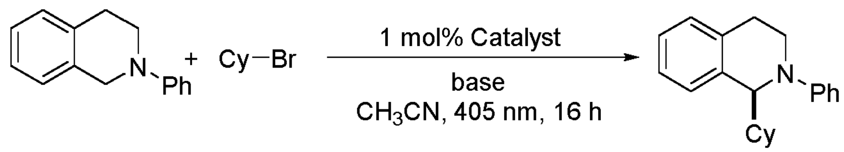


| Entry[a] | Catalyst | Base | Light (nm) | Yield (%)[b] |
|---|---|---|---|---|
| 1 | **1a** | 2,4,6-trimethylpyridine | 405 | 65 |
| 2 | **1b** | 2,4,6-trimethylpyridine | 405 | 60 |
| 3 | **2a** | 2,4,6-trimethylpyridine | 405 | 65 |
| 4 | **2b** | 2,4,6-trimethylpyridine | 405 | 58 |
| 5 | **3a** | 2,4,6-trimethylpyridine | 405 | 60 |
| 6 | **3b** | 2,4,6-trimethylpyridine | 405 | 62 |
| 7 | **4a** | **2,4,6-trimethylpyridine** | **405** | **93 (88[c])** |
| 8 | **[Ru(bpy)$_3$](Cl)$_2$** | 2,4,6-trimethylpyridine | 405 | 12 |
| 9 | **[*fac*-Ir(ppy)$_3$]** | 2,4,6-trimethylpyridine | 405 | 20 |
| 10 | **4a** | *i*Pr$_2$NEt | 405 | 47 |
| 11 | **4a** | *i*Pr$_2$NMe | 405 | 50 |
| 12 | **4a** | 2,4,6-trimethylpyridine | 442 | 53 |
| 13 | **4a** | 2,4,6-trimethylpyridine | 442 | 86[d](83[c]) |
| 14 | **1a** | 2,4,6-trimethylpyridine | 442 | <1 |
| 15 | **4a** | - | 405 | <1 |

[a] Reaction conditions: 2-phenyl-1,2,3,4-tetrahydroisoquinoline (0.125 mmol), bromocyclohexane (0.15 mmol), base (0.25 mmol) and catalyst (0.00125 mmol) in MeCN (1 mL) at room temperature under $N_2$ and light(12 W). [b] Based on NMR analysis using 1,3,5-trimethoxybenzene as an internal standard. [c] Isolated yield. [d] Complex 4a (2 mol%), under 442 nm light (12 W).

**Table 6b.** Comparison of **1a, 4a,** $[Ru(bpy)_3](Cl)_2$ and [*fac*-$Ir(ppy)_3$] in catalyzing the reaction of **21** with bromocyclohexane to form **27.**

| Entry | Photocatalysis | Light | Yield (%) |
|---|---|---|---|
| 1 | $[Ru(bpy)_3](Cl)_2$ | 405 nm | 12 |
| 2 | [*fac*-$Ir(ppy)_3$] | 405 nm | 20 |
| 3 | **1a** | 405 nm | 65 |
| 4 | **4a** | 405 nm | 93 |
| 5 | **1a** | 442 nm | < 5 |
| 6 | **4a** | 442 nm | 53 |

*Cyclization of indoles*

Complex **4a** has catalyzed radical cyclization of 1-(bromoalkyl)-1*H*-indole with excellent product yields **(Scheme 4c, 33-37;** 94-96%; **Table 7a)** with 0.5 mol% complex **4a** under 405 nm LED irradiation, which is comparable to that reported for **1a** under 365 nm LED irradiation and 2.5 mol% catalyst loading. **Table 7b** shows the superiority of **4a** among other photocatalysts in the cyclization of indoles to form **33.** In sharp contrast to the product yield (99%) obtained with **4a,** the use of $[Ru(bpy)_3](Cl)_2$, [*fac*-$Ir(ppy)_3$], or $[Au_2(\mu\text{-dppm})_2](Cl)_2$ has given product **33** in yields of 12%, 20%, or 56% under the same reaction conditions.

**Table 7a.** Optimization of photoinduced cyclization of indoles.

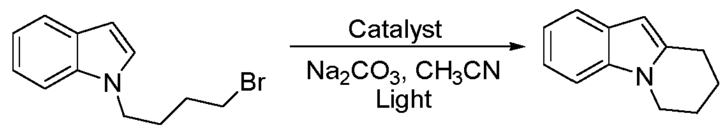


| Entry[a] | Catalyst | Loading (%) | Light (nm) | Time (h) | Conv. (%)[b] |
|---|---|---|---|---|---|
| 1 | **1a** | 2 | 405 | 2 | 56 |
| 2 | **1b** | 2 | 405 | 2 | 50 |
| 3 | **4a** | 2 | 405 | 2 | >99 |
| 4 | **[Ru(bpy)$_3$](Cl)$_2$** | 2 | 405 | 2 | <1 |
| 5 | **[*fac*-Ir(ppy)$_3$]** | 2 | 405 | 2 | 2 |
| 6 | **4a** | 1 | 405 | 2 | 97 |
| 7 | **4a** | 0.5 | 405 | 2 | 84 |
| 8 | **4a** | **0.5** | **405** | 6 | **>99 (96[c])** |
| 9 | **4a** | 0.5 | 442 | 12 | 93 |
| 10 | - | - | 405 | 6 | < 1 |
| 11 | **4a** | 0.5 | | 0 | < 1 |

[a] Reaction conditions: 1-(4-bromobutyl)-1*H*-indole (0.2 mmol), $Na_2CO_3$ (0.60 mmol) and catalyst in MeCN (0.5 mL) at room temperature under $N_2$ and light (12 W).[b] Based on NMR analysis using 1,3,5-trimethoxybenzene as an internal standard. [c] Isolated yield. [d] at 80°C.

**Table 7b.** Comparison of **1a, 4a,** $[Ru(bpy)_3](Cl)_2$ and [*fac*-$Ir(ppy)_3$] in catalyzing the cyclization of indoles to form **33.**

| Entry | Photocatalysis | Yield (%) |
|---|---|---|
| 1 | $[Ru(bpy)_3](Cl)_2$ | <1 |
| 2 | [*fac*-$Ir(ppy)_3$] | 2 |
| 3 | **1a** | 56 |
| 4 | **4a** | 99 |

*Reductive radical dehalogenation of aryl halides*

For reductive radical dehalogenation, complex **4a** has been found to convert various aryl bromides (Ar-Br) to arenes (Ar-H) in good to excellent yields **(Scheme 5, 39-43,** 74-99%) with 0.25 mol% catalyst loading. 2 mol% loading of **4a** has been used to convert methyl 4-bromobenzoate to arene **38** in 99%. In comparison, for the reaction with 1-bromo-3-methoxybenzene, **1b** only produces the debrominated product **42** in 25% yield under the same conditions. Notably, the reaction of 1-bromo-2-isopropylbenzene has given isopropylbenzene **(43)** in 96% yield with 0.05 mol% loading of **4a** under 405 nm LED irradiation, and in 93% yield with 2 mol% loading of **4a** under 442 nm LED irradiation. Various aryl chlorides have also been converted to arenes in yields from 26% to 68% **(Scheme 5, 38, 39, 42** and **44-46,** 26-68%) with 5 mol% loading of **4a.** Previously, only a few photocatalysts have been reported to be efficient in reducing unactivated aryl bromides and chlorides with catalyst loading > 1 mol%. For example, Tran, et al. reported using $[Au_2(\mu\text{-dppm})_2](Cl)_2$ **(1a)** to catalyze the dehalogenation of methyl 4-bromobenzoate with <20% product yield using 5 mol% catalyst (Organic Letters 2016, 18, 4308-4311). Here, **4a** has shown to catalyze dehalogenation of methyl 4-bromobenzoate with 99% product yield using 2 mol% catalyst. Further, **4a** catalyzed the reaction to give product **42** in 99% yield, while **1b** produced the same debrominated product **42** in 25% yield under the same conditions. Complex **4a** has shown the highest activity among the reported photocatalysts.

*Photoinduced C-H bonds cleavage*

For photoinduced C-H bonds cleavage, complex **5a** has been found to convert various substrates to their respective products **(Table 8).** Further, the dehydrogenation of cyclohexa-1,4-diene using complex **5a** has been compared with other photocatalysts **(Scheme 6).** The results show the outstanding activity of **5a** in catalyzing this reaction. For the dehydrogenation of 1,4-cyclohexadiene using $[Ru(bpy)_3]^{2+}$ or $[Ir(ppy)_3]$, the product yield is < 1% or 1%, respectively.

**Table 8**. Photoinduced C-H bonds cleavage catalyzed with **5a**.[a]

| **Entry** | **Substrate** | **Product** | **Yield (%)** |
|---|---|---|---|
| 1 | 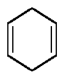 | 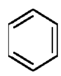 | 80 |
| 2 | 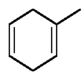 | 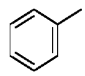 | 77 |
| 3 | 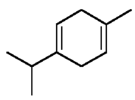 | 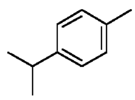 | 50 |
| 4 | 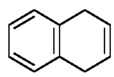 | 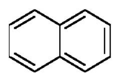 | 36 |
| 5 | 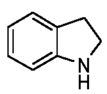 | 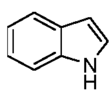 | 21 |
| 6 | 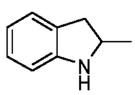 | 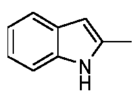 | 14 |

(continued)

| Entry | Substrate | Product | Yield (%) |
|---|---|---|---|
| 7 | 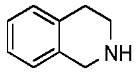 | 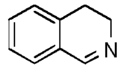 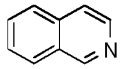 | 52<br>16 |
| 8 | 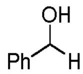 | 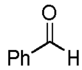 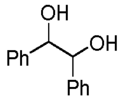 | 6[b]<br>8[b] |
| | | | Turnover number |
| 9 | 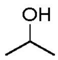 | 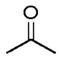 | 42[c] |
| [a] Substrate (0.1 mmol), **5a** (5 mol%, 0.005 mmol), $CD_3CN$ (0.6 mL) under $N_2$ and 405 nm LED (12 W) irradiation for 12 h at room temperature; yield based on NMR analysis using 1,3,5-trimethoxybenzene as an internal standard. [b] 365 nm LED (24 W) irradiation. [c] **5a** (10 mg) in isopropyl alcohol under $N_2$ and 365 nm LED (24 W) irradiation for 12 h. | | | |

*Mechanistic study*

Regarding the reaction mechanism of photochemical alkylation of 2-phenyl-1,2,3,4-tetrahydroisoquinoline **(21),** reductive quenching of the excited state of **4a** by **21** ($k_q$' = 5.21×$10^9$ $M^{-1}s^{-1}$) has been proposed to be the dominating pathway, leading to the generation of long-lived ns-TA signal upon light irradiation, as demonstrated by the ns-TA spectra of complex **4a** (data not shown) and kinetic studies of Δ O.D. intensity at 374 nm of solutions containing complex **4a** and substrates **(Figure 6A)).** The emissive excited state of complex **4a** can be quenched by halocarbons such as chloroform, bromoform and 1-bromobutane with relatively small quenching rate constants of 1.97×$10^7$ $s^{-1}$, 4.7×$10^7$ $s^{-1}$ and 2.72×$10^6$ $s^{-1}$, respectively. ns-TA measurements of $CH_3CN$ solutions containing complex **4a** and halocarbons (data not shown) and the kinetic data have shown long-lived, positive absorption difference band at 500-700 nm, demonstrating that this reaction may also proceed via an oxidative quenching pathway. A plausible reaction mechanism involving both oxidative and reductive processes has been proposed in **Scheme 7.**

For photochemical reductive dehalogenation of aryl halides, the triplet excited state of complex **4a** can be quenched by chlorobenzene with $k_q$ of 1.83×$10^7$ $M^{-1}s^{-1}$. ns-TA measurements in $CH_3CN$ have shown that after the initial ΔO.D. decay of complex **4a** at 440 nm (< 5 μs), an increase in ΔO.D. at 440 nm and a concomitant decrease in ΔO.D. at 540 nm have been observed over 90 μs, showing a series of reactions following photo-excitation of complex **4a** in the presence of chlorobenzene **(Figures 6B and 6C** and **Scheme 8).**

**Scheme 7.** Proposed reaction pathway for photoinduced alkylation of 2-phenyl-1,2,3,4-tetrahydroisoquinoline by complex **4a**.

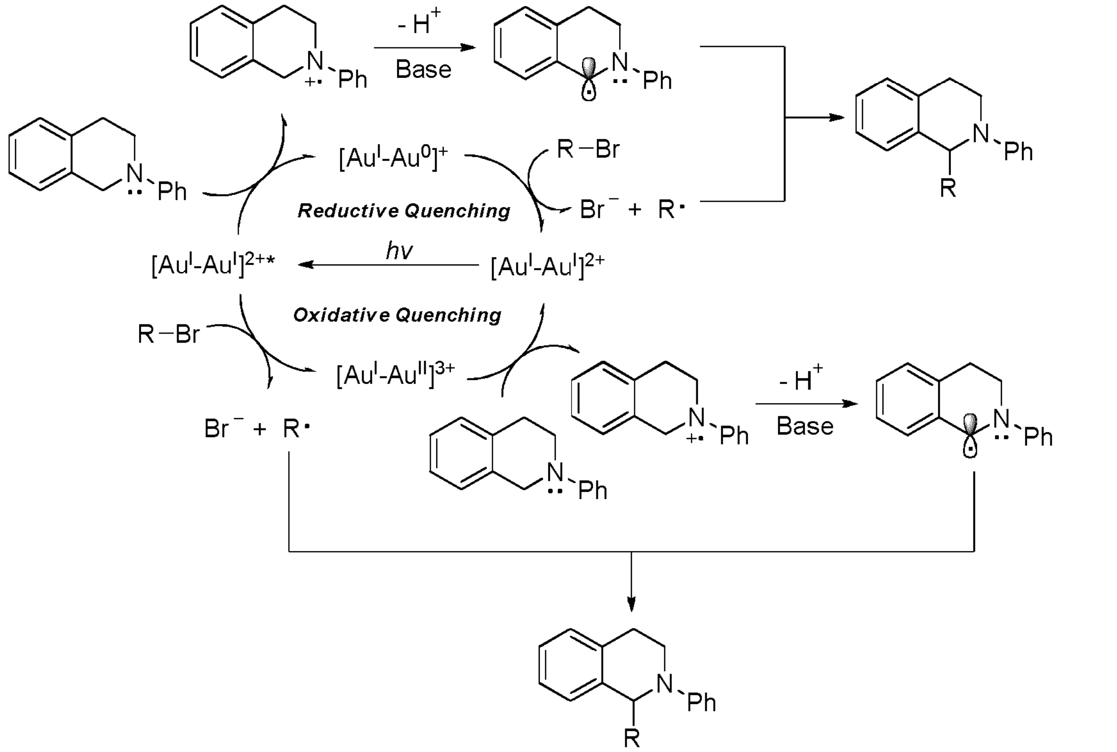


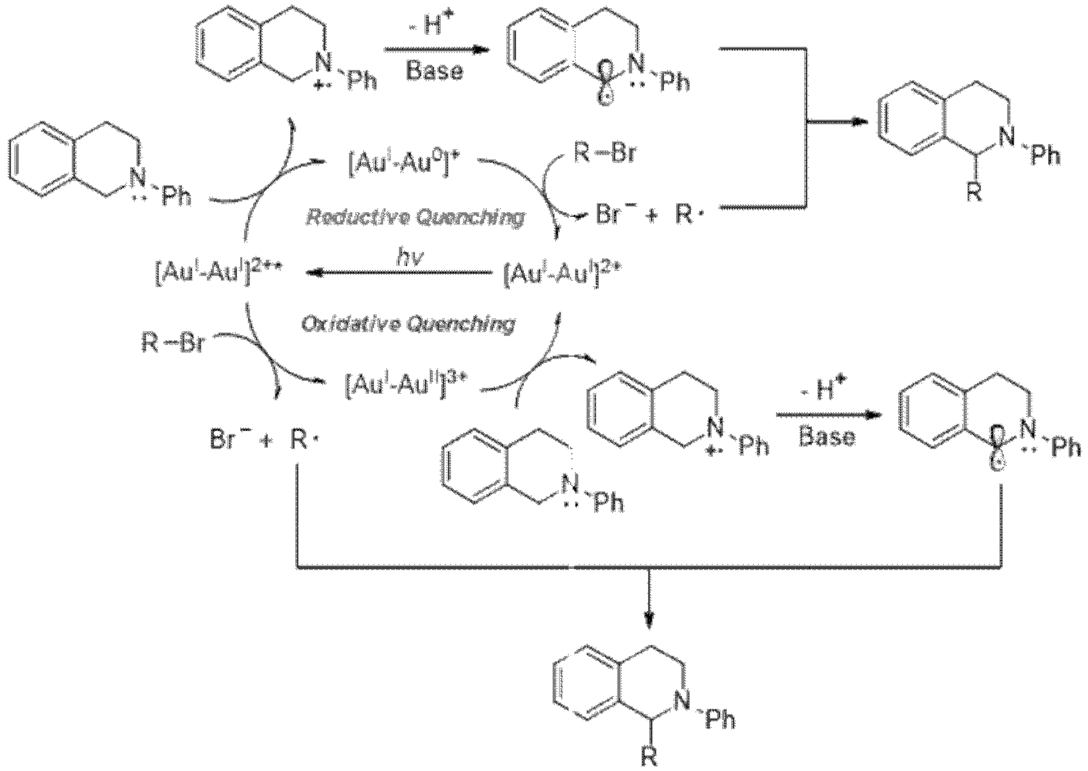

**Scheme 8.** Proposed reaction pathway for photoinduced reductive hydrodehalogenation of aryl halides by complex **4a**

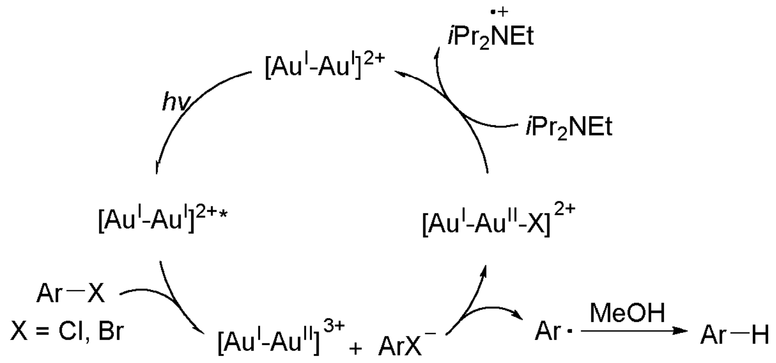


In summary, tuning of excited state nature of binuclear gold(I) diphosphine complexes and their use as a visible-light-activated carbon-halide cleaving agent under mild reaction conditions have been demonstrated. Among these, the morpholino-functionalized complex **4a** can drive visible-light-induced C-C bond formation with unactivated alkyl bromides, and reduction of aryl halides with modest to excellent yields and with only 0.05-5 mol% loading of catalyst. The sterically bulky complex **5a** can activate C-H bonds upon light irradiation.

**References:**

Yam and Cheng, Chem. Soc. Rev. 2008, 37, 1806.
Tiekink and Kang, Coord. Chem. Rev. 2009, 253, 1627.
He and Yam, Coord. Chem. Rev. 2011, 255, 2111.
Yam and Cheng, Top. Curr. Chem. 2007, 281, 269.
Bayrakdar, et al., Chem. Soc. Rev. 2020, 49, 7044.
Schmidbaur and Raubenheimer, Angew. Chem. 2020, 132, 14856.
Che and Lai, Coord. Chem. Rev. 2005, 249, 1296.
Ravotto and Ceroni, Coord. Chem. Rev. 2017, 346, 62.
Tiekink, Coord. Chem. Rev. 2014, 275, 130.
Xie, et al., Chem. Soc. Rev. 2017, 46, 5193.
Zidan, et al., Catal. Sci. Technol. 2018, 8, 6019.
Hendrich, et al., Chem. Rev. 2020, doi.org/10.1021/acs.chemrev.0c00824.
Sauer, et al., ChemCatChem 2017, 9, 4456.
Witzel, et al., Adv. Synth. Catal. 2017, 359, 1522.
Xie, et al., Angew. Chem. 2018, 130, 16890.
Witzel, et al., Chem. Commun. 2018, 54, 13802.
Huang, et al., Angew. Chem. 2016, 128, 4888.
Zhang, et al., ACS Catal. 2019, 9, 6118.
Si, et al., Org. Lett. 2020, 22, 5844.
Che, et al., J. Chem. Soc., Chem. Commun. 1989, 885.
Che, et al., J. Chem. Soc. Dalton Trans. 1990, 3215.
Li, et al., J. Chem. Soc. Dalton Trans. 1992, 3325.
Pyykkö and Mendizabal, Inorg. Chem. 1998, 37, 3018.
Pyykkö and Zhao, Angew. Chem. 1991, 103, 622.
Fu, et al., Angew. Chem. 1999, 111, 2953.
Fu, et al., Chem. Eur. J. 2001, 7, 4656.
Ma, et al., Chem. Eur. J. 2015, 21, 13888.
Revol, et al., Angew. Chem. 2013,125, 13584.
Tran, et al., Org. Lett. 2016, 18, 4308.
Kaldas, et al., Org. Lett. 2015, 17, 2864.
Cannillo, et al., Org. Lett. 2016, 18, 2592.
McCallum and Barriault, Chem. Sci. 2016, 7, 4754.

McCallum, et al., Eur. J. Org. Chem. 2015, 81.
McTieman, et al., Catal. Sci. Technol. 2016, 6, 201.
Zidan, et al., Org. Lett. 2020, 22, 8401.
Xie, et al., Chem. Eur. J. 2016, 22, 12646.
Xie, et al., Angew. Chem. 2015, 127, 6144.
Xie, et al., Org. Chem. Front. 2016, 3, 841.
Xie, et al., Angew. Chem. 2016, 128, 2987.
Yang, et al., Chem. Sci. 2016, 7, 3123.
Chow, et al., Chem. Asian J. 2014, 9, 534.
Broglia, et al., J. Photoch. Photobio. A. 2005, 170, 261.
Ohkubo, et al., Chem. Sci. 2011, 2, 715.
Li, et al., Angew. Chem. 2018, 130, 14325.
Zhou, et al., Angew. Chem. 2017, 129, 15889.
Bartling, et al., J. Am. Chem. Soc. 2016, 138, 11860.
Yang, et al., Angew. Chem. 2017, 129, 3748.
Wang, et al., Chem. Eur. J. 2015, 21, 1184.
Alonso, et al., Chem. Rev. 2002, 102, 4009.
Hokamp, et al., Angew. Chem. 2017, 129, 13459.
Haibach, et al., Angew. Chem. 2017, 129, 15319.
Ghosh, et al., Science 2014, 346, 725.
Discekici, et al., Chem. Commun. 2015, 51, 11705.
Majek, et al., Chem. Eur. J. 2015, 21, 15496.
Neumeier, et al., Chem. Eur. J. 2018, 24, 105.
Prier, et al., Chem. Rev. 2013, 113, 5322-5363.
Yu, et al., Chem. Rev. 2021, 121, 506-561.
Fu, et al., Angew. Chem. Int. Ed. 1999, 38, 2783-2785.

## Claims

**1.** A gold (I) complex having a structure:

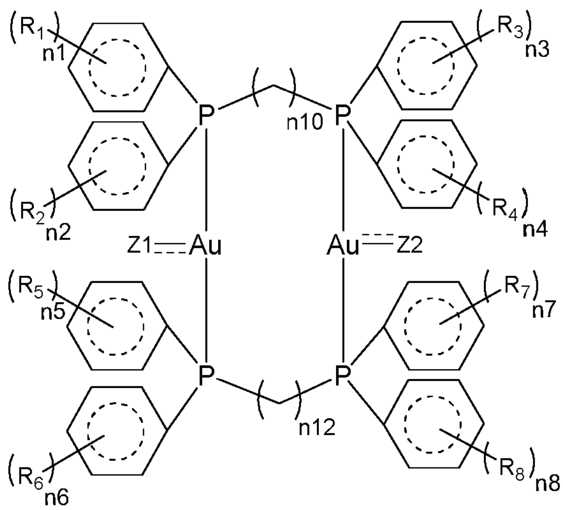

,

Formula IIa

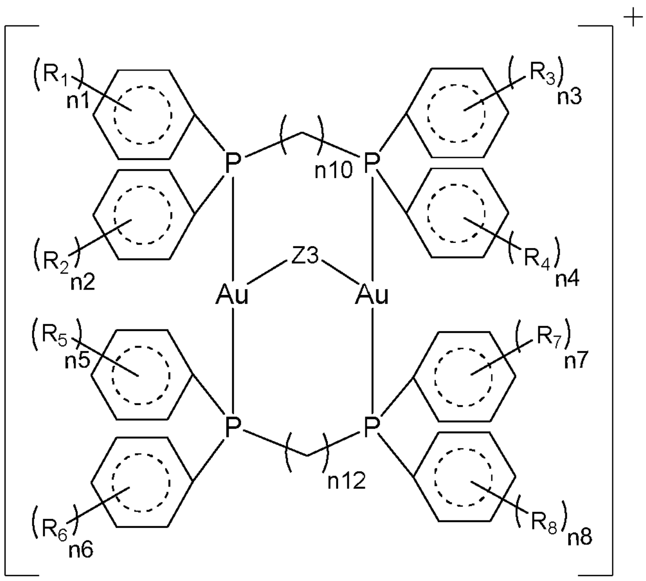

A'

,

Formula IIb

or

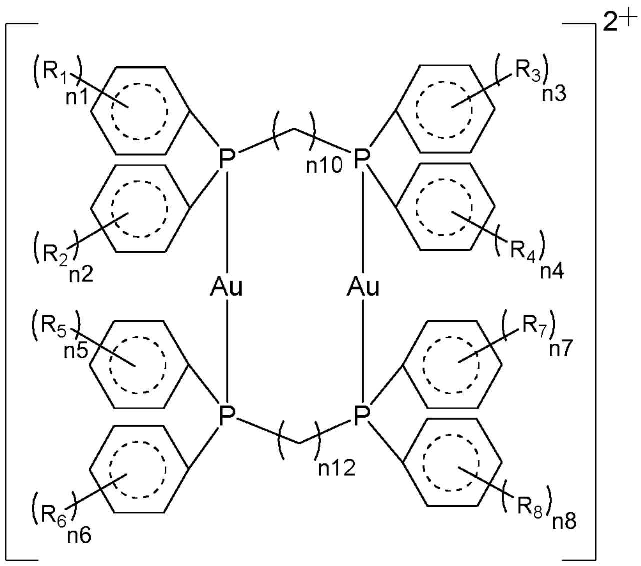

2A'

Formula IIc

wherein:

(a) n10 and n12 are 1;
(b) $R_1$-$R_8$ are independently substituted or unsubstituted aryl, substituted or unsubstituted polyaryl, substituted or unsubstituted heterocyclyl, or amino;
(c) n1-n8 are independently an integer between 1 and 5;
(d) each ------ is independently absent or a single bond;
(e) Z1 and Z2 are independently a halide (fluoride, chloride, bromide, or iodide), a triflate, a sulfonate, a dicyanoaurate, a cyano, a nitrate, a hydroxyl, or a carboxylate;
(f) Z3 is a halide (fluoride, chloride, bromide, or iodide), an oxygen, a sulfur, or a carboxylate;
(g) each occurrence of A' is an anion;
(h) the substituents are independently a substituted or unsubstituted alkyl, a substituted or unsubstituted heterocyclyl, a substituted or unsubstituted aryl, a substituted or unsubstituted polyaryl, a substituted or

unsubstituted alkoxy, a phenoxy, an aroxy, an amino, or a combination thereof; and

wherein:

each alkyl is a straight chain alkyl group, a branched chain alkyl group or a cycloalkyl group;
each amino includes a group selected from

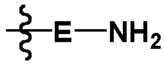

(primary amino),

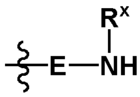

(secondary amino),

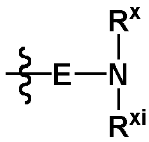

(tertiary amino), and

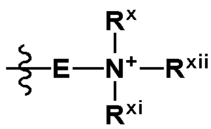

(quaternary amino), wherein:

E is absent,
$R^x$, $R^{xi}$, and $R^{xii}$ each independently represent a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted alkylaryl, a substituted or unsubstituted arylalkyl, a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, a phosphonyl, a sulfinyl, a silyl, a thiol, an amido, an amino, or $-(CH_2)_m-R'''$;
$R'''$ represents a hydroxyl group, a substituted or unsubstituted carbonyl group, a substituted or unsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino;
m is zero or an integer ranging from 1 to 8;
each alkenyl is a straight-chain alkenyl group, a branched-chain alkenyl group, or a cycloalkenyl group;
each alkynyl is a straight-chain alkynyl group, a branched-chain alkynyl group, or a cycloalkynyl group; and
each amido is represented by the general formula:

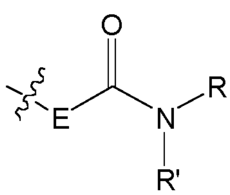

or

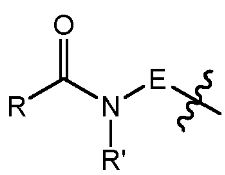

wherein:

E is absent, and
R and R' each independently represent a hydrogen, a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted alkylaryl, a substituted or unsubstituted arylalkyl, a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, a phosphonyl, a sulfinyl, a silyl, a thiol, an amido, an amino, or $-(CH_2)_m-R'''$, or R and R' taken together with the N atom to which they are attached complete a heterocycle having from 3 to 14 atoms in the ring structure;
R''' represents a hydroxyl group, a substituted or unsubstituted carbonyl group, a substituted or unsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino; and
m is zero or an integer ranging from 1 to 8.

**2.** The gold (I) complex of claim 1, wherein $R_1$-$R_8$ are independently substituted or unsubstituted aryl, substituted or unsubstituted polyaryl or substituted or unsubstituted heterocyclyl.

**3.** The gold (I) complex of claim 1, wherein $R_1$-$R_8$ are independently substituted or unsubstituted heterocyclyl,

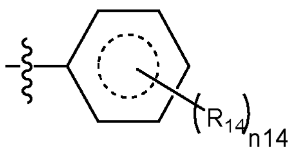

,

where $R_{14}$ is halogen, hydrogen, hydroxyl, haloalkyl, alkoxyl, unsubstituted alkenyl, or substituted or unsubstituted alkyl, n14 is an integer from 0 to 5, wherein $R_{14}$ is preferably independently unsubstituted $C_1$-$C_{10}$ alkyl, unsubstituted $C_1$-$C_8$ alkyl, unsubstituted $C_1$-$C_6$ alkyl, unsubstituted $C_1$-$C_8$ alkyl, unsubstituted $C_1$-$C_4$ alkyl, or unsubstituted $C_1$-$C_3$ alkyl;
wherein "alkenyl" refers to straight-chain alkenyl groups, branched-chain alkenyl and cycloalkenyl.

**4.** The gold (I) complex of claim 1, wherein Z1-Z3 are independently a halide.

**5.** The gold (I) complex of claim 1, wherein each occurrence of A' is hydride, oxide, fluoride, sulfide, chloride, bromide, iodide, hydrogen phosphate, dihydrogen phosphate, hexafluorophosphate, triflate, sulfate, nitrate, hydrogen sulfate, nitrite, thiosulfate, sulfite, hypochlorite, hypobromite, carbonate, hydrogen carbonate, perchlorate, acetate, formate, cyanide, amide, cyanate, peroxide, thiocyanate, or hydroxide.

**6.** The gold (I) complex of claim 1, wherein the gold (I) complex has a structure:

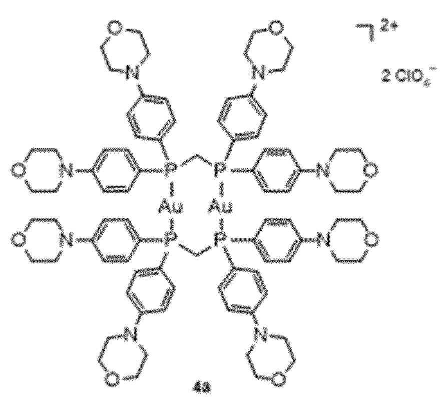

4a

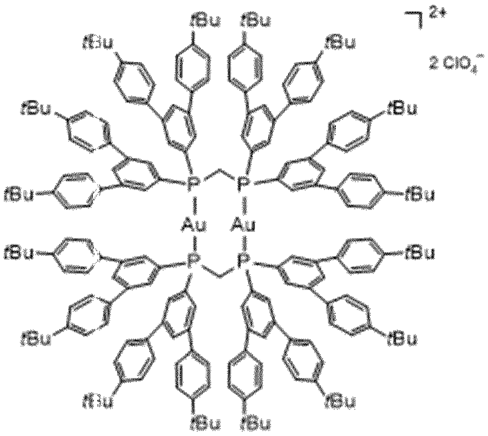

5a

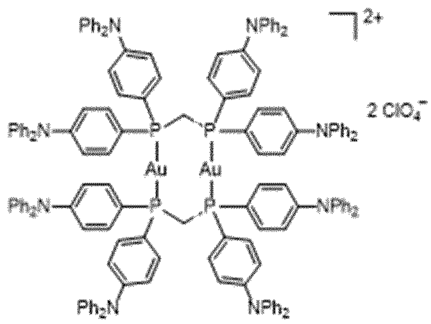

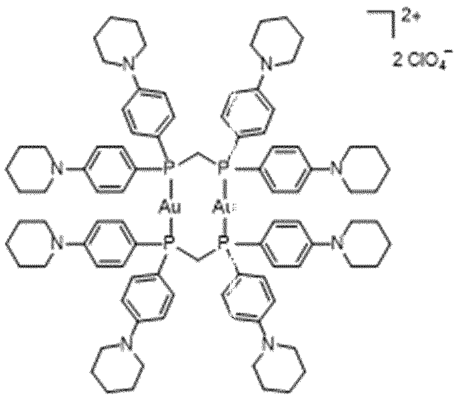

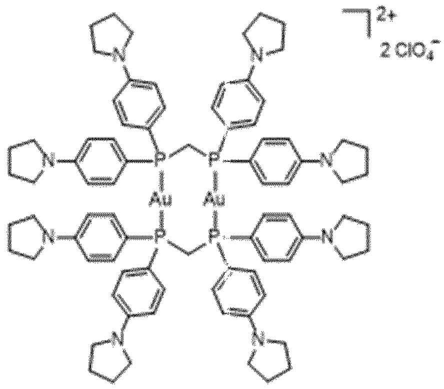

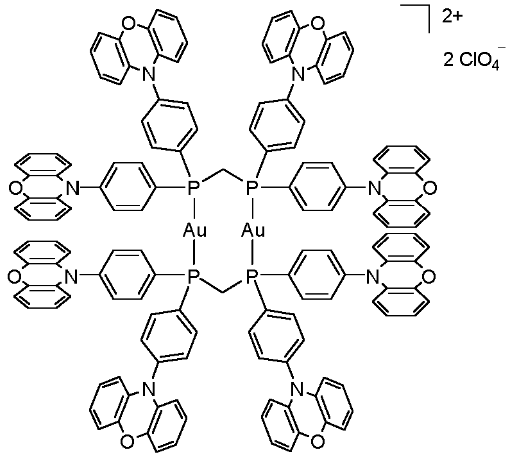

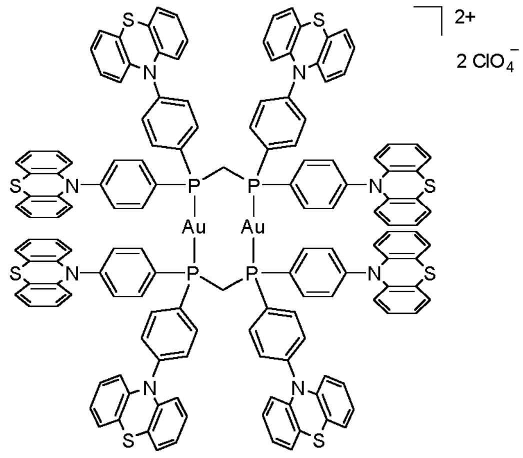

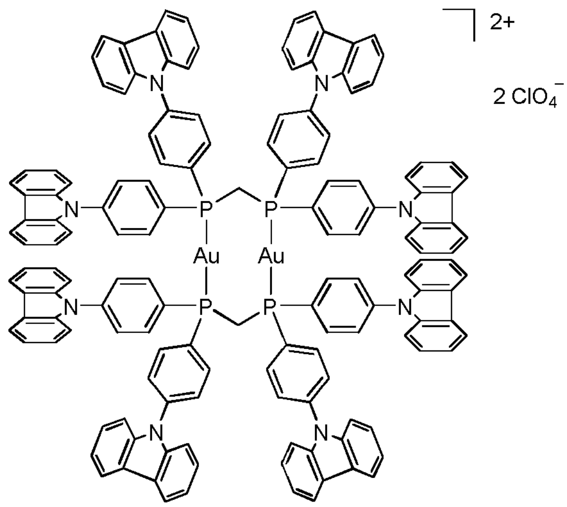

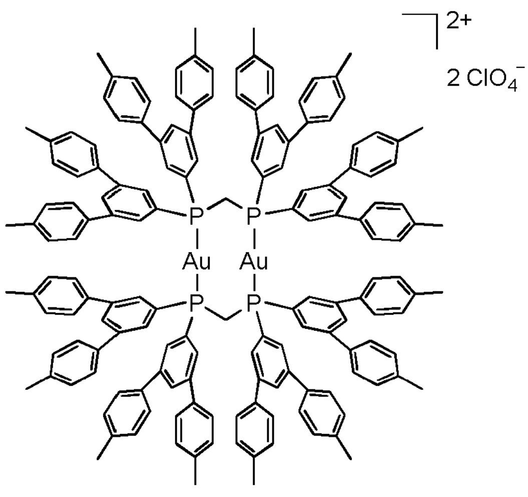

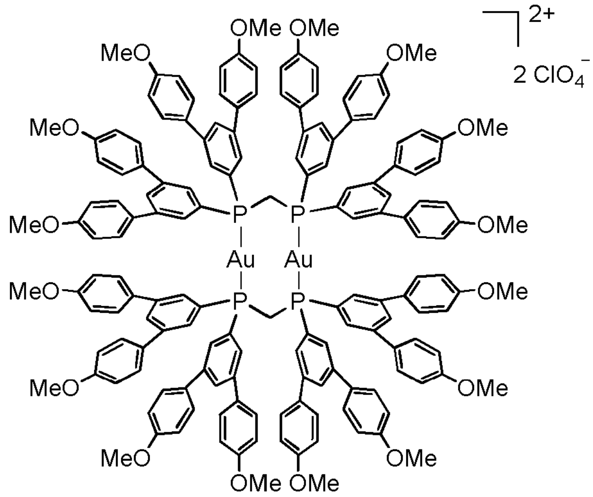

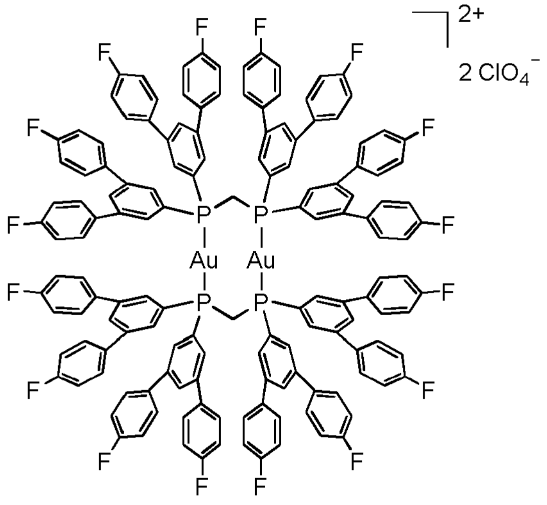

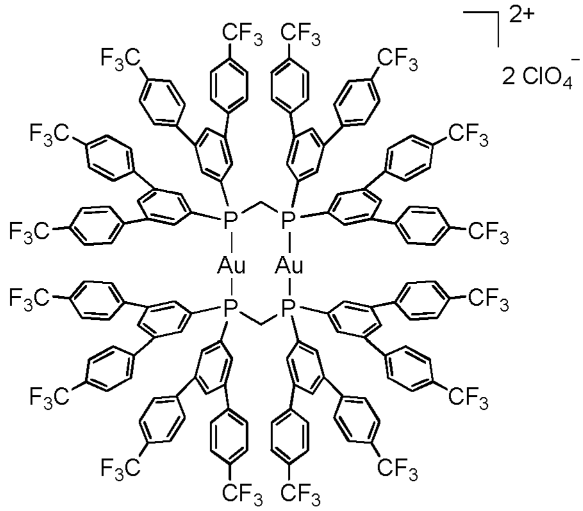

**7.** A method of catalyzing a photoredox reaction using one or more gold (I) complex(es) of claim 1, wherein the method comprises:

(i) exposing a reaction mixture to a light at a temperature for a period of time sufficient to form a product, wherein the reaction mixture comprises a reactant, optionally more than one reactant, a solvent, and the one or more gold (I) complex(es), and
wherein the light has a wavelength in a range from about 360 nm to about 450 nm, from about 370 nm to about 450 nm, from about 380 nm to about 450 nm, from about 390 nm to about 450 nm, from about 400 nm to about 450 nm, or from about 405 nm to about 450 nm, such as about 405 nm or about 445 nm; for example

wherein the photoredox reaction is homocoupling of organic halides, alkylation of 2-phenyl-1,2,3,4-tetrahydroisoquinoline, cyclization of indoles, reductive dehalogenation of aryl halides, or cleavage of C-H bonds, or a combination thereof.

**Patentansprüche**

**1.** Gold(I)-Komplex mit einer folgenden Struktur:

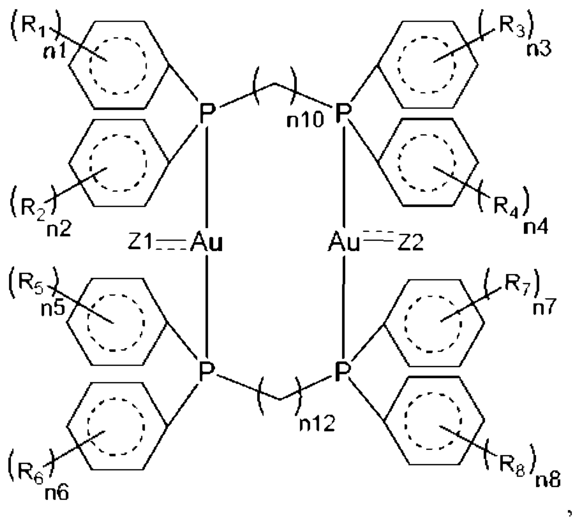

,

Formel IIa

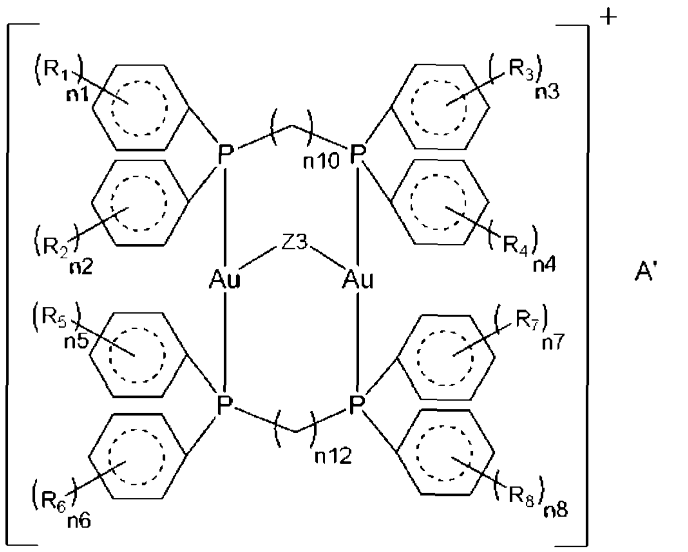

Formel IIb

oder

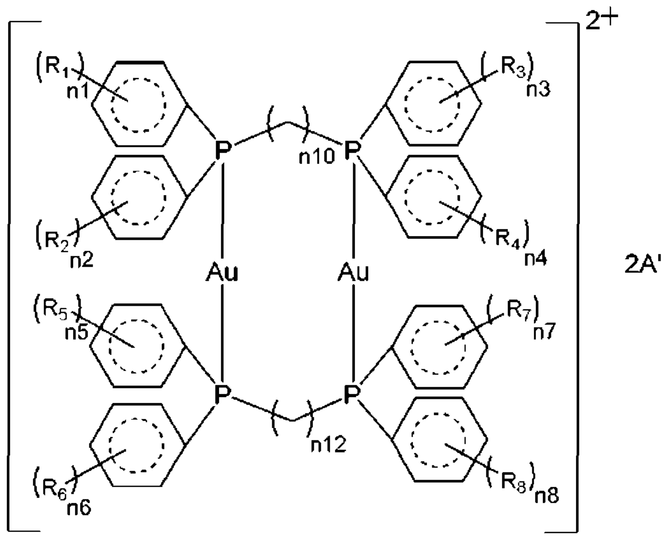

Formel IIc,

wobei:

(a) n10 und n12 1 sind;
(b) $R_1$-$R_8$ unabhängig substituiertes oder unsubstituiertes Aryl, substituiertes oder unsubstituiertes Polyaryl, substituiertes oder unsubstituiertes Heterocyclyl oder Amino sind;
(c) n1-n8 unabhängig eine ganze Zahl zwischen 1 und 5 sind;
(d) jedes -- -- -- unabhängig fehlt oder eine Einfachbindung ist;
(e) Z1 und Z2 unabhängig ein Halogenid (Fluorid, Chlorid, Bromid oder Iodid), ein Triflat, ein Sulfonat, ein Dicyanoaurat, ein Cyano, ein Nitrat, ein Hydroxyl oder ein Carboxylat sind;
(f) Z3 ein Halogenid (Fluorid, Chlorid, Bromid oder Iodid), ein Sauerstoff, ein Schwefel oder ein Carboxylat ist;
(g) jedes Vorkommen von A' ein Anion ist;
(h) die Substituenten unabhängig voneinander ein substituiertes oder unsubstituiertes Alkyl, ein substituiertes oder unsubstituiertes Heterocyclyl, ein substituiertes oder unsubstituiertes Aryl, ein substituiertes oder unsubstituiertes Polyaryl, ein substituiertes oder unsubstituiertes Alkoxy, ein Phenoxy, ein Aroxy, ein Amino oder eine Kombination davon sind; und

wobei:

jedes Alkyl eine geradkettige Alkylgruppe, eine verzweigtkettige Alkylgruppe oder eine Cycloalkylgruppe ist; jedes Amino eine Gruppe enthält, die ausgewählt ist aus

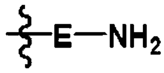

(primäres Amino),

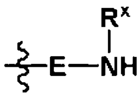

(sekundäres Amino),

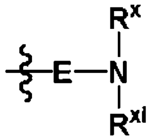

(tertiäres Amino) und

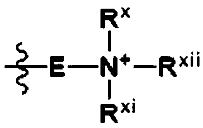

(quaternäres Amino),
wobei:

E fehlt,
$R^x$, $R^{xi}$ und $R^{xii}$ jeweils unabhängig voneinander ein substituiertes oder unsubstituiertes Alkyl, ein substituiertes oder unsubstituiertes Alkenyl, ein substituiertes oder unsubstituiertes Alkinyl, ein substituiertes oder unsubstituiertes Carbonyl, ein substituiertes oder unsubstituiertes Heterocyclyl, ein substituiertes oder unsubstituiertes Alkylaryl, ein substituiertes oder unsubstituiertes Arylalkyl, ein substituiertes oder unsubstituiertes Aryl, ein substituiertes oder unsubstituiertes Heteroaryl, ein substituiertes oder unsubstituiertes Polyaryl, ein substituiertes oder unsubstituiertes Polyheteroaryl, ein substituiertes oder unsubstituiertes Heterocyclyl, ein Hydroxyl, ein Alkoxy, ein Phosphonium, ein Phosphanyl, ein Phosphonyl, ein Sulfinyl, ein Silyl, ein Thiol, ein Amido, ein Amino oder $-(CH_2)_m-R'''$ darstellen;
$R'''$ eine Hydroxylgruppe, eine substituierte oder unsubstituierte Carbonylgruppe, ein substituiertes oder unsubstituiertes Aryl, ein substituiertes oder unsubstituiertes Cycloalkyl, ein substituiertes oder unsubstituiertes Cycloalkenyl, ein substituiertes oder unsubstituiertes Heterocyclyl, ein substituiertes oder unsubstituiertes Aryl, ein substituiertes oder unsubstituiertes Heteroaryl, ein substituiertes oder unsubstituiertes Polyaryl, ein substituiertes oder unsubstituiertes Polyheteroaryl, ein Alkoxy, ein Phosphonium, ein Phosphanyl, ein Amido oder ein Amino darstellt;
m Null oder eine ganze Zahl im Bereich von 1 bis 8 ist;
jedes Alkenyl eine geradkettige Alkenylgruppe, eine verzweigtkettige Alkenylgruppe oder eine Cycloalkenylgruppe ist;
jedes Alkinyl eine geradkettige Alkinylgruppe, eine verzweigtkettige Alkinylgruppe oder eine Cycloalkinylgruppe ist; und
jedes Amido durch die folgende allgemeine Formel dargestellt ist:

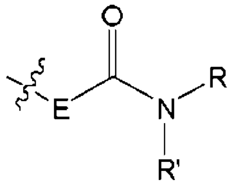

oder

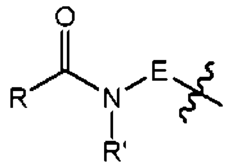

wobei:

E fehlt und
R und R' jeweils unabhängig voneinander einen Wasserstoff, ein substituiertes oder unsubstituiertes Alkyl, ein substituiertes oder unsubstituiertes Alkenyl, ein substituiertes oder unsubstituiertes Alkinyl, ein substituiertes oder unsubstituiertes Carbonyl, ein substituiertes oder unsubstituiertes Heterocyclyl, ein substituiertes oder unsubstituiertes Alkylaryl, ein substituiertes oder unsubstituiertes Arylalkyl, ein substituiertes oder unsubstituiertes Aryl, ein substituiertes oder unsubstituiertes Heteroaryl, ein substituiertes oder unsubstituiertes Polyaryl, ein substituiertes oder unsubstituiertes Polyheteroaryl, ein substituiertes oder unsubstituiertes Heterocyclyl, ein Hydroxyl, ein Alkoxy, ein Phosphonium, ein Phosphanyl, ein Phosphonyl, ein Sulfinyl, ein Silyl, ein Thiol, ein Amido, ein Amino oder $-(CH_2)_m-R'''$ darstellen oder R und R' zusammengenommen mit dem N-Atom, an das sie gebunden sind, einen Heterocyclus mit 3 bis 14 Atomen in der Ringstruktur vervollständigen;
R''' eine Hydroxylgruppe, eine substituierte oder unsubstituierte Carbonylgruppe, ein substituiertes oder unsubstituiertes Aryl, ein substituiertes oder unsubstituiertes Cycloalkyl, ein substituiertes oder unsubstituiertes Cycloalkenyl, ein substituiertes oder unsubstituiertes Heterocyclyl, ein substituiertes oder unsubstituiertes Aryl, ein substituiertes oder unsubstituiertes Heteroaryl, ein substituiertes oder unsubstituiertes Polyaryl, ein substituiertes oder unsubstituiertes Polyheteroaryl, ein Alkoxy, ein Phosphonium, ein Phosphanyl, ein Amido oder ein Amino darstellt; und
m Null oder eine ganze Zahl im Bereich von 1 bis 8 ist.

**2.** Gold(I)-Komplex nach Anspruch 1, wobei $R_1$-$R_8$ unabhängig substituiertes oder unsubstituiertes Aryl, substituiertes oder unsubstituiertes Polyaryl oder substituiertes oder unsubstituiertes Heterocyclyl sind.

**3.** Gold(I)-Komplex nach Anspruch 1, wobei $R_1$-$R_8$ unabhängig voneinander substituiertes oder unsubstituiertes Heterocyclyl,

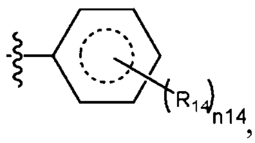

sind, wobei $R_{14}$ Halogen, Wasserstoff, Hydroxyl, Halogenalkyl, Alkoxyl, unsubstituiertes Alkenyl oder substituiertes oder unsubstituiertes Alkyl ist, n14 eine ganze Zahl von 0 bis 5 ist, wobei $R_{14}$ vorzugsweise unabhängig unsubstituiertes $C_1$-$C_{10}$-Alkyl, unsubstituiertes $C_1$-$C_8$-Alkyl, unsubstituiertes $C_1$-$C_6$-Alkyl, unsubstituiertes $C_1$-$C_5$-Alkyl, unsubstituiertes $C_1$-$C_4$-Alkyl oder unsubstituiertes $C_1$-$C_3$-Alkyl ist;
wobei sich "Alkenyl" auf geradkettige Alkenylgruppen, verzweigtkettiges Alkenyl und Cycloalkenyl bezieht.

**4.** Gold(I)-Komplex nach Anspruch 1, wobei Z1-Z3 unabhängig ein Halogenid sind.

**5.** Gold(I)-Komplex nach Anspruch 1, wobei jedes Vorkommen von A' Hydrid, Oxid, Fluorid, Sulfid, Chlorid, Bromid, Iodid, Hydrogenphosphat, Dihydrogenphosphat, Hexafluorophosphat, Triflat, Sulfat, Nitrat, Hydrogensulfat, Nitrit, Thiosulfat, Sulfit, Hypochlorit, Hypobromit, Carbonat, Hydrogencarbonat, Perchlorat, Acetat, Formiat, Cyanid, Amid, Cyanat, Peroxid, Thiocyanat oder Hydroxid ist.

**6.** Gold(I)-Komplex nach Anspruch 1, wobei der Gold(I)-Komplex eine folgende Struktur aufweist:

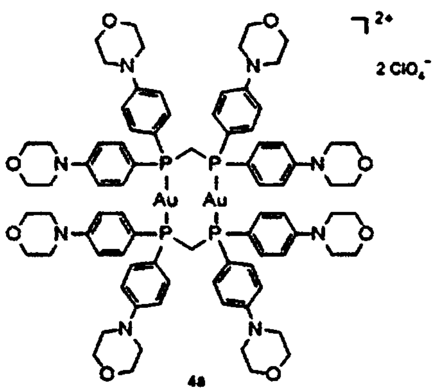

4a

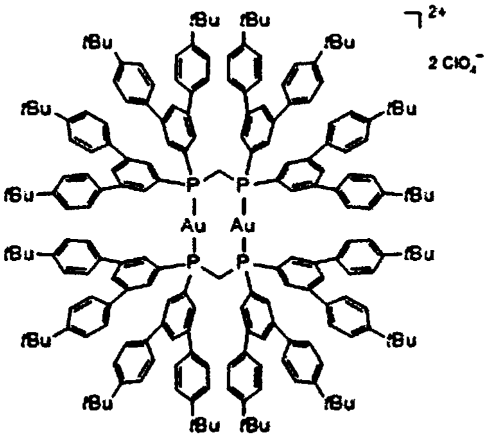

5a

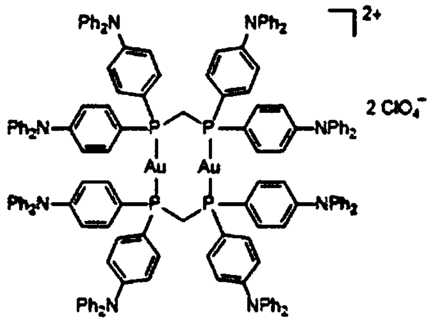

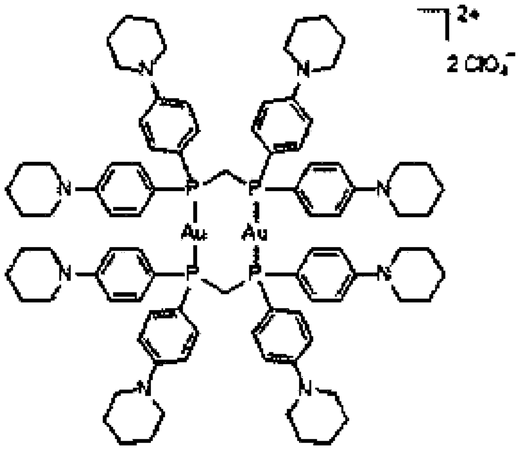

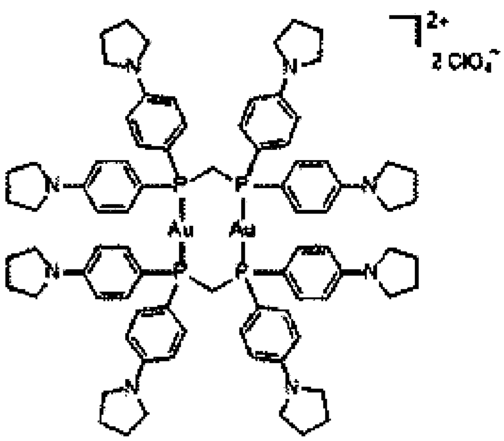

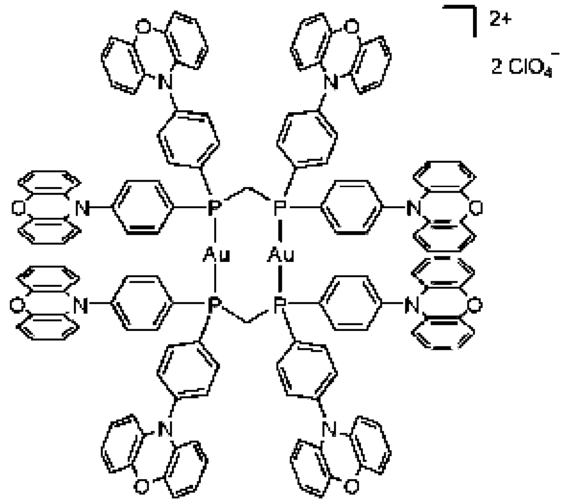

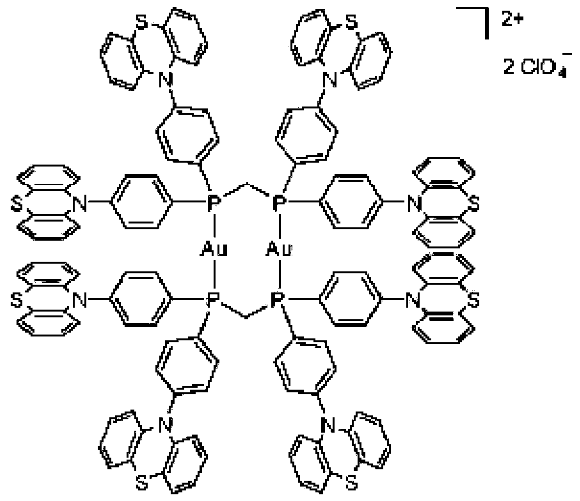

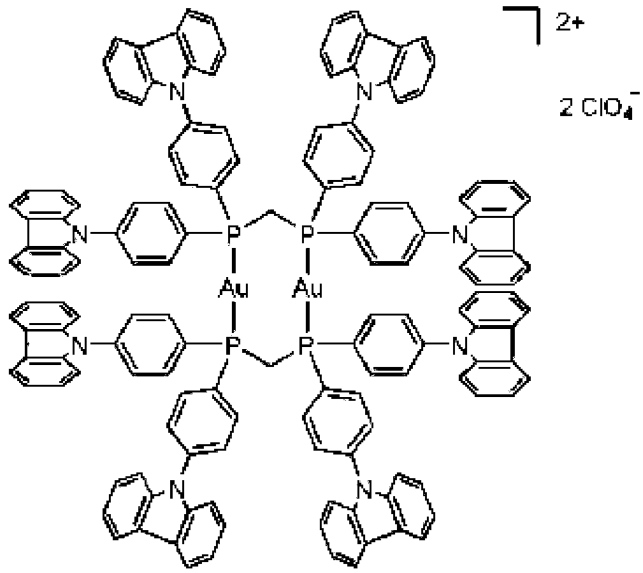

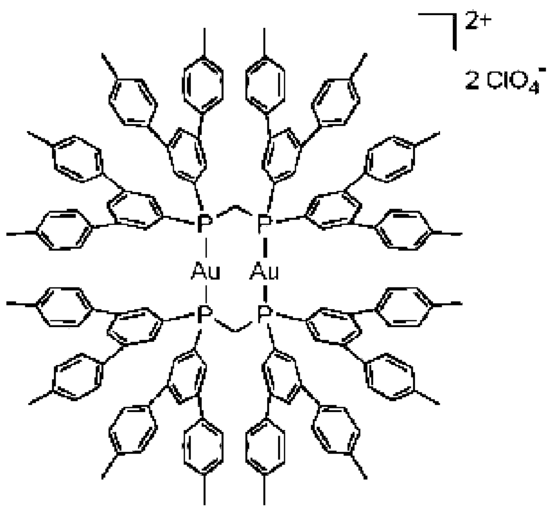

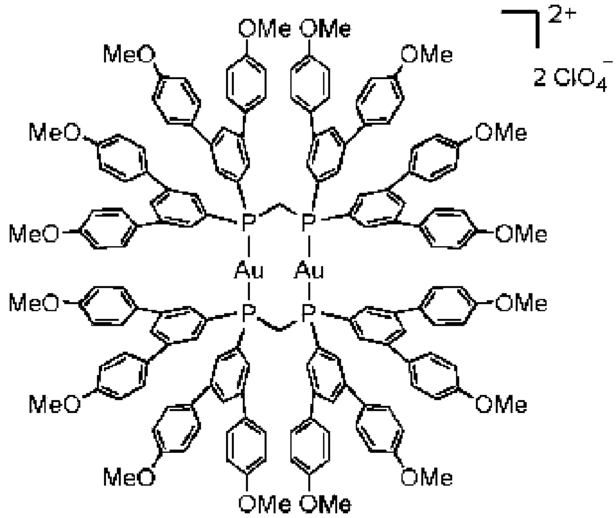

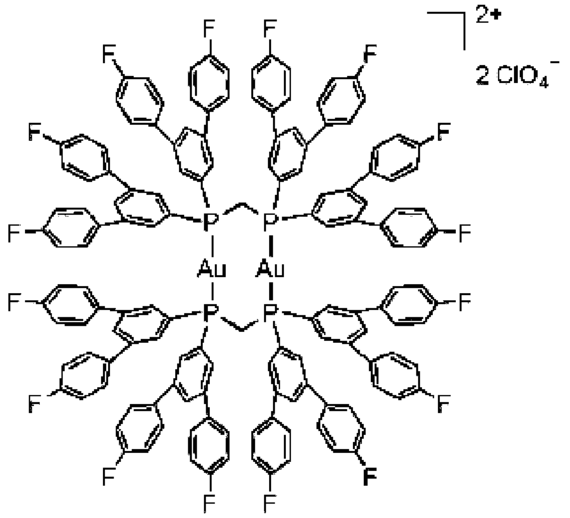

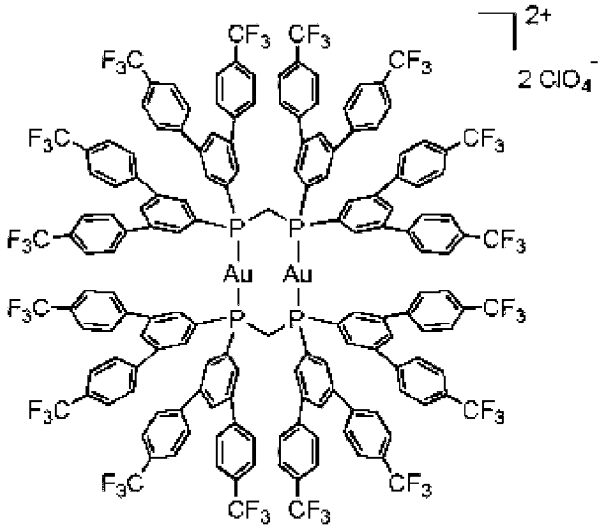

.

7. Verfahren zum Katalysieren einer Photoredox-Reaktion unter Verwendung eines oder mehrerer Gold(I)-Komplexe(s) nach Anspruch 1, wobei das Verfahren Folgendes umfasst:

(i) Aussetzen eines Reaktionsgemisches einem Licht bei einer Temperatur für einen Zeitraum, die ausreichen, um ein Produkt auszubilden,
wobei das Reaktionsgemisch einen Reaktanten, optional mehr als einen Reaktanten, ein Lösungsmittel und den einen oder die mehreren Gold(I)-Komplex(e) umfasst und
wobei das Licht eine Wellenlänge in einem Bereich von ungefähr 360 nm bis ungefähr 450 nm, von ungefähr 370 nm bis ungefähr 450 nm, von ungefähr 380 nm bis ungefähr 450 nm, von ungefähr 390 nm bis ungefähr 450 nm, von ungefähr 400 nm bis ungefähr 450 nm oder von ungefähr 405 nm bis ungefähr 450 nm, wie ungefähr 405 nm oder ungefähr 445 nm aufweist; zum Beispiel
wobei die Photoredox-Reaktion eine Homokupplung von organischen Halogeniden, Alkylierung von 2-Phenyl-1,2,3,4-tetrahydroisochinolin, Cyclisierung von Indolen, reduktive Dehalogenierung von Arylhalogeniden oder Spaltung von C-H-Bindungen oder eine Kombination davon ist.

## Revendications

1. Complexe d’or (I) présentant une structure :

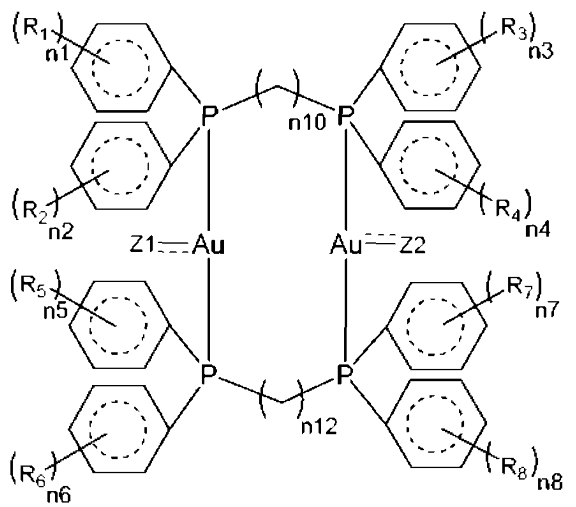

,

Formule IIa

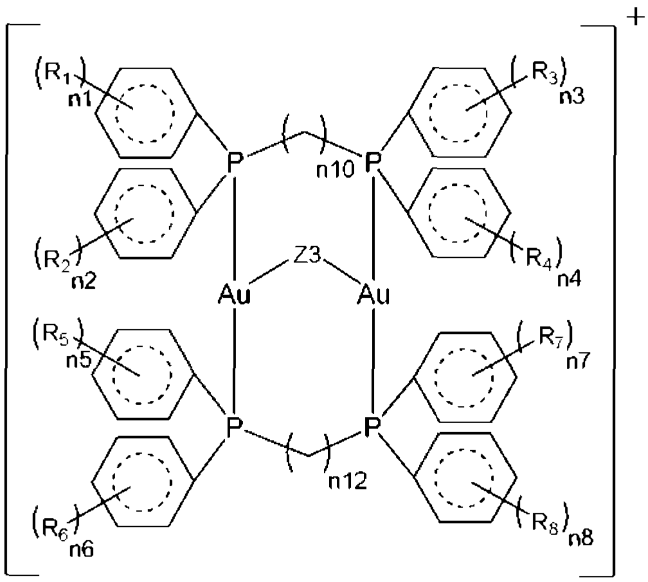

A'

,

Formule IIb

ou

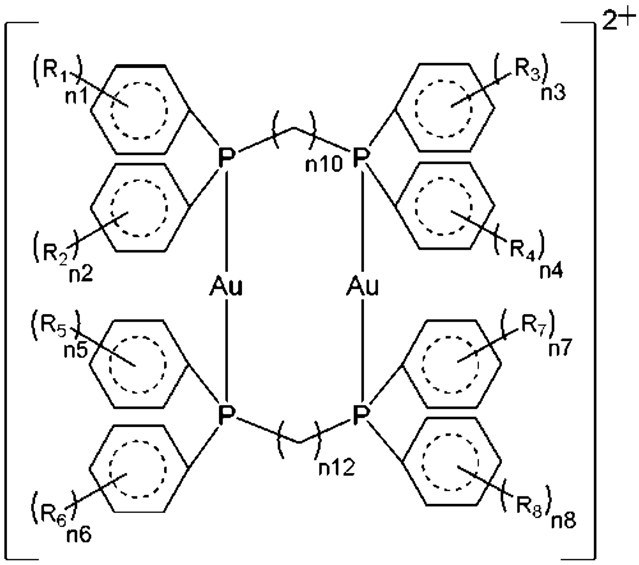

2A'

Formule IIc

où :

(a) n10 et n12 valent 1 ;
(b) $R_1$-$R_8$ sont indépendamment un aryle substitué ou non substitué, un polyaryle substitué ou non substitué, un hétérocyclyle substitué ou non substitué ou un amino ;
(c) n1-n8 sont indépendamment un entier compris entre 1 et 5 ;
(d) chaque ----- est indépendamment absent ou une liaison simple ;
(e) Z1 et Z2 sont indépendamment un halogénure (fluorure, chlorure, bromure ou iodure), un triflate, un sulfonate, un dicyanoaurate, un cyano, un nitrate, un hydroxyle ou un carboxylate ;
(f) Z3 est un halogénure (fluorure, chlorure, bromure ou iodure), un oxygène, un soufre ou un carboxylate ;
(g) chaque occurrence de A' est un anion ;
(h) les substituants sont indépendamment un alkyle substitué ou non substitué, un hétérocyclyle substitué ou non substitué, un aryle substitué ou non substitué, un polyaryle substitué ou non substitué, un alcoxy substitué ou non

substitué, un phénoxy, un aroxy, un amino, ou une combinaison de ceux-ci ; et

où :

chaque alkyle est un groupe alkyle à chaîne linéaire, un groupe alkyle à chaîne ramifiée ou un groupe cycloalkyle ; chaque amino comprend un groupe choisi parmi

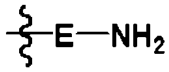

(amino primaire),

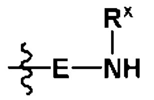

(amino secondaire),

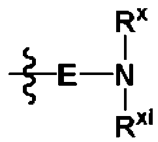

(amino tertiaire) et

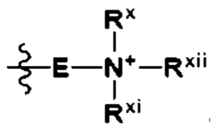

(amino quaternaire), où :

E est absent,
$R^x$, $R^{xi}$ et $R^{xii}$ représentent chacun indépendamment un alkyle substitué ou non substitué, un alcényle substitué ou non substitué, un alcynyle substitué ou non substitué, un carbonyle substitué ou non substitué, un hétérocyclyle substitué ou non substitué, un alkylaryle substitué ou non substitué, un arylalkyle substitué ou non substitué, un aryle substitué ou non substitué, un hétéroaryle substitué ou non substitué, un polyaryle substitué ou non substitué, un polyhétéroaryle substitué ou non substitué, un hétérocyclyle substitué ou non substitué, un hydroxyle, un alcoxy, un phosphonium, un phosphanyle, un phosphonyle, un sulfinyle, un silyle, un thiol, un amido, un amino ou $-(CH_2)_m-R'''$ ;
R''' représente un groupe hydroxyle, un groupe carbonyle substitué ou non substitué, un aryle substitué ou non substitué, un cycloalkyle substitué ou non substitué, un cycloalcényle substitué ou non substitué, un hétérocyclyle substitué ou non substitué, un aryle substitué ou non substitué, un hétéroaryle substitué ou non substitué, un polyaryle substitué ou non substitué, un polyhétéroaryle substitué ou non substitué, un alcoxy, un phosphonium, un phosphanyle, un amido ou un amino ;
m vaut zéro ou est un entier compris entre 1 et 8 ;
chaque alcényle est un groupe alcényle à chaîne linéaire, un groupe alcényle à chaîne ramifiée ou un groupe cycloalcényle ;
chaque alcynyle est un groupe alcynyle à chaîne linéaire, un groupe alcynyle à chaîne ramifiée ou un groupe cycloalcynyle ; et
chaque amido est représenté par la formule générale :

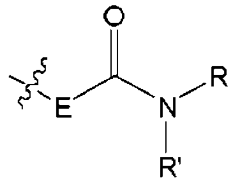

ou

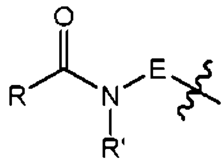

où :

E est absent, et
R et R' représentent chacun indépendamment un hydrogène, un alkyle substitué ou non substitué, un alcényle substitué ou non substitué, un alcynyle substitué ou non substitué, un carbonyle substitué ou non substitué, un hétérocyclyle substitué ou non substitué, un alkylaryle substitué ou non substitué, un arylalkyle substitué ou non substitué, un aryle substitué ou non substitué, un hétéroaryle substitué ou non substitué, un polyaryle substitué ou non substitué, un polyhétéroaryle substitué ou non substitué, un hétérocyclyle substitué ou non substitué, un hydroxyle, un alcoxy, un phosphonium, un phosphanyle, un phosphonyle, un sulfinyle, un silyle, un thiol, un amido, un amino ou $-(CH_2)_m-R'''$, ou R et R' pris conjointement avec l'atome N auquel ils sont liés, complètent un hétérocycle comportant 3 à 14 atomes dans la structure cyclique ;
R''' représente un groupe hydroxyle, un groupe carbonyle substitué ou non substitué, un aryle substitué ou non substitué, un cycloalkyle substitué ou non substitué, un cycloalcényle substitué ou non substitué, un hétérocyclyle substitué ou non substitué, un aryle substitué ou non substitué, un hétéroaryle substitué ou non substitué, un polyaryle substitué ou non substitué, un polyhétéroaryle substitué ou non substitué, un alcoxy, un phosphonium, un phosphanyle, un amido ou un amino ; et
m vaut zéro ou est un entier compris entre 1 et 8.

2. Complexe d'or (I) de la revendication 1, dans lequel $R_1$-$R_8$ sont indépendamment un aryle substitué ou non substitué, un polyaryle substitué ou non substitué ou un hétérocyclyle substitué ou non substitué.

3. Complexe d'or (I) de la revendication 1, dans lequel $R_1$-$R_8$ sont indépendamment un hétérocyclyle substitué ou non substitué,

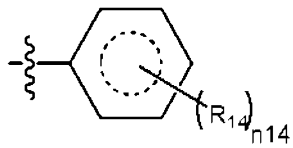,

où $R_{14}$ est un halogène, un hydrogène, un hydroxyle, un halogénoalkyle, un alcoxyle, un alcényle non substitué ou un alkyle substitué ou non substitué, n14 est un entier de 0 à 5, où $R_{14}$ est de préférence indépendamment un alkyle en $C_1$-$C_{10}$ non substitué, un alkyle en $C_1$-$C_8$ non substitué, un alkyle en $C_1$-$C_6$ non substitué, un alkyle en $C_1$-$C_8$ non substitué, un alkyle en $C_1$-$C_4$ non substitué ou un alkyle en $C_1$-$C_3$ non substitué ;
où « alcényle » fait référence à des groupes alcényle à chaîne linéaire, un alcényle à chaîne ramifiée et un cycloalcényle.

4. Complexe d'or (I) de la revendication 1, dans lequel Z1-Z3 sont indépendamment un halogénure.

5. Complexe d'or (I) de la revendication 1, dans lequel chaque occurrence de A' est un hydrure, un oxyde, un fluorure, un sulfure, un chlorure, un bromure, un iodure, un hydrogénophosphate, un dihydrogénophosphate, un hexafluorophosphate, un triflate, un sulfate, un nitrate, un hydrogénosulfate, un nitrite, un thiosulfate, un sulfite, un hypochlorite, un hypobromite, un carbonate, un hydrogénocarbonate, un perchlorate, un acétate, un formiate, un cyanure, un amide, un cyanate, un peroxyde, un thiocyanate ou un hydroxyde.

6. Complexe d'or (I) de la revendication 1, dans lequel le complexe d'or (I) présente une structure :

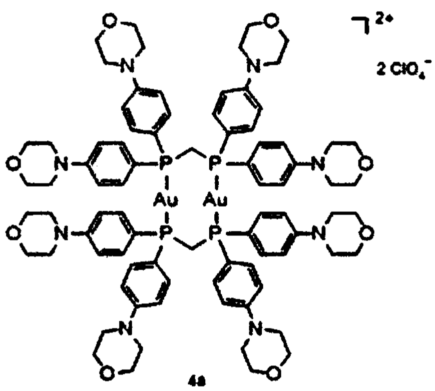

4a

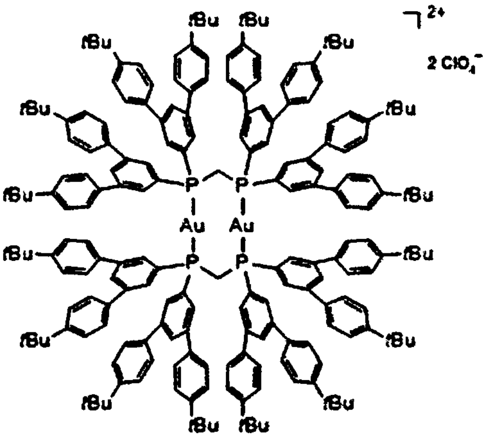

5a

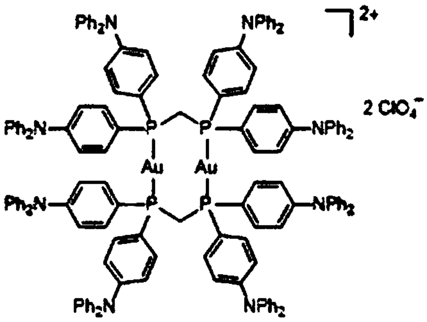

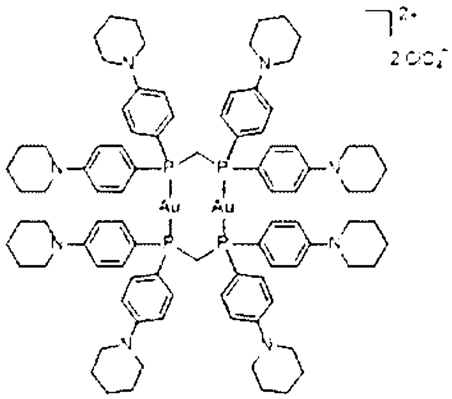

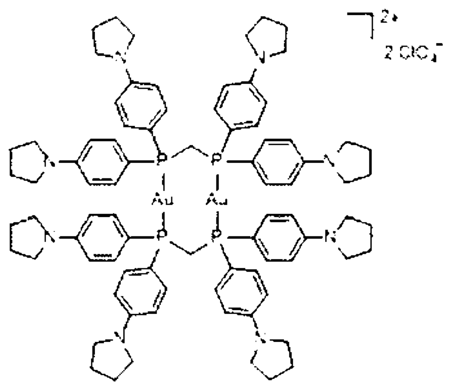

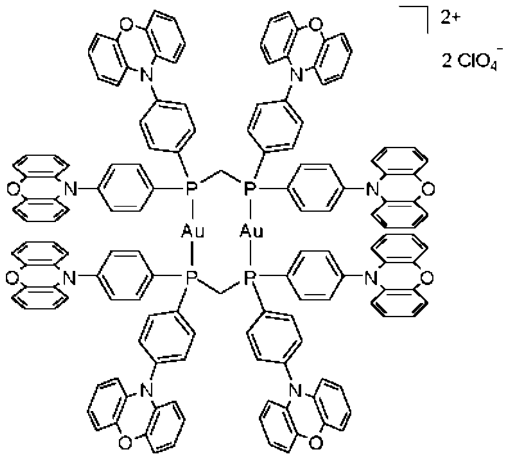

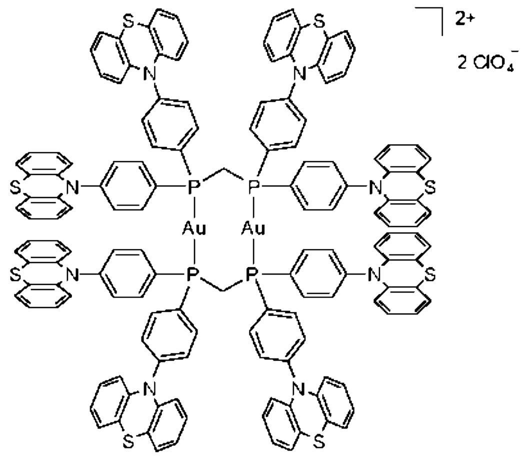

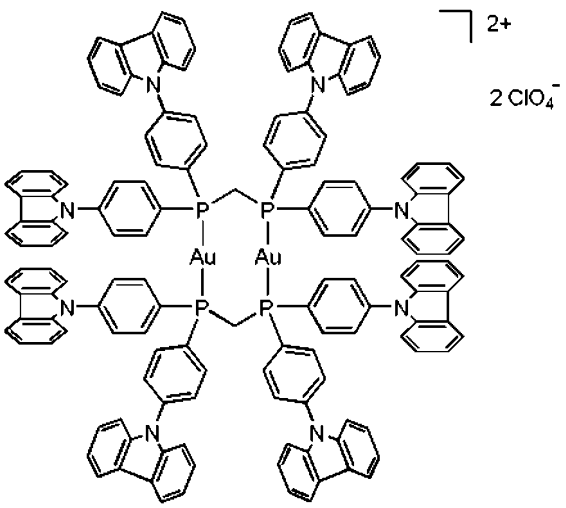

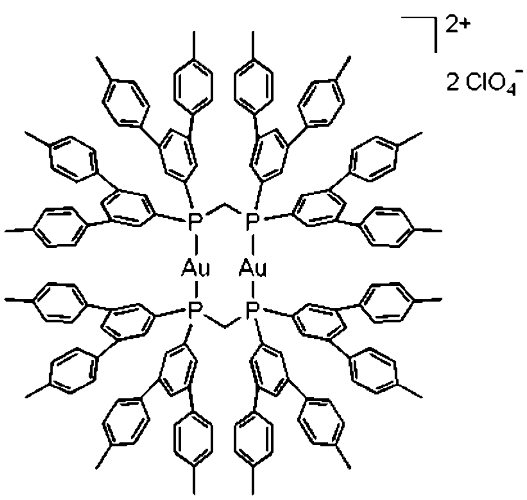

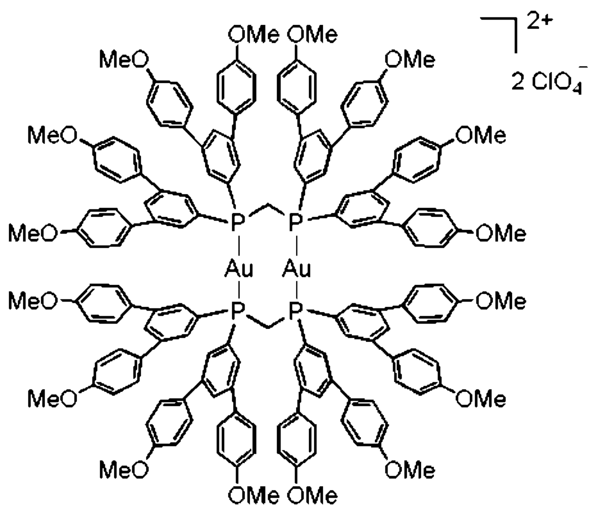

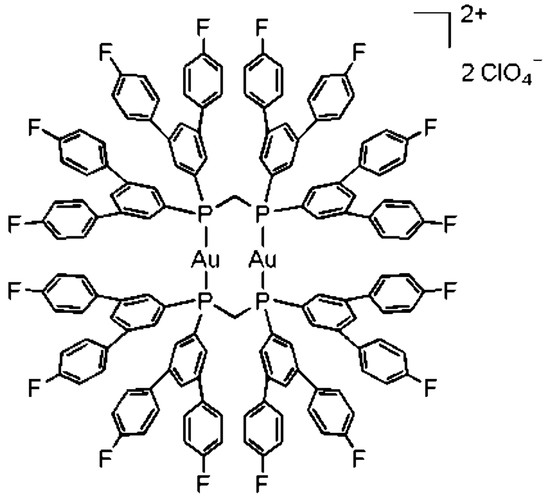
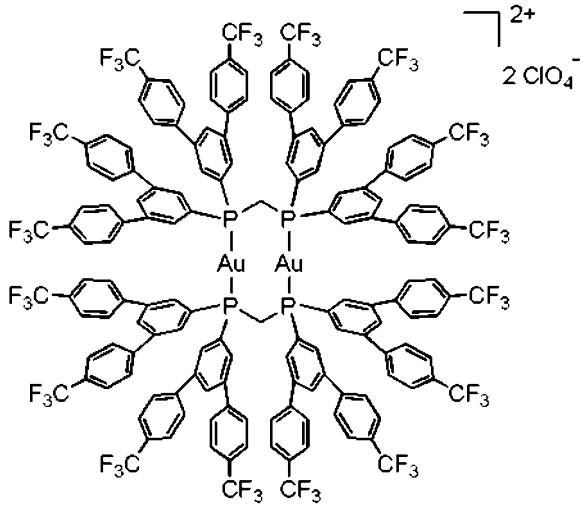

.

**7.** Procédé de catalyse d’une réaction photo-redox à l’aide d’un ou plusieurs complexes d’or (I) de la revendication 1, dans lequel le procédé comprend :

(i) l’exposition d’un mélange réactionnel à une lumière à une température pendant une période de temps suffisante pour former un produit,

dans lequel le mélange réactionnel comprend un réactif, éventuellement plus d’un réactif, un solvant et le ou les complexes d’or (I), et

dans lequel la lumière présente une longueur d’onde comprise dans une plage d’environ 360 nm à environ 450 nm, d’environ 370 nm à environ 450 nm, d’environ 380 nm à environ 450 nm, d’environ 390 nm à environ 450 nm, d’environ 400 nm à environ 450 nm, ou d’environ 405 nm à environ 450 nm, tel qu’environ 405 nm ou environ 445 nm ; par exemple,

dans lequel la réaction photo-redox est un homocouplage d’halogénures organiques, une alkylation de 2-phényl-1,2,3,4-tétrahydroisoquinoléine, une cyclisation d’indoles, une déshalogénation réductrice d’halogénures d’aryle ou une rupture de liaisons C-H, ou une combinaison de ceux-ci.

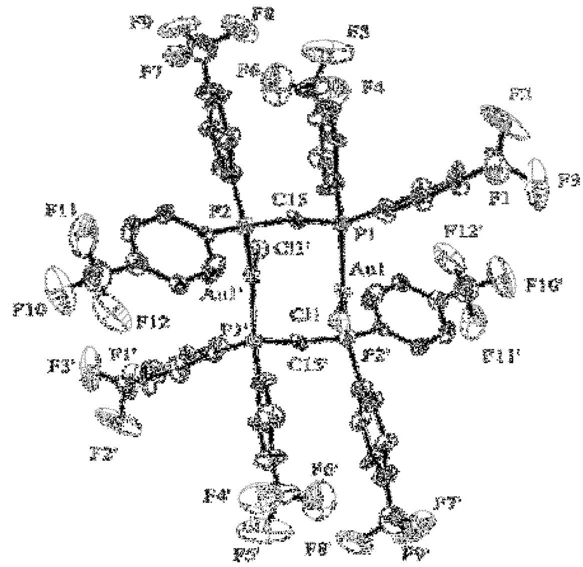

FIG. 1A

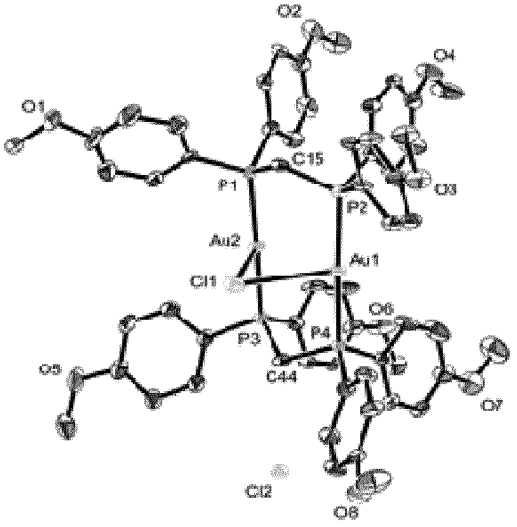

FIG. 1B

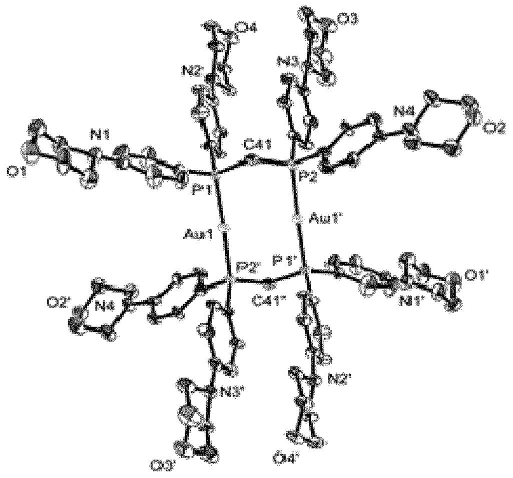

FIG. 1C

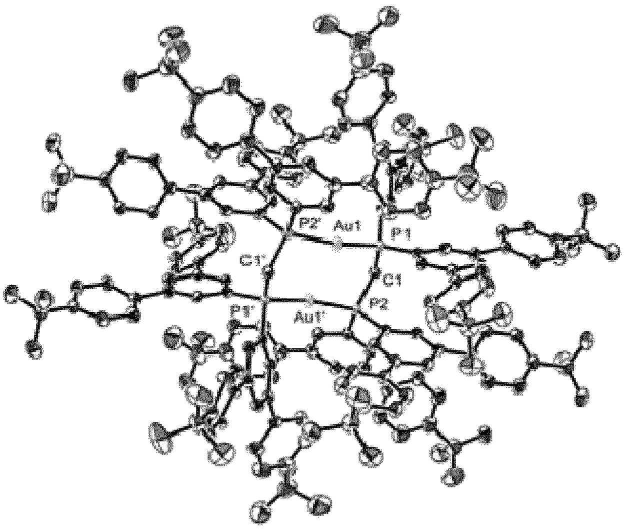

FIG. 1D

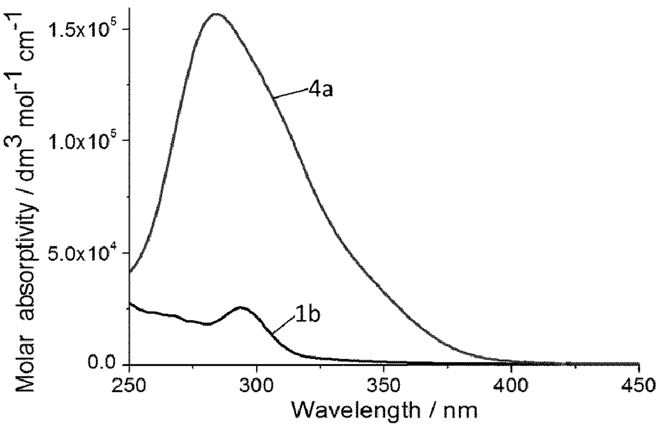


FIG. 2A

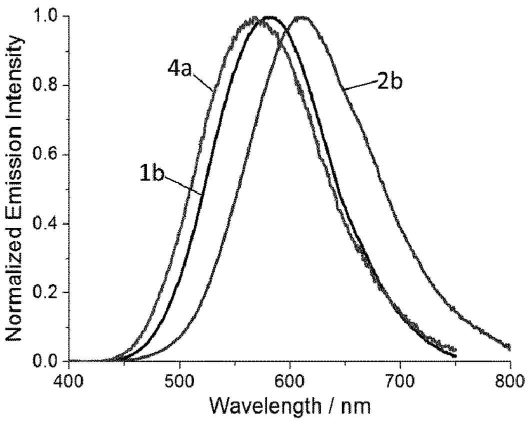


FIG. 2B

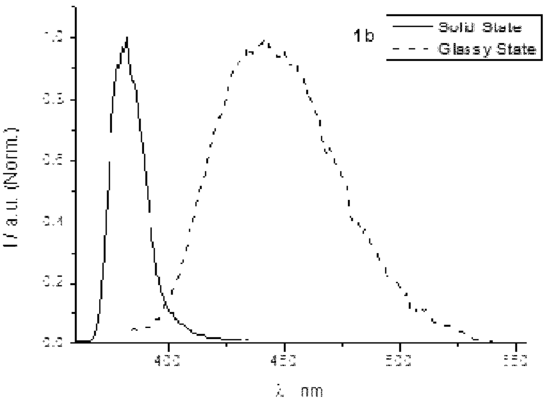
1b
Solid State
Glassy State
I / a.u. (Norm.)
λ nm

FIG. 2C

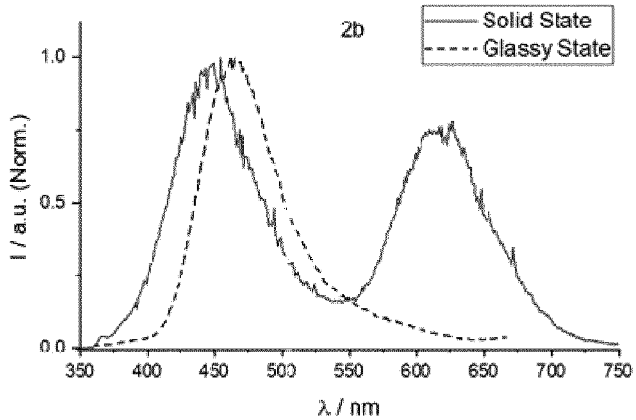
2b
Solid State
Glassy State
1.0
0.5
0.0
I / a.u. (Norm.)
350
400
450
500
550
600
650
700
750
λ / nm

FIG. 2D

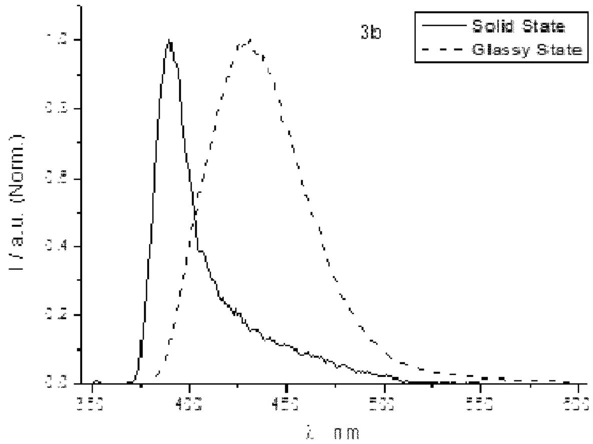


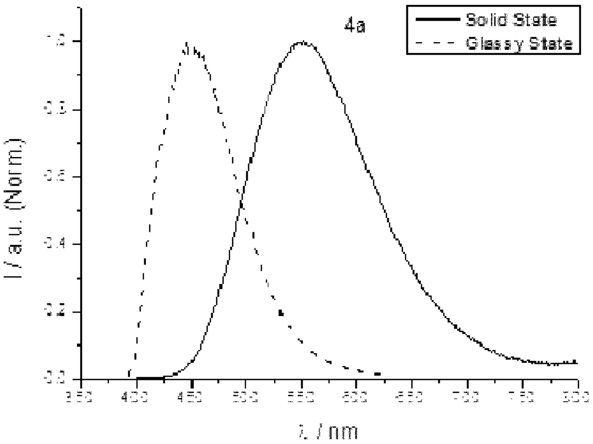


FIG. 2E

FIG. 2F

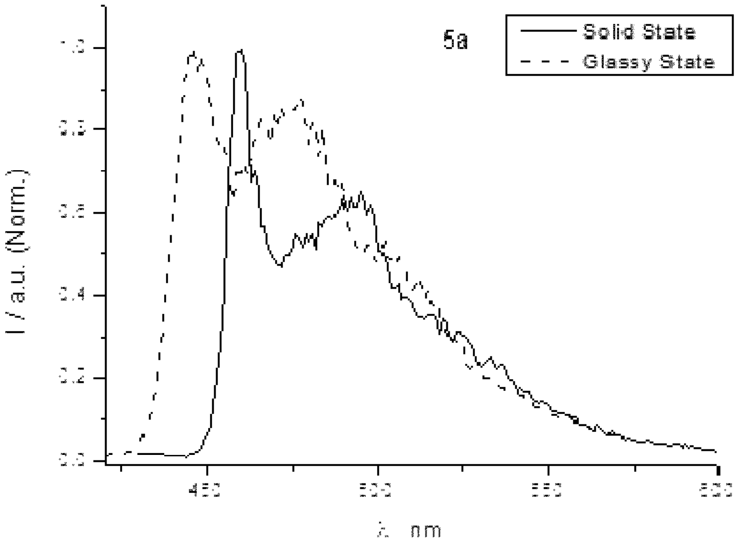


FIG. 2G

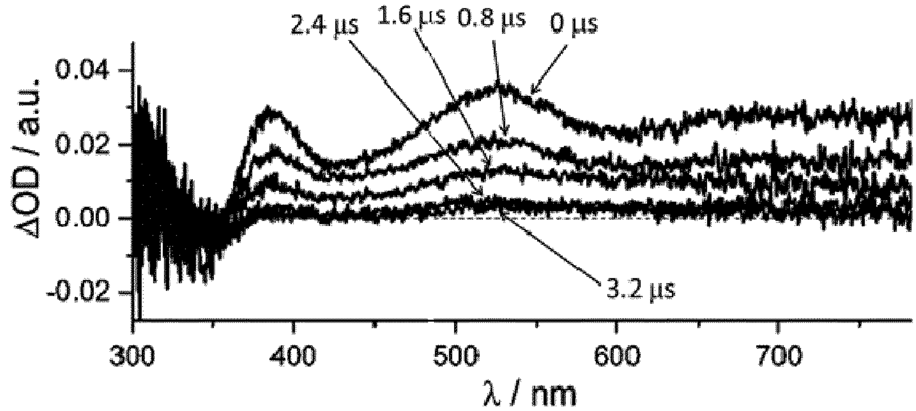


FIG. 3A

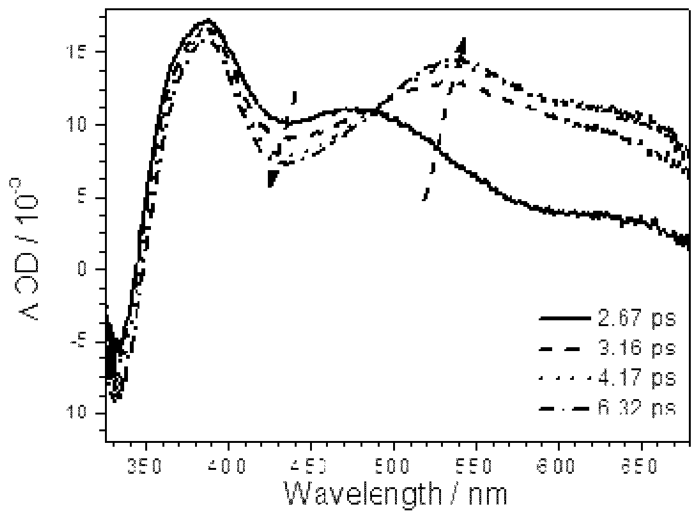


FIG. 3B

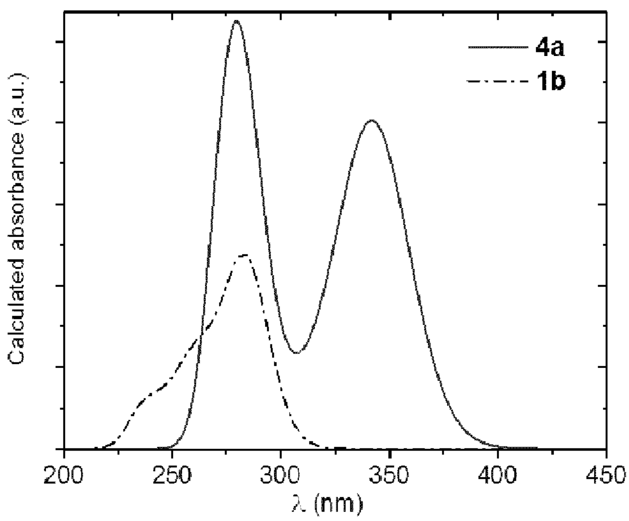


FIG. 4A

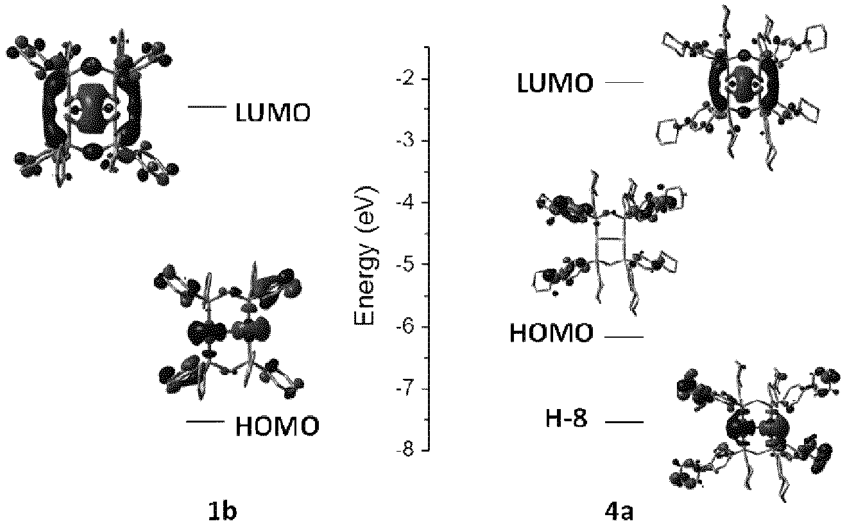


FIG. 4B

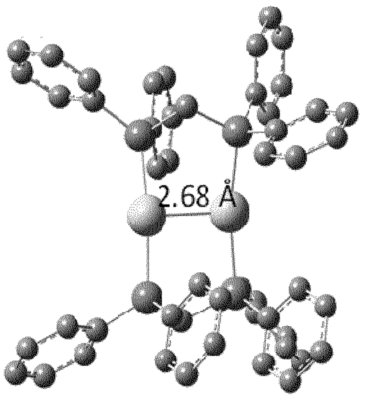


1b, $T_1$

FIG. 5A

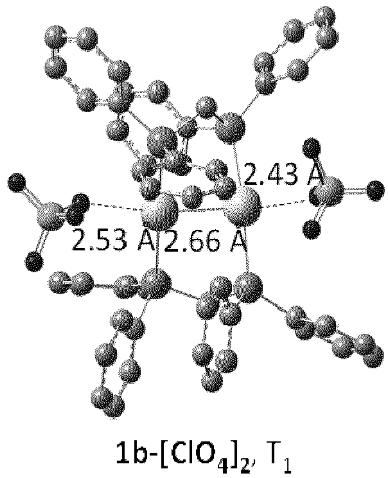


1b-$[ClO_4]_2$, $T_1$

FIG. 5B

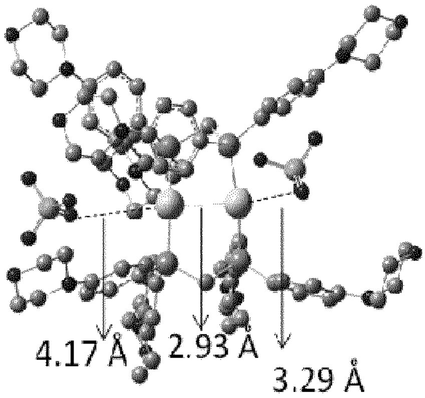


4a-[$ClO_4$]$_2$, $T_1$

FIG. 5C

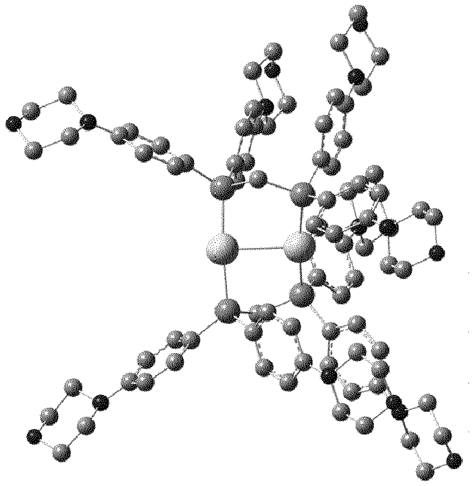

**4a**, Calc (Au-Au) = 2.894 Å
$T_1$

FIG. 5D

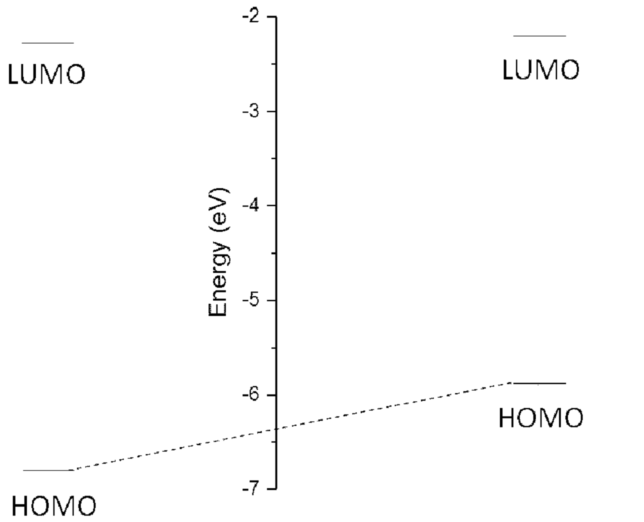


**1b**, $T_1$

**1b-$ClO_4$**, $T_1$

FIG. 5E

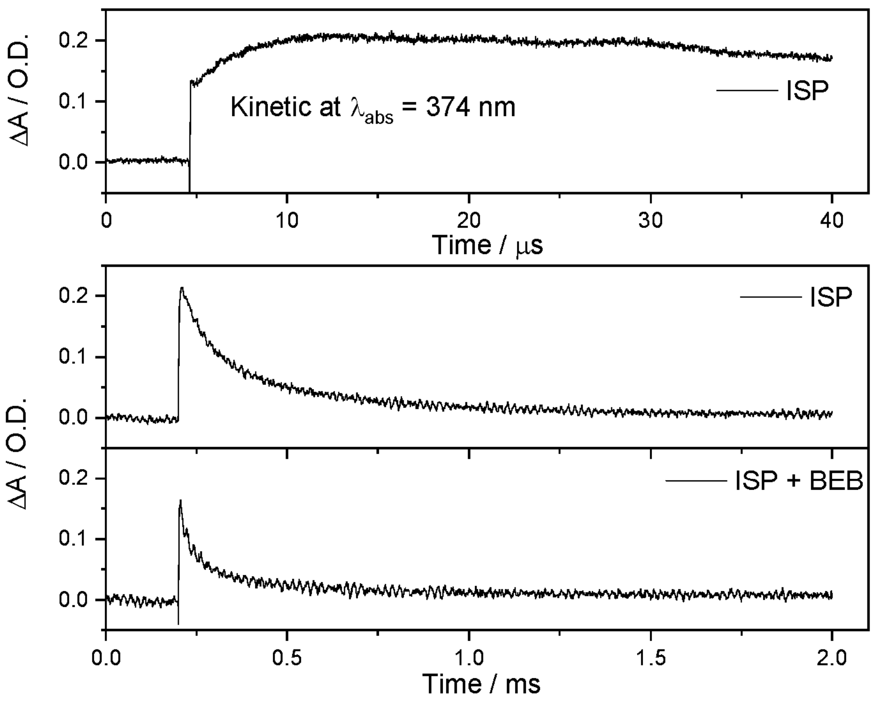
ΔA / O.D.
Kinetic at $\lambda_{abs}$ = 374 nm
ISP
Time / μs
ΔA / O.D.
ISP
ISP + BEB
Time / ms

FIG. 6A

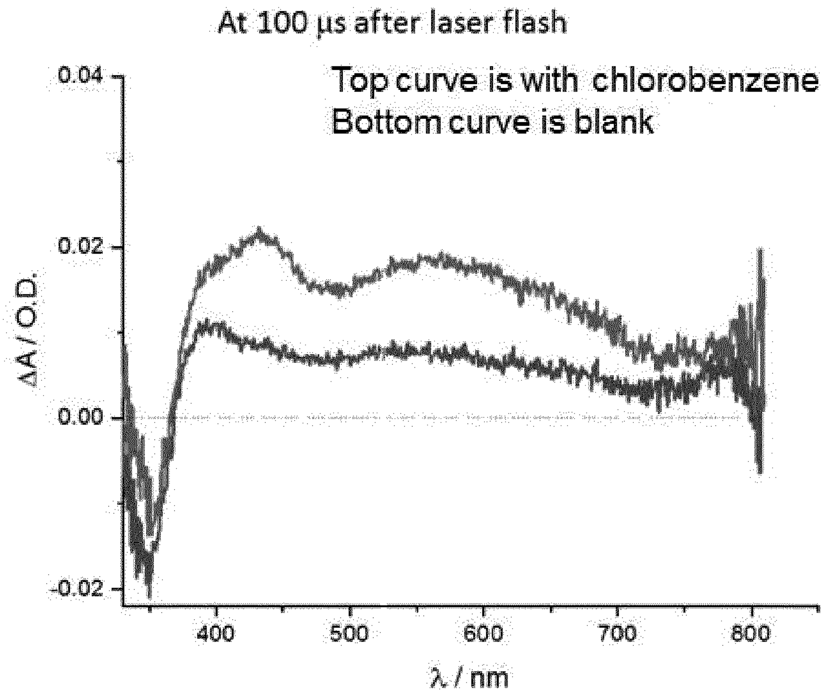
At 100 μs after laser flash
Top curve is with chlorobenzene
Bottom curve is blank
ΔA / O.D.
λ / nm

FIG. 6B

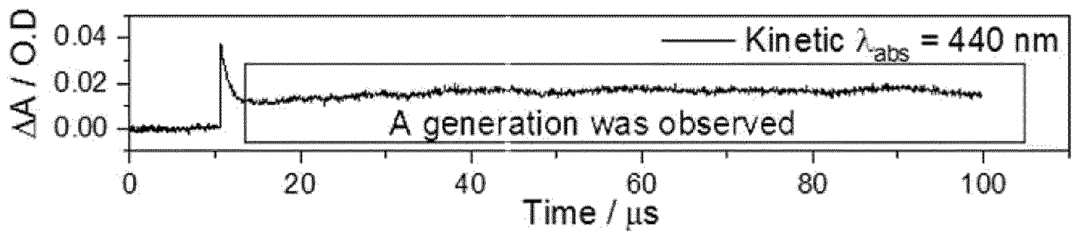
ΔA / O.D
0.04
0.02
0.00
Kinetic $\lambda_{abs}$ = 440 nm
A generation was observed
0
20
40
60
80
100
Time / μs

FIG. 6C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008074905 A


### Non-patent literature cited in the description


- **C. D. MCTIERNAN et al.** *CATALYSIS SCIENCE & TECHNOLOGY*, 01 January 2016, vol. 6 (1), 201-207
- **H. SCHMIDBAUR et al.** *Zeitschrift für Naturforschung*, 01 January 1983, vol. 1, 62-66
- **Z. TAOTAO et al.** ANGEWANDTE CHEMIE. WILEY, 11 April 2014, vol. 126, 5920-5924
- **F. WEN-FU et al.** *CHEMISTRY - A EUROPEAN JOURNAL*, 30 October 2001, vol. 7 (21), 4656-4464
- **MASSAI et al.** *Dalton Trans.*, 2015, vol. 44, 11067-11076
- **CHE et al.** *J. Chem. Soc. Dalton Trans.*, 1990, 3215-3219
- **GRECO** ; **SCHROCK**. *Inorg. Chem.*, 2001, vol. 40, 3850-3860
- **KALDAS et al.** *Org. Lett.*, 2015, vol. 17, 2864-2866
- **HATZENBUHLER et al.** *J. Med. Chem.*, 2008, vol. 51, 6980-7004
- **JIA et al.** *Org. Lett*, 2019, vol. 21, 9339-9342
- **ZHOU et al.** *Angew. Chem. Int. Ed.*, 2017, vol. 56, 15683-15687
- **KWOK et al.** *J. Am. Chem. Soc*, 2006, vol. 128, 11894-11905
- **KWOK et al.** *J. Am. Chem. Soc.*, 2008, vol. 130, 5131-5139
- **CHAN et al.** *Phys. Chem. Chem. Phys.*, 2011, vol. 13, 16306-16313
- **LU et al.** *J. Am. Chem. Soc.*, 2011, vol. 133, 14120-14135
- **ADAMO** ; **BARONE**. *J. Chem. Phys.*, 1999, vol. 110, 6158-6170
- **GRIMME et al.** *J. Chem. Phys*, 2010, vol. 132, 154104
- **WADT** ; **HAY**. *J. Chem. Phys.*, 1985, vol. 82, 284-298
- **HAY** ; **WADT**. *J. Chem. Phys.*, 1985, vol. 82, 299-310
- **FRISCH et al.** *J. Chem. Phys.*, 1984, vol. 80, 3265-3269
- **RADOM et al.** *J. Am. Chem. Soc.*, 1973, vol. 95, 6531-6544
- **COSSI et al.** *J. Chem. Phys.*, 2002, vol. 117, 43-54
- **LU** ; **CHEN**. *J. Comput. Chem.*, 2012, vol. 33, 580-592
- **TE VELDE et al.** *J. Comput. Chem.*, 2001, vol. 22, 931-967
- **GUERRA et al.** *Theor. Chem. Acc*, 1998, vol. 99, 391-403
- **LENTHE et al.** *J. Chem. Phys.*, 1999, vol. 110, 8943-8953
- **LENTHE et al.** *J. Chem. Phys.*, 1993, vol. 99, 4597-4610
- **LENTHE et al.** *J. Chem. Phys.*, 1994, vol. 101, 9783-9792
- **LENTHE** ; **BAERENDS**. *J. Comput. Chem.*, 2003, vol. 24, 1142-1156
- **NOZAKI**. *J. Chin. Chem. Soc.*, 2006, vol. 53, 101-112
- **STRICKLER** ; **BERG**. *J. Chem. Phys.*, 1962, vol. 37, 814-822
- **MORI et al.** *PCCP*, 2014, vol. 16, 14523-14530
- **LI et al.** *Angew. Chem. Int. Ed.*, 2018, vol. 57, 14129-14133
- **HOSHI et al.** *Electrochemistry*, 2004, vol. 72, 852-854
- **BROGLIA et al.** *J. Photoch. Photobio. A.*, 2005, vol. 170, 261-265
- **YANG et al.** *Chem. Sci.*, 2016, vol. 7, 3123-3136
- **GUILBAULT et al.** *Anal. Chem.*, 1963, vol. 35, 582-586
- **LIDDLE** ; **GARDINIER**. *J. Org. Chem.*, 2007, vol. 72, 9794-9797
- **OHKUBO et al.** *Chem. Sci.*, 2011, vol. 2, 715-722
- **CHOW et al.** *Chem. Asian J*, 2014, vol. 9, 534-545
- **PENG et al.** *J. Org. Chem.*, 2013, vol. 78, 10960-10967
- **TEO et al.** *Dalton Trans.*, 2016, vol. 45, 7312-7319
- **LIU et al.** *Chem. Asian J.*, 2017, vol. 12, 673-678

- **PARK et al.** *Chem. Eur. J.*, 2016, vol. 22, 17790-17799
- **CAO** ; **SHI**. *J. Am. Chem. Soc.*, 2017, vol. 139, 6546-6549
- **ITO et al.** *J. Organomet. Chem.*, 1986, vol. 303, 301-308
- **FALLON et al.** *New J. Chem.*, 2016, vol. 40, 9912-9916
- **WANG et al.** *rg. Lett.*, 2015, vol. 17, 3982-3985
- **ZHOU et al.** *Angew. Chem.*, 2017, vol. 129, 15889-15893
- *Angew. Chem. Int. Ed.*, 2017, vol. 56, 15683-15687
- **WANG et al.** *Tetrahedron*, 1999, vol. 55, 6109-6118
- **ORGANIC**. *Letters*, 2016, vol. 18, 4308-4311
- **YAM** ; **CHENG**. *Chem. Soc. Rev.*, 2008, vol. 37, 1806
- **TIEKINK** ; **KANG**. *Coord. Chem. Rev.*, 2009, vol. 253, 1627
- **HE** ; **YAM**. *Coord. Chem. Rev.*, 2011, vol. 255, 2111
- **YAM** ; **CHENG**. *Top. Curr. Chem.*, 2007, vol. 281, 269
- **BAYRAKDAR et al.** *Chem. Soc. Rev*, 2020, vol. 49, 7044
- **SCHMIDBAUR** ; **RAUBENHEIMER**. *Angew. Chem.*, 2020, vol. 132, 14856
- **CHE** ; **LAI**. *Coord. Chem. Rev.*, 2005, vol. 249, 1296
- **RAVOTTO** ; **CERONI**. *Coord. Chem. Rev.*, 2017, vol. 346, 62
- **TIEKINK**. *Coord. Chem. Rev.*, 2014, vol. 275, 130
- **XIE et al.** *Chem. Soc. Rev*, 2017, vol. 46, 5193
- **ZIDAN et al.** *Catal. Sci. Technol.*, 2018, vol. 8, 6019
- **HENDRICH et al.** *Chem. Rev.*, 2020
- **SAUER et al.** *ChemCatChem*, 2017, vol. 9, 4456
- **WITZEL et al.** *Adv. Synth. Catal.*, 2017, vol. 359, 1522
- **XIE et al.** *Angew. Chem.*, 2018, vol. 130, 16890
- **WITZEL et al.** *Chem. Commun.*, 2018, vol. 54, 13802
- **HUANG et al.** *Angew. Chem.*, 2016, vol. 128, 4888
- **ZHANG et al.** *ACS Catal.*, 2019, vol. 9, 6118
- **SI et al.** *Org. Lett.*, 2020, vol. 22, 5844
- **CHE et al.** *J. Chem. Soc., Chem. Commun.*, 1989, 885
- **CHE et al.** *J. Chem. Soc. Dalton Trans.*, 1990, 3215
- **LI et al.** *J. Chem. Soc. Dalton Trans.*, 1992, 3325
- **PYYKKÖ** ; **MENDIZABAL**. *Inorg. Chem.*, 1998, vol. 37, 3018
- **PYYKKÖ** ; **ZHAO**. *Angew. Chem.*, 1991, vol. 103, 622
- **FU et al.** *Angew. Chem.*, 1999, vol. 111, 2953
- **FU et al.** *Chem. Eur. J.*, 2001, vol. 7, 4656
- **MA et al.** *Chem. Eur. J*, 2015, vol. 21, 13888
- **REVOL et al.** *Angew. Chem.*, 2013, vol. 125, 13584
- **TRAN et al.** *Org. Lett.*, 2016, vol. 18, 4308
- **KALDAS et al.** *Org. Lett.*, 2015, vol. 17, 2864
- **CANNILLO et al.** *Org. Lett.*, 2016, vol. 18, 2592
- **MCCALLUM** ; **BARRIAULT**. *Chem. Sci.*, 2016, vol. 7, 4754
- **MCCALLUM et al.** *Eur. J. Org. Chem.*, 2015, 81
- **MCTIEMAN et al.** *Catal. Sci. Technol.*, 2016, vol. 6, 201
- **ZIDAN et al.** *Org. Lett.*, 2020, vol. 22, 8401
- **XIE et al.** *Chem. Eur. J.*, 2016, vol. 22, 12646
- **XIE et al.** *Angew. Chem.*, 2015, vol. 127, 6144
- **XIE et al.** *Org. Chem. Front.*, 2016, vol. 3, 841
- **XIE et al.** *Angew. Chem.*, 2016, vol. 128, 2987
- **YANG et al.** *Chem. Sci.*, 2016, vol. 7, 3123
- **CHOW et al.** *Chem. Asian J*, 2014, vol. 9, 534
- **BROGLIA et al.** *J. Photoch. Photobio. A.*, 2005, vol. 170, 261
- **OHKUBO et al.** *Chem. Sci.*, 2011, vol. 2, 715
- **LI et al.** *Angew. Chem.*, 2018, vol. 130, 14325
- **ZHOU et al.** *Angew. Chem.*, 2017, vol. 129, 15889
- **BARTLING et al.** *J. Am. Chem. Soc.*, 2016, vol. 138, 11860
- **YANG et al.** *Angew. Chem.*, 2017, vol. 129, 3748
- **WANG et al.** *Chem. Eur. J.*, 2015, vol. 21, 1184
- **ALONSO et al.** *Chem. Rev.*, 2002, vol. 102, 4009
- **HOKAMP et al.** *Angew. Chem.*, 2017, vol. 129, 13459
- **HAIBACH et al.** *Angew. Chem.*, 2017, vol. 129, 15319
- **GHOSH et al.** *Science*, 2014, vol. 346, 725
- **DISCEKICI et al.** *Chem. Commun.*, 2015, vol. 51, 11705
- **MAJEK et al.** *Chem. Eur. J.*, 2015, vol. 21, 15496
- **NEUMEIER et al.** *Chem. Eur. J*, 2018, vol. 24, 105
- **PRIER et al.** *Chem. Rev.*, 2013, vol. 113, 5322-5363
- **YU et al.** *Chem. Rev.*, 2021, vol. 121, 506-561
- **FU et al.** *Angew. Chem. Int. Ed.*, 1999, vol. 38, 2783-2785